# EUROPÄISCHE PATENTSCHRIFT

(11) **EP 3 174 955 B1**
(45) Veröffentlichungstag und Bekanntmachung des Hinweises auf die Patenterteilung: **23.10.2019**
(21) Anmeldenummer: 15734294.0
(22) Anmeldetag: 25.06.2015
(51) Int. Cl.: C09K 19/04, C09K 19/32, C09K 19/06, C09K 19/14, C09K 19/54, C09K 19/12, C09K 19/30, G02F 1/1343, G02F 1/1337, G02F 1/137

(54) **FLÜSSIGKRISTALLINE MEDIEN MIT HOMÖOTROPER AUSRICHTUNG**
LIQUID CRYSTALLINE MEDIA HAVING HOMEOTROPIC ALIGNMENT
MILIEUX CRISTALLINS LIQUIDES À ORIENTATION HOMÉOTROPE

(30) Priorität: 28.07.2014 DE 102014011129
(43) Veröffentlichungstag der Anmeldung: 07.06.2017
(73) Patentinhaber: Merck Patent GmbH, 64293 Darmstadt (DE)
(72) Erfinder: ARCHETTI, Graziano, 64289 Darmstadt (DE); SAITO, Izumi, 64367 Muehltal (DE); FORTTE, Rocco, 65933 Frankfurtam Main (DE); HEPPERT, Oliver, 64331 Weiterstadt (DE); TAUGERBECK, Andreas, 64367 Muehltal (DE); NEUMANN, Elena, 64686 Lautertal (DE)
(86) Internationale Anmeldenummer: PCT/EP2015/001281
(87) Internationale Veröffentlichungsnummer: WO 2016/015803

(56) Entgegenhaltungen:
- WO-A1-2009/086911
- WO-A1-2009/153168
- WO-A1-2013/004372
- WO-A1-2014/050426
- DE-A1-102011 108 708
- US-A1- 2002 102 366
- US-A1- 2007 286 968

## Beschreibung

Die vorliegende Erfindung betrifft flüssigkristalline Medien (FK-Medien) mit negativer oder positiver dielektrischer Anisotropie enthaltend eine niedermolekulare Komponente und eine polymerisierbare Komponente. Die polymerisierbare Komponente umfasst selbst-ausrichtende, polymerisierbare Mesogene (polymerisierbare Selbstorientierungsadditive), die eine homöotrope (vertikale) Ausrichtung der FK-Medien an einer Oberfläche oder den Zellwänden einer Flüssigkristallanzeige (FK-Anzeige) bewirken. Die Erfindung umfasst daher auch FK-Anzeigen mit homöotroper Ausrichtung des flüssigkristallinen Mediums (FK-Mediums) ohne Orientierungsschichten zur homöotropen Ausrichtung. Die Erfindung offenbart neue Strukturen für polymerisierbare Selbstorientierungsadditive, die eine bestimmte Position der funktionalen Gruppen aufweisen.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned).

Anzeigen, die den ECB-Effekt verwenden, haben sich als sogenannte VAN-(Vertically Aligned Nematic) Anzeigen beispielsweise in den Bauformen MVA-(Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA- (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS- (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Mit der Erzeugung der VA-Displays mit zwei oder mehr Domänen unterschiedlicher Vorzugsrichtung ist ein beträchtlicher Aufwand verbunden. Ein Ziel dieser Erfindung ist es, die Herstellprozesse und die Anzeigevorrichtungen selbst zu vereinfachen, ohne die Vorteile der VA-Technik, wie relativ schnelle Schaltzeiten und gute Blickwinkelabhängigkeit, aufzugeben.

VA-Anzeigen die FK-Medien mit positiver dielektrischer Anisotropie enthalten, werden in S.H. Lee et al. Appl. Phys. Lett. (1997), 71, 2851-2853 beschrieben. Diese Anzeigen verwenden auf eine Substratoberfläche angeordnete Interdigitalelektroden (In-plane Ansteuerelektroden-Konfiguration kammförmiger Struktur), wie sie unter anderem bei den kommerziell erhältlichen IPS-(in-plane switching) Anzeigen zum Einsatz kommen (wie z.B. in DE 40 00 451 und EP 0 588 568 offenbart), und weisen eine homöotrope Anordnung des Flüssigkristallmediums auf, die zu einer planaren Anordnung beim Anlegen einer elektrischen Feldes wechselt.

Weiterentwicklungen der oben genannten Anzeige sind zum Beispiel in K.S. Hun et al. J. Appl. Phys. (2008), 104, 084515 (DSIPS: 'double-side in-plane switching' für Verbesserungen von Treiberspannung und Transmission), M. Jiao et al. App. Phys. Lett (2008), 92, 111101 (DFFS: 'dual fringe field switching' für verbesserte Schaltzeiten) und Y.T. Kim et al. Jap. J. App. Phys. (2009), 48, 110205 (VAS: 'viewing angle switchable' LCD) zu finden. Darüber hinaus sind VA-IPS-Anzeigen auch unter dem Namen Positiv-VA und HT-VA bekannt.

Bei allen solchen Anzeigen (hier nachfolgend allgemein als VA-IPS-Anzeigen bezeichnet) ist auf beiden Substratoberflächen eine Orientierungsschicht zur homöotropen Ausrichtung des FK-Mediums aufgebracht, deren Erzeugung bisher mit einem beträchtlichen Aufwand verbunden ist.

Ein Ziel dieser Erfindung ist es, die Herstellprozesse selbst zu vereinfachen, ohne die Vorteile der VA-IPS-Technik, wie relativ schnelle Schaltzeiten, gute Blickwinkelabhängigkeit und hohen Kontrast aufzugeben.

Für die technische Anwendung dieser Effekte in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

VA- und VA-IPS-Anzeigen sollen im Allgemeinen einen sehr hohen spezifischen Widerstand bei gleichzeitig großem Arbeitstemperaturbereich, kurze Schaltzeiten und niedriger Schwellenspannung, mit deren Hilfe verschiedene Graustufen erzeugt werden können, besitzen.

In den herkömmlichen VA- und VA-IPS-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen.

Der Nachteil der häufig verwendeten Aktivmatrix-TN-Anzeigen beruht in ihrem vergleichsweise niedrigen Kontrast, der relativ hohen Blickwinkel-abhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. Ohne nennenswerte Einbußen sonstiger Parameter, wie insbesondere der günstigen Blickwinkelabhängigkeit des Kontrastes, zeichnen sich die PSA-Anzeigen durch die Verkürzung der Schaltzeiten aus.

In diesen Anzeigen wird dem FK-Medium eine geringe Menge (zum Beispiel 0,3 Gew.-%, typischerweise <1 Gew.-%) einer oder mehrerer polymerisierbarer Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen. Die PSA-Technik wird bisher hauptsächlich für FK-Medien mit negativer dielektrischer Anisotropie eingesetzt.

Nachfolgend wir der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS-und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann. Im Falle von PSA-VA-Anzeigen wirkt sich der 'pretilt' positiv auf die Schaltzeiten aus. Für PSA-VA-Anzeigen kann ein Standard-MVA- bzw. -PVA Pixel- und Elektroden-Layout verwendet werden. Darüber hinaus kann man aber beispielsweise auch mit nur einer strukturierten Elektrodenseite und ohne 'Protrusions' auskommen, was die Herstellung wesentlich vereinfacht und gleichzeitig zu einem sehr guten Kontrast bei sehr guter Lichtdurchlässigkeit führt.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. (2006), 45, 2702-2704 und S. H. Kim, L.-C- Chien, Jpn. J. Appl. Phys. (2004), 43, 7643-7647 beschrieben. PSA-IPS-Anzeigen sind zum Beispiel in US 6,177,972 und Appl. Phys. Lett. (1999), 75(21), 3264 beschrieben. PSA-TN-Anzeigen sind zum Beispiel in Optics Express (2004), 12(7), 1221 beschrieben. PSA-VA-IPS Anzeigen sind zum Beispiel in WO 2010/089092 A1 offenbart.

PSA-Anzeigen können ebenso wie die oben beschriebenen konventionellen FK-Anzeigen als Aktivmatrix- oder Passivmatrix-Anzeigen (PM) betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. 'thin film transistor' bzw. "TFT"), bei Passivmatrix-Anzeigen üblicherweise nach dem Multiplex-Verfahren, wobei beide Verfahren aus dem Stand der Technik bekannt sind.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere bei PSA-VA-Anzeigen kann man ohne nennenswerte Einbußen sonstiger Parameter eine Verkürzung der Schaltzeiten erreichen, die mit einem in Testzellen messbaren 'pretilt' korrelieren.

Im Stand der Technik werden für PSA-VA beispielsweise polymerisierbare Verbindungen der folgenden Formel verwendet 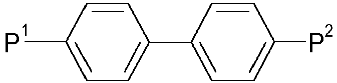 worin P eine polymerisierbare Gruppe, üblicherweise eine Acrylat- oder Methacrylatgruppe bedeutet, wie beispielsweise in US 7,169,449 beschrieben.

Der Aufwand für das Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Die Druckschriften WO 2012/038026 A1 (DE 10 2011 108 708 A1) und WO 2013/004372 A1 beschreiben selbstausrichtende Mesogene (nichtpolymeriserbare, konventionelle Selbstorientierungsadditive) mit einer Hydroxygruppe, die an einer mesogenen Grundstruktur aus zwei oder mehr Ringen hängt. Die darin offenbarten Strukturen besitzen keine erfindungsgemäß angeordnete polymerisierbare Gruppe.

Die bestehenden Ansätze um zu VA-Displayanwendungen ohne Polyimidschicht zu gelangen sind jedoch noch nicht vollständig zufrieden stellend.

Die Druckschrift US 2002/0102366 A1 beschreibt Verbindungen mit zwei bis drei Benzolringen, terminalen OH-Gruppen und einer polymerisierbaren Gruppe als funktionale Chemikalie in diversen Mischungen. In den Druckschriften WO 2014/050426 A1 und US 2007/0286968 A1 werden chemische Intermediate offenbart, die neben Benzolringen eine -(CO)OH bzw. OH-Gruppe und eine polymerisierbare Gruppe aufweisen. In der Druckschrift WO 2009/153168 A1 wird 6-(4-Acryloyloxy-butoxycarbonyloxy)-2-naphthoesäure als Synthesebaustein offenbart. In der Druckschrift WO 2009/086911 A1 wird als chemische Zwischenstufe eine Verbindung offenbart, die neben einem Naphthalinring und einem Benzolring eine NH₂-Gruppe und eine polymerisierbare Gruppe aufweist.

Die vorliegende Erfindung betrifft ein FK-Medium enthaltend eine niedermolekulare, nicht polymerisierbare, flüssigkristalline Komponente und eine polymerisierbare oder polymerisierte Komponente umfassend eine oder mehrere Verbindungen der Formel I, wobei die polymerisierte Komponente durch Polymerisieren der polymerisierbaren Komponente erhältlich ist, und wobei das FK-Medium die Verbindungen der Formel I in einer Konzentration von ≤ 5 Gew.-% enthält,

P-Sp-[A³-Z³]ₘ-[A²]ₖ-[Z²]ₙ-A¹-R^{a} (I)

worin
- A¹, A², A³: jeweils unabhängig voneinander eine aromatische, heteroaromatische, alicyclische oder heterocyclische Gruppe, welche auch annelierte Ringe enthalten kann, und welche auch durch eine Gruppe L ein- oder mehrfach substituiert sein kann,
- L: jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
- P: eine polymerisierbare Gruppe,
- Sp: eine Abstandsgruppe (auch bezeichnet als Spacer oder Spacergruppe) oder eine Einfachbindung,
- Z²: jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- Z³: jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- n1: 1, 2, 3 oder 4,
- n: 0 oder 1,
- m: 0, 1, 2, 3, 4, 5 oder 6, bevorzugt 0, 1, 2 oder 3,
- k: 0 oder 1,
- R⁰: jeweils unabhängig voneinander Alkyl mit 1 bis 12 C-Atomen,
- R⁰⁰: jeweils unabhängig voneinander H oder Alkyl mit 1 bis 12 C-Atomen,
- R^{a}: eine Ankergruppe der Formel 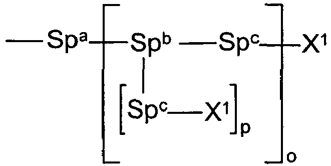 oder 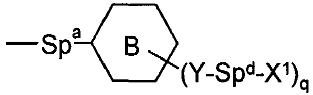
- p: 1 oder 2,
- q: 2 oder 3,
- B: substituiertes oder unsubstituiertes Ringsystem oder kondensiertes Ringsystem, bevorzugt ein 5- bis 6-gliedriges Ringsystem, insbesondere ausgewählt aus Benzol, Pyridin, Cyclohexan, Dioxan, Tetrahydrofuran oder Tetrahydropyran,
- Y: unabhängig voneinander -O-, -S-, -C(O)-, -C(O)O-, -OC(O)-, -NR¹¹- oder eine Einfachbindung,
- o: 0 oder 1,
- X¹: unabhängig voneinander H, Alkyl, Fluoralkyl, OH, NH₂, NHR¹¹, NR¹¹₂, OR¹¹, C(O)OH, -CHO,
wobei mindestens eine Gruppe X¹ einen Rest ausgewählt aus -OH, -NH₂, NHR¹¹, C(O)OH und -CHO, bedeutet,
- R¹¹: Alkyl mit 1 bis 12 C-Atomen,
- Sp^{a}, Sp^{c}, Sp^{d}: jeweils unabhängig voneinander eine Abstandsgruppe oder eine Einfachbindung
- Sp^{b}: eine tri- oder tetravalente Gruppe, bevorzugt CH, N oder C,
bedeuten.

Die polymerisierbare oder polymerisierte Komponente des FK-Medium enthält optional weitere polymerisierbare Verbindungen. Dabei kommen bevorzugt solche zum Einsatz, die für das PSA-Prinzip geeignet sind.

Die Erfindung betrifft weiter eine FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie einer zwischen den Substraten befindlichen Schicht eines erfindungsgemäßen FK-Mediums. Die FK-Anzeige ist vorzugsweise eine des PSA-Typs.

Die Erfindung betrifft weiter neue Verbindungen der Formel I, wie vor- und nachstehend offenbart, die dadurch gekennzeichnet sind, dass sie zwei oder mehr Ringe aufweisen, d.h. Verbindungen der Formel worin k = 1 bedeutet, und worin
- Z²: jeweils unabhängig voneinander -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
- Z³: jeweils unabhängig voneinander eine Einfachbindung, -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
- R^{a}: eine Gruppe ausgewählt aus -Sp^{a}-X¹ oder 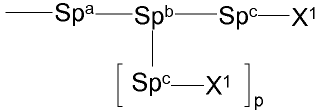 worin Sp^{a}, Sp^{b}, Sp^{c}, p und X¹ die Bedeutung wie in Anspruch 1 haben und wobei Sp^{a} keine Einfachbindung darstellt,
bedeutet,
und die Gruppen P, Sp, A¹, A², A³ und R^{a} sowie m, n und k wie in Anspruch 1 definiert sind..

Ein weiterer Gegenstand der Erfindung ist die Verwendung von Verbindungen der Formel I als Additiv für FK-Medien zur Herbeiführung einer homöotropen Orientierung gegenüber einer das FK-Medium begrenzenden Oberfläche.

Ein weiterer Aspekt der vorliegenden Erfindung ist ein Verfahren zur Herstellung eines erfindungsgemäßen FK-Medium, das dadurch gekennzeichnet ist, dass man eine oder mehrere polymerisierbare Selbstorientierungsadditive (Verbindungen der Formel I) mit einer niedermolekularen, flüssigkristallinen Komponente mischt und optional eine oder mehrere polymerisierbare Verbindungen und optional eine weitere, nicht polymerisierbare Selbstorientierungsadditive (z.B. der Formel I') und/oder beliebige Additive zugibt.

Ein weiterer Gegenstand der Erfindung ist ein Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem erfindungsgemäßen FK-Medium, wobei sich eine homöotrope (vertikale) Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

Die erfindungsgemäße Verwendung der Selbstorientierungsadditive als Additive von FK-Medien ist nicht an bestimmte FK-Medien gebunden. Das FK-Medium bzw. die darin enthaltene nicht-polymerisierbare Komponente kann positive oder negative dielektrische Anisotropie aufweisen. Das FK-Medium ist bevorzugt nematisch, da die meisten auf dem VA-Prinzip basierten Anzeigen nematische FK-Medien umfassen.

Das polymerisierbare Selbstorientierungsadditiv wird im FK-Medium als Additiv eingebracht. Es bewirkt eine homöotrope Ausrichtung des Flüssigkristalls gegenüber den Substratoberflächen (wie z.B. eine Oberfläche aus Glas oder mit ITO oder mit Polyimid beschichtet). Es scheint in Anbetracht der Untersuchungen zu dieser Erfindung so, dass die polare Ankergruppe in Wechselwirkung mit der Substratoberfläche tritt. Dadurch richten sich die Selbstorientierungsadditive auf der Substratoberfläche aus und induzieren eine homöotrope Orientierung des Flüssigkristalls. Die Ankergruppe sollte nach dieser Auffassung sterisch zugänglich sein, also nicht wie im Fall einer phenolischen (phenylsubstituierten) OH-Gruppe von ortho-ständigen tert-Butylgruppen umgeben sein, wie es in beispielsweise in 2,6-Di-tert-butylphenol der Fall ist. D.h. Verbindungen mit einer Kopfgruppe (entsprechend den Resten R^{a} oder -A¹--R^{a}) der Formel 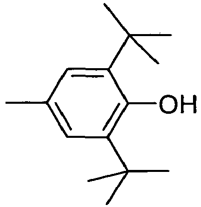 sind bevorzugt nicht in Formel I und den Unterformeln umfasst. Noch allgemeiner sind phenolische Kopfgruppen -Ph-OH bevorzugt nicht umfasst, worin Ph durch 1 bis 4 Gruppen L substituiertes Phenylen bedeutet.

Die FK-Zelle der erfindungsgemäße FK-Anzeige weist bevorzugt keine Orientierungsschicht auf, insbesondere keine Polyimidschicht zur homöotropen Ausrichtung des FK-Mediums. Als Orientierungsschicht ist hier eine Schicht gemeint, die schon vor dem Füllen der Zelle vorhanden ist. Die polymerisierte Komponente des FK-Mediums wird in diesem Zusammenhang nicht als Orientierungsschicht angesehen. Für den Fall, dass eine FK-Zelle dennoch eine Orientierungsschicht oder eine vergleichbare Schicht aufweist, so ist erfindungsgemäß diese Schicht nicht für die homöotrope Orientierung ursächlich. Das Reiben von z. B. Polyimidschichten ist erfindungsgemäß nicht erforderlich um eine homöotrope Orientierung des FK-Mediums gegenüber der Substratoberfläche zu erreichen. Die erfindungsgemäße FK-Anzeige ist vorzugsweise eine VA-Anzeige mit einem FK-Medium mit negativer dielektrischer Anisotropie und auf gegenüberliegenden Substraten angeordneten Elektroden. Alternativ handelt es sich um eine VA-IPS-Anzeige mit einem FK-Medium mit positiver dielektrischer Anisotropie und mindestens auf einem Substrat angeordneten Interdigital-Elektroden handelt.

Das polymerisierbare Selbstorientierungsadditiv der Formel I wird vorzugsweise in einer Konzentration von ≤ 3 Gew.-% eingesetzt. Es wird bevorzugt in einer Konzentration von mindestens 0,05 Gew.-% eingesetzt, bevorzugt mindestens 0,2 Gew.-%. Der Einsatz von 0,1 bis 2,5 Gew.-% des Selbstorientierungsadditivs führt in der Regel schon zu vollständig homöotroper Orientierung der FK-Schicht bei den üblichen Zelldicken (3 bis 4 µm) mit den üblichen Substratmaterialien und unter den üblichen Bedingungen der Herstellungsprozesse einer FK-Anzeige. Durch die polymerisierbare Natur werden auch höhere Konzentrationen an Selbstorientierungsadditiven möglich, ohne das FK-Medium nachhaltig zu beeinflussen, da die polymerisierbare Substanz durch die Polymerisation wieder gebunden wird.

Das erfindungsgemäße FK-Medium kann neben den polymerisierbaren Selbstorientierungsadditiven der Formel I auch weitere Selbstorientierungsadditive enthalten, die nicht polymerisierbar oder von anderer Struktur sind. In einer bevorzugten Ausführungsform enthält das FK-Medium daher ein oder mehrere Selbstorientierungsadditive ohne polymerisierbare Gruppe (konventionelle Selbstorientierungsadditive). Die Konzentration der polymerisierbaren Selbstorientierungsadditive und der konventionellen Selbstorientierungsadditive zusammen beträgt bevorzugt die oben angegebenen Werte, also beispielsweise 0,1 bis 2,5 Gew.-%. Mit einer Kombination von Selbstorientierungsadditiven mit und ohne polymerisierbarer Gruppe erhält man den zusätzlichen Vorteil, dass die Selbstausrichtung des FK-Mediums stabiler gegen den Einfluss von Stress wird (erhöhte Prozessierbarkeit).

Die weiteren, nicht-polymerisierbaren Selbstorientierungsadditive können eine Struktur der Formel I' haben:

R¹-[A³-Z³]ₘ-[A²]ₖ-[Z²]ₙ-A¹-R^{a} I'

worin m, k, n und die Gruppe R^{a} wie für Formel I voranstehend definiert sind, und
- A¹, A², A³: jeweils unabhängig voneinander eine aromatische, heteroaromatische, alicyclische oder heterocyclische Gruppe, welche auch anellierte Ringe enthalten kann, und welche auch durch eine Gruppe L ein- oder mehrfach substituiert sein kann,
- Z²: jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- Z³: jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
- n1: 1, 2, 3, oder 4,
- L: jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
- R⁰: jeweils unabhängig voneinander Alkyl mit 1 bis 12 C-Atomen,
- R⁰⁰: jeweils unabhängig voneinander H oder Alkyl mit 1 bis 12 C-Atomen,
und
- R¹: unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können,
bedeuten.

Die Formel I' umfasst im Gegensatz zur Formel I keine polymerisierbare Gruppe -Sp-P oder P.

Nachfolgend werden bevorzugte und beispielhafte Strukturen der Selbstorientierungsadditive offenbart, insbesondere der polymerisierbaren Selbstorientierungsadditive:
Die Ankergruppe R^{a} enthält definitionsgemäß eine, zwei oder drei Gruppen X¹, die als Bindeglied zu einer Oberfläche dienen sollen. Die Abstandsgruppen sollen eine flexible Bindung zwischen der mesogenen Gruppe mit Ringen und der Gruppe(n) X¹ herstellen. Die Struktur der Abstandsgruppen ist daher sehr variabel und im allgemeinsten Fall der Formel I nicht abschließend definiert. Der Fachmann wird erkennen, das dabei eine Vielzahl von möglichen Variationen von Ketten in Frage kommt.

Eine Ankergruppe der Formel 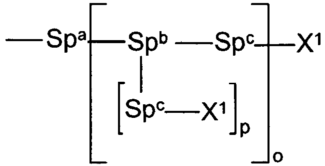 wie vor und nachstehend definiert,
steht bevorzugt für eine Ankergruppe ausgewählt aus den folgenden Formeln: 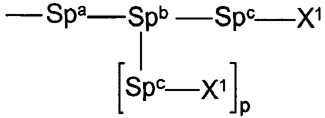 oder

-Sp^{a}-X¹ ,

worin jeweils unabhängig die Gruppen wie vor und nachstehend definiert sind, besonders bevorzugt für eine Gruppe der Formeln

-Sp^{a}-X¹

oder 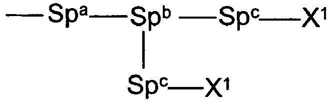 oder 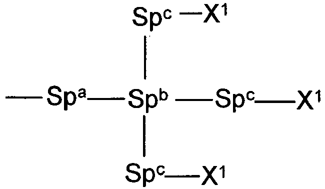 worin jeweils unabhängig die Gruppen wie vor- und nachstehend definiert sind.

Besonders bevorzugte Ankergruppen der Formel R^{a} sind ausgewählt aus den folgenden Teilformeln, wobei die Gruppe R^{a} über die gestrichelte Bindung an die Gruppe A¹ der Formel I bzw. I' angebunden ist:

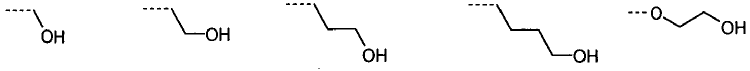

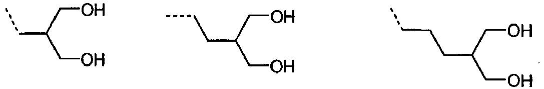

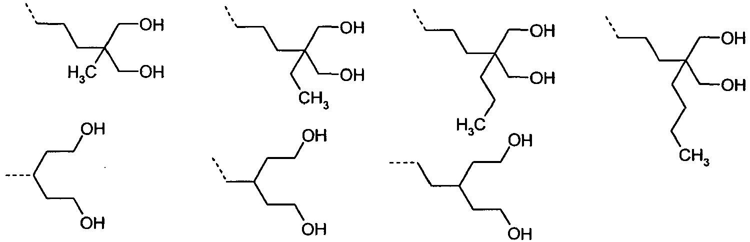

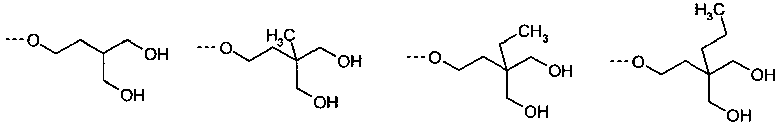

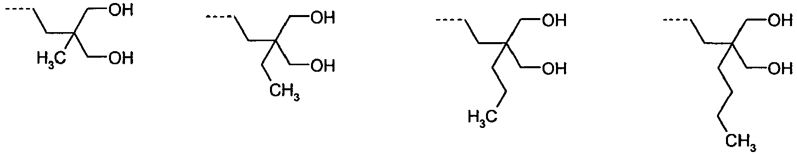

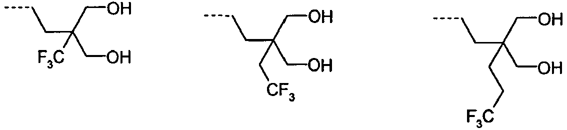

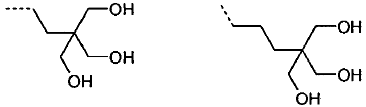

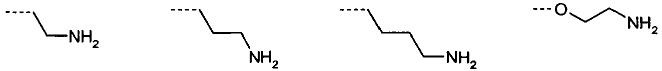

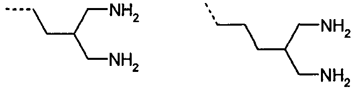

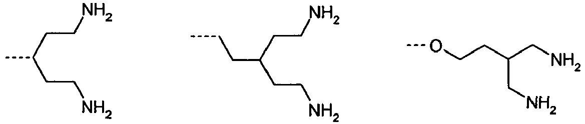

Die Ankergruppe R^{a} in den vorangehenden Formeln I und I' und deren Unterformeln umfasst besonders bevorzugt eine, zwei oder drei OH-Gruppen.

Der Begriff "Abstandsgruppe oder "Spacer", hierin in der Regel mit "Sp" (bzw. Sp^{a/c/d/1/2/3}) bezeichnet, ist dem Fachmann bekannt und in der Literatur beschrieben, z.B. in Pure Appl. Chem. 73(5), 888 (2001) und C. Tschierske, G. Pelzl, S. Diele, Angew. Chem. (2004), 116, 6340-6368. In der vorliegenden Offenbarung bezeichnet der Begriff "Abstandsgruppe" oder "Spacer" eine verbindende Gruppe, beispielsweise eine Alkylengruppe, welche eine mesogene Gruppe mit einer polymerisierbaren Gruppe verbindet. Während die mesogene Gruppe in der Regel Ringe umfasst, ist die Abstandsgruppe in der Regel ohne Ringsysteme, also kettenförmig, wobei die Kette auch verzweigt sein kann. Als Kette wird beispielsweise eine Alkylengruppe aufgefasst. Substitutionen an und in der Kette, z.B durch -O- oder -COO-, sind im Allgemeinen mit umfasst. Funktionell ist der Spacer (die Abstandsgruppe) eine Verbrückung zwischen angegliederten funktionalen Strukturteilen, die eine gewisse räumliche Flexibilität zueinander ermöglicht.

Der Zähler k in der Formel I bedeutet bevorzugt 1, m bevorzugt 1 oder 2, besonders bevorzugt 1, und n bevorzugt 0.

Die Gruppe L bedeutet bevorzugt H, F, Cl, CH₃, Ethyl, Propyl, Cyclopropyl oder Isopropyl.

Die Gruppe Sp^{b} bedeutet bevorzugt
eine trivalente Gruppe der Formel ausgewählt aus CH, C(Me), C(CH₂CH₃) oder N,
oder die tetravalente Gruppe C (vierbindiges Kohlenstoffatom).

Die Gruppe Sp^{a} bedeutet bevorzugt keine Einfachbindung, besonders bevorzugt eine Gruppe ausgewählt aus den Formeln
-CH₂-, -CH₂CH₂-, -OCH₂CH₂-, -CH₂CH₂CH₂-, -OCH₂CH₂CH₂-, -CH₂CH₂CH₂CH₂-, -OCH₂CH₂CH₂CH₂-, -CH₂CH₂OCH₂CH₂-, -OCH₂CH₂OCH₂CH₂-,

Die Gruppe Sp^{c} oder Sp^{d} bedeutet bevorzugt ein Gruppe ausgewählt aus den Formeln
-CH₂-, -CH₂CH₂-, -CH₂CH₂CH₂-, -CH₂CH₂CH₂CH₂-, -CH₂CH₂OCH₂CH₂-,

Eine oben definierte Ankergruppe der Formel 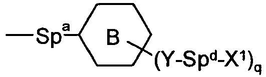 steht bevorzugt für 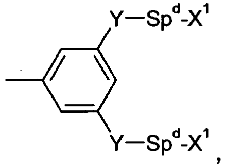 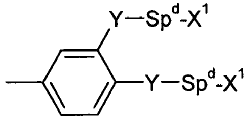 oder 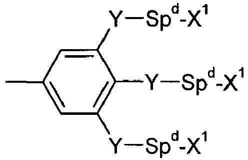 worin Y, Sp^{d}, und X¹ wie für Formel I definiert sind.

Die Ringgruppen A¹, A², A³ bedeuten in den vorangehenden Formeln I und I' und deren Unterformeln jeweils unabhängig bevorzugt 1,4- oder 1,3-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 3,3'-Bicyclobutyliden, 1,4-Cyclohexenylen, Bicyclo[1.1,1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, Perhydro-cyclopenta[a]phenanthren-3,17-diyl (insbesondere Gonan-3,17-diyl), wobei alle diese Gruppen unsubstituiert oder durch eine Gruppe L ein- oder mehrfach substituiert sein können.

Bevorzugt ist mindestens eine der Gruppen A¹, A² und A³, soweit sie vorhanden sind, durch mindestens eine Gruppe L substituiert, wobei in diesem Fall L nicht H bedeutet.

Besonders bevorzugt bedeuten die Gruppen A¹, A², A³ jeweils unabhängig eine Gruppe ausgewählt aus
a) der Gruppe bestehend aus 1,4-Phenylen und 1,3-Phenylen, worin auch ein oder mehrere H-Atome durch L ersetzt sein können,
b) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F oder L ersetzt sein können. Die Gruppen A¹ und A² bedeuten insbesondere bevorzugt eine Gruppe gemäß der vorangehenden Untergruppe a). Ganz besonders bevorzugt bedeuten A¹ und A² unabhängig 1,4-Phenylen oder Cyclohexan-1,4-diyl, welche jeweils durch eine Gruppe L ein- oder mehrfach substituiert sein kann.

Die Verbindungen der Formel I umfassen bevorzugt eine oder mehrere Verbindungen der Formel I1, 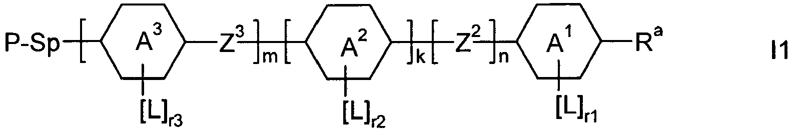 und mehr bevorzugt der Formeln IA, IB, IC, ID, IE oder IF: 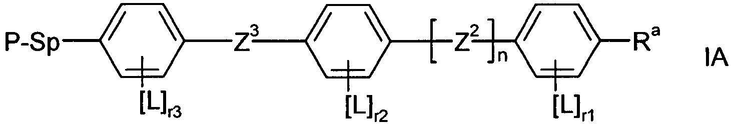 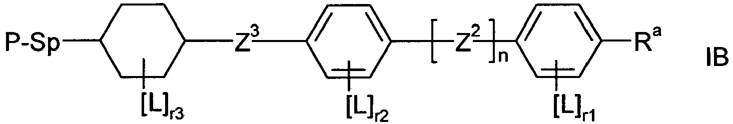 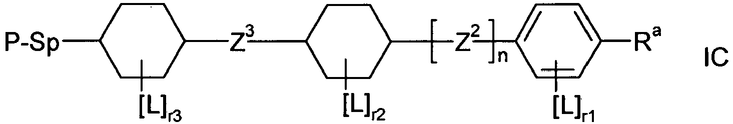 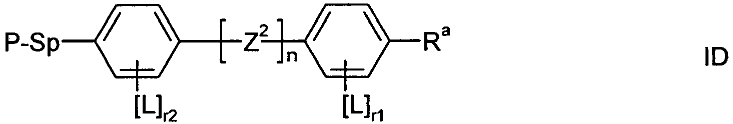 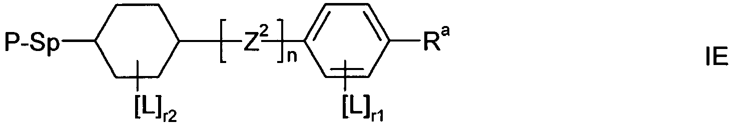 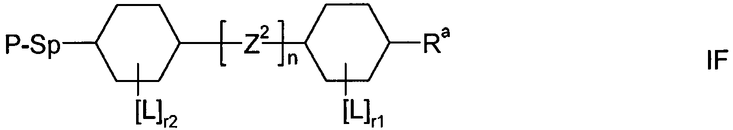 worin jeweils unabhängig R^{a}, A¹, A², A³, Z², Z³, L, Sp, P, m, k und n wie für Formel I definiert sind, und
r1, r2, r3 unabhängig 0, 1, 2 oder 3
bedeuten.

Weiterhin ist es in einer besonderen Ausführungsform der Erfindung bevorzugt, dass in den Formeln I1 und IA, IB und IC r1 + r2 + r3 > 0, und für Formel ID, IE und IF entsprechend r1 + r2 > 0 ist und L nicht H bedeutet, d.h. mindestens ein lateraler Substituent L innerhalb der Gruppen A¹, A², A³ bzw. A¹, A² ist vorhanden. Die erfindungsgemäßen Verbindungen mit einer solchen Gruppe L haben unter anderem eine verbesserte Löslichkeit.

In den vor- und nachstehenden Formeln I und I' sowie in den bevorzugten Unterformeln bedeutet jeweils unabhängig der Zähler n bevorzugt 0.

Besonders bevorzugte Verbindungen der Formel I werden durch die folgenden Formeln veranschaulicht: 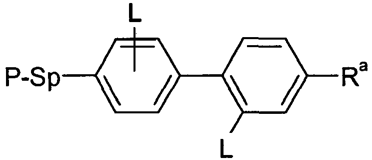 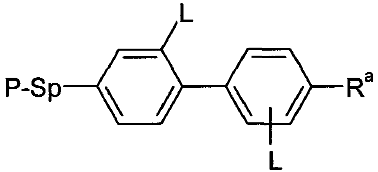 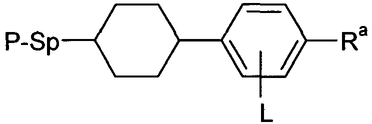 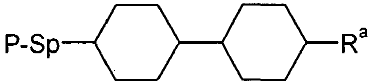 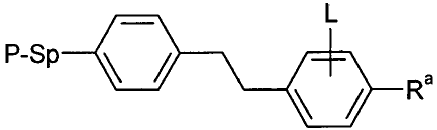 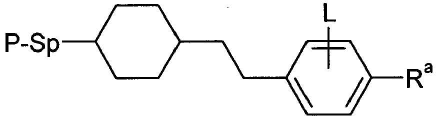 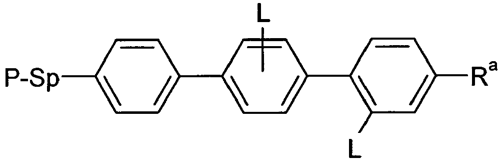 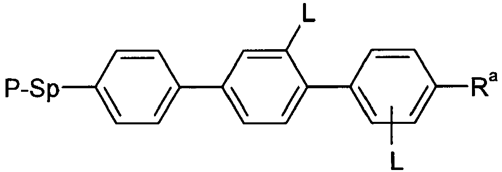 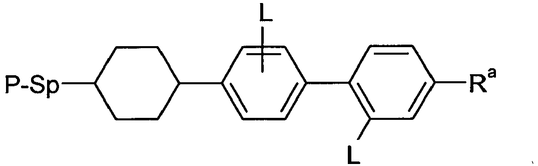 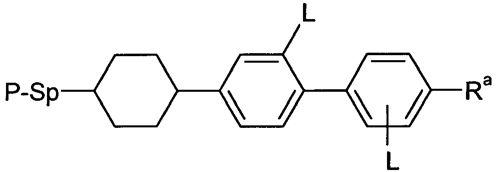 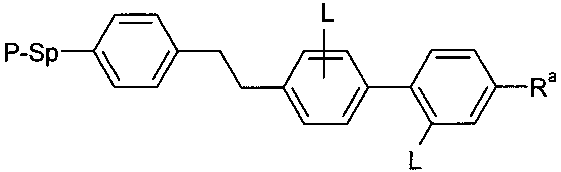 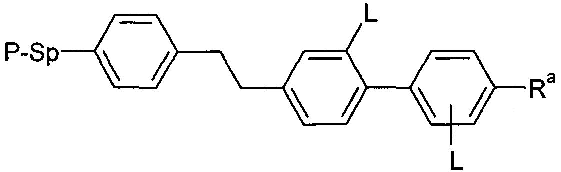 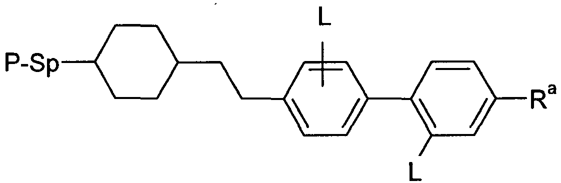 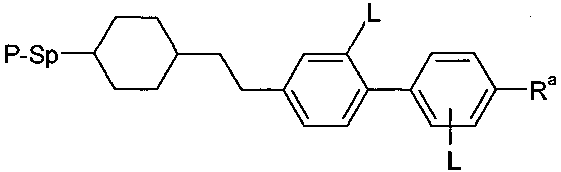 worin R¹, Sp, P, L und R^{a} unabhängig wie für Formel I definiert sind.

Die Verbindungen der Formel I' (konventionelle Selbstorientierungsadditive) umfassen bevorzugt Verbindungen der Formeln IA', IB', IC', ID' oder IE': 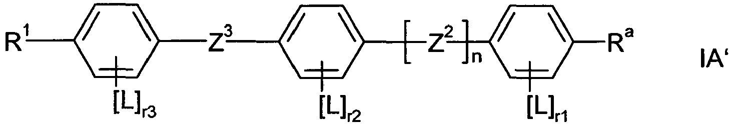 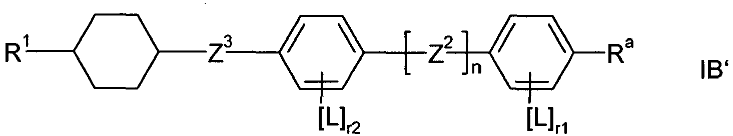 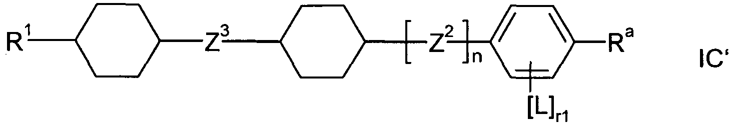 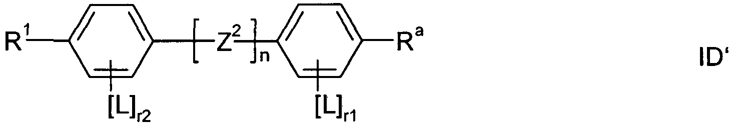 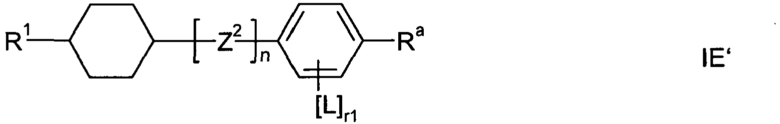
worin R¹, R^{a}, Z², Z³, L und n unabhängig wie für die vorangehende Formel I' definiert sind, und
r1, r2, r3 unabhängig 0, 1, 2, 3 oder 4, bevorzugt 0, 1 oder 2, bedeuten.

Die Herstellung der konventionellen Selbstorientierungsadditive ist z. B. der Druckschrift WO 2012/038026 zu entnehmen.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Aryl- und Heteroarylgruppen können einkernig oder mehrkernig sein, d.h. sie können einen Ring (wie z.B. Phenyl) oder zwei oder mehr anellierte Ringe aufweisen. Wenigstens einer der Ringe besitzt dabei eine aromatische Konjugation. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Naphthyl, Anthracen, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, Cumarin oder Kombinationen dieser Gruppen.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Cyclohexen, Tetrahydropyran, Tetrahydrothiopyran, 1,3-Dioxan, 1,3-Dithian, Piperidin, 7-gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Im Zusammenhang mit der vorliegenden Erfindung bedeutet der Ausdruck "Alkyl" einen geradkettigen oder verzweigten, gesättigten oder ungesättigten, bevorzugt gesättigten, aliphatischen Kohlenwasserstoffrest mit 1 bis 15 (d.h. 1, 2, 3, 4, 5, 6, 7, 8, 9, 10, 11, 12, 13, 14 oder 15) Kohlenstoffatomen.

Der Begriff "cyclisches Alkyl" umfasst Alkylgruppen, die wenigstens einen carbocyclischen Teil aufweisen, also beispielsweise auch Cycloalkylalkyl, Alkylcycloalkyl und Alkylcycloalkylalkyl. Die carbocyclischen Gruppen umfassen z. B. Cyclopropyl, Cyclobutyl, Cyclopentyl, Cyclohexyl, Cycloheptyl, Cyclooctyl, usw.

"Halogen" steht im Zusammenhang der vorliegenden Erfindung für Fluor, Chlor, Brom beziehungsweise Iod, bevorzugt für Fluor oder Chlor.

Die oben stehenden bevorzugten Verbindungen der Formel I lassen sich prinzipiell nach folgenden exemplarischen Syntheserouten herstellen (Schema 1a-3b):

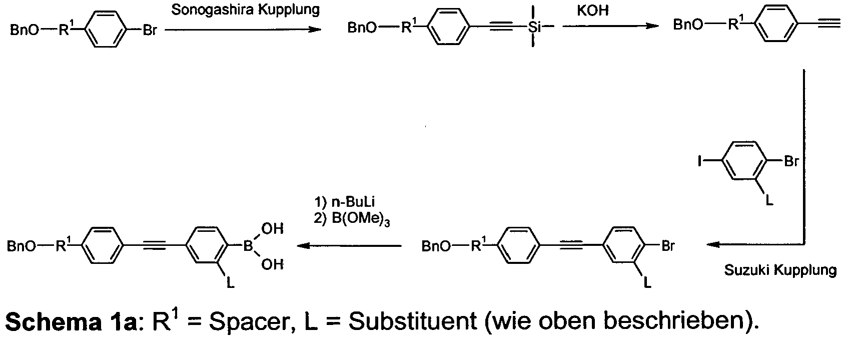

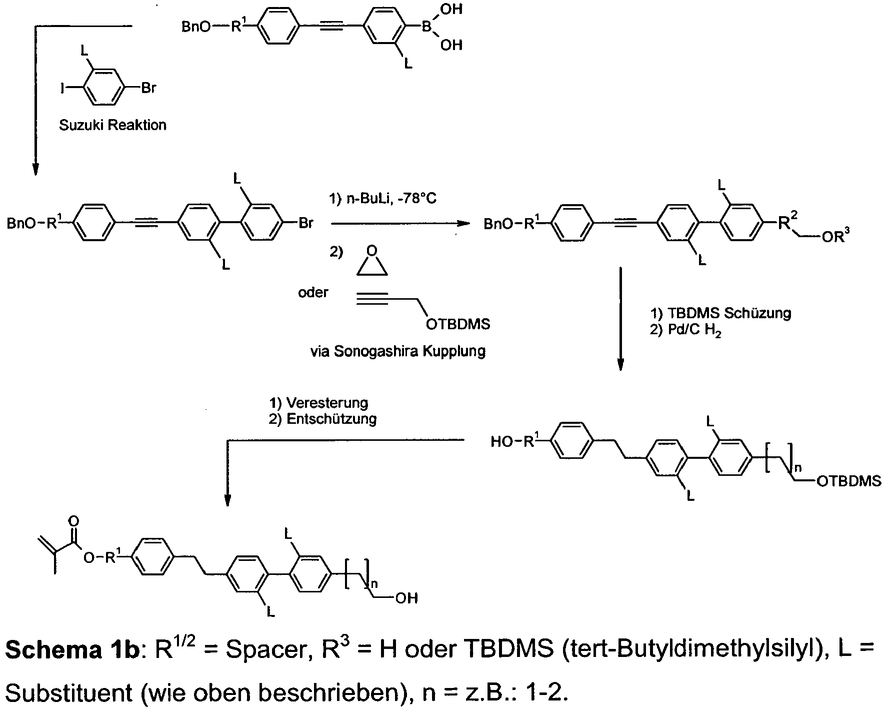

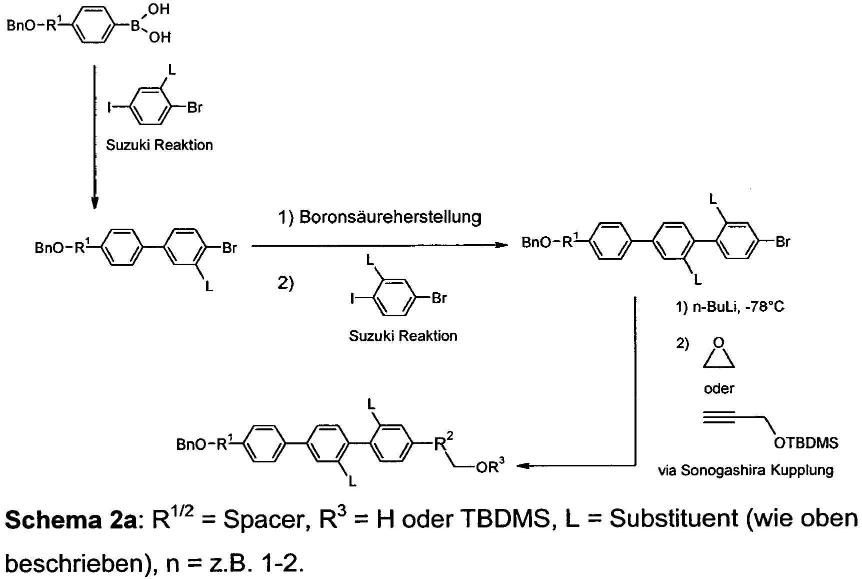

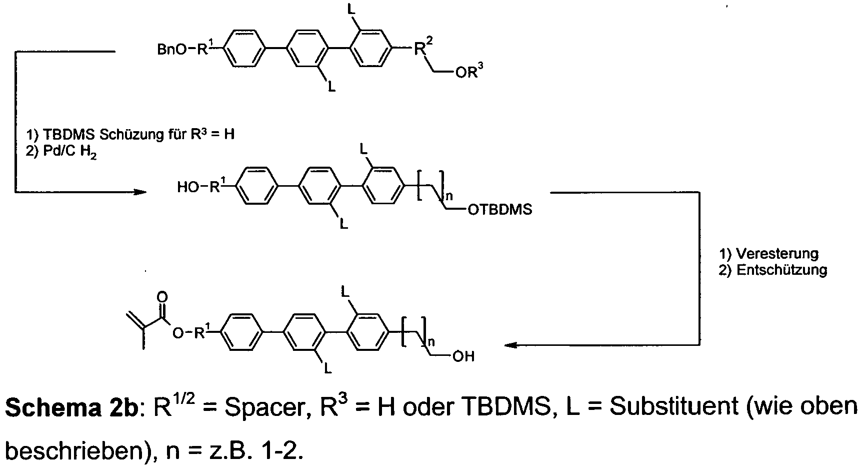

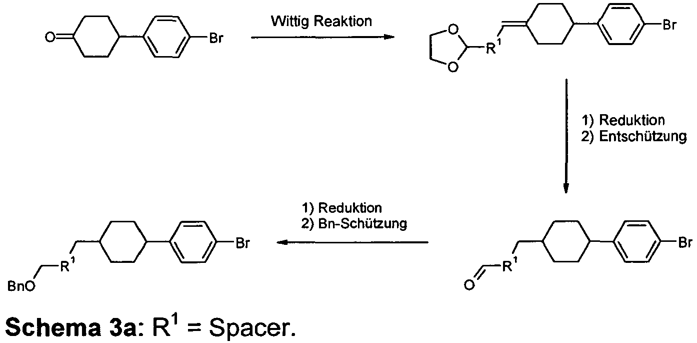

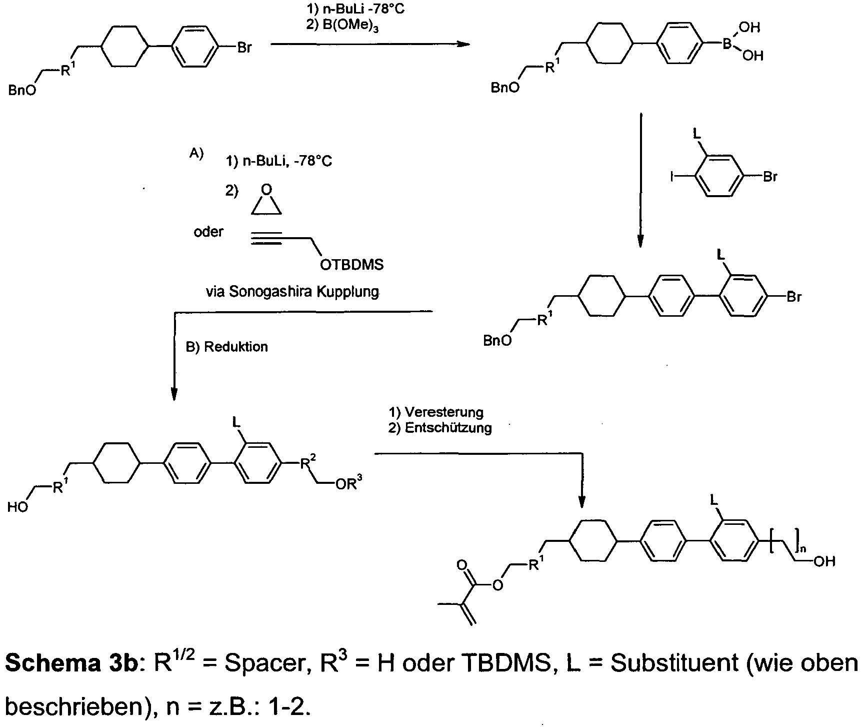

Die polymerisierbare Komponente des erfindungsgemäßen FK-Medium umfasst vorzugsweise neben den Verbindungen der Formel I weitere polymerisierbare oder (teil-)polymerisierte Verbindungen. Dabei handelt es sich vorzugsweise um herkömmliche polymerisierbare Verbindungen ohne Ankergruppe, vorzugsweise mesogene Verbindungen, insbesondere solche die geeignet für die PSA-Technik sind. Dafür bevorzugte polymerisierbare Verbindungen sind die unten für Formel M und deren Unterformeln angegeben Strukturen. Das daraus gebildete Polymer kann die Ausrichtung des FK-Mediums stabilisieren, optional eine Passivierungsschicht ausbilden, und optional einen Pretilt erzeugen.

Die erfindungsgemäßen FK-Medien enthalten daher vorzugweise >0 bis <5 Gew.-%, besonders bevorzugt 0,05 bis 1 Gew.-% und ganz besonders bevorzugt 0,2 bis 1 Gew.-% an polymerisierbaren Verbindungen ohne Ankergruppe R^{a}, insbesondere Verbindungen der Formel M wie unten definiert und der darunter fallenden bevorzugten Formeln.

Die Polymerisation der polymerisierbaren Komponente(n) erfolgt zusammen oder in Teilschritten unter unterschiedlichen Polymerisationsbedingungen. Bevorzugt erfolgt die Polymerisation unter Einwirkung von UV-Licht. In der Regel wird die Polymerisation mit Hilfe eines Polymerisationsinitiators und UV-Licht eingeleitet. Bei den bevorzugten Acrylaten wird auf diese Weise eine praktisch vollständige Polymerisation erreicht. Bei der Polymerisation kann optional eine Spannung an die Elektroden der Zelle angelegt werden oder ein anderes elektrisches Feld angewendet werden, um die Ausrichtung des FK-Mediums zusätzlich zu beeinflussen.

Besonders bevorzugt sind erfindungsgemäße FK-Medien die neben den Verbindungen der Formel I weitere polymerisierbare oder (teil-) polymerisierte Verbindungen (ohne Ankergruppe) und weitere Selbstorientierungsadditive, die nicht polymerisierbar sind, enthalten. Diese weiteren, nicht polymerisierbaren Selbstorientierungsadditive sind vorzugsweise solche wie oben beschrieben, vgl. die Formeln I', IA', IB', IC', ID', IE'.

Die optional enthaltenen weiteren Monomere der polymerisierbaren Komponente des FK-Mediums werden vorzugsweise durch die folgende Formel M beschrieben:

P¹-Sp¹-A²-A¹)ₙ-Sp²-P² M

worin die einzelnen Reste folgende Bedeutung besitzen:
- P¹, P²: jeweils unabhängig voneinander eine polymerisierbare Gruppe,
- Sp¹, Sp²: bei jedem Auftreten gleich oder verschieden eine Abstandsgruppe oder eine Einfachbindung,
- A¹, A²,: jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch eine Gruppe L ersetzt sein können, oder ein Rest der Formel 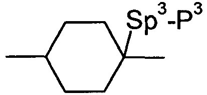
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 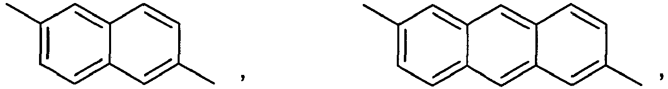 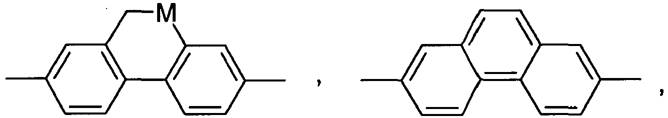 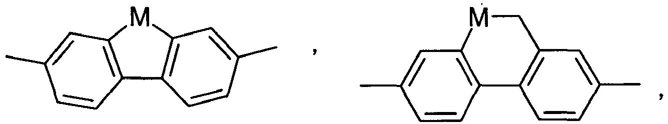 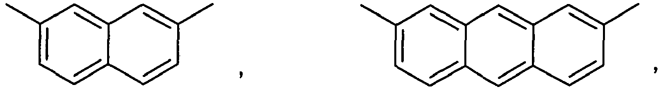 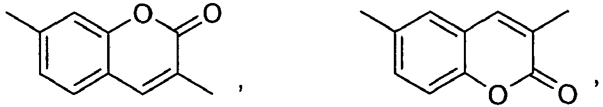 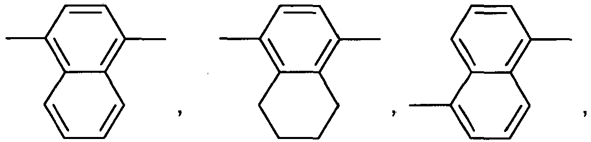 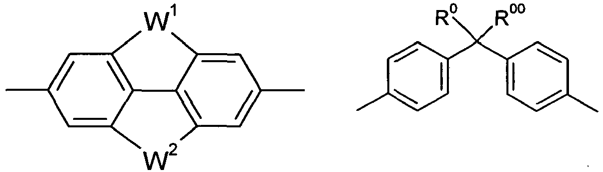 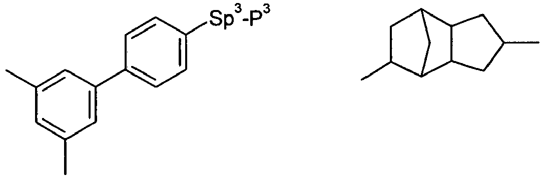 wobei in diesen Resten auch ein oder mehrere H- Atome durch eine Gruppe L oder -Sp³-P ersetzt sein können, und/oder eine oder mehrere Doppelbindungen durch Einfachbindungen ersetzt sein können, und/oder ein oder mehrere CH-Gruppen durch N ersetzt sein können,
- P³: eine polymerisierbare Gruppe,
- Sp³: eine Abstandsgruppe,
- n: 0, 1, 2 oder 3, bevorzugt 1 oder 2,
- Z¹: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{c}R^{d})-, -CH₂CF₂-, -CF₂CF₂-, oder eine Einfachbindung,
- L: bei jedem Auftreten gleich oder verschieden F, Cl, CN, SCN, SF₅ oder geradkettiges oder verzweigtes, jeweils optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,
- R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
- M: -O-, -S-, -CH₂-, -CHY¹- oder -CY¹Y²-, und
- Y¹, und Y²: jeweils unabhängig voneinander eine der oben für R⁰ angegebenen Bedeutungen, Cl oder CN, und vorzugsweise H, F, Cl, CN, OCF₃ oder CF₃,
- W¹, W²: jeweils unabhängig voneinander -CH₂CH₂-, -CH=CH-, -CH₂-O-, -O-CH₂-, -C(R^{c}R^{d})- oder -O- bedeuten,
- R^{c} und R^{d}: jeweils unabhängig voneinander H oder Alkyl mit 1 bis 6 C-Atomen, vorzugsweise H, Methyl oder Ethyl, bedeuten,
wobei eine oder mehrere der Gruppen P¹-Sp¹-, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen), wobei die Gruppen -OH, -NH₂, -SH, -NHR, -C(O)OH und -CHO in R^{aa} nicht enthalten sind.

Die polymerisierbare Gruppe P, P¹, P² bzw. P³ in den vorangehenden und nachfolgenden Formeln ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen.

Bevorzugte Gruppen P/P¹/P²/P³ sind ausgewählt aus der Gruppe bestehend aus CH₂=CW¹-CO-O-, CH₂=CW¹-CO-, 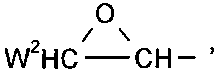 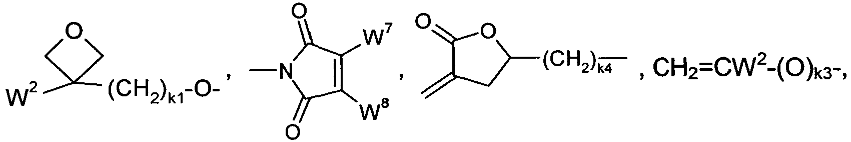 CW¹=CH-CO-(O)ₖ₃-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CH-(COO)ₖ₁-Phe-(O)ₖ₂-, CH₂=CH-(CO)ₖ₁-Phe-(O)ₖ₂-, Phe-CH=CH-, HOOC- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P/P¹/P²/P³ sind ausgewählt aus der Gruppe bestehend aus CH₂=CW¹-CO-O-, CH₂=CW¹-CO-, 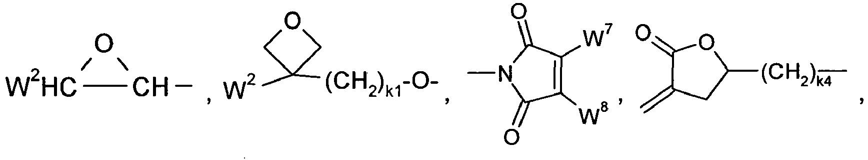 CH₂=CW²-O-, CW¹=CH-CO-(O)ₖ₃-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, CI oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P/P¹/P²/P³ sind ausgewählt aus der Gruppe bestehend aus CH₂=CW¹-CO-O-, insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-,

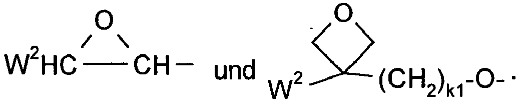

Ganz besonders bevorzugte Gruppen P/P¹/P²/P³ sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen wiederum bevorzugt eine Acrylat- oder Methacrylatgruppe.

Bevorzugte Abstandsgruppen Sp, Sp¹, Sp² bzw. Sp³ sind eine Einfachbindung oder ausgewählt aus der Formel Sp"-X", so dass der Rest P^{1/2}-Sp^{1/2}- der Formel P^{1/2}-Sp"-X"- entspricht, wobei
Sp" Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C≡C- ersetzt sein können, dass O- und/oder S-Atome nicht direkt miteinander verknüpft sind,
X" -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C=C-, -CH=CH-CO-O-, -O-CO-CH=CH- oder eine Einfachbindung bedeutet,
R⁰⁰ jeweils unabhängig Alkyl mit 1 bis 12 C-Atomen bedeutet,
R⁰⁰⁰ jeweils unabhängig H oder Alkyl mit 1 bis 12 C-Atomen bedeuten, und
Y² und Y³ jeweils unabhängig voneinander H, F, Cl oder CN bedeuten.
X" ist vorzugsweise -O-, -S -CO-, -COO-, -OCO-, -O-COO-, oder eine Einfachbindung.

Typische Abstandsgruppen Sp" sind beispielsweise eine Einfachbindung, -(CH₂)ₚ₁-, -(CH₂CH₂O)_{q1}-CH₂CH₂-, -CH₂CH₂-S-CH₂CH₂-, oder -(SiR⁰⁰R⁰⁰⁰-0)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Die Substanzen der Formel M enthalten keine Ankergruppe, also z. B. keine Gruppe -OH, -NH₂, -SH, -NHR¹¹, -C(O)OH und -CHO Reste.

Geeignete und bevorzugte (Co-)Monomere für die Verwendung in erfindungsgemäßen Anzeigen sind beispielsweise ausgewählt aus den folgenden Formeln: 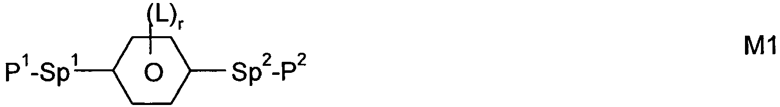 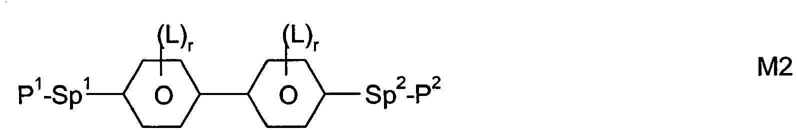 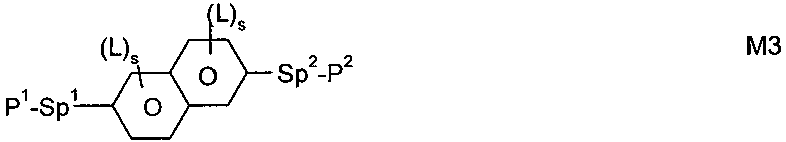 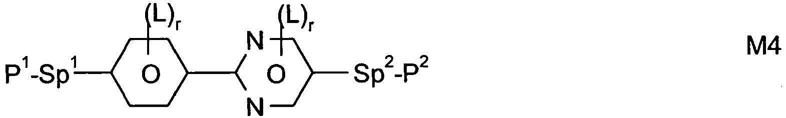 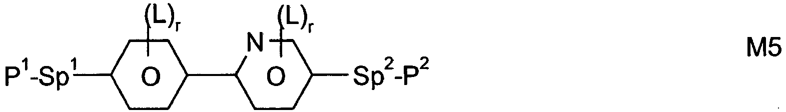 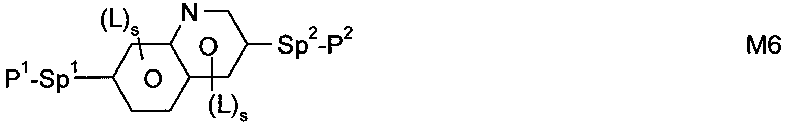 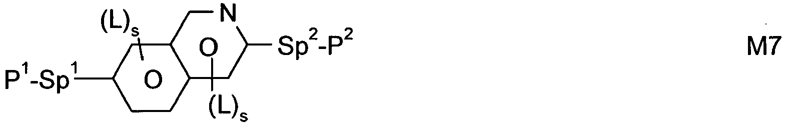 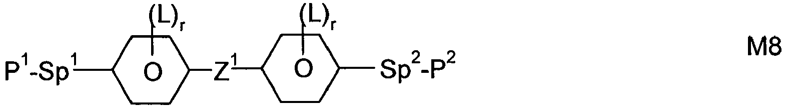 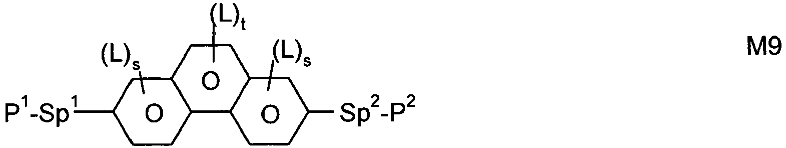 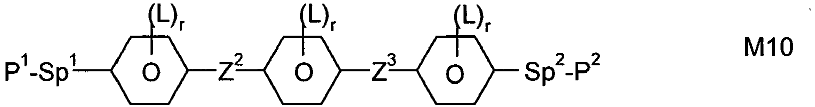 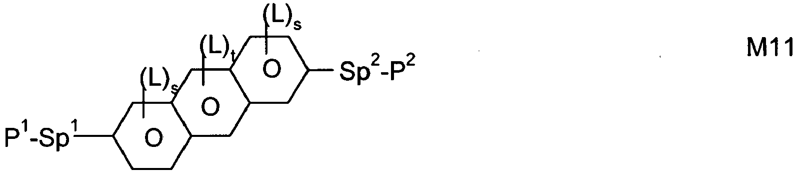 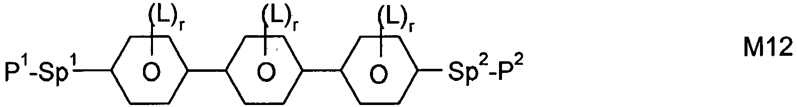 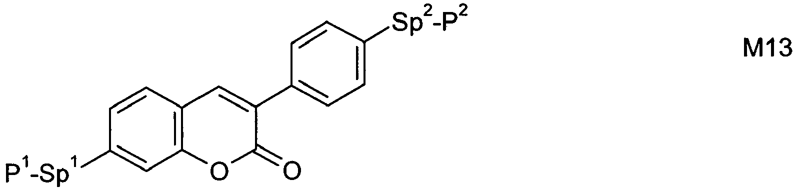 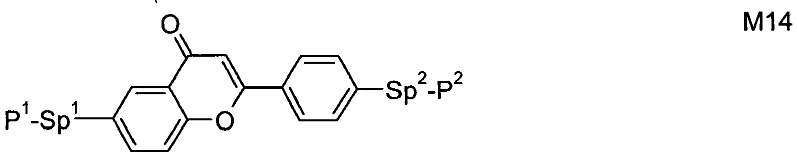 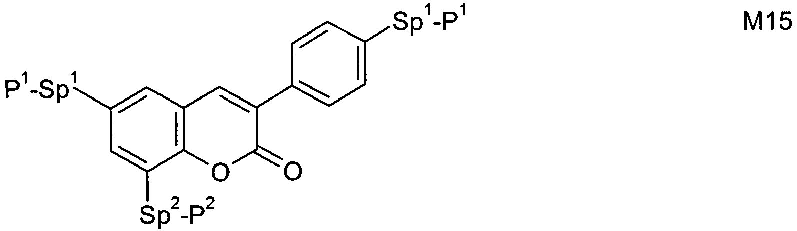 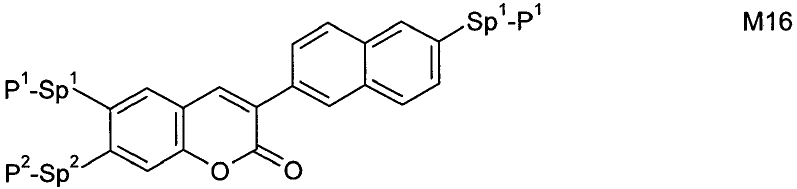 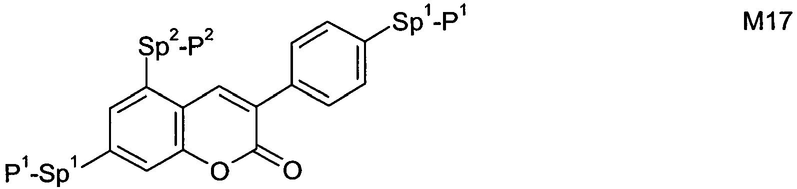 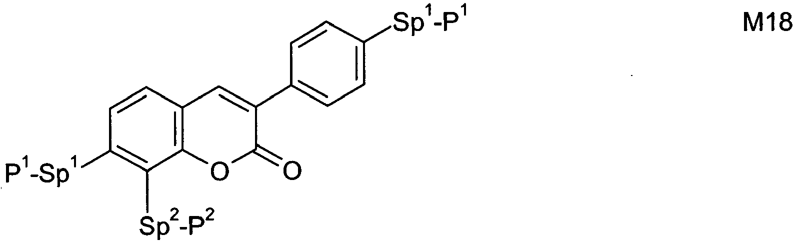 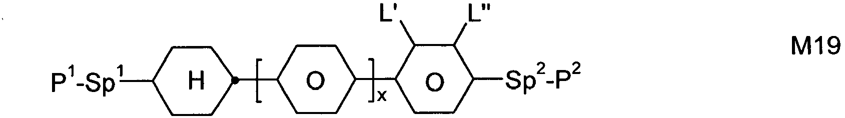 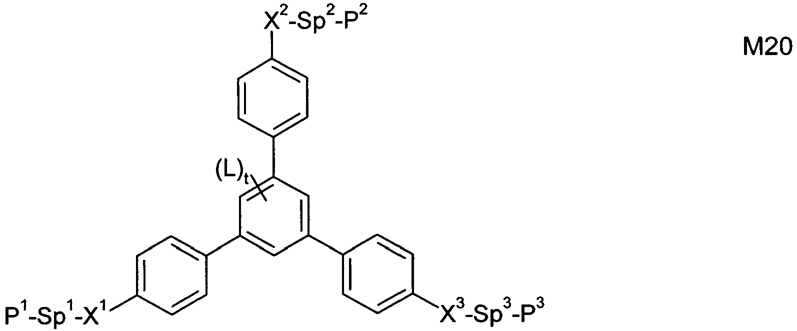 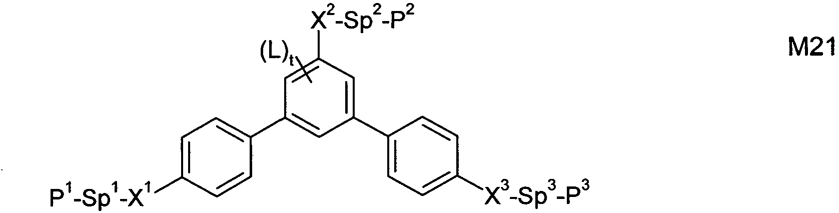 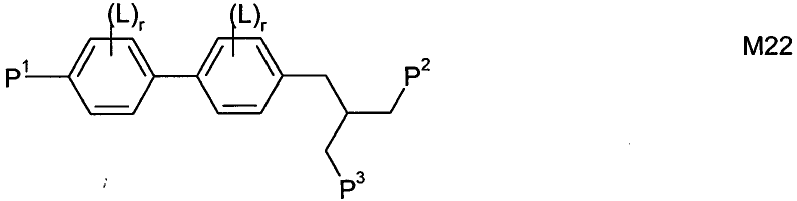 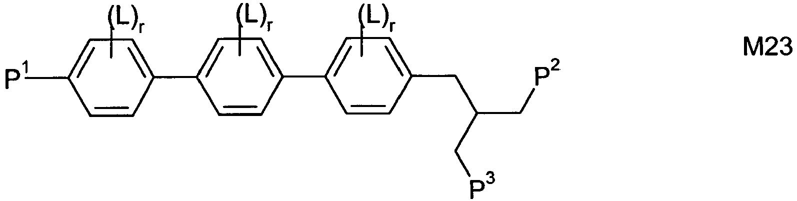 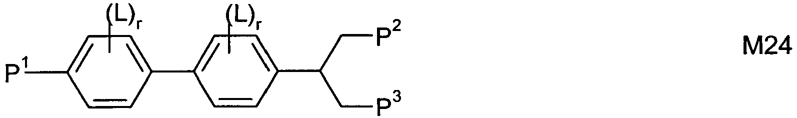 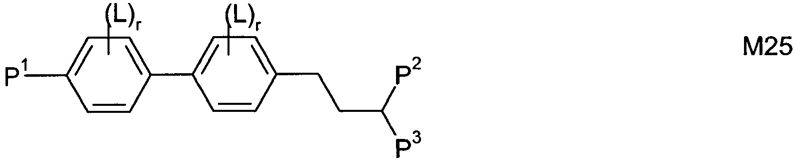 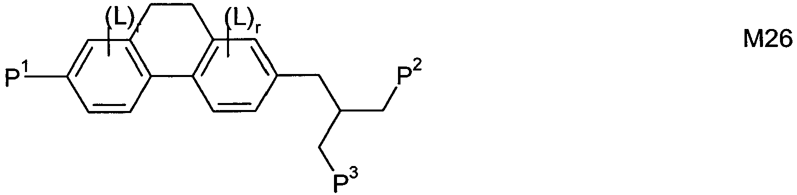 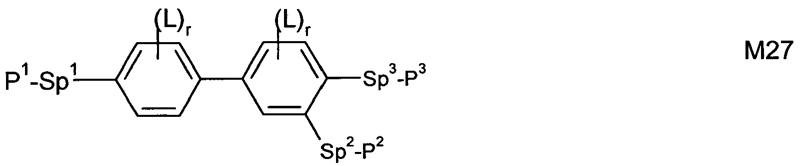 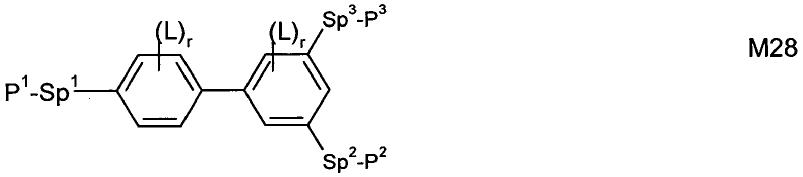 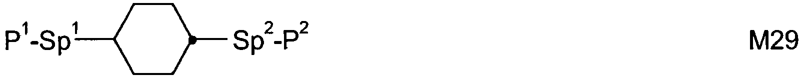 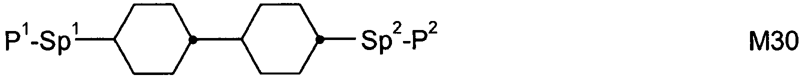 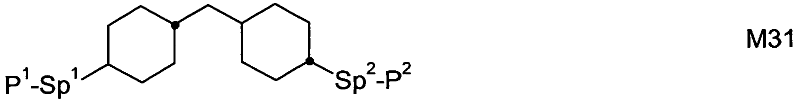 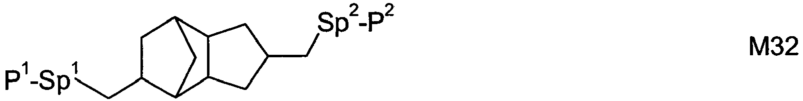 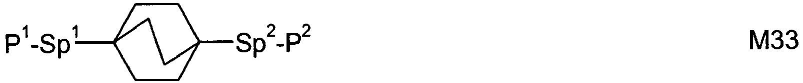 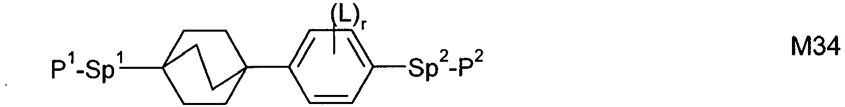 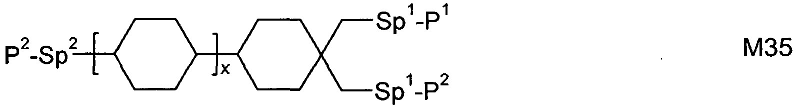 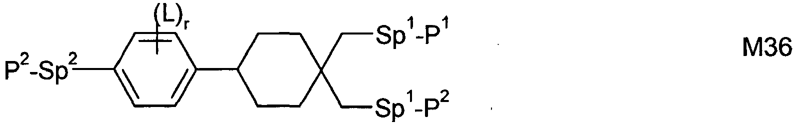 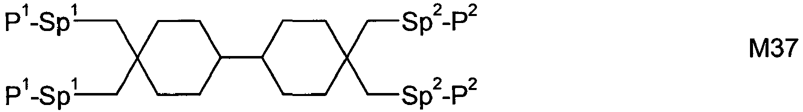 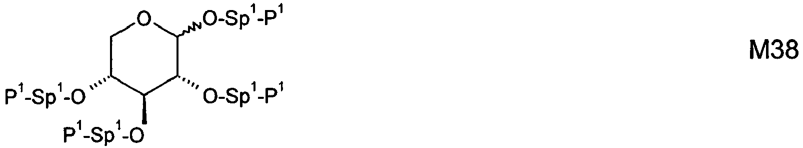 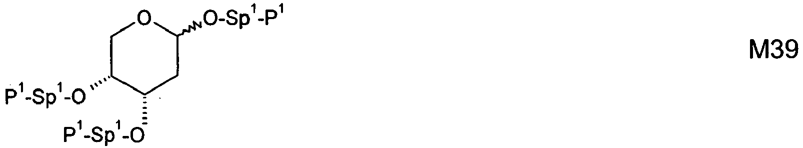 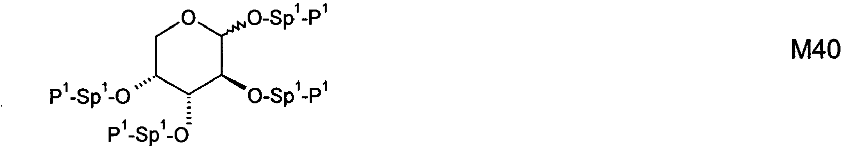 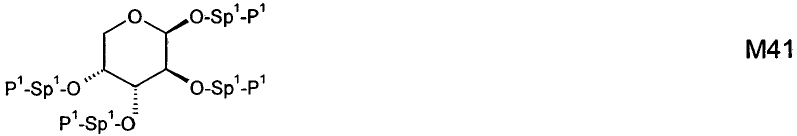 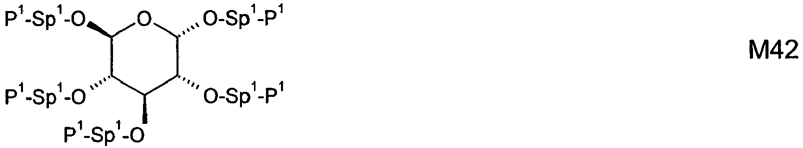 worin die einzelnen Reste folgende Bedeutung besitzen:
P¹,P² und P³ jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
Sp¹, Sp² und Sp³ jeweils unabhängig voneinander eine Einfachbindung oder eine Abstandsgruppe, vorzugsweise mit einer der vor- und nachstehend für Formel M angegebenen Bedeutungen, und besonders bevorzugt -(CH₂)ₚ₁-, -(CH₂)ₚ₁-O-, -(CH₂)ₚ₁-CO-O-oder -(CH₂)p₁-O-CO-O-, worin p1 eine ganze Zahl von 1 bis 12 ist, und wobei in den letztgenannten Gruppen die Anbindung zum benachbarten Ring über das O-Atom erfolgt,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
wobei -OH, -NH₂, -SH, -NHR, -C(O)OH und -CHO in der Gruppe R^{aa} nicht enthalten sind,
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- X¹, X² und X³: jeweils unabhängig voneinander -CO-O-, O-CO- oder eine Einfachbindung,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

In den Verbindungen der Formeln M1 bis M42 bedeutet die Ringgruppe 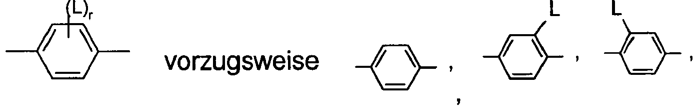 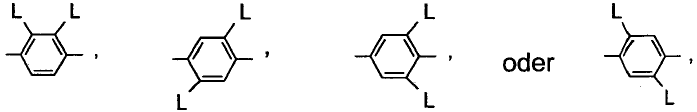 worin L, bei jedem Auftreten gleich oder verschieden, eine der vorstehenden Bedeutungen hat und vorzugsweise F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ oder P-Sp-, besonders bevorzugt F, Cl, CN, CH₃, C₂H₅, OCH₃, COCH₃, OCF₃ oder P-Sp-, ganz besonders bevorzugt F, Cl, CH₃, OCH₃, COCH₃ oder OCF₃, insbesondere F oder CH₃ bedeutet.

Vorzugsweise umfasst das FK-Medium oder die polymerisierbare Komponente eine oder mehrere Verbindungen ausgewählt aus der Gruppe der Formeln M1-M28, besonders bevorzugt der Formeln M2-M15, ganz besonders bevorzugt der Formeln M2, M3, M9, M14 und M15. Vorzugsweise umfasst das FK-Medium oder die polymerisierbare Komponente keine Verbindungen der Formel M10, worin Z² und Z³ -(CO)O- oder -O(CO)-bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymerisierbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocurel 173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen Selbstorientierungsadditiven und den optionalen polymerisierbaren Verbindungen (M) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und VA-IPS-Anzeigen geeignete dielektrisch negative bzw. positive FK-Mischung. Der Anteil der Host-Mischung beträgt für Flüssigkristallanzeigen in der Regel 95 Gew.-% oder mehr, bevorzugt 97 Gew.-% oder mehr.

Geeignete FK-Mischungen sind dem Fachmann bekannt und in der Literatur beschrieben. FK-Medien für VA-Anzeigen mit negativer dielektrischer Anisotropie sind z. B. in EP 1 378 557 A1 oder WO 2013/004372 beschrieben.

Geeignete FK-Mischungen mit positiver dielektrischer Anisotropie, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt.

Im Folgenden werden bevorzugte Ausführungsformen für das erfindungsgemäße flüssigkristalline Medium mit negativer dielektrischer Anisotropie angeführt:
FK-Medium, welches zusätzlich eine oder mehrere Verbindungen ausgewählt aus der Gruppe der Verbindungen der Formeln A, B und C enthält, 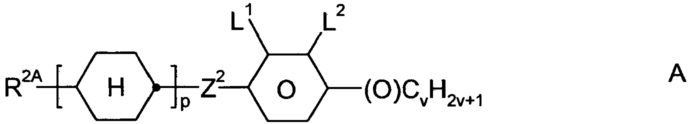 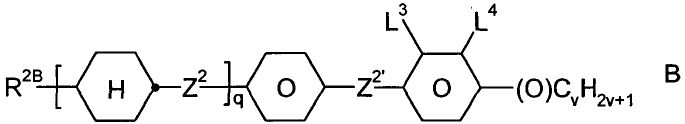 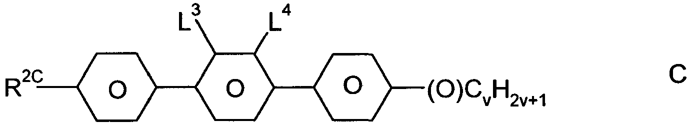 worin
- R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 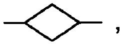 -C≡C-, -CF₂O-, -OCF₂-, -OC-O- oder -O-CO- so ersetzt sein können, dass O-Atome nicht direkt miteinander verknüpft sind,
- L¹⁻⁴: jeweils unabhängig voneinander F, Cl, CF₃ oder CHF₂,
- Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
- p: 1 oder 2, bevorzugt 1,
- q: 0 oder 1, und
- v: 1 bis 6
bedeuten.

In den Verbindungen der Formeln A und B können Z² gleiche oder unterschiedliche Bedeutungen haben. In den Verbindungen der Formel B können Z² und Z^{2'} gleiche oder verschiedene Bedeutungen aufweisen. In den Verbindungen der Formeln A, B und C bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln A und B bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln A und B vorzugsweise jeweils unabhängig voneinander eine Einfachbindung, ferner eine -C₂H₄-Brücke.

Sofern in der Formel B Z² = -C₂H₄-ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln A und B bedeutet (O)CᵥH₂ᵥ₊₁ vorzugsweise OCᵥH₂ᵥ₊₁, ferner C_{y}H₂ᵥ₊₁. In den Verbindungen der Formel C bedeutet (O)CᵥH₂ᵥ₊₁ vorzugsweise CᵥH₂ᵥ₊₁. In den Verbindungen der Formel C bedeuten L³ und L⁴ vorzugsweise jeweils F.

Bevorzugte Verbindungen der Formeln A, B und C sind beispielsweise: 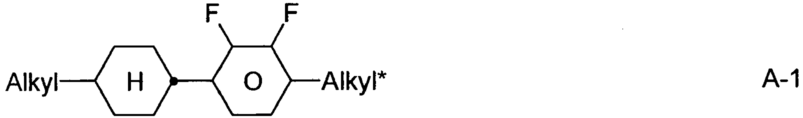 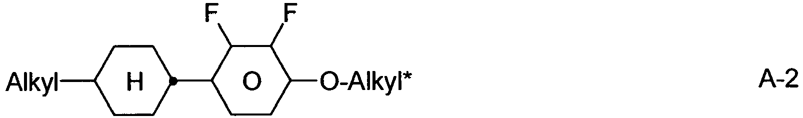 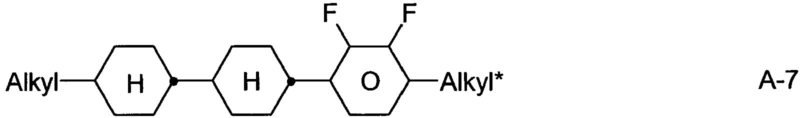 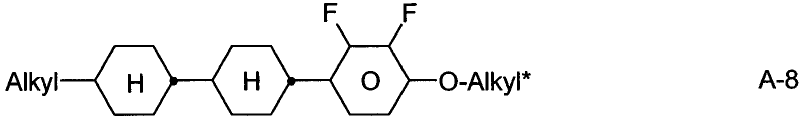 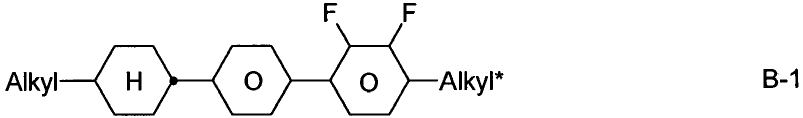 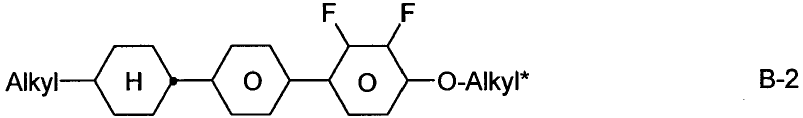 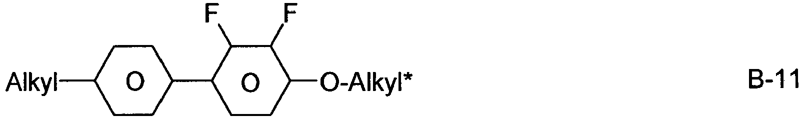 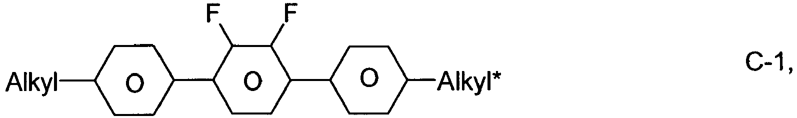 worin Alkyl und Alkyl* jeweils unabhängig voneinander einen geradkettigen Alkylrest mit 1-6 C-Atomen bedeuten.

Das FK-Medium weist vorzugsweise ein Δε von -1,5 bis -8,0, insbesondere von -2,5 bis -6,0 auf.

Die Werte der Doppelbrechung Δn in der Flüssigkristallmischung liegen in der Regel zwischen 0,07 und 0,16, vorzugsweise zwischen 0,08 und 0,12. Die Rotationsviskosität γ₁ bei 20 °C vor der Polymerisation ist vorzugsweise ≤ 165 mPa·s, insbesondere ≤ 140 mPa·s.

Im Folgenden werden bevorzugte Ausführungsformen für das erfindungsgemäße flüssigkristalline Medium mit negativer oder positiver dielektrischer Anisotropie angeführt:

LC-Medium, welches zusätzlich eine oder mehrere Verbindungen der Formel II und/oder III enthält: 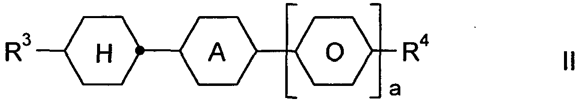 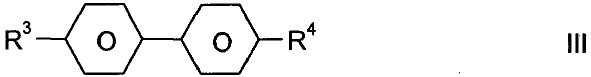 worin
- Ring A: 1,4-Phenylen oder trans-1,4-Cyclohexylen bedeutet,
- a: 0 oder 1 ist,
- R³: jeweils unabhängig voneinander Alkyl mit 1 bis 9 C-Atomen oder Alkenyl mit 2 bis 9 C-Atomen bedeutet, vorzugsweise Alkenyl mit 2 bis 9 C-Atomen, und
- R⁴: jeweils unabhängig voneinander einen unsubstituierten oder halogenierten Alkylrest mit 1 bis 12 C-Atomen, wobei auch eine oder zwei nicht benachbarte CH₂-Gruppen durch -O-, -CH=CH-, -CH=CF-, -(CO)-, -O(CO)- oder -(CO)O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

Die Verbindungen der Formel II sind vorzugsweise ausgewählt aus der Gruppe bestehend aus folgenden Formeln: 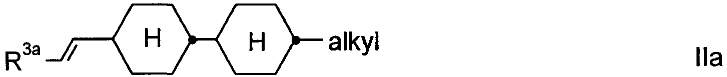 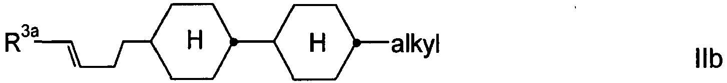 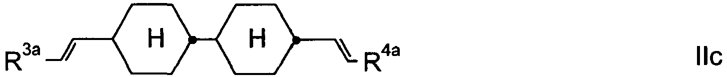 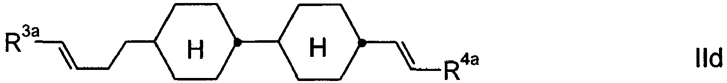 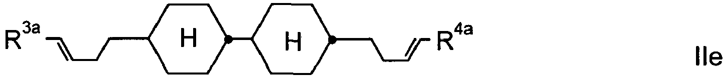 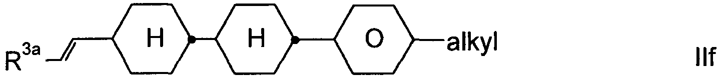 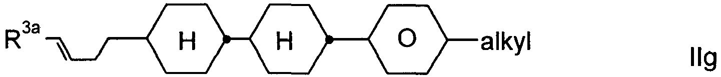 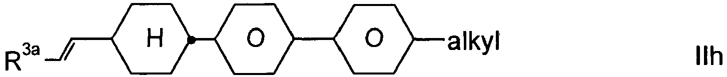 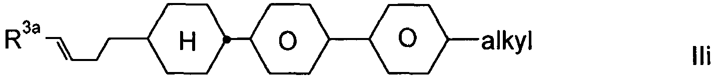 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIa und IIf, insbesondere solche, worin R^{3a} H oder CH₃, vorzugsweise H, bedeutet, und Verbindungen der Formel IIc, insbesondere solche, worin R^{3a} und R^{4a} H, CH₃ oder C₂H₅ bedeuten.

Im Folgenden werden bevorzugte Ausführungsformen für das erfindungsgemäße flüssigkristalline Medium mit positiver dielektrischer Anisotropie angeführt:
Das FK-Medium enthält bevorzugt eine oder mehrere Verbindungen der Formeln IV und V: 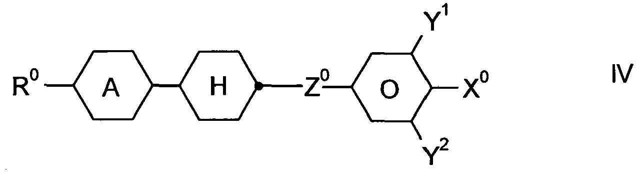 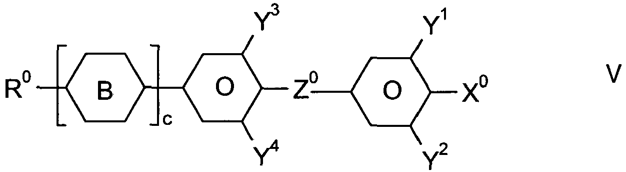 worin
- R⁰: Alkyl- or Alkoxyrest mit 1 to 15 C Atomen, worin optional zusätzlich eine oder mehrere CH₂ Gruppen in diesen Resten, unabhängig voneinander, durch -C≡C-, -CF₂O-, -CH=CH-, 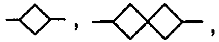 -O-, -(CO)O- or -O(CO)- so substituiert sind, dass O-Atome nicht direkt miteinander verknüpft sind, und in denen zusätzlich ein oder mehrere H-Atome optional durch Halogen ersetzt sein können,
- Ring A: 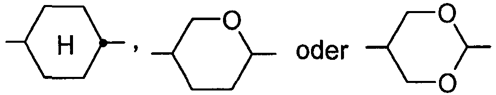
- Ring B: unabhängig voneinander 1,4-Phenylen, optional substituiert durch ein oder zwei F oder Cl, 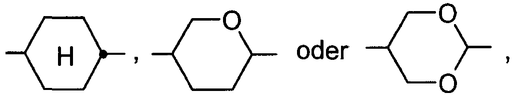
- X⁰: F, Cl, CN, SF₅, SCN, NCS, eine halogenierte Alkylgruppe, eine halogenierte Alkenylgruppe, eine halogenierte Alkoxygruppe oder eine halogenierte Alkenyloxygruppe, jeweils mit bis zu 6 C-Atomen,
- Y¹⁻⁴: jeweils unabhängig voneinander H or F,
- Z⁰: -CF₂O-, -(CO)O- oder eine Einfachgruppe, und
- c: 0, 1 oder 2, bevorzugt 1 oder 2. 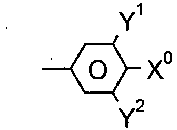
bedeutet bevorzugt

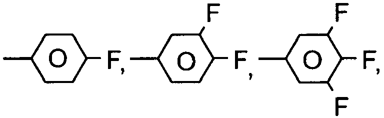

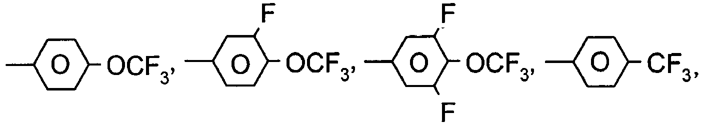

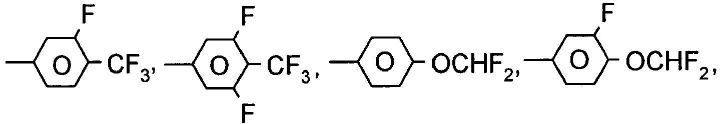

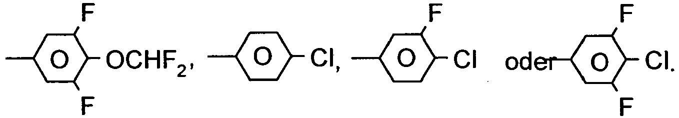

R⁰ bedeutet bevorzugt geradkettiges Alkyl oder Alkenyl mit 2 bis 7 C-Atomen; X⁰ bedeutet bevorzugt F, OCF₃, Cl oder CF₃, insbesondere F.

Die nematische Phase des dielektrisch negativen oder positiven FK-Mediums gemäß der Erfindung hat bevorzugt eine nematische Phasen in einem Temperaturbereich von 10 °C oder weniger bis 60 °C oder mehr, besonders bevorzugt von 0 oder weniger bis 70 °C oder mehr.

Im Rahmen der vorliegenden Anmeldung sind die beiden Formeln für substituierte Benzolringe 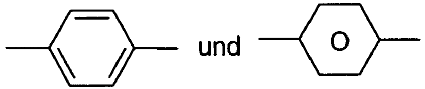 gleichbedeutend. 1,4-substituiertes Cyclohexan wir durch 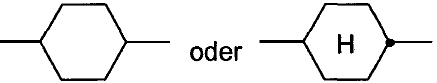 wiedergegeben, welches vorzugweise 1,4-trans-konfiguriert ist. Ein durch die Gruppe L substituierter Phenylenring der Formel 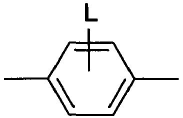 ist an genau einer beliebigen Stelle durch eine Gruppe L substituiert.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, z und k sind ganze Zahlen und bedeuten vorzugsweise 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

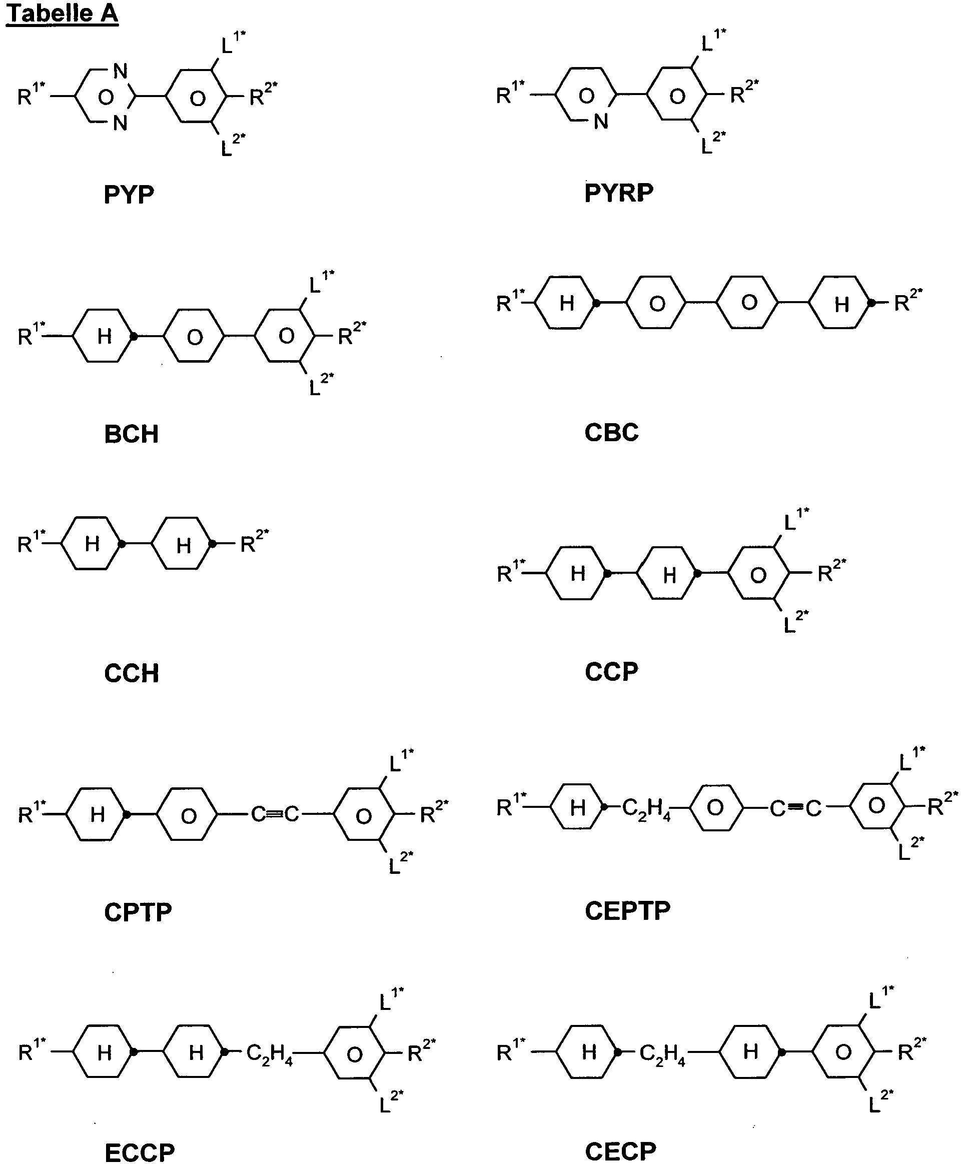

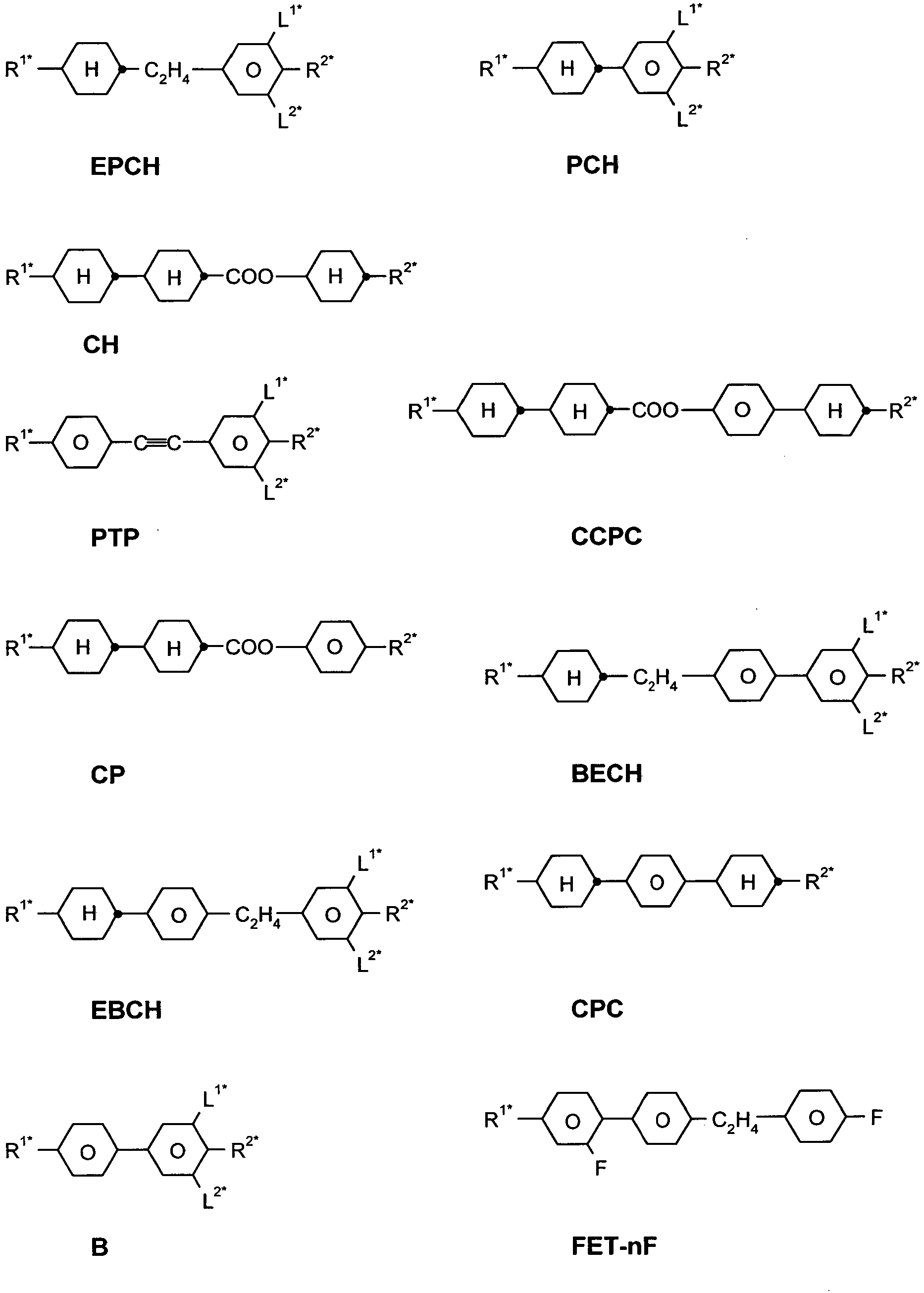

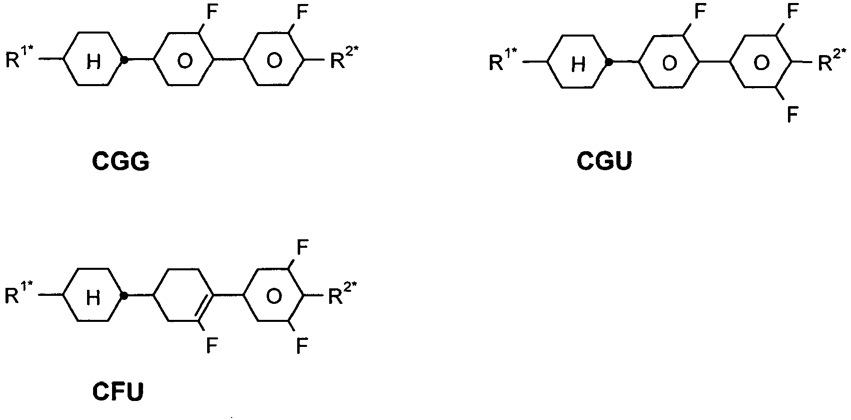

**Tabelle B**

| |
|---|
| n, m, z bedeuten unabhängig voneinander vorzugsweise 1, 2, 3, 4, 5 oder 6. |
| 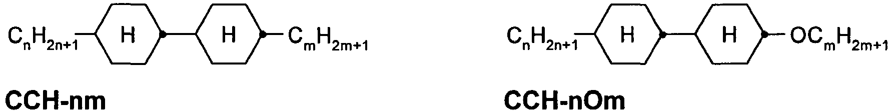 |
| 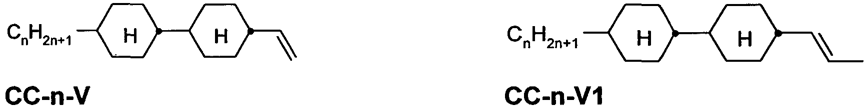 |
| 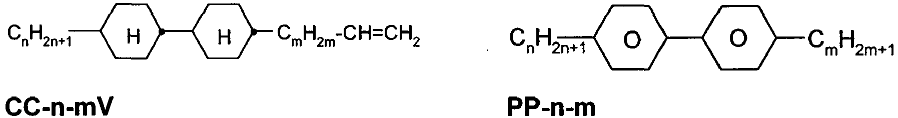 |
| 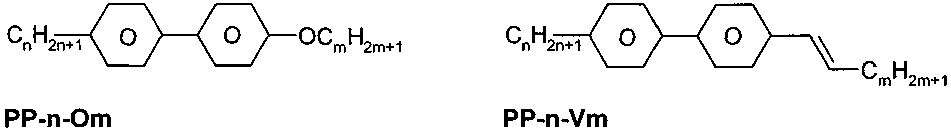 |
| 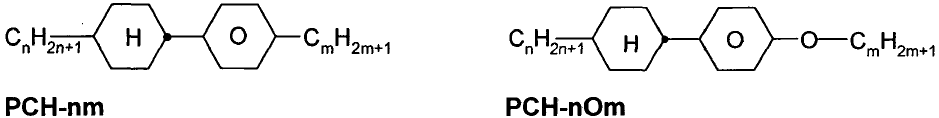 |
| 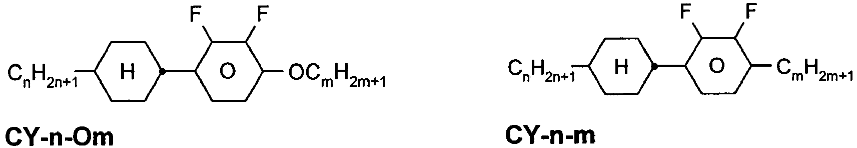 |
| 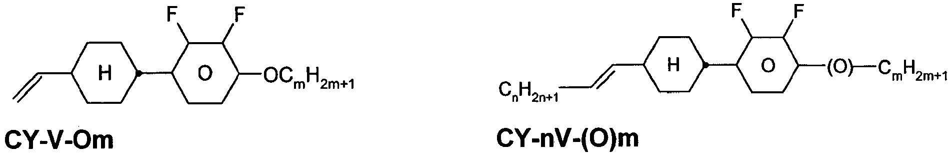 |
| 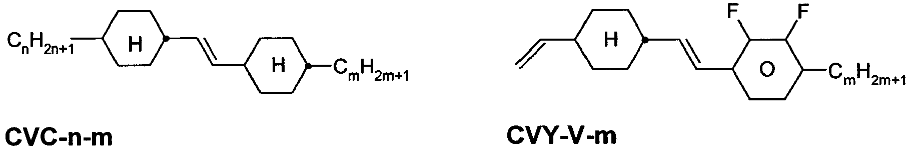 |
| 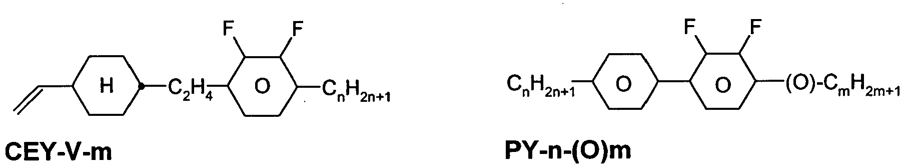 |
| 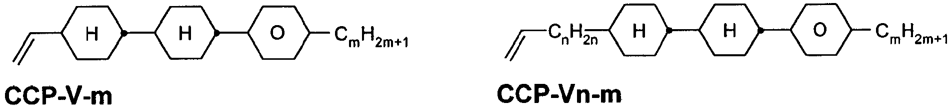 |
| 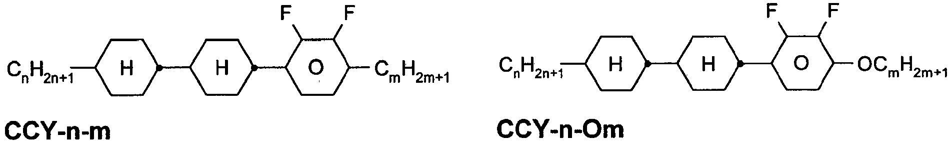 |
| 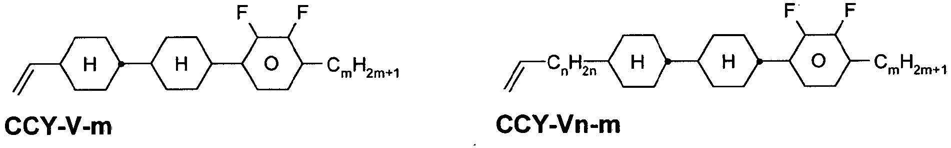 |
| 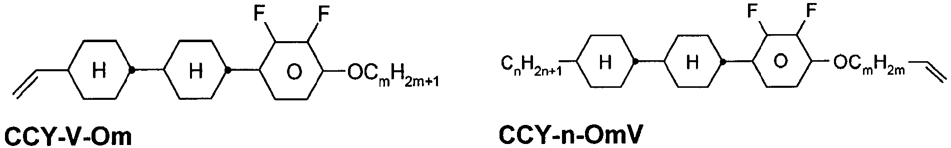 |
| 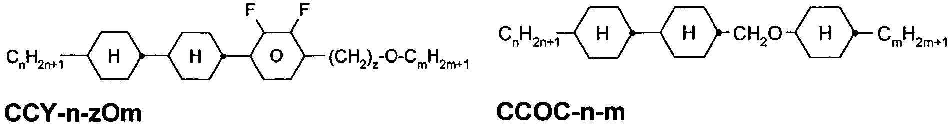 |
| 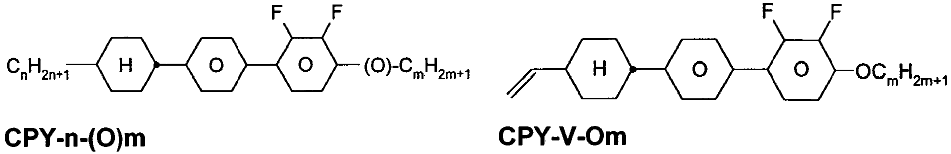 |
| 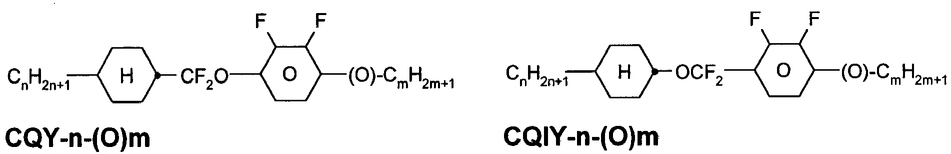 |
| 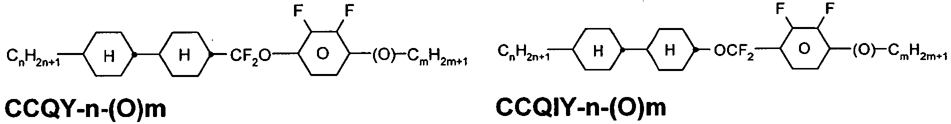 |
| 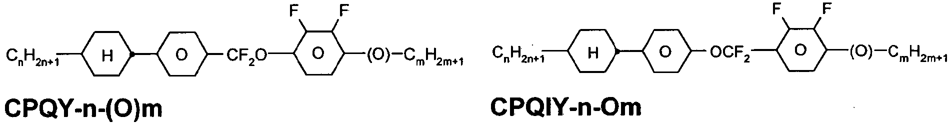 |
| 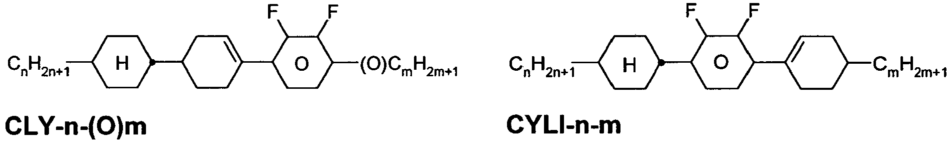 |
| 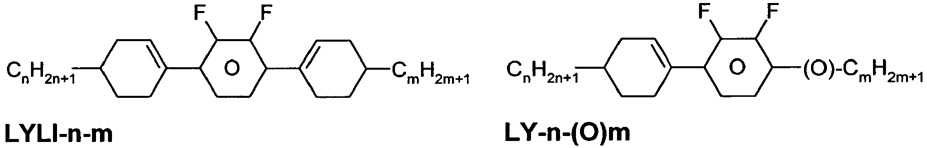 |
| 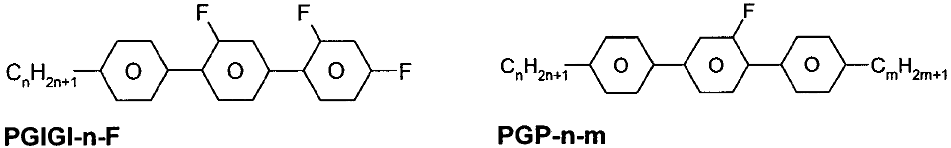 |
| 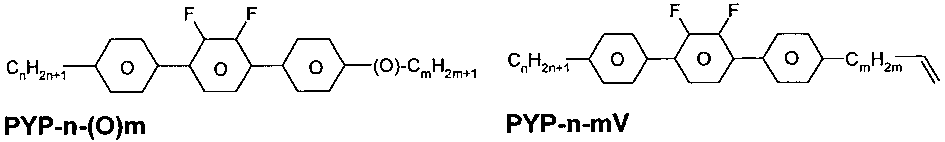 |
| 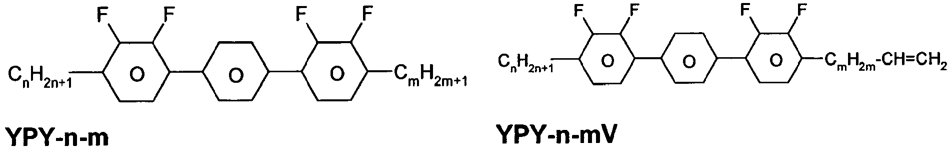 |
| 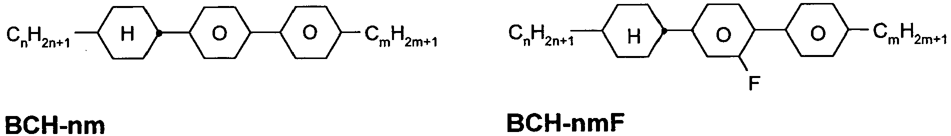 |
| 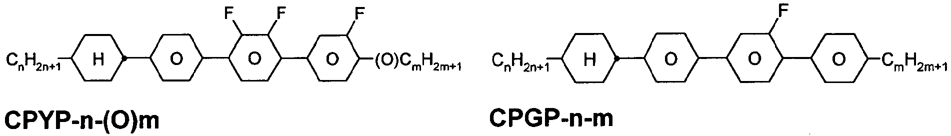 |
| 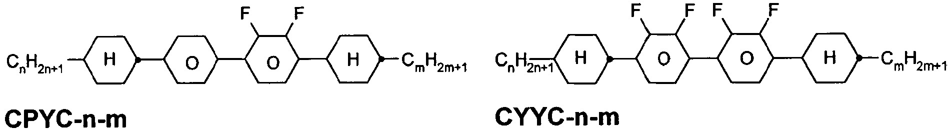 |
| 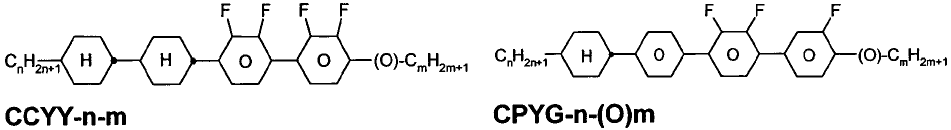 |
| 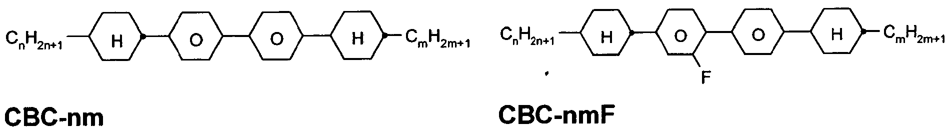 |
| 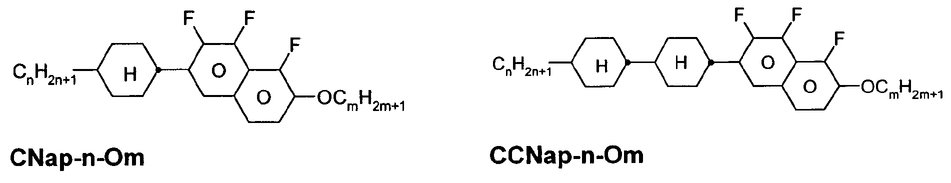 |
| 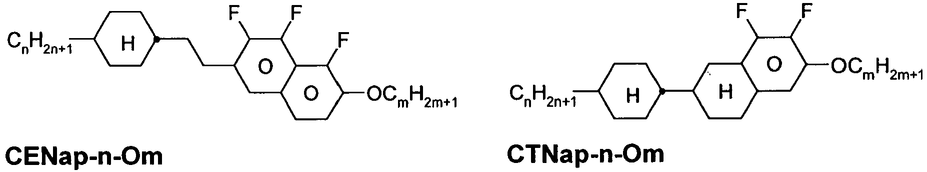 |
| 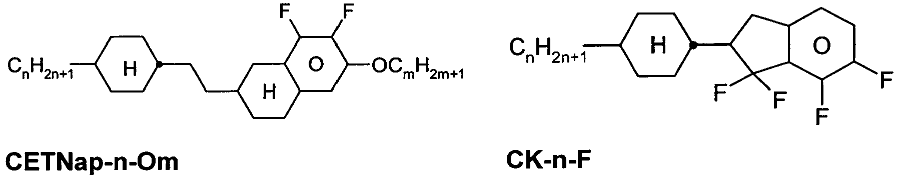 |
| 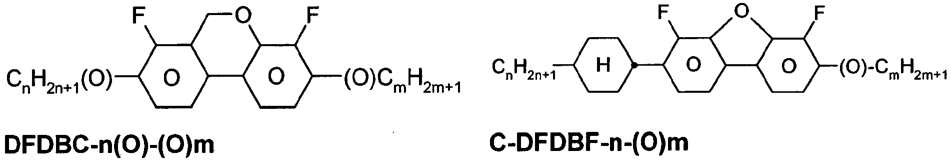 |
| 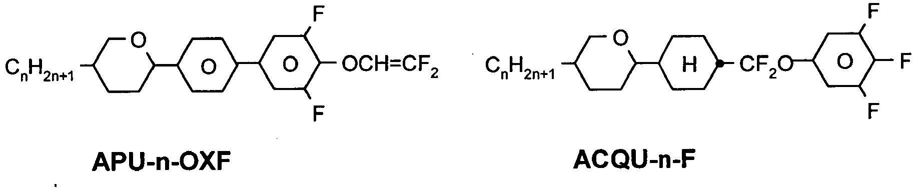 |
| 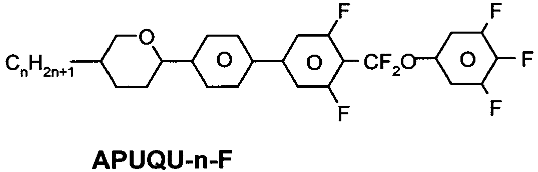 |
| 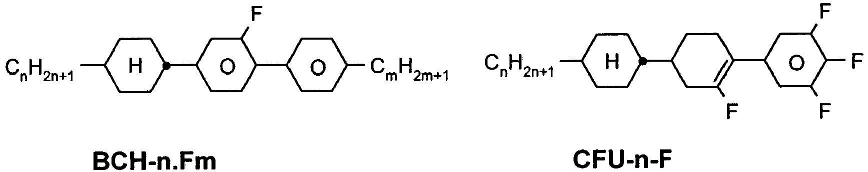 |
| 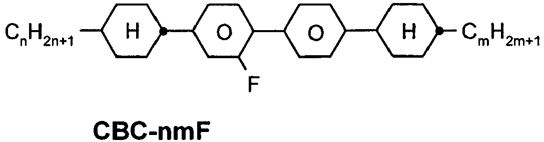 |
| 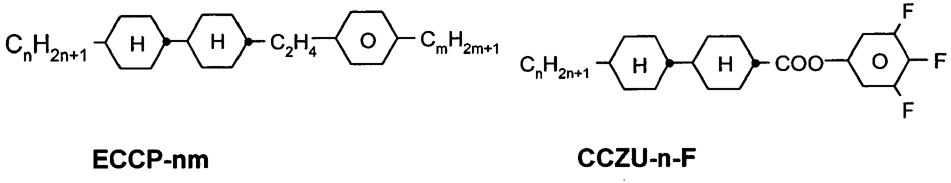 |
| 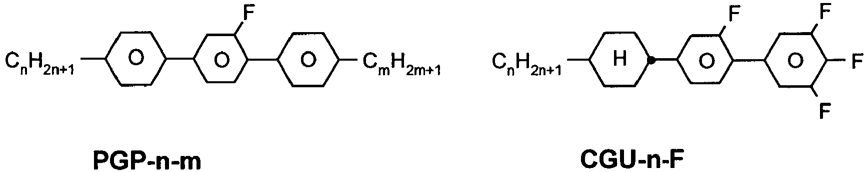 |
| 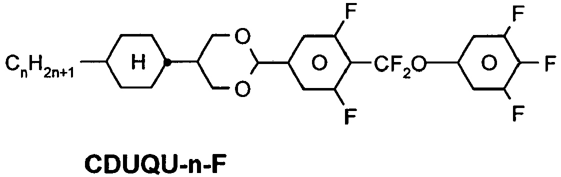 |
| 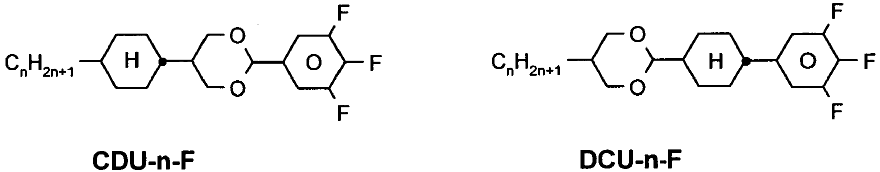 |
| 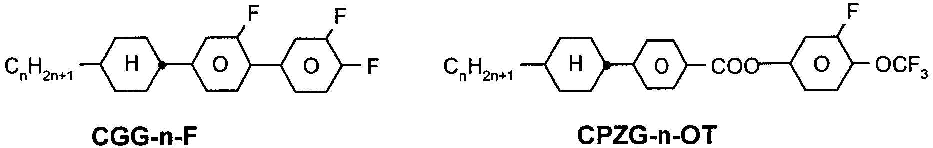 |
| 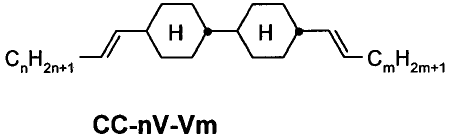 |
| 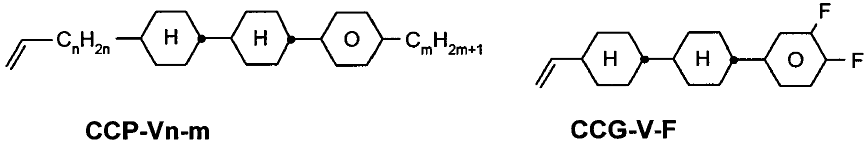 |
| 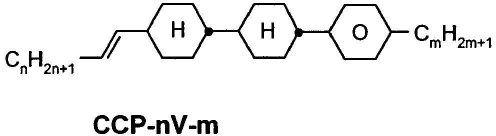 |
| 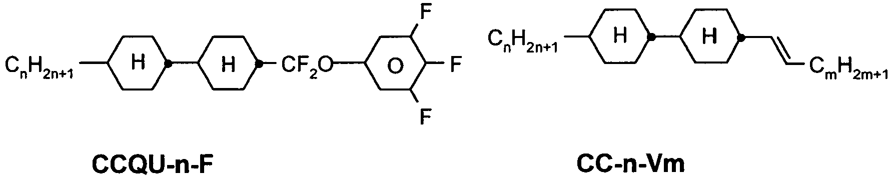 |
| 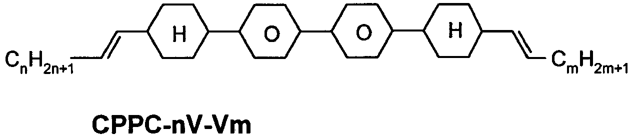 |
| 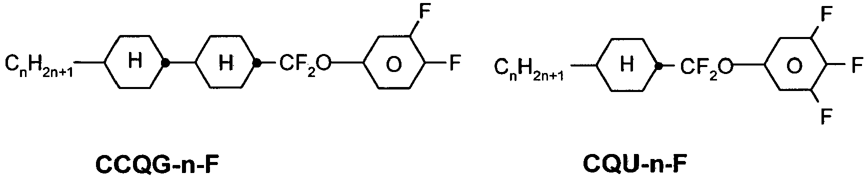 |
| 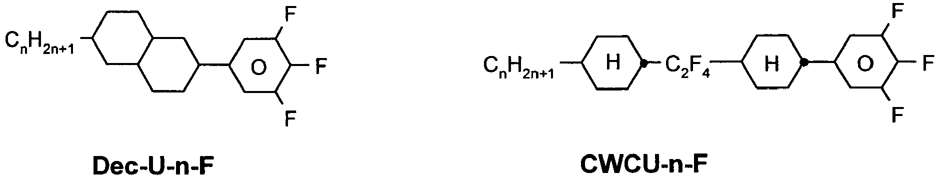 |
| 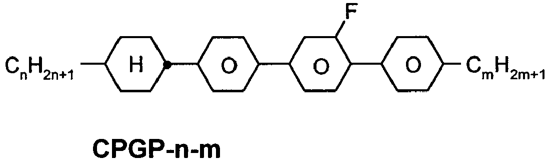 |
| 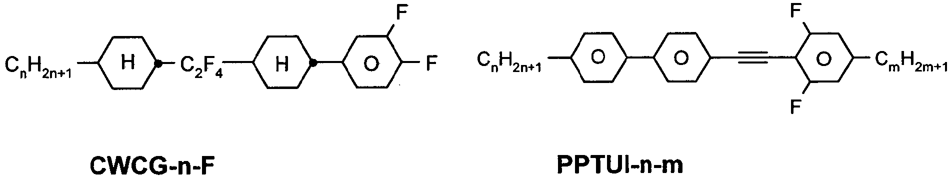 |
| 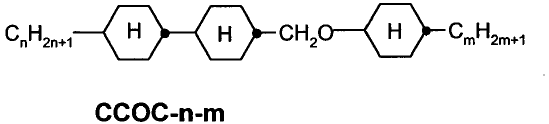 |
| 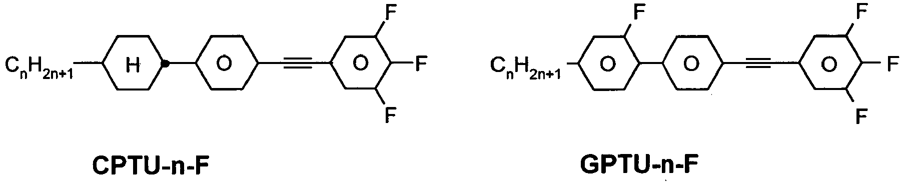 |
| 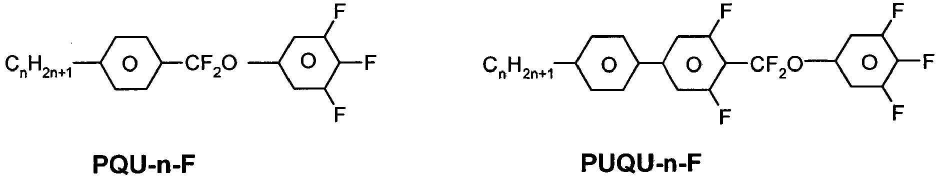 |
| 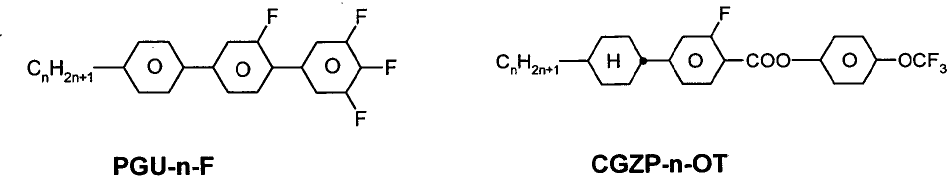 |
| 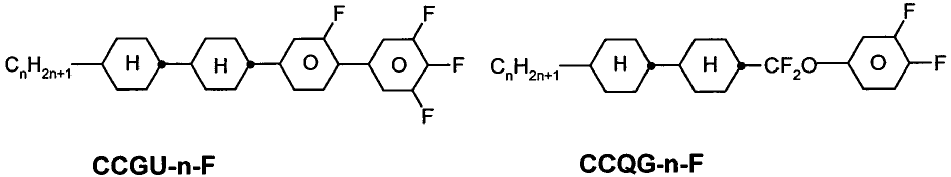 |
| 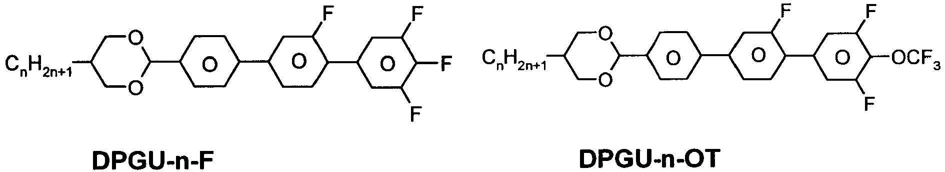 |
| 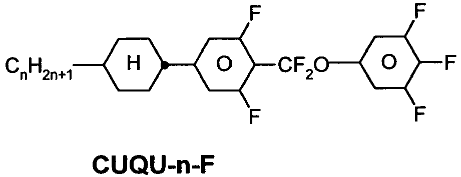 |
| 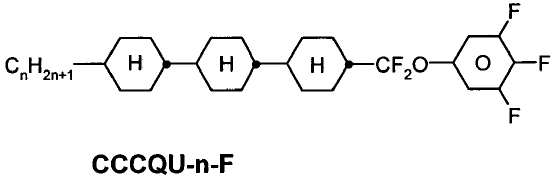 |
| 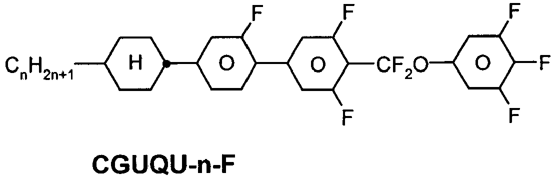 |
| 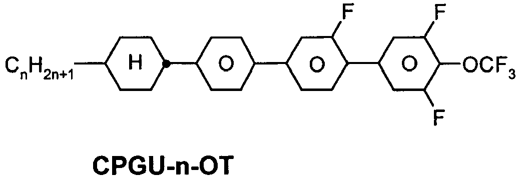 |
| 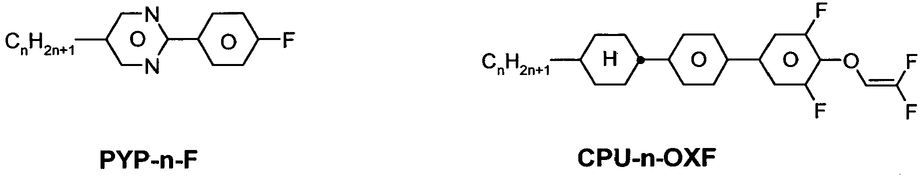 |
| 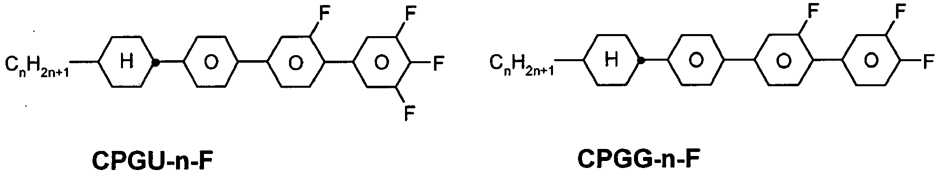 |
| 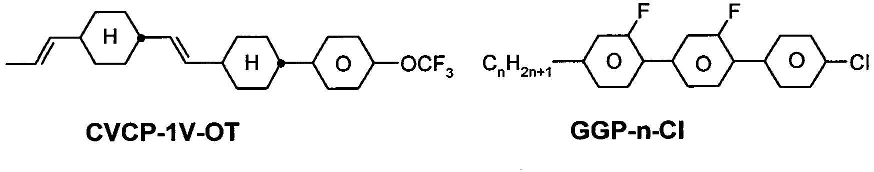 |
| 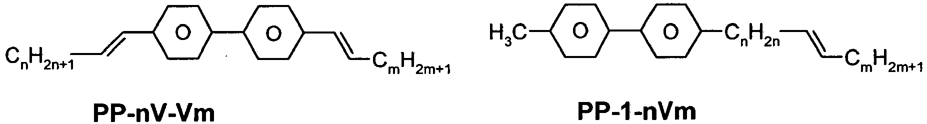 |
| 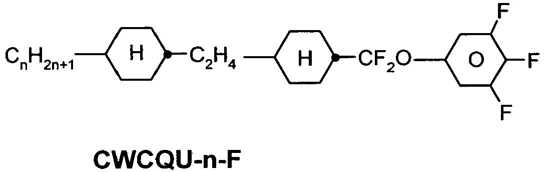 |
| 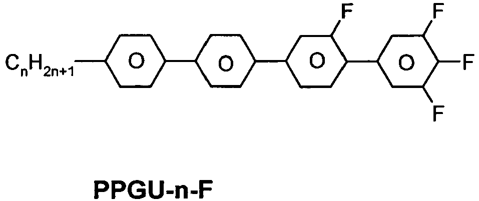 |
| 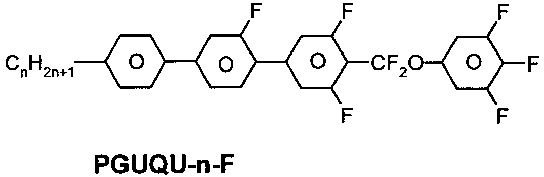 |
| 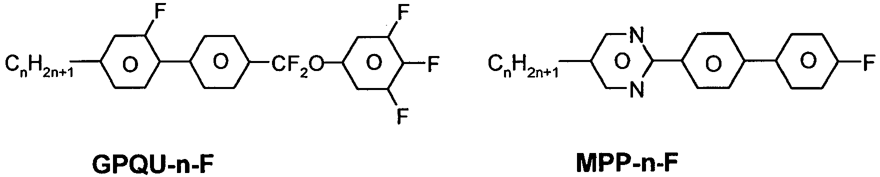 |
| 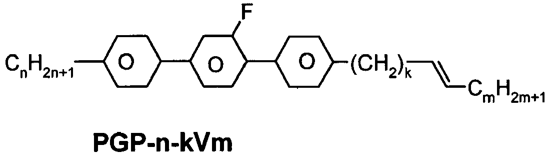 |
| 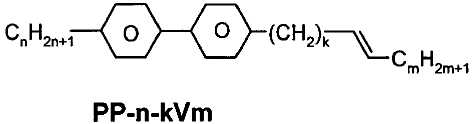 |
| 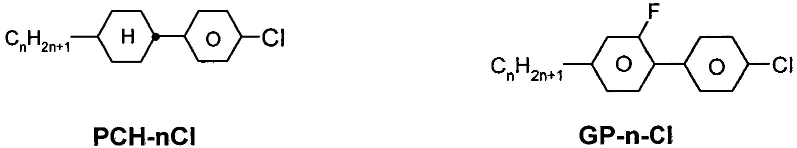 |
| 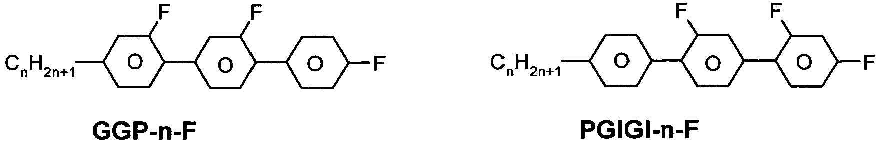 |
| 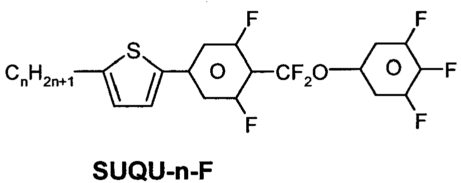 |
| 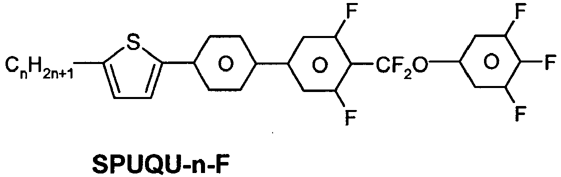 |

In einer bevorzugten Ausführungsform der vorliegenden Erfindung enthalten die erfindungsgemäßen LC-Medien eine oder mehrere Verbindungen ausgewählt aus der Gruppe bestehend aus Verbindungen der Tabelle A und B.

**Tabelle C**

| |
|---|
| In der Tabelle C werden mögliche chirale Dotierstoffe angegeben, die den erfindungsgemäßen FK-Medien zugesetzt werden können. |
| 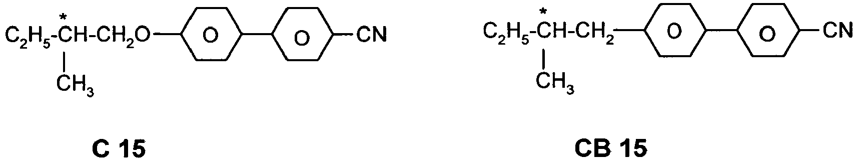 |
| 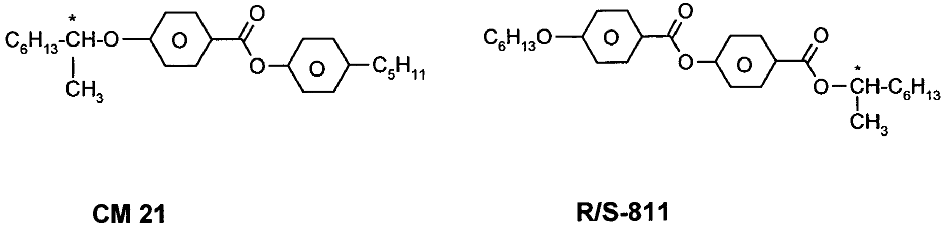 |
| 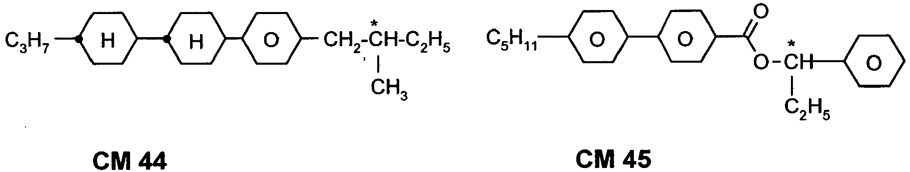 |
| 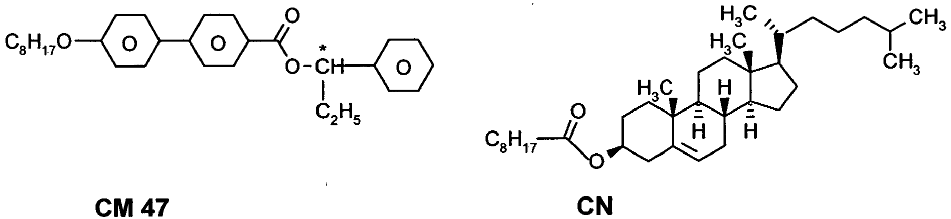 |
| 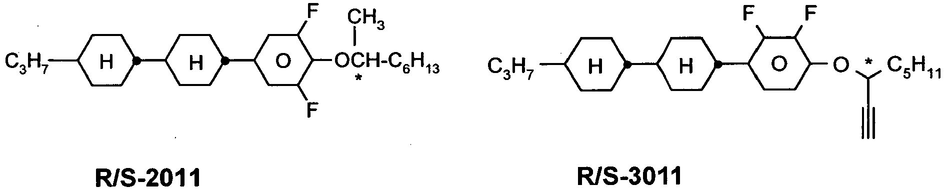 |
| 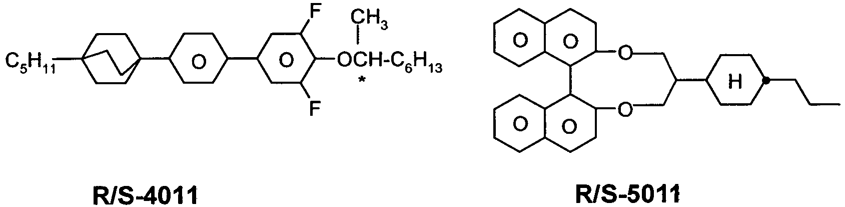 |
| 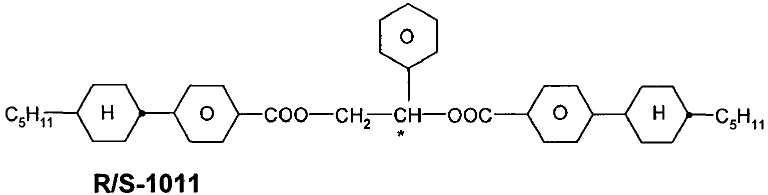 |

Optional enthalten die FK-Medien 0 bis 10 Gew.-%, insbesondere 0,01 bis 5 Gew.-%, besonders bevorzugt 0,1 bis 3 Gew.-% an Dotierstoffen, vorzugsweise ausgewählt aus der Gruppe bestehend aus Verbindungen der Tabelle C.

**Tabelle D**

| |
|---|
| In der Tabelle D werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). |
| 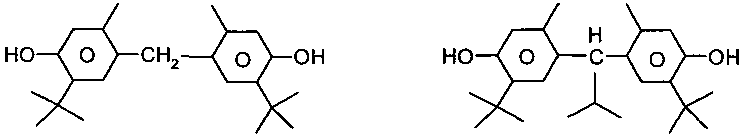 |
| 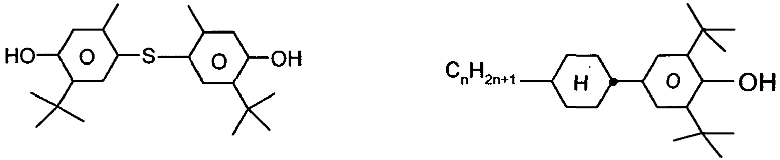 |
| 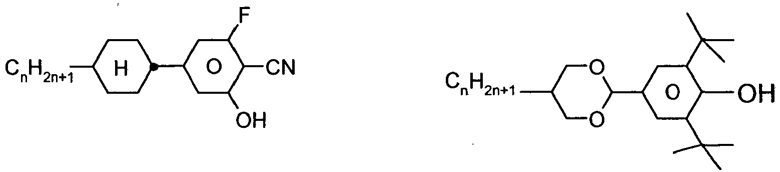 |
| 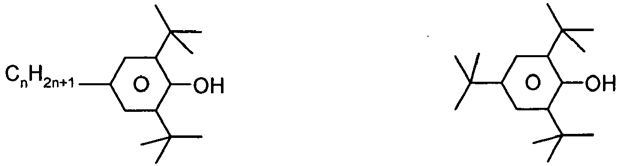 |
| 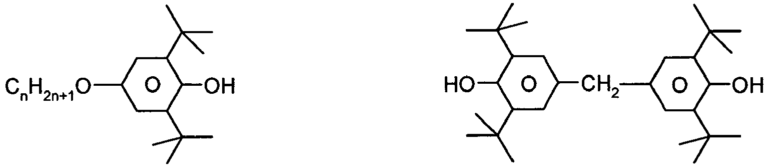 |
| 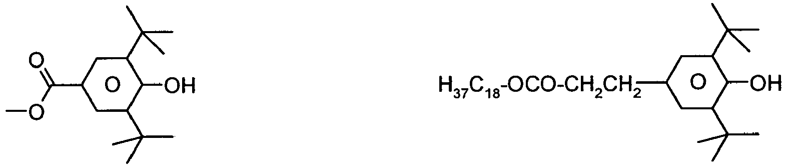 |
| 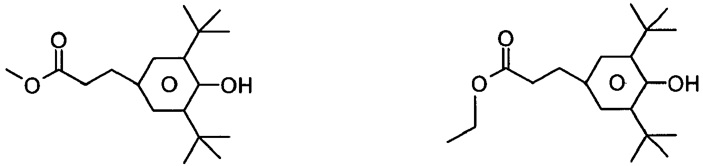 |
| 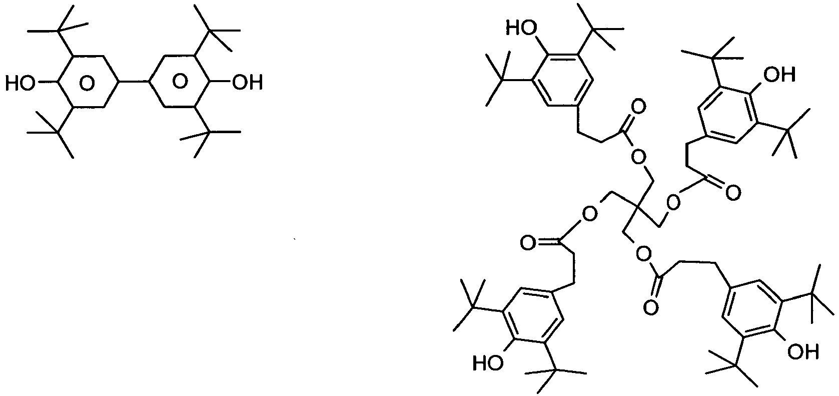 |
| 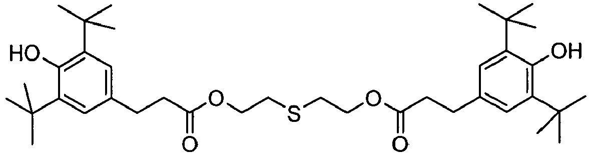 |
| 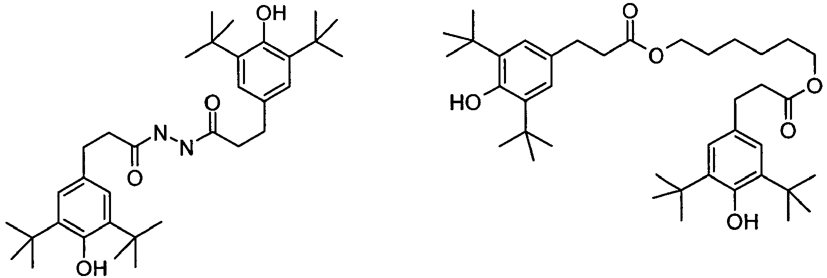 |
| 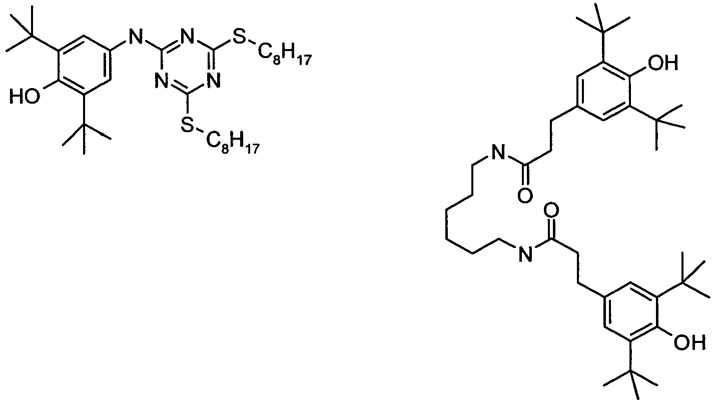 |
| 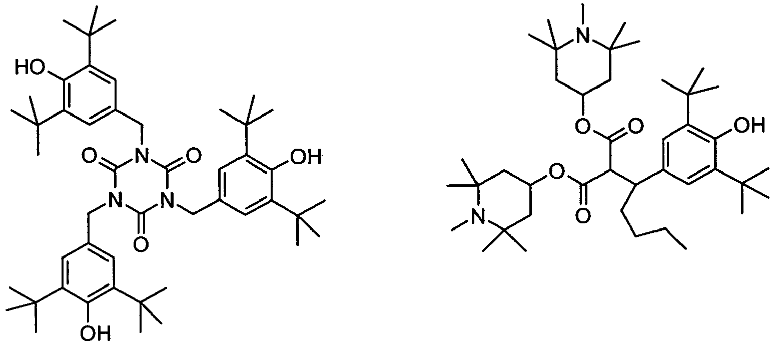 |
| 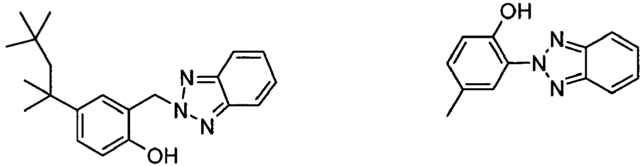 |
| 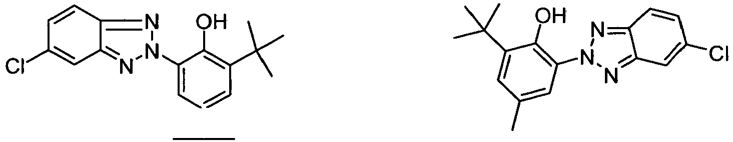 |
| 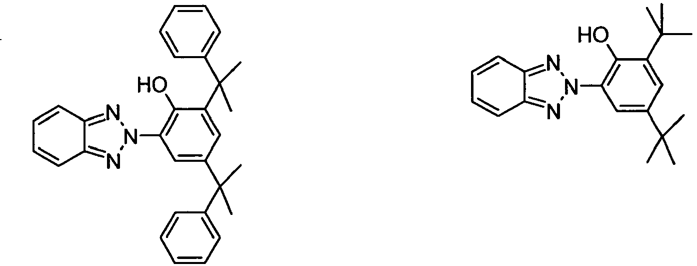 |
| 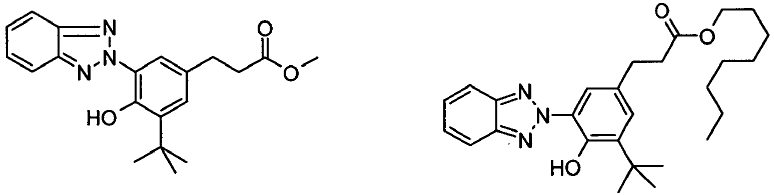 |
| 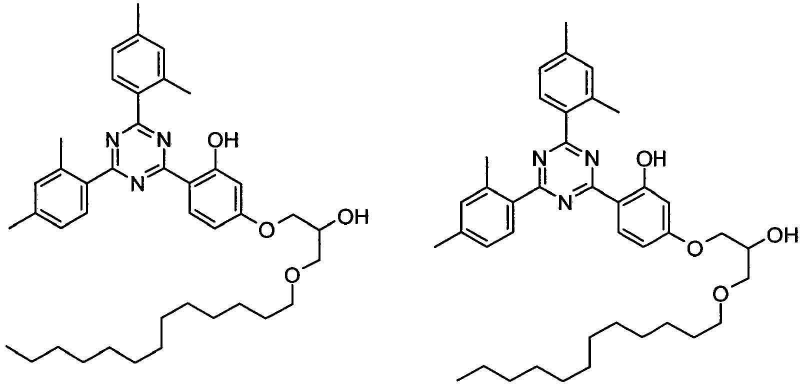 |
| 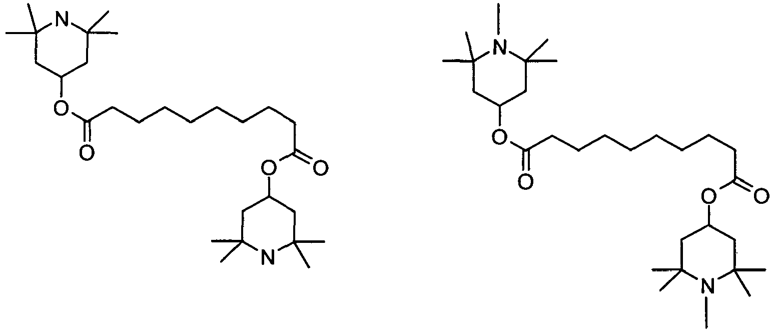 |

Vorzugsweise enthalten die FK-Medien 0 bis 10 Gew.-%, insbesondere 1 ppm bis 5 Gew.-%, besonders bevorzugt 1ppm bis 1 Gew.-% an Stabilisatoren. Vorzugsweise enthalten die FK-Medien einen oder mehrere Stabilisatoren ausgewählt aus der Gruppe bestehend aus Verbindungen der Tabelle D.

**Tabelle E**

| | |
|---|---|
| In der Tabelle E sind Beispielverbindungen zusammengestellt, die in den FK-Medien gemäß der vorliegenden Erfindung vorzugsweise als polymerisierbare Verbindungen verwendet werden können. | |
| 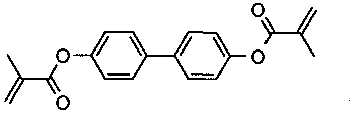 | RM-1 |
| 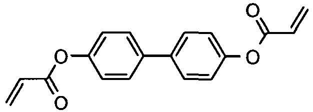 | RM-2 |
| 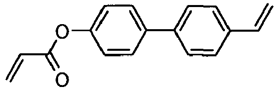 | RM-3 |
| 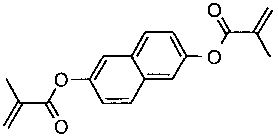 | RM-4 |
| 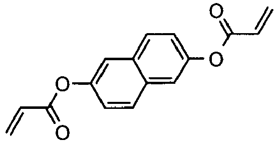 | RM-5 |
| 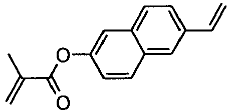 | RM-6 |
| 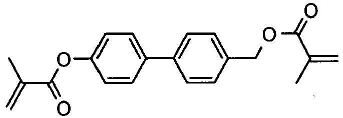 | RM-7 |
| 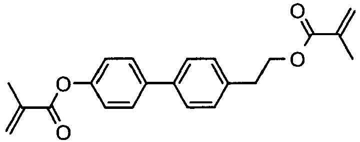 | RM-8 |
| 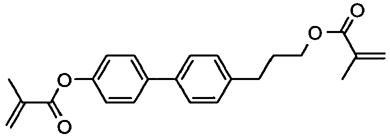 | RM-9 |
| 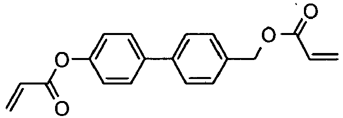 | RM-10 |
| 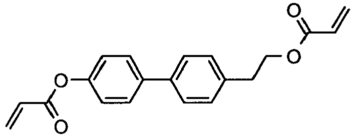 | RM-11 |
| 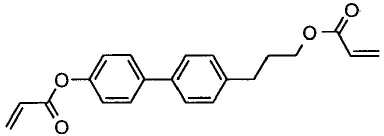 | RM-12 |
| 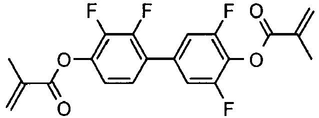 | RM-13 |
| 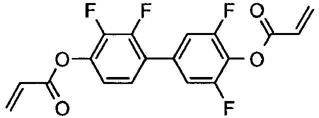 | RM-14 |
| 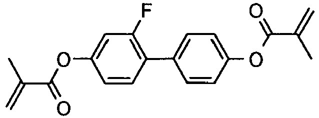 | RM-15 |
| 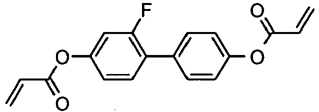 | RM-16 |
| 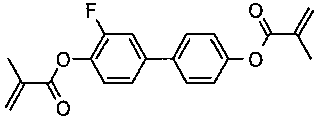 | RM-17 |
| 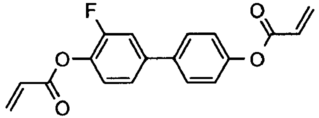 | RM-18 |
| 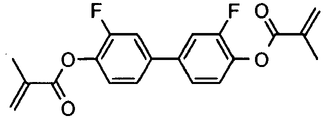 | RM-19 |
| 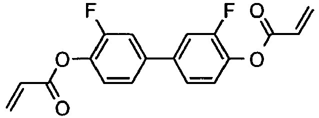 | RM-20 |
| 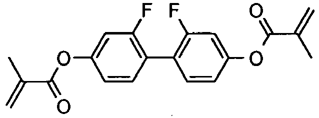 | RM-21 |
| 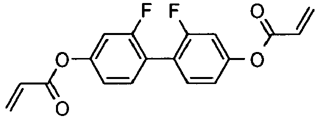 | RM-22 |
| 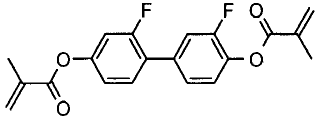 | RM-23 |
| 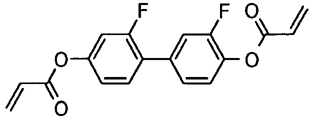 | RM-24 |
| 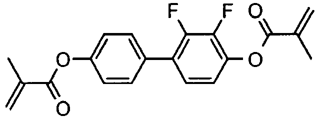 | RM-25 |
| 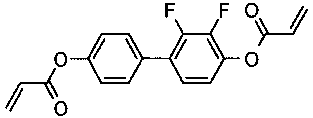 | RM-26 |
| 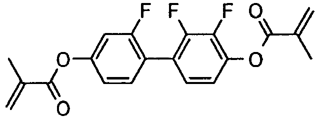 | RM-27 |
| 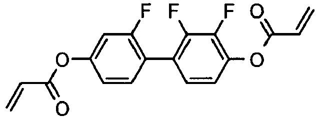 | RM-28 |
| 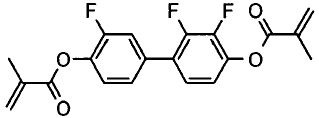 | RM-29 |
| 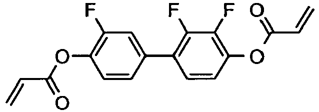 | RM-30 |
| 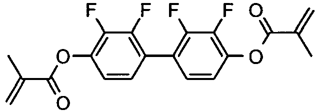 | RM-31 |
| 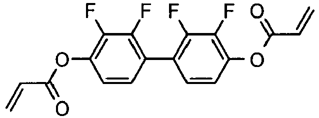 | RM-32 |
| 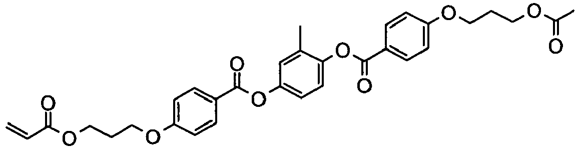 | RM-33 |
| 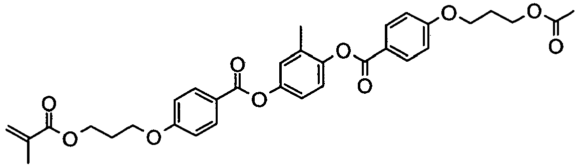 | RM-34 |
| 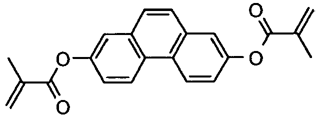 | RM-35 |
| 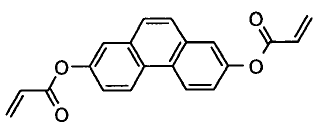 | RM-36 |
| 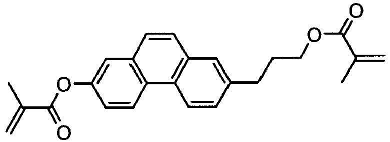 | RM-37 |
| 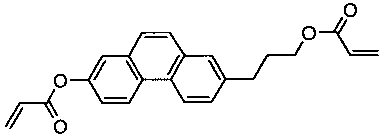 | RM-38 |
| 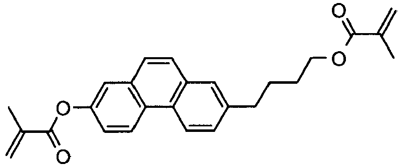 | RM-39 |
| 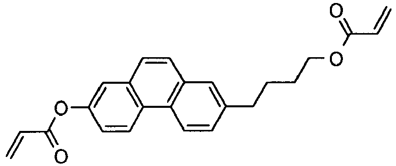 | RM-40 |
| 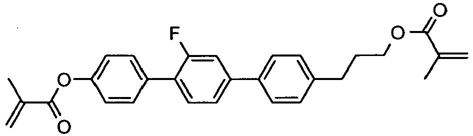 | RM-41 |
| 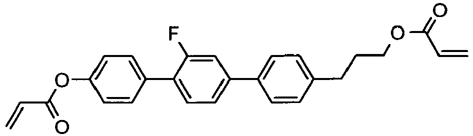 | RM-42 |
| 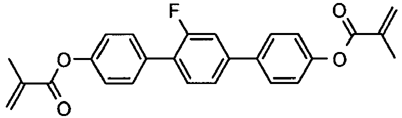 | RM-43 |
| 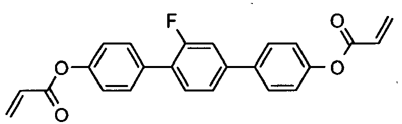 | RM-44 |
| 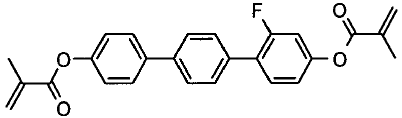 | RM-45 |
| 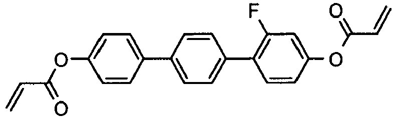 | RM-46 |
| 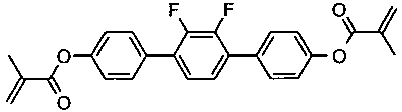 | RM-47 |
| 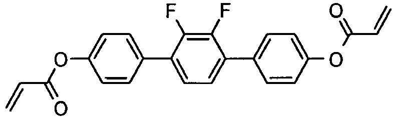 | RM-48 |
| 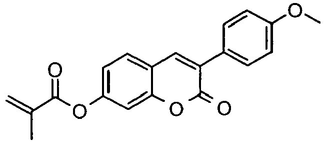 | RM-49 |
| 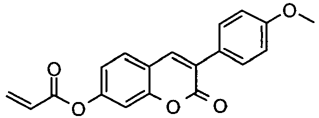 | RM-50 |
| 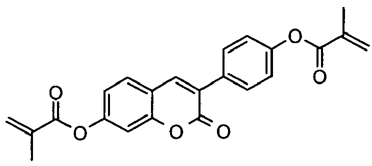 | RM-51 |
| 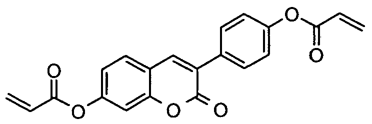 | RM-52 |
| 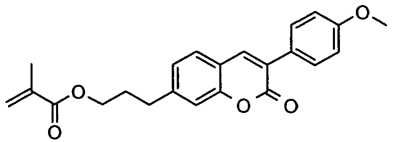 | RM-53 |
| 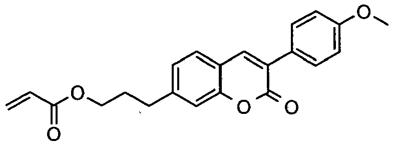 | RM-54 |
| 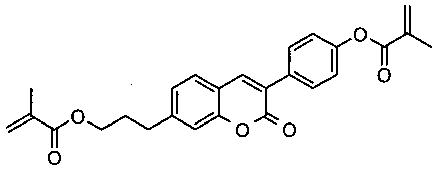 | RM-55 |
| 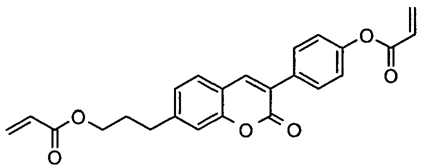 | RM-56 |
| 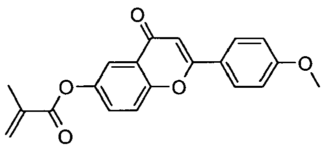 | RM-57 |
| 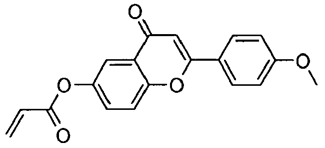 | RM-58 |
| 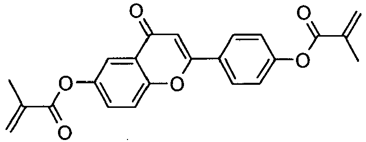 | RM-59 |
| 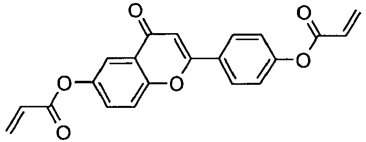 | RM-60 |
| 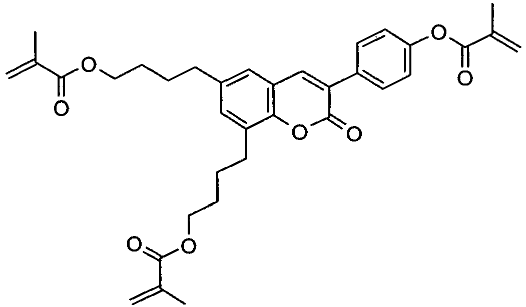 | RM-61 |
| 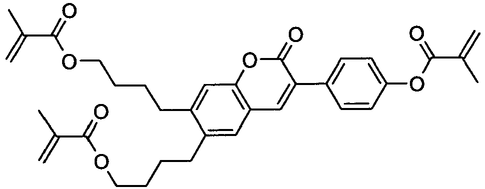 | RM-62 |
| 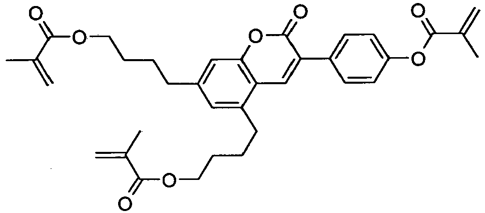 | RM-63 |
| 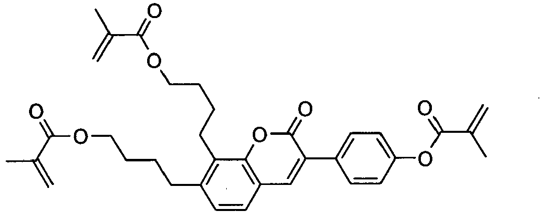 | RM-64 |
| 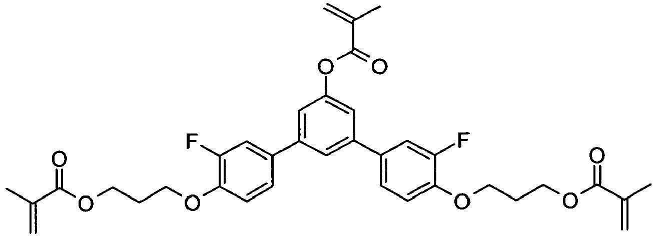 | RM-65 |
| 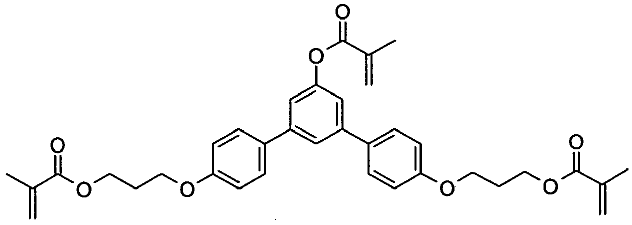 | RM-66 |
| 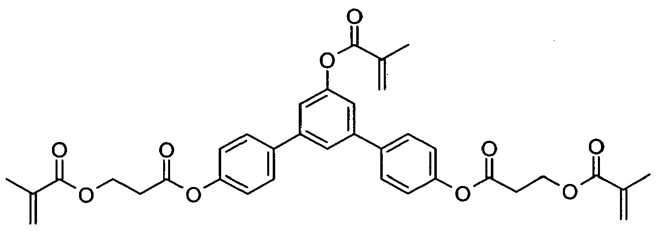 | RM-67 |
| 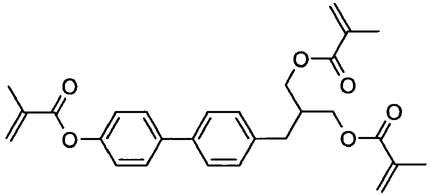 | RM-68 |
| 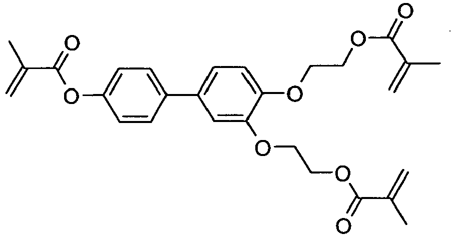 | RM-69 |
| 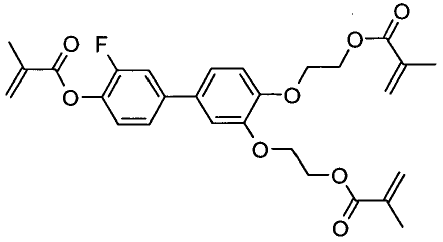 | RM-70 |
| 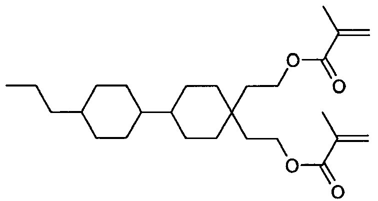 | RM-71 |
| 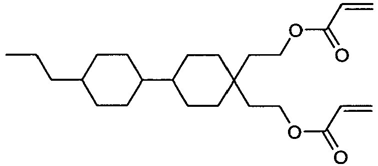 | RM-72 |
| 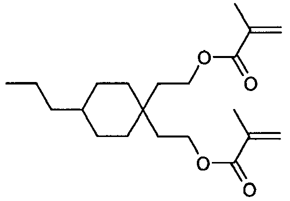 | RM-73 |
| 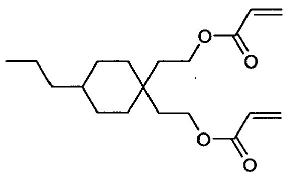 | RM-74 |
| 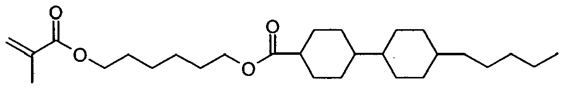 | RM-75 |
| 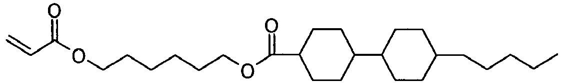 | RM-76 |
| 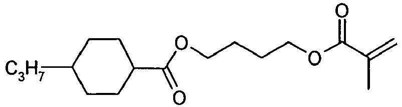 | RM-77 |
| 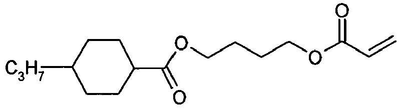 | RM-78 |
| 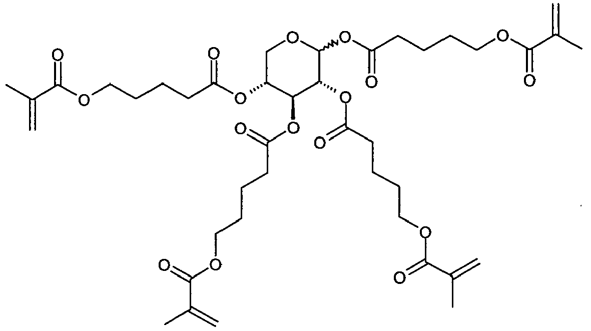 | RM-79 |
| 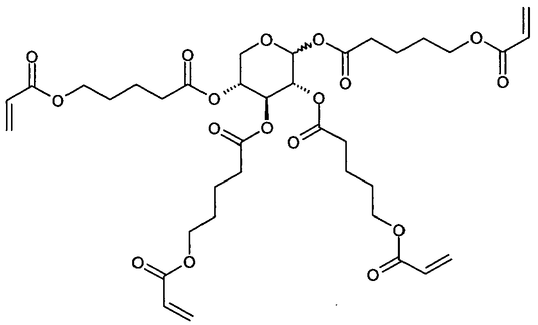 | RM-80 |
| 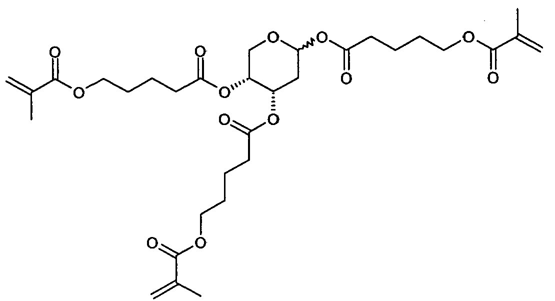 | RM-81 |
| 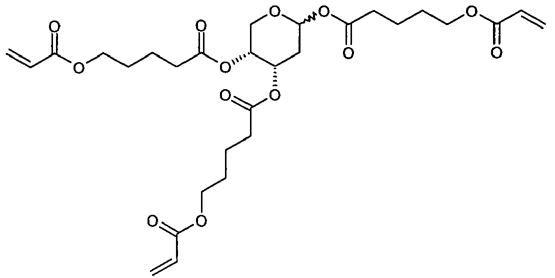 | RM-82 |
| 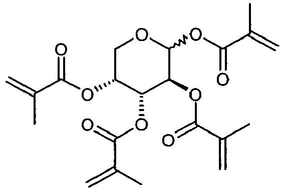 | RM-83 |
| 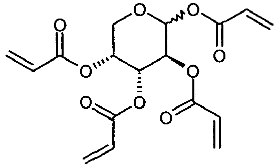 | RM-84 |

In einer bevorzugten Ausführungsform der vorliegenden Erfindung enthalten die mesogenen Medien eine oder mehrere Verbindungen ausgewählt aus der Gruppe der Verbindungen der Tabelle E.

**Tabelle F**

| | |
|---|---|
| In der Tabelle F sind Beispielverbindungen zusammengestellt, die in den FK-Medien gemäß der vorliegenden Erfindung vorzugsweise als nicht polymerisierbare Selbstorientierungsadditive eingesetzt werden können. | |
| 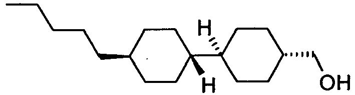 | A-1 |
| 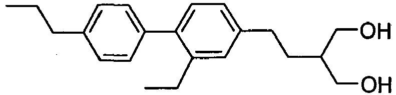 | A-2 |
| 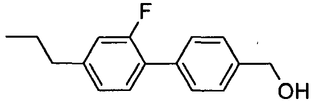 | A-3 |
| 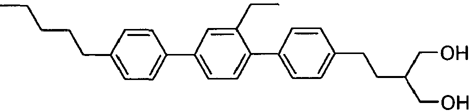 | A-4 |
| 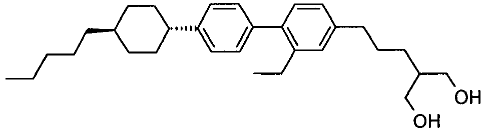 | A-5 |
| 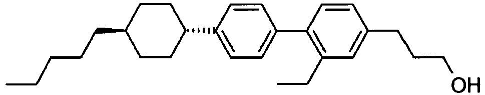 | A-6 |
| 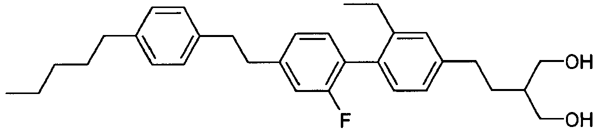 | A-7 |
| 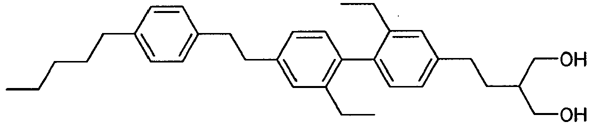 | A-8 |

In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε_{||}: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- V₀: Kapazitive Schwelle (Freedericks Schwelle) bei 20°C [V].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 10 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm (optional 340 nm) ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. Die FK-Medien stammen von der Merck KGaA, Deutschland.

### A) Synthesebeispiele

### Beispiel 1

### 2-Methyl-acrylsäure-2'-fluor-4"-(3-hydroxy-propyl)-[1,1';4',1"]terphenyl-4-ylester

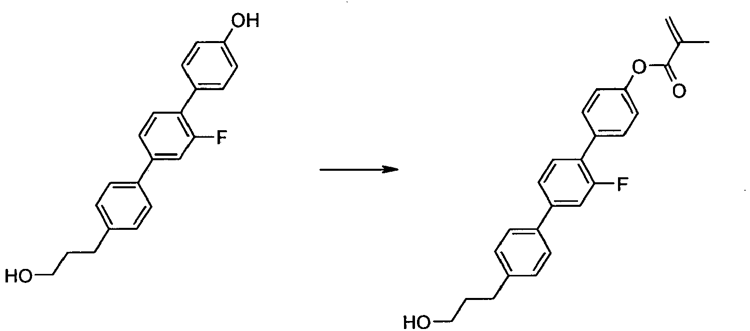

6.50 g (20,1 mmol) 2'-Fluor-4"-(3-hydroxy-propyl)-[1,1';4',1"]ter-phenyl-4-ol (CAS-Nr. 1299463-47-0) werden in 100 ml Dichlormethan (DCM) und 10 ml THF suspendiert, 1.75 ml (20.6 mmol) Methacrylsäure und 245 mg (2,0 mmol) DMAP hinzugefügt und unter Eiskühlung eine Lösung von 3.44 g (22,2 mmol) 1-(3-Dimethylaminopropyl)-3-ethylcarbodimid (EDC) in 50 ml Dichlormethan zutropfen gelassen. Nach 1 h wird die Kühlung entfernt und der Ansatz über Nacht bei Raumtemperatur (RT) gerührt. Das Lösungsmittel wird i. Vak. entfernt, der Rückstand mit Heptan/Essigester (10 % - 70 %) an Kieselgel chromatographiert und das erhaltene Produkt (R_{f} = 0.3, Heptan/Essigester (1:1)) aus Acetonitril umkristallisiert. Man erhält den 2-Methylacrylsäure-2'-fluor-4"-(3-hydroxy-propyl)-[1,1';4',1"]terphenyl-4-ylester als farblose Kristalle.
Phasen: K 139 °C I
¹H-NMR (500 MHz, DMSO-d₆)
δ = 1.74 ppm (q, 6.71 Hz, 2H, CH₂), 2.01 (s, 3H, CH₃), 2.65 (t, 7.67 Hz, 2H, CH₂), 3.43 (t, 6.17 Hz, 2H, CH₂-O), 4.47 (t, 5.06 Hz, 1H, OH), 5.90 (s, 1H), 6.30 (s, 1H), 7.29 (m_{c}, 4 H), 7.69-7.54 (m, 7 H).

### Beispiel 2

### 2-Methyl-acrylsäure-4'-(4-hydroxy-3-hydroxymethyl-butyl)-biphenyl-4-ylester

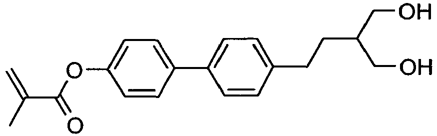

### 1) 5-[2-(4'-Benzyloxy-biphenyl-4-yl)-ethyl]-2,2-di-tert-butyl-[1,3,2]dioxasilinan

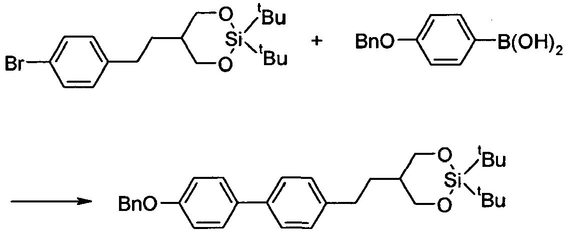

4,14 g (30 mmol) Natriummetaborat-tetrahydrat werden in 12 ml Wasser vorgelegt, 60 ml THF, 5,00 g (22 mmol) 4-Benzyloxy-benzolboronsäure, 8.00 g (22 mmol) 5-[2-(4-Bromphenyl)-ethyl]-2,2-di-tert-butyl-[1,3,2]dioxasilinan sowie 0.28 g Bis(triphenylphosphin)-palladium(II)chlorid und 0.02 ml Hydraziniumhydroxid hinzugegeben und der Ansatz über Nacht unter Rückfluss erhitzt. Anschließend werden 100 ml Methyl-tert-butylether (MTB-Ether) und 100 ml Wasser hinzugegeben und mit 2 M Salzsäure angesäuert. Die wäßr. Phase wird abgetrennt und dreimal mit MTB-Ether extrahiert. Die vereinigten org. Phasen werden mit ges. Kochsalzlösung gewaschen und über Natriumsulfat getrocknet. Das Lösungsmittel wird i. Vak. entfernt, der Rückstand mit Heptan/Essigester (7:3 bis 1:1) über Kieselgel filtriert und das Rohprodukt aus Acetonitril umkristallisiert. Man erhält 5-[2-(4'-Benzyloxy-biphenyl-4-yl)-ethyl]-2,2-di-tert-butyl-[1,3,2]dioxasilinan als farblosen Feststoff.

### 2) 4'-[2-(2,2-Di-tert-butyl-[1,3,2]dioxasilinan-5-yl)-ethyl]-biphenyl-4-ol

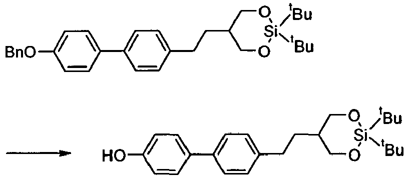

5-[2-(4'-Benzyloxy-biphenyl-4-yl)-ethyl]-2,2-di-tert-butyl-[1,3,2]dioxasilinan wird in THF an Palladium-Aktivkohlekatalysator bis zum Stillstand hydriert. Der Katalysator wird abfiltriert, das Filtrat eingeengt und der Rückstand aus Heptan umkristallisiert. Man erhält 4'-[2-(2,2-Di-tert-butyl-[1,3,2]dioxasilinan-5-yl)-ethyl]-biphenyl-4-ol als farblose, watteartige Nadeln.
¹H NMR (500 MHz, CDCl₃)
δ = 1.02 ppm (s, 9 H, tBu) 1,06 (s, 9 H, tBu), 1.42 (m_{c}, 2 H, -CH₂-), 2.19 (m_{c}, 1 H, >CH-), 2.68 (m_{c.} 2H, Ar-C*H*₂-), 3.83 (t, J = 11.1 Hz, 2 H, CH₂O), 4,17 (dd, J = 4.3 Hz, J = 11,1 Hz, 2 H, CH₂O), 4,93 (s, 1 H, OH), 6.95 (AB-d, J = 8,6 Hz, 2 H, Ar-H), 7.26 (AB-d, J = 8.2 Hz, 2 H, Ar-H), 7.52 (AB-d, J = 8.5 Hz, 2 H, Ar-H).

### 3) 2-Methyl-acrylsäure-4'-[2-(2,2-di-tert-butyl-[1,3,2]dioxasilinan-5-yl)-ethyl]-biphenyl-4-ylester

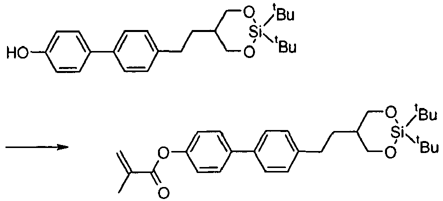

4'-[2-(2,2-Di-tert-butyl-[1,3,2]dioxasilinan-5-yl)-ethyl]-biphenyl-4-ol werdend in Analogie zu Beispiel 1 mit Methacrylsäure umgesetzt. Man erhält 2-Methyl-acrylsäure-4'-[2-(2,2-di-tert-butyl-[1,3,2]dioxa-silinan-5-yl)-ethyl]-biphenyl-4-ylester als farblose Kristalle.
¹H NMR (500 MHz, CDCl₃)
δ = 1.03 ppm (s, 9 H, tBu) 1.06 (s, 9 H, tBu), 1,43 (m_{c}, 2 H, -CH₂-), 2.12 (m_{c}, 3 H, CH₃), 2.19 (m_{c}, 1 H, >CH-), 2.69 (m_{c}, 2 H, Ar-CH₂-), 3.85 (t, J = 11,2 Hz, 2 H, CH₂O), 4.18 (dd, J = 4,2 Hz, J = 11,2 Hz, 2 H, CH₂O), 5.83 (m_{c}, 1 H, =CHH), 6.43 (m_{c}, 1 H, =CHH), 7.25 (AB-d, J = 8.7 Hz, 2 H, Ar-H), 7.29 (AB-d, J = 8.3 Hz, 2 H, Ar-H), 7.57 (AB-d, J = 8.3 Hz, 2 H, Ar-H), 7.67 (AB-d, J = 8.7 Hz, 2 H, Ar-H).

### 4) 2-Methyl-acrylsäure-4'-(4-hydroxy-3-hydroxymethyl-butyl)-biphenyl-4-ylester

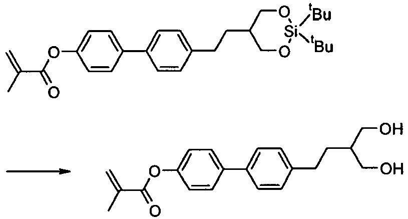

300 mg (0.624mmol) 2-Methyl-acrylsäure-4'-[2-(2,2-di-tert-butyl-[1,3,2]dioxasilinan-5-yl)-ethyl]-biphenyl-4-ylester werden in 10 ml Dichlormethan gelöst und unter Eiskühlung mit 1.2 g (7.4 mmol) Triethylamintrishydrogenfluorid versetzt. Die Kühlung wird entfernt und der Ansatz über Nacht bei RT rühren gelassen. Anschließend wird die Lösung über 100 g Kieselgel filtriert, mit Dichlormethan/Methanol (9:1) nacheluiert und das Filtrat eingeengt. Der Rückstand wird mit Heptan digeriert und abfiltriert. Man erhält 2-Methyl-acrylsäure-4'-(4-hydroxy-3-hydroxymethyl-butyl)-biphenyl-4-ylester als farblosen Feststoff.
¹H-NMR (500 MHz, DMSO-d₆)
δ = 1.62-1.46 (m, 3 H), 2.02 (s, 3 H, CH₃), 2.65 (m_{c}, 2 H), 3.43 (m_{c}, 4 H), 4.33 (t, 5.23 Hz, 2H, OH), 5.91 (m_{c}, 1 H), 6.30 (s, 1 H), 7.24 (d, 8.67 Hz, 2 H), 7.30 (d, 8.21 Hz, 2 H), 7.58 (d, 8.21 Hz, 2 H), 7.69 (d, 8.68 Hz, 2 H).

### Beispiel 3

### Synthese von 2-Methylacrylsäure-4-{2-[2'-ethyl-2-fluoro-4'-(3-hydroxy-propyl)-biphenyl-4-yl]-ethyl}-phenylester

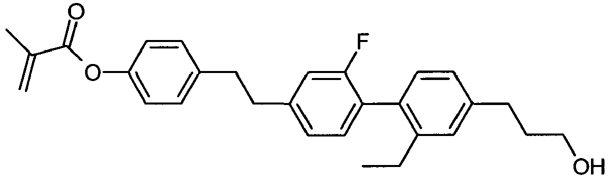

### 1) Synthese von 4'-Bromo-2'-ethyl-biphenyl-4-ol A

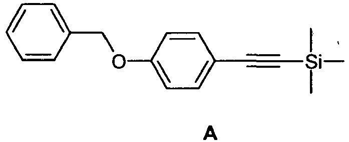

100.0 g (380 mmol) 1-Benzyloxy-4-brombenzol und 55.99 g (570 mmol) Ethinyl-trimethylsilan werden in 1.07 l Diisopropylamin gelöst und 60 min mit einem Argonstrom entgast. Es wird nun mit 2.56 g (11.40 mmol) Palladium(II)-acetat, 6.62 g (22.8 mmol) Tri-tert.-butyl-phosphonium-tetrafluoroborat und 724 mg (3.80 mmol) Kupfer(I)-Iodid versetzt und für 18 h bei 60°C gerührt. Nach vollständiger Umsetzung wird das Reaktionsgemisch vorsichtig auf eine Mischung aus Eis und Methyl-tert-butylether (MTB-Ether) gegeben und auf pH = 7-8 eingestellt. Die organische Phase wird abgetrennt und die Wasserphase zweimal mit MTB-Ether gewaschen. Die vereinigten organischen Phasen werden nun 1x mit Wasser und 1x mit gesättigter NaCl-Lösung gewaschen, über Natriumsulfat getrocknet, filtriert und unter Vakuum eingengt. Das erhaltene Rohprodukt wird mit Heptan über 3 l Kieselgel filtriert und man erhält 88.8 g des Produkt als braunes Öl.
MS (EI): 280.1 [M⁺]
¹H NMR (500 MHz, CDCl₃) δ = 0.24 (s, 9H, Si(CH₃)₃), 5.04 (s, 2H, C*H*₂-benzylisch), 6.88 (d, 8.9 Hz, arom.-H), 7.29 - 7.41 (m, 7H, arom.-H).

### 2) Synthese von 1-Benzyloxy-4-ethinyl-benzol B

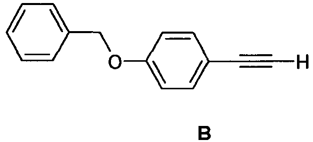

17.7 g (317 mmol) KOH werden unter Rühren und Stickstoffatmosphäre in 577 ml Methanol vorsichtig gelöst. Es wird nun das Alkin **A** zugegeben und das Reaktiongemisch bei Raumtemperatur (RT) für 18 h gerührt. Das Reaktionsgemisch wird vorsichtig mit Wasser versetzt und mit verdünnter HCl neutralisiert und die Wasserphase zweimal mit MTB-Ether extrahiert und die vereinigten organischen Phasen mit Wasser gewaschen, über Natriumsulfat getrocknet, filtriert und eingeengt. Man erhält 70 g des Rohproduktes als braune Flüssigkeit die mit Heptan/Chlorbutan (3:1) über Kieselgel chromatographiert wird. Man erhält 54 g des Produktes mit einer Reinheit von 99.9% (GC)

### 3) Synthese 4-(4-Benzyloxy-phenylethinyl)-1-brom-2-fluor-benzol C

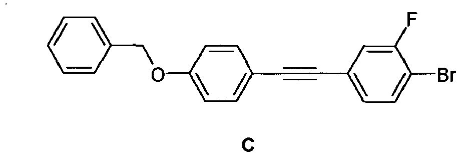

50.0 g (240.1 mmol) Alkin **B** und 73.7 g (240 mmol) 1-Brom-2-fluor-4-iodbenzol werden unter Rühren in einem Gemisch aus 166 ml Triethylamin und 389 ml Tetrahydrofuran (THF) gelöst und entgast. Anschließend wird mit 3.37 g (5.0 mmol) Bis(triphenylphosphin)-palladium(II)-chlorid und 0.91 g (4.82 mmol) Kupfer(I)-lodid versetzt. Das Reaktionsgemisch erwärmt sich nach Zugabe des Katalysators auf 60°C und die Reaktion ist nach ca. 10 min beendet. Das abgekühlte Reaktionsgemisch wird nun auf in ein Gemisch aus Eiswasser und Essigsäureethylester (EE) eingetragen und mit verdünnter Salzsäure vorsichtig angesäuert. Die organische Phase wird abgetrennt und die Wasserphase zweimal mit EE extrahiert. Dier vereinigten organischen Phasen werden mit Wasser und gesättigter NaCl-Lösung gewaschen, über Natriumsulfat getrocknet, filtriert und eingeengt. Das erhaltene Rohprodukt wird warm in Toluol gelöst und über 4 l Kieselgel filtriert. Das erhaltene Produkt wird anschließend aus einem Gemisch aus 3 l Heptan und 300 ml Toluol bei 5°C kristallisiert. Man erhält 80 g des Produktes als golden farbige Kristalle.

### Synthese von [4-(4-Benzyloxy-phenylethinyl)-2-fluor-phenylboronsäure D

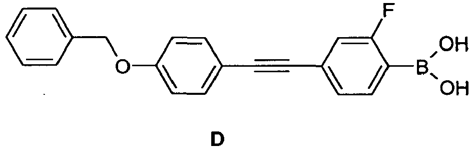

86.4 g (227 mmol) Bromid **C** wird in 1380 ml THF gelöst und auf -78°C gekühlt. Das Edukt fällt bei dieser Temperatur wieder aus, geht aber nach Zugabe von 155.8 ml (249 mmol) n-Butyllithium wieder in Lösung. Nach Zugabe wird 60 min bei -78°C nachgerührt und anschließend mit 28.3 ml (249 mmol) Trimethylborat vorsichtig versetzt und bei -78°C für 20 min gerührt. Das Reaktionsgemisch wird nun langsam auf 0°C erwärmen gelassen und unter Kühlung mit 2 N Salzsäure sauer gestellt, kurz nachgerührt und die Phasen getrennt. Die Wasserphase wird mit MTB-Ether ausgerührt und die vereinigten organischen Phasen mit gesättigter NaCl-Lösung gewaschen und über Natriumsulfat getrocknet, filtriert und eingeengt. Das erhaltene Rohprodukt (dunkelbraune Kristalle) werden aus Toluol (1:20) heiß ausgerührt und über Nacht auf RT abgekühlt, abgesaugt und im Vakuumtrockenschrank getrocknet. Man erhält 54 g des Produktes als beigefarbene Kristalle.

### 4) Synthese von 4-(4-Benzyloxy-phenylethinyl)-4'-bromo-2'-ethyl-2-fluoro-biphenyl E

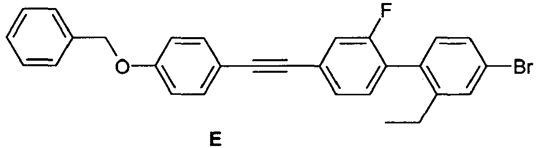

25.0 g (72.0 mmol) Boronsäure **D**, 22.4 g (72.0 mmol) 4-Brom-2-ethyl-1-iodbenzol und 18.3g (173 mmol) Natriumcrabonat werden in einem Gemisch aus 337 ml Ethanol, 230 ml Toluol und 68 ml Wasser suspendiert und unter Argon entgast. Anschließend wird mit 1.67 g (1.44 mmol) Tetrakis(triphenylphosphin)-palladium(0) versetzt und auf 80°C erhitzt. Die beigefarbene Suspension wird anschließend für 3 h refluxiert und nach vollständigem Umsatz (Dünnschichtkontrolle) auf RT abgekühlt. Das Reaktionsgemisch wird nun mit ausreichend Wasser und Essigsäureethylester (EE) versetzt und die organische Phase abgetrennt. Die Wasserphase wird zweimal mit EE extrahiert und die vereinigten organischen Phasen mit gesättigter NaCl-Lösung gewaschen. Die organische Phase blieb eine Suspension und wird bis zur vollständigen Lösung erwärmt und bei der Temperatur zur Trocknung mit Natriumsulfat versetzt, warm filtriert und zum Auskristallisieren abkühlen (5°C) gelassen. Das kristalline Produkt wird abgesaugt und mit kaltem Toluol nachgewaschen. Man erhält das Produkt (22.2 g) als weiße Kristalle.
MS (EI): 486.1 [M⁺]
¹H NMR (500 MHz, CDCl₃)
δ = 1.07 ppm (t, 7.5 Hz, 3H, CH₃), 2.48 (q, 7.4, 14.8 Hz, C*H*₂CH₃), 5.08 (s, 2H, CH₂-benzylisch), 6.96 (d, 8.7 Hz, 2H, arom.-H), 7.04, (d, 8.2 Hz, 1H, arom.-H), 7.16 (t, 7.8 Hz, 1h, arom.-H), 7.27 (d, 10Hz, 1H, arom.-H), 7.32-7.52 (m, 10H, arom.-H).

### 5) Synthese von {3-[4'-(4-Benzyloxy-phenylethinyl)-2-ethyl-2'-fluor-biphenyl-4-yl]-prop-2-inyloxy}-tert-butyl-dimethyl-silan F

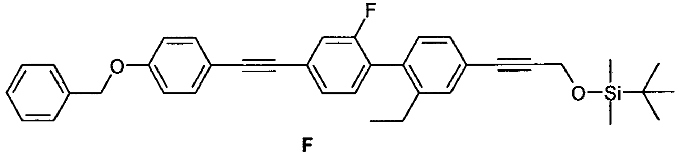

19.2 g (40.0 mmol) Bromid **E** und 24.06 ml (118.7 mmol) tert-Butyl-dimethylprop-2-inyloxysilan werden in 403 ml Diisopropylamin gelöst und unter Argoneinleitung (30 min) entgast. Die Reaktionsmischung wird nun mit 444 mg (1.98 mmol) Palladium(II)acetat, 573.8 mg (1.978 mmol) tri-Tert.-butylphosphonium-tetrafluoroborat und 301.3 mg (1.582 mmol) kupfer-I-iodid versetzt und für 3 h unter Rückfluss gerührt. Das Reaktionsgemisch wird auf RT abkühlen gelassen, mit Wasser versetzt und mit MTB-Ether extrahiert. Die Phasen werden getrennt, die Wasserphase mit MTB-Ether extrahiert und die vereinigten organischen Phasen mit gesättigter NaCl-Lösung gewaschen, über Natriumsulfat getrocknet, filtriert und unter Vakuum eingeengt. Das Rohprodukt wird mit Chlorbutan/Heptan (1:1) über Kieselgel filtriert und aus Isopropanol (1:20) kristallisiert. Man erhält 17.4 g des Produktes.
¹H NMR (500 MHz, CDCl₃)
δ = 0.00 ppm (s, 6H, Si(CH₃)₂), 0.78 (s, 9H, Si(C(CH₃)₃), 0.89 (t, 7.57 Hz, 3H, CH₃), 2.30 (q, 7.53, 2H, C*H*₂CH₃), 4.38 (s, 2H, C*H*₂-OSi(CH₃)₂C(CH₃)₃, 4.91 (s, 2H, CH₂-benzylisch), 6.78 (d, 8.85Hz, 2H, arom.-H), 6.93 (d, 7.85Hz, 1H, arom.-H), 7.25-7.04 (m, 9H, arom.-H), 7.29 (d, 8.83Hz, 2H, arom.-H).

### 6) Synthese von 4-(2-{4'-[3-(tert-Butyl-dimethyl-silanyloxy)-propyl]-2'-ethyl-2-fluoro-biphenyl-4-yl}-ethyl)-phenol G

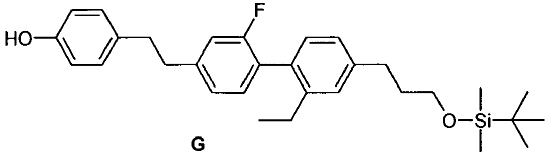

16.7 g (28.0 mmol) Alkin **F** werden in 170 ml THF gelöst und mit 5.7 g Sponge-Nickel-Catalyst (wassernass) und 4.2 l Wasserstoff bei Raumtemperatur (RT), Normaldruck während 58 h hydriert. Nach vollständiger Umsetzung wird die Reaktionslösung filtriert, eingeengt und mit Dichlormethan (DCM) über Kieselgel filtriert. Man erhält 13.5 g des Produktes.
¹H NMR (500 MHz, CDCl₃)
δ = 0.00 ppm (s, 6H, Si(CH₃)₂), 0.84 (s, 9H, Si(C(CH₃)₃), 0.99 (t, 7.58Hz, 3H, CH₃), 1.82 (m_{c}, 2H), 2.41 (q, 7.54Hz, 2H), 2.63 (t, 7.95Hz, 2H), 2.96 (s, 4H, Phenyl-C*H*₂-C*H*₂-Phenyl), 3.45 (q, 6.4Hz, 2H), 4.46 (t, 5.15Hz, 1H, OH), 6.67 (d, 8.49Hz, 2H, arom.-H), 6.84 (dd, 1.41, 10.61 Hz, 1H, arom.-H), 6.88 (dd, 1.53, 7.73Hz, 1H, arom.-H), 6.96 (d, 8.43 Hz, 2H, arom.-H), 7.06-6.98 (m, 4H, arom.-H).

### 7) Synthese von 2-Methylacrylsäure 4-(2-{4'-[3-(tert-butyl-dimethyl-silanyloxy)-propyl]-2'-ethyl-2-fluor-biphenyl-4-yl}-ethyl)-phenylester H

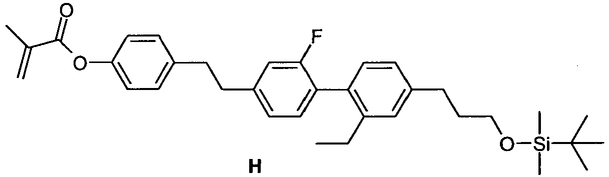

3.00 g (6.09 mmol) Alkohol **G**, 37.2 mg (0.30 mmol) 4-(Dimethyl-amino)-pyridin und 0.72 ml (8.52 mmol) Methacrylsäure werden in 45 ml Dichlormethan vorgelegt und auf 0°C gekühlt. Es wird nun mit eine Lösung von 1.51 ml (8.52 mmol) 1-(3-Dimethylaminopropyl)-3-ethylcarbodiimid in 20 ml Dichlormethan tropfenweise versetzt und auf RT erwärmen gelassen. Nach weiteren 2 Tagen Rühren bei RT und beendeter Umsetzung wird die Reaktionsmischung direkt mit Dichlormethan über Kieselgel chromatographiert und man erhält 2.6 g des Produktes mit 99 % Reinheit (HPLC).
¹H NMR (500 MHz, CDCl₃)
δ = 0.00 ppm (s, 6H, Si(CH₃)₂), 0.85 (s, 9H, Si(C(CH₃)₃), 1.00 (t, 7.57Hz, 3H, CH₃), 1.82 (m_{c}, 2H, CH₂), 1.99 (s, 3H, CH₃), 2.42 (q, 7.53, 2H), 2.64 (t, 7.93Hz, 2H), 2.89 (s, 4H, Phenyl-C*H*₂-C*H*₂-Phenyl), 3.61 (t, 6.32Hz, 2H), 5.67 (s, 1H), 6.27 (s, 1H), 6.64 (d, 11.9 Hz, 1H, arom.-H), 6.91 (dd, 1.53, 7.72Hz, 1H, arom.-H), 6.98 (d, 8.5 Hz, 2H, arom.-H), 7.09-6.98 (m, 4H, arom.-H), 7.13 (d, 8.47Hz, 2H, arom.-H).

### 8) Synthese von 2-Methylacrylsäure 4-{2-[2'-ethyl-2-fluor-4'-(3-hydroxypropyl)-biphenyl-4-yl]-ethyl}-phenylester

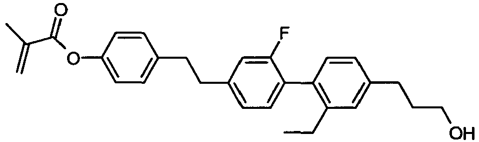

2.60 g (4.63 mmol) Silylether **H** wird in 56 ml Tetrahydrofuran (THF) gelöst, auf 0°C gekühlt und mit 2.66 ml (2mol/l, 5.33 mmol) HCl tropfenweise versetzt. Die Reaktionslösung wir auf Raumtemperatur erwärmen gelassen und nach 3 Stunden mit Natriumhydrogencarbonat-Lösung vorsichtig neutralisiert. Es wird mit MTB-Ether versetzt, extrahiert und die Phasen getrennt. Die organische Phase wird mit Wasser gewaschen, über Natriumsulfat getrocknet, filtriert und eingeengt. Das Rohprodukt wird mit Heptan/Essigsäure-ethylester über Kieselgel chromatographiert und die Produktfraktionen eingeengt. Man erhält 1.3 g (67%) des Produktes als kristallinen Feststoff mit einer Reinheit von 99.9% (HPLC).
Phasen: Tg 15°C K 88°C l
¹H NMR (500 MHz, DMSO-D₆)
δ = 1.00 (t, 7.57Hz, 3H, CH₃), 1.76 (m_{c}, 2H), 2.07 (s, 3H, CH₃), 2.42 (q, 7.55 Hz, 2H), 2.64 (t, 7.92Hz, 2H), 2.96 (s, 4H, Phenyl-C*H*₂-C*H*₂-Phenyl), 3.46 (q, 6.4Hz, 2H), 4.46 (t, 5.15, 1H, OH), 5.89 (s, 1H), 6.27 (s, 1H), 6.64 (d, 11.9 Hz, 1H, arom.-H), 7.04 (d, 7.71 Hz, 1H, arom.-H), 7.15-7.06 (m, 3H, arom.-H), 7.21-7.16 (m, 4H, arom.-H), 7.32 (d, 8.54Hz, 2H, arom.-H).

### Beispiel 4

### 2-Methacrylsäure 2-(4-{2-[2'-ethyl-2-fluor-4'-(3-hydroxy-propyl) -biphenyl-4-yl]-ethyl}-phenoxy)-ethylester

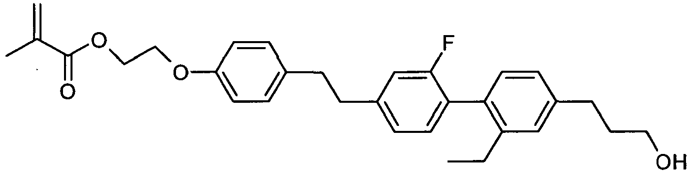

### 1) Synthese von 2-Methylacrylsäure 4-{2-[2'-ethyl-2-fluor-4'-(3-hydroxy-propyl)-biphenyl-4-yl]-ethyl}-phenyl ester H

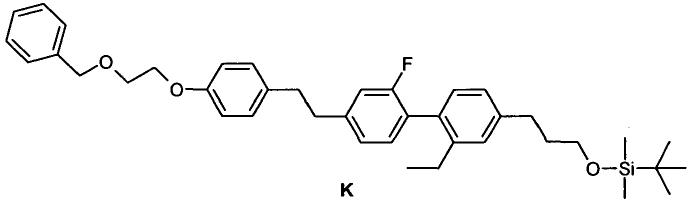

8.20 g (16.5 mmol) Alkohol **G** (vgl. Beispiel oben) werden in 119 ml Ethylmethylketon gelöst und mit 5.69 g (41 mmol) Kaliumcarbonat versetzt. Anschließend werden portionsweise 13.14 g (61.1 mmol) (2-Bromoethoxymethylbenzol) zugesetzt und für 48 h refluxiert. Das Reaktionsgemisch wird anschließend auf Raumtemperatur (RT) abkühlen gelassen und filtriert und mit Aceton nachgewaschen. Die organischen Phasen werden eingeengt und mit Toluol an Kieselgel chromatographisch gereinigt. Man erhält 7.3 g des gewünschten Produktes.
¹H NMR (500 MHz, CDCl₃)
δ = 0.00 ppm (s, 6H, Si(CH₃)₂), 0.84 (s, 9H, Si(C(CH₃)₃), 1.00 (t, 7.56Hz, 3H, CH₃), 1.80 (m_{c}, 2H), 2.42 (q, 7.53Hz, 2H), 2.63 (t, 7.92Hz, 2H), 2.84 (s, 4H, Phenyl-C*H*₂-C*H*₂-Phenyl), 3.61 (t, 6.3Hz, 2H), 3.76 (t, 4.84 Hz, 2H), 4.07 (t, 5.08 Hz, 2H), 4.57 (s, 2H), 6.68 (d, 8.6 Hz, 2H, arom.-H), 6.86 (dd, 10.61, 1.42 Hz, 1H, arom.-H), 6.89 (dd, 7.72, 1.56 Hz, 1H, arom.-H), 7.11-6.97 (m, 7H, arom.-H), 7.24-7.16 (m, 1H, arom.-H, überlagert mit Toluol) 7.32-7.25 (m, 3H, arom.-H, überlagert mit Toluol).

### 2) Synthese von 2-[4-(2-{4'-[3-(tert-Butyl-dimethyl-silanyloxy)-propyl]-2'-ethyl-2-fluoro-biphenyl-4-yl}-ethyl)-phenoxy]-ethanol I

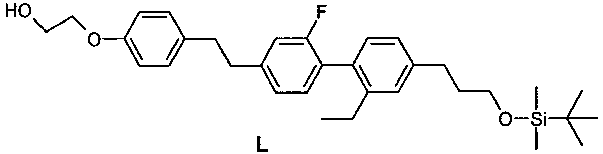

6.4 g (10.0 mmol) an Benzylester **K** werden in 70 ml Tetrahydrofuran gelöst und mit 0.39 g (3.87 mmol) NEt₃ und 12.0 g Pd-C-5% (54% Wasser) versetzt. Anschließend wird mit 5 bar Wasserstoffdruck bei 50°C für 82 h gerührt. Das Reaktionsgemisch wird filtriert und roh über Kieselgel mit Dichlormethan und MTB-Ether filtriert. Man erhält 5.5 g des gewünschten Produktes.
¹H NMR (500 MHz, CDCl₃)
δ = 0.00 ppm (s, 6H, Si(CH₃)₂), 0.85 (s, 9H, Si(C(CH₃)₃), 1.00 (t, 7.57Hz, 3H, CH₃), 1.82 (m_{c}, 2H), 1.92 (t, 6.25 Hz, 1H, OH), 2.42 (q, 7.52Hz, 2H), 2.64 (t, 7.95Hz, 2H), 2.85 (s, 4H, Phenyl-C*H*₂-C*H*₂-Phenyl), 3.61 (t, 6.3Hz, 2H), 3.89 (m, 2H), 4.07 (t, 4.64 Hz, 2H), 6.78 (d, 8.5 Hz, 2H, arom.-H), 6.86 (d, 10.69, 1H, arom.-H), 6.89 (d, 7.74 Hz, 1H, arom.-H), 7.07-6.98 (m, 6H, arom.-H).

### 3) Synthese von 2-Methyl-acrylsäure 2-[4-(2-{4'-[3-(tert-butyl-dimethyl-silanyloxy)-propyl]-2'-ethyl-2-fluor-biphenyl-4-yl}-ethyl)-phenoxy]-ethyl ester J

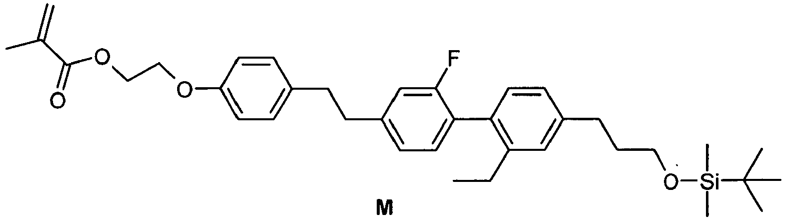

5.60 g (10.4 mmol) Alkohol **M,** 5.19 ml (61.5 mmol) Methacrylsäure und 62.6 mg (0.512 mmol) 4-(Dimethylamino)pyridin werden in 45 ml Dichlormethan (DCM) gelöst und auf 0°C gekühlt. Es wird nun mit 10.87 ml (61.5 mmol) EDC versetzt (gelöst in 30 ml DCM) und für 48 h bei RT gerührt. Die Reaktionsmischung wird direkt über 250 g Kieselgel mit DCM chromatographiert und die Produktfraktionen unter Vakuum eingeengt. Man erhält 5.6 g des gewünschten Produktes.
¹H NMR (500 MHz, CDCl₃)
δ = 0.00 ppm (s, 6H, Si(CH₃)₂), 0.85 (s, 9H, Si(C(CH₃)₃), 1.00 (t, 7.57 Hz, 3H, CH₃), 1.81 (m_{c}, 2H), 1.89 (s, 3H), 2.42 (q, 7.54 Hz, 2H), 2.64 (t, 7.94 Hz, 2H), 2.85 (s, 4H, Phenyl-C*H*₂-C*H*₂-Phenyl), 3.61 (t, 6.3 Hz, 2H), 4.14 (t, 4.8 Hz, 2H), 4.42 (t, 5.02 Hz, 2H), 5.51 (s, 1 H), 6.07 (s, 1 H), 6.78 (d, 8.6 Hz, 2H, arom.-H), 6.86 (dd, 10.57, 1.33 Hz, 1H, arom.-H), 6.89 (dd, 7.74, 1.48 Hz, 1H, arom.-H), 7.1-6.97 (m, 6H, arom.-H).

### 4) Synthese von 2-Methyl-Acrylsäure 2-(4-{2-[2'-ethyl-2-fluor-4'-(3-hydroxypropyl)-biphenyl-4-yl]-ethyl}-phenoxy)-ethylester

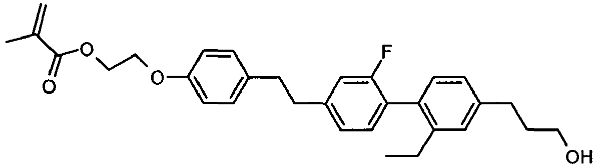

5.60 g (9.30 mmol) Methacrylsäureester **M** werden in 112 ml Tetrahydrofuran (THF) gelöst, auf 0°C gekühlt und tropfenweise mit 5.27 ml (10.5 mmol / 2 N) Salzsäure versetzt. Die Reaktionslösung wird auf Raumtemperatur erwärmen gelassen und 3 h gerührt. Nach vollständiger Umsetzung wird vorsichtig mit NaHCO₃ Lösung neutralisiert und das Produkt mehrfach mit MTB-Ether extrahiert. Die vereinigten organischen Phasen werden über Natriumsulfat getrocknet, filtriert und eingeengt. Das Reaktionsprodukt wird mit Heptan / Essigsäureethylester über Kieselgel chromatographiert und die Produktfraktionen unter Vakuum eingeengt. Anschließend wird das Produkt bei 40°C und 1.6·10⁻⁴ bar für 3 Stunden getrocknet, um Lösungsmittelreste zu entfernen. Man erhält 3.6 g des gewünschten Produktes.
Phasen: Tg -24°C l
¹H NMR (500 MHz, CDCl₃)
δ = 1.10 (t, 7.57 Hz, 3H, CH₃), 1.32 (s, 1 H, OH), 1.81 (m_{c}, 2H), 1.98 (m_{c}, 5H), 2.53 (q, 7.54 Hz, 2H), 2.77 (t, 7.92 Hz, 2H), 2.95 (s, 4H, Phenyl-C*H*₂-C*H*₂-Phenyl), 3.76 (t, 6.42 Hz, 2H), 4.24 (t, 4.75 Hz, 2H), 4.52 (t, 5.0 Hz, 2H), 5.61 (s, 1 H), 6.17 (s, 1 H), 6.88 (d, 8.56 Hz, 2H, arom.-H), 6.96 (dd, 10.56, 1.01 Hz, 1H, arom.-H), 7.04 (d, 7.75, 1.29 Hz, 1H, arom.-H), 7.2-7.08 (m, 6H, arom.-H).

Analog zu den obigen Beispielen werden die folgenden Beispielverbindungen hergestellt:

| **Nr.** | **Struktur der Beispielverbindung** |
|---|---|
| 5. | 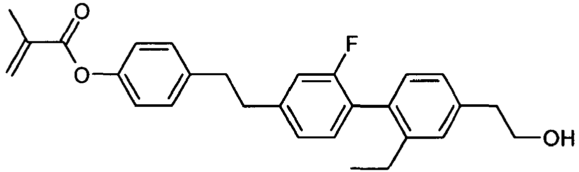 |
| 6. | 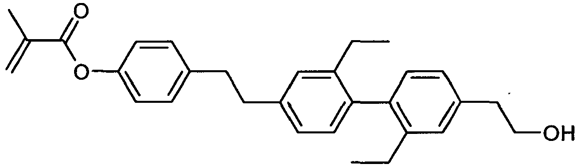 |
| 7. | 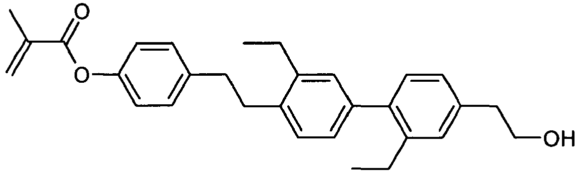 |
| 8. | 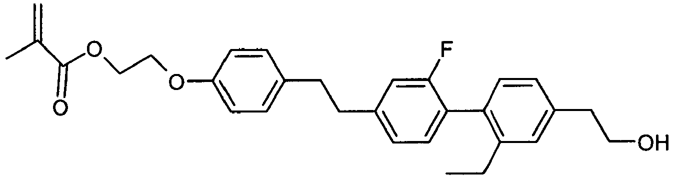 |
| 9. | 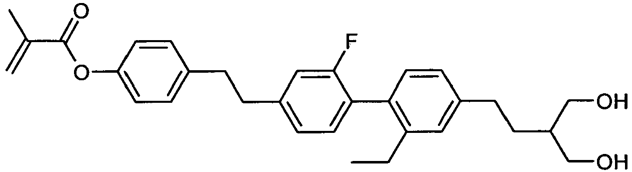 |
| 10. | 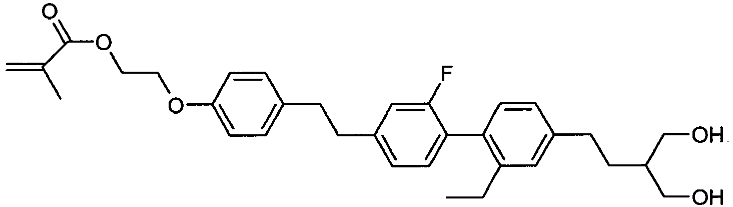 |
| 11. | 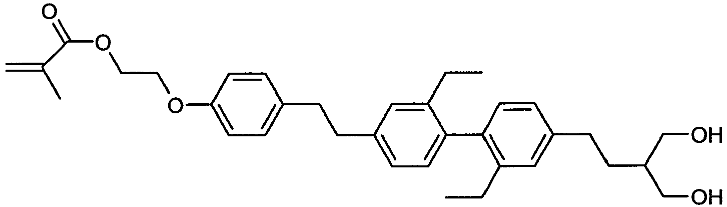 |
| 12. | 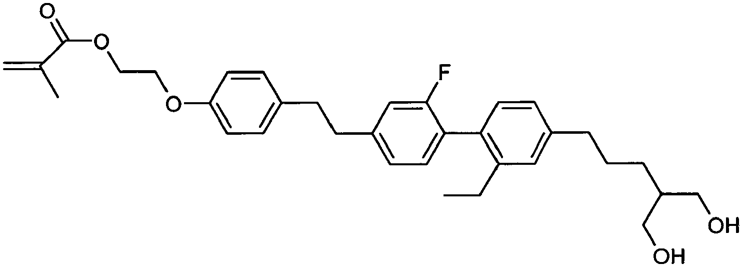 |
| 13. | 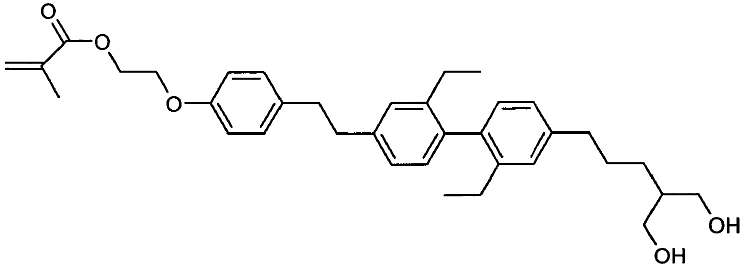 |
| 14. | 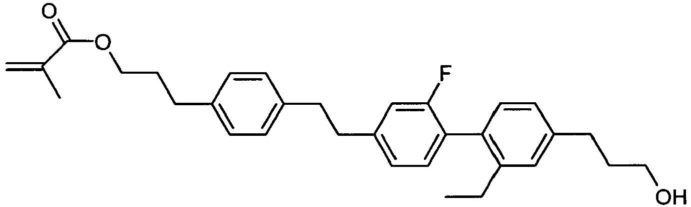 |
| 15. | 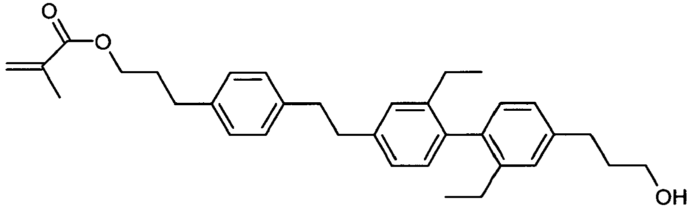 |
| 16. | 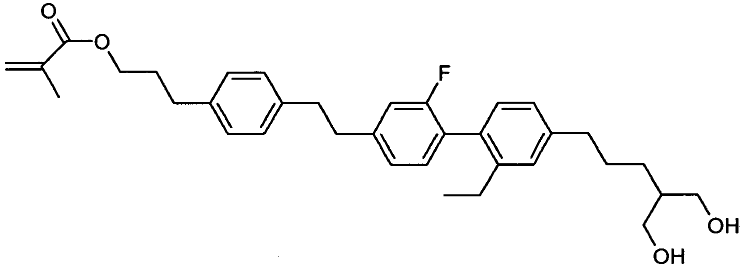 |
| 17. | 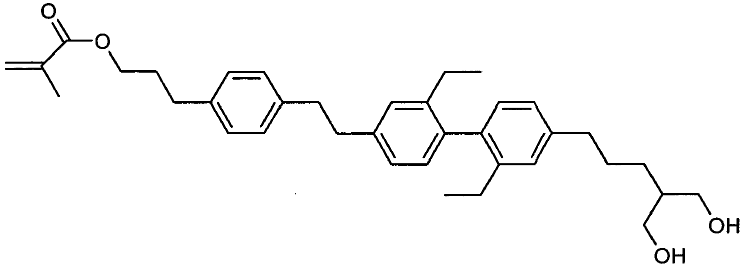 |
| 18. | 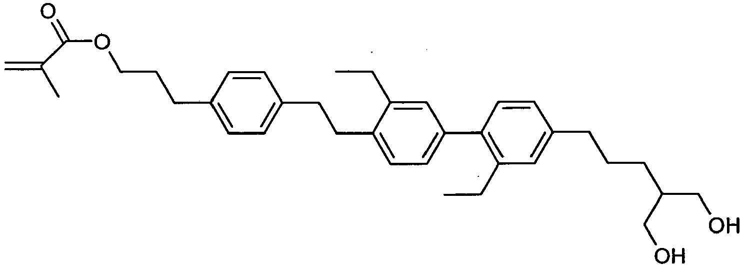 |
| 19. | 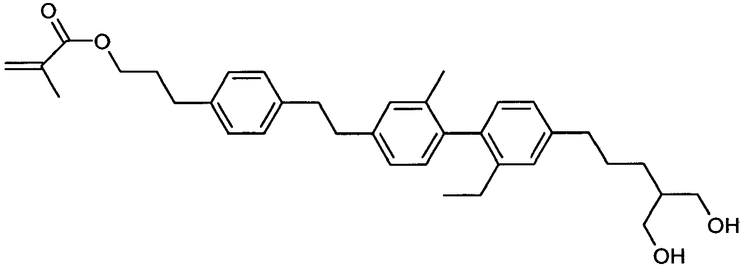 |
| 20. | 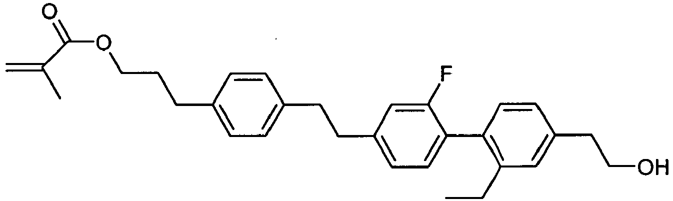 |
| 21. | 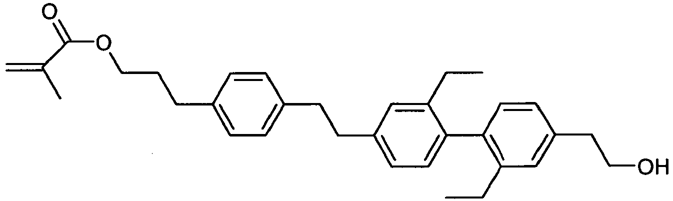 |
| 22. | 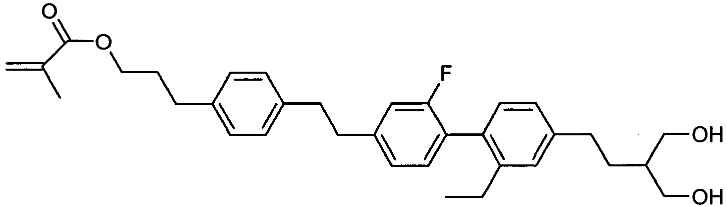 |
| 23. | 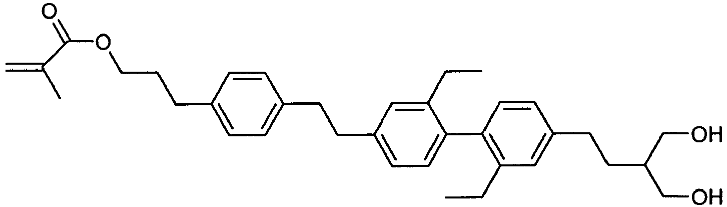 |
| 24. | 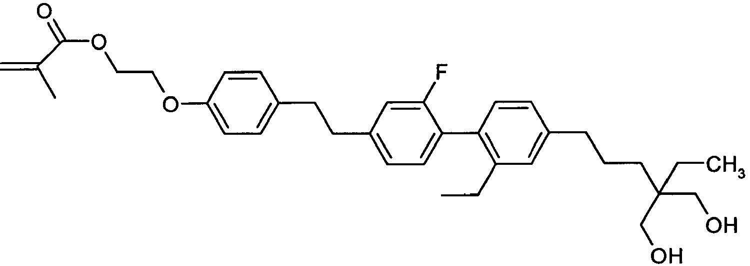 |
| 25. | 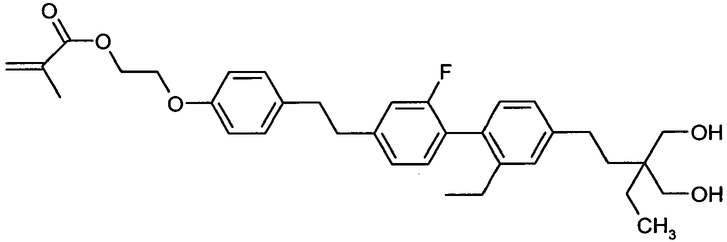 |
| 26. | 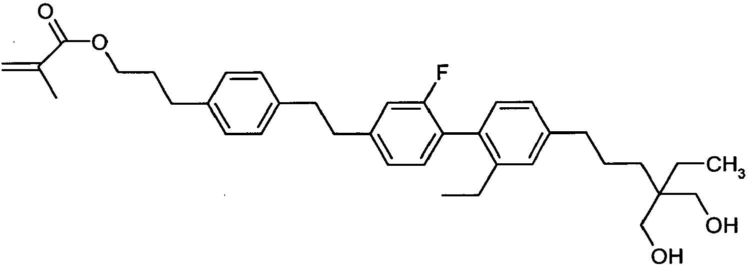 |
| 27. | 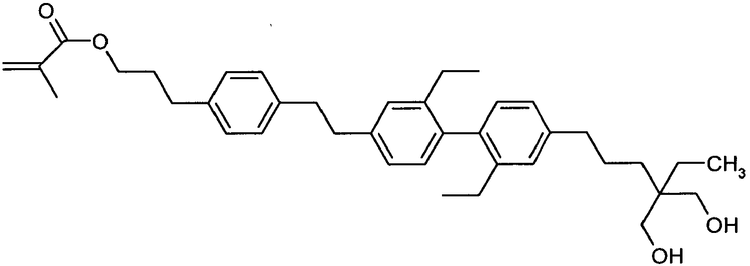 |
| 28. | 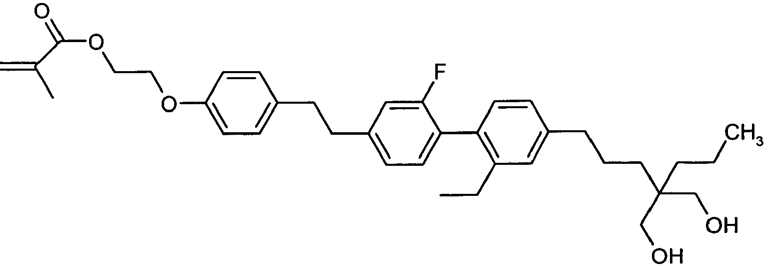 |
| 29. | 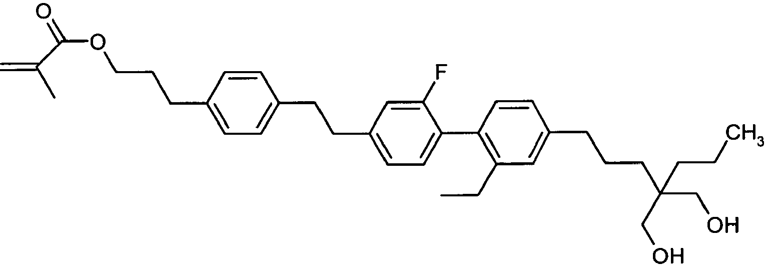 |
| 30. | 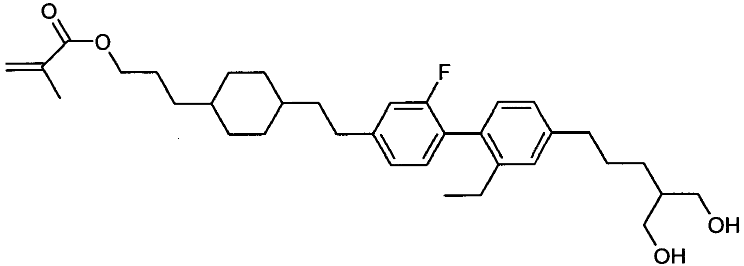 |
| 31. | 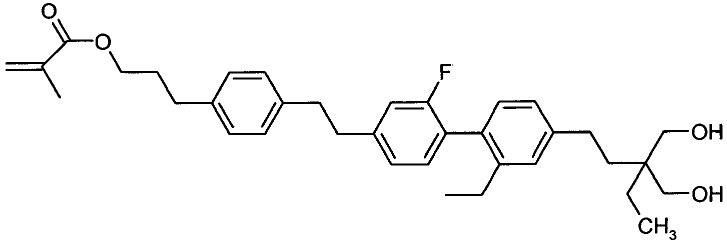 |
| 32. | 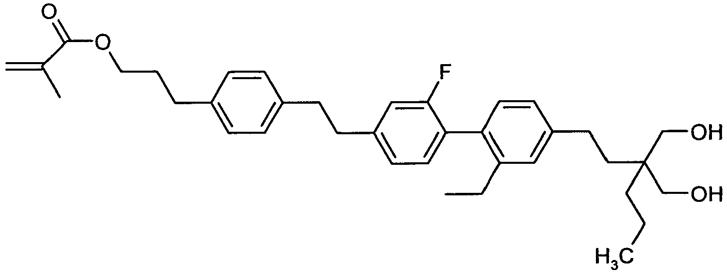 |
| 33. | 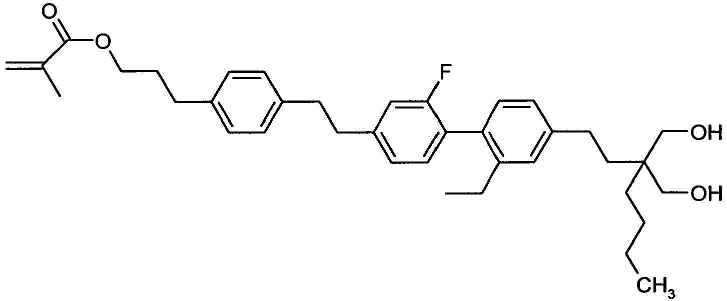 |
| 34. | 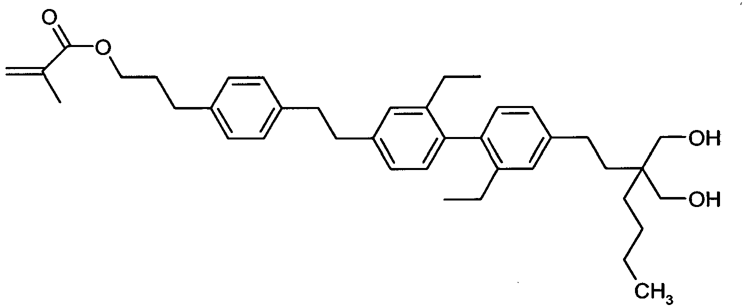 |
| 35. | 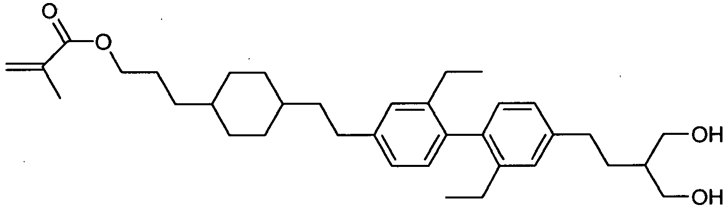 |
| 36. | 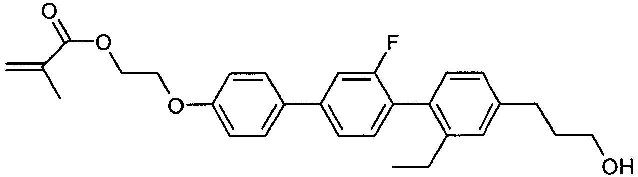 |
| 37. | 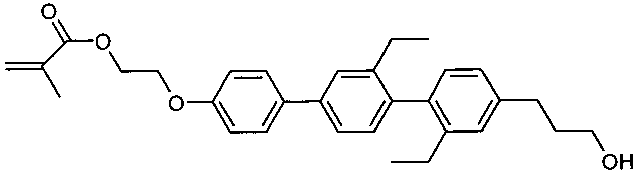 |
| 38. | 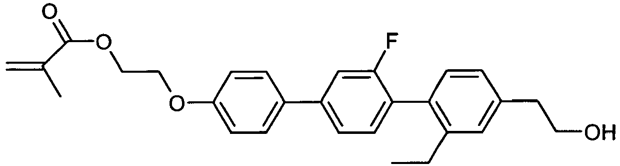 |
| 39. | 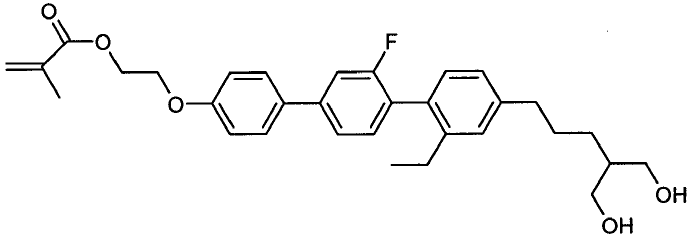 |
| 40. | 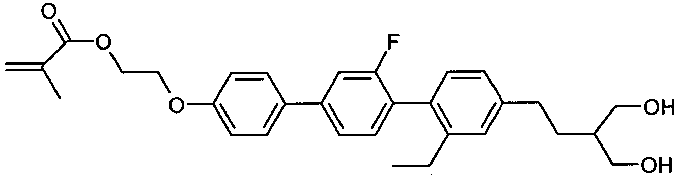 |
| 41. | 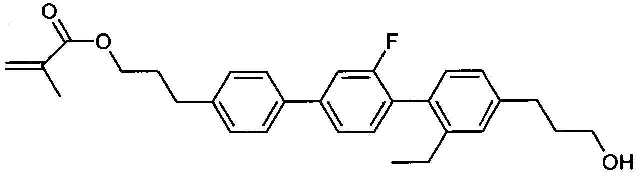 |
| 42. | 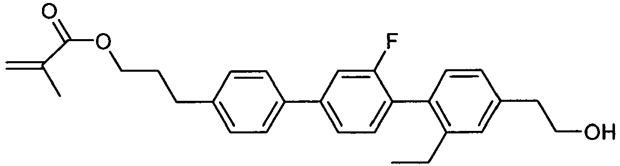 |
| 43. | 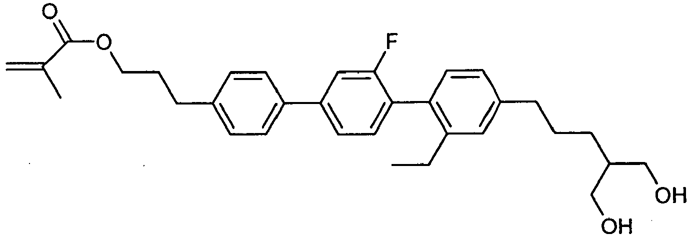 |
| 44. | 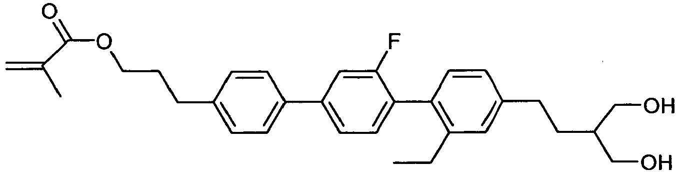 |
| 45. | 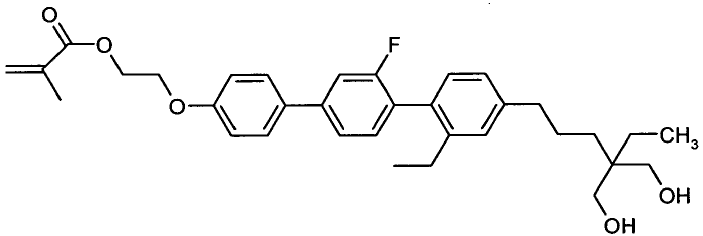 |
| 46. | 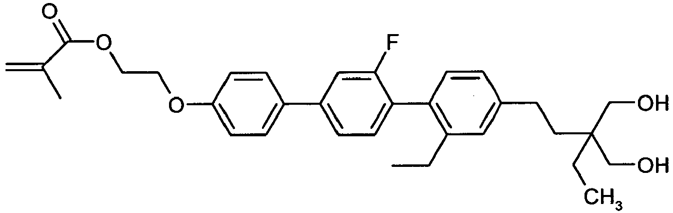 |
| 47. | 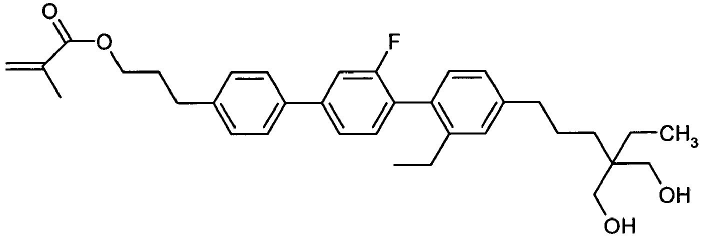 |
| 48. | 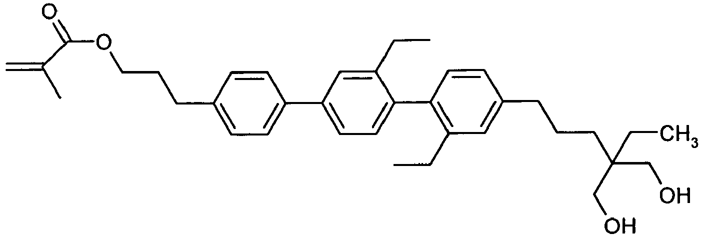 |
| 49. | 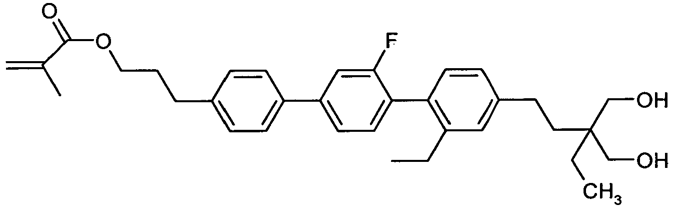 |
| 50. | 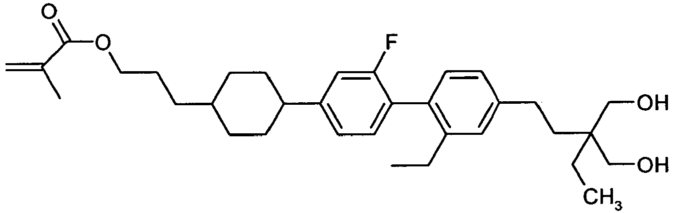 |
| 51. | 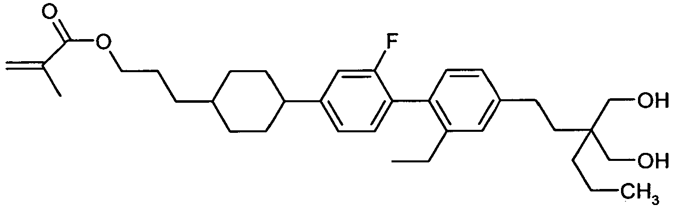 |
| 52. | 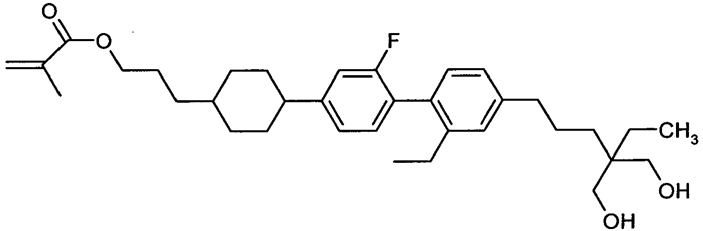 |
| 53. | 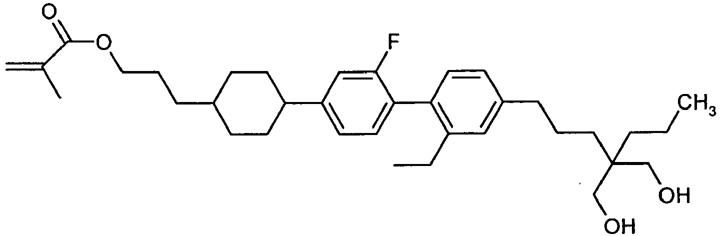 |
| 54. | 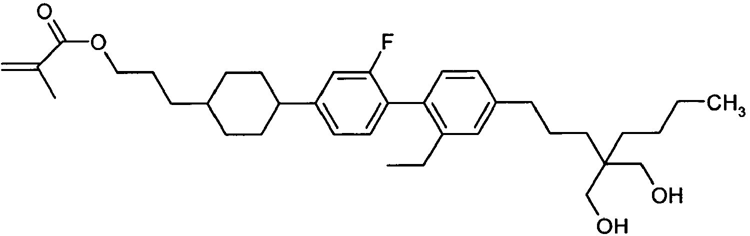 |
| 55. | 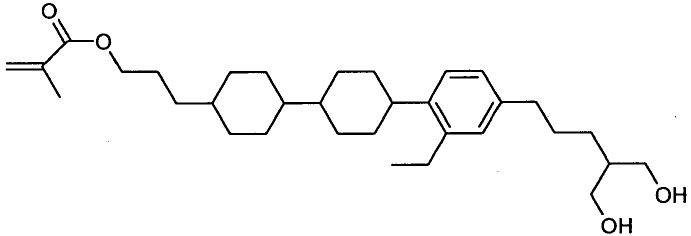 |
| 56. | 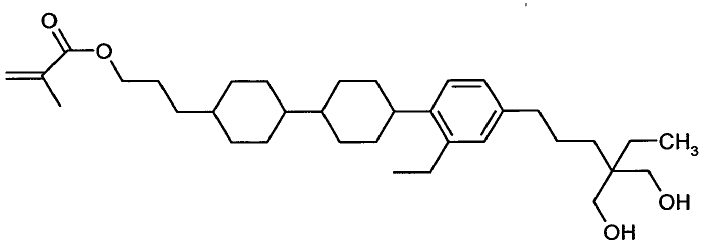 |
| 57. | 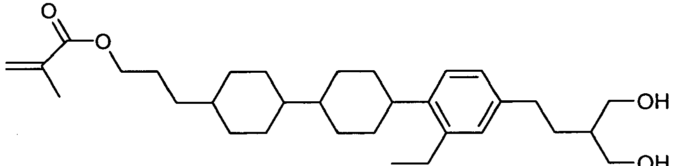 |
| 58. | 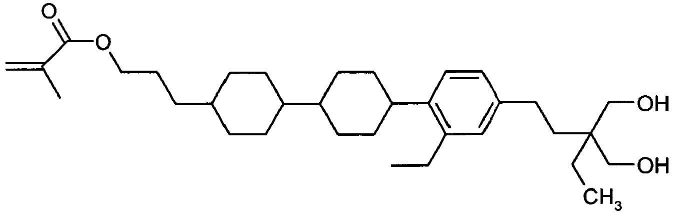 |
| 59. | 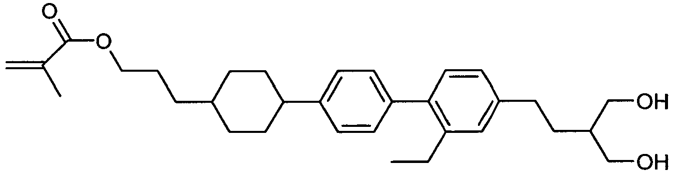 |
| 60. | 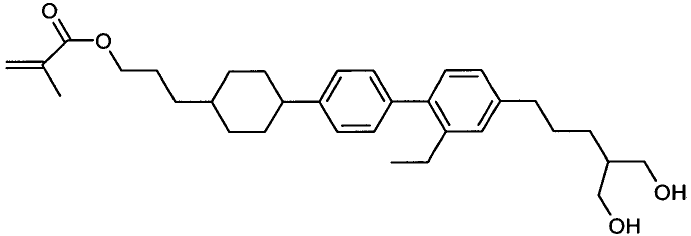 |
| 61. | 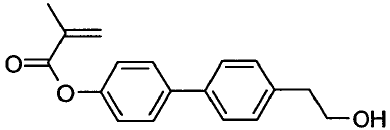 |
| 62. | 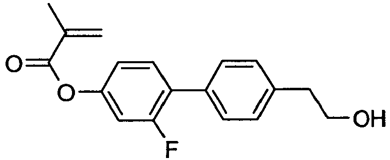 |
| 63. | 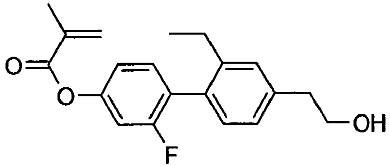 |
| 64. | 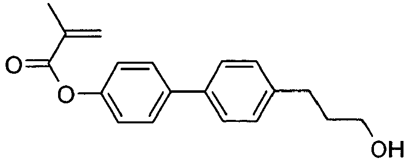 |
| 65. | 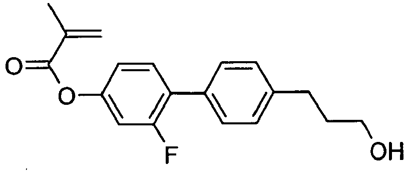 |
| 66. | 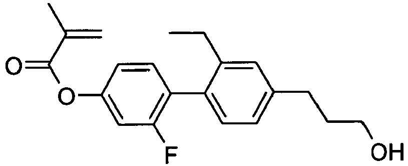 |
| 67. | 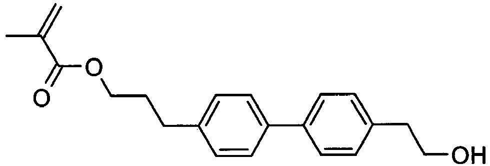 |
| 68. | 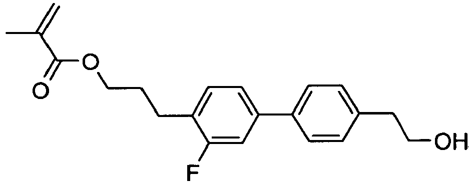 |
| 69. | 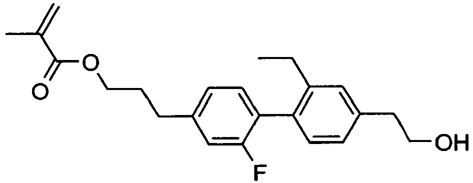 |
| 70. | 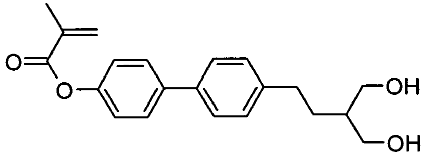 |
| 71. | 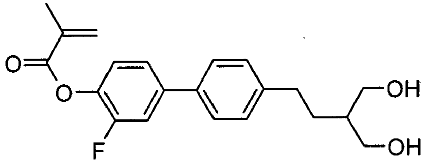 |
| 72. | 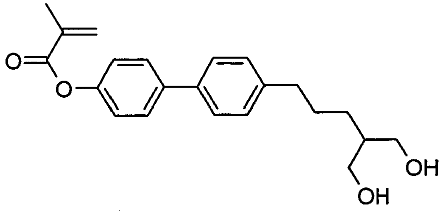 |
| 73. | 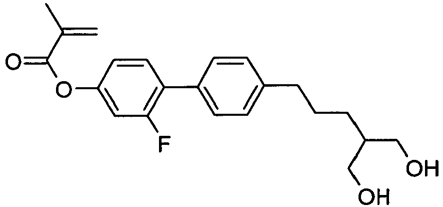 |
| 74. | 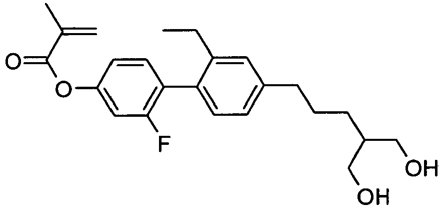 |
| 75. | 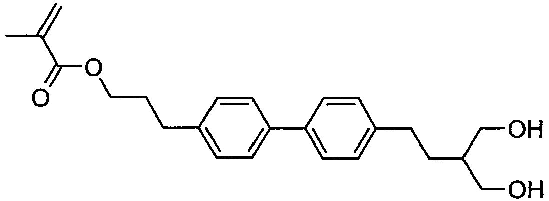 |
| 76. | 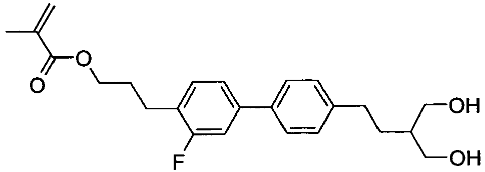 |
| 77. | 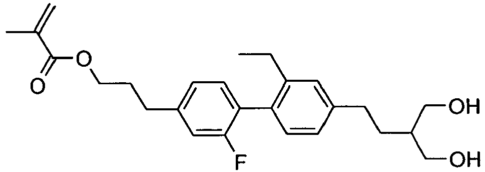 |
| 78. | 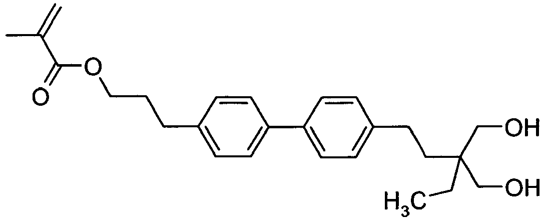 |
| 79. | 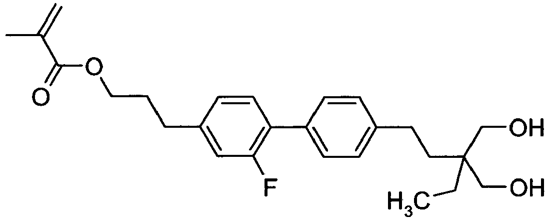 |
| 80. | 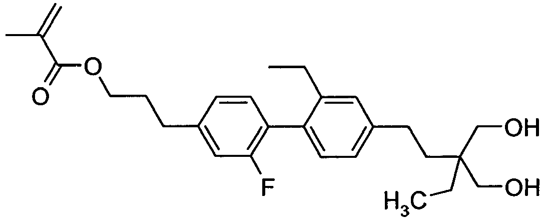 |
| 81. | 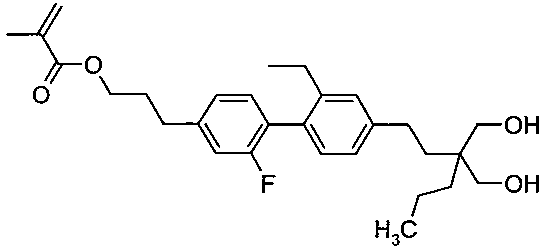 |
| 82. | 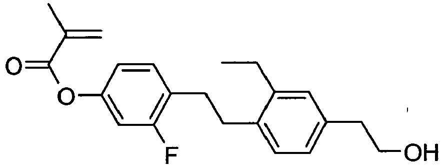 |
| 83. | 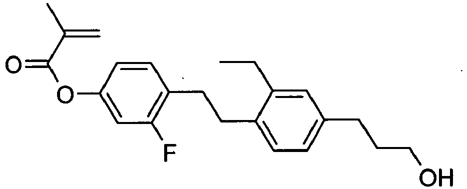 |
| 84. | 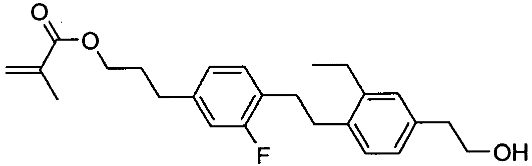 |
| 85. | 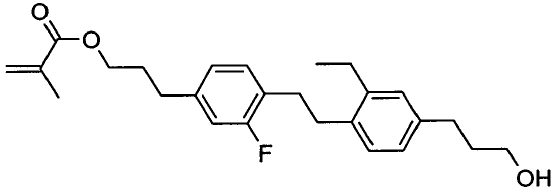 |
| 86. | 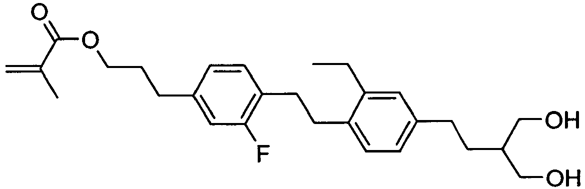 |
| 87. | 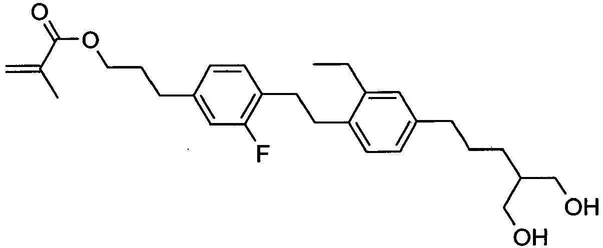 |
| 88. | 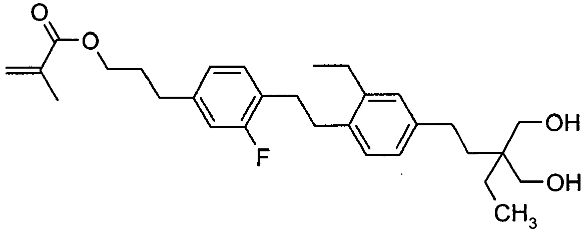 |
| 89. | 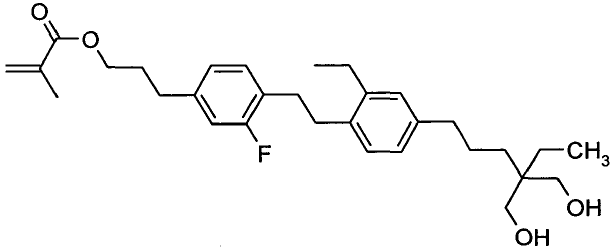 |
| 90. | 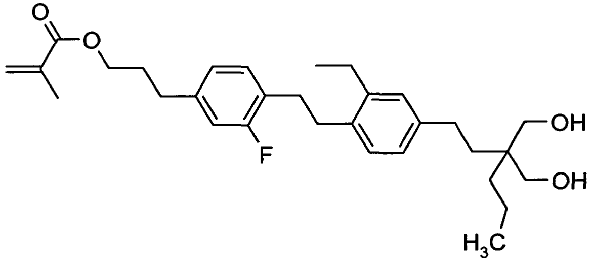 |
| 91. | 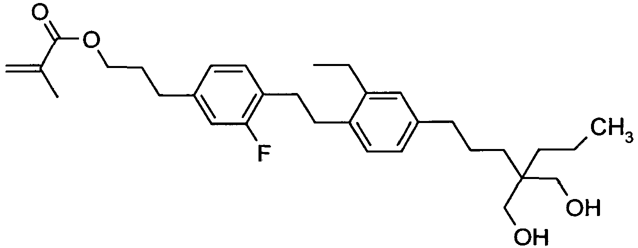 |

### B) Mischungsbeispiele

Zur Herstellung von erfindungsgemäßen FK-Medien werden die folgenden flüssigkristallinen Mischungen bestehend aus niedermolekularen Komponenten in den angegebenen prozentualen Gewichtsanteilen verwendet (Akronyme vgl. Tabelle A und B oben).

**H1: Nematische Hostmischung (Δε < 0)**

| | | | |
|---|---|---|---|
| CY-3-O2 | 15.50 % | Klärpunkt [°C]: | 75.1 |
| CCY-3-O3 | 8.00 % | Δn [589 nm, 20°C]: | 0.098 |
| CCY-4-O2 | 10.00 % | Δε [1 kHz, 20°C]: | -3.0 |
| CPY-2-O2 | 5.50 % | ε_{∥} [1 kHz, 20°C]: | 3.4 |
| CPY-3-O2 | 11.50 % | ε_{⊥} [1 kHz, 20°C]: | 6.4 |
| CCH-34 | 9.25 % | K₁ [pN, 20°C]: | 13.1 |
| CCH-23 | 24.50 % | K₃ [pN, 20°C]: | 13.3 |
| PYP-2-3 | 8.75 % | γ₁ [mPa·s, 20°C]: | 113 |
| PCH-301 | 7.00 % | V₀ [20°C, V]: | 2.22 |

**H2: Nematische Hostmischung (Δε < 0)**

| | | | |
|---|---|---|---|
| CY-3-O4 | 14.00 % | Klärpunkt [°C]: | 80.0 |
| CCY-3-O2 | 9.00 % | Δn [589 nm, 20°C]: | 0.090 |
| CCY-3-O3 | 9.00 % | Δε [1 kHz, 20°C]: | -3.3 |
| CPY-2-O2 | 10.00 % | ε_{∥}[1 kHz, 20°C]: | 3.4 |
| CPY-3-O2 | 10.00 % | ε_{⊥} [1 kHz, 20°C]: | 6.7 |
| CCY-3-1 | 8.00 % | K₁ [pN, 20°C]: | 15.1 |
| CCH-34 | 9.00 % | K₃ [pN, 20°C]: | 14.6 |
| CCH-35 | 6.00 % | γ₁ [mPa·s, 20°C]: | 140 |
| PCH-53 | 10.00 % | V₀ [20°C, V]: | 2.23 |
| CCH-301 | 6.00 % | | |
| CCH-303 | 9.00 % | | |

**H3: Nematische Hostmischung (Δε < 0)**

| | | | |
|---|---|---|---|
| CC-3-V1 | 9.00 % | Klärpunkt [°C]: | 74.7 |
| CCH-23 | 18.00 % | Δn [589 nm, 20°C]: | 0.098 |
| CCH-34 | 3.00 % | Δε [1 kHz, 20°C]: | -3.4 |
| CCH-35 | 7.00 % | ε_{∥} [1 kHz, 20°C]: | 3.5 |
| CCP-3-1 | 5.50 % | ε_{⊥} [1 kHz, 20°C]: | 6.9 |
| CCY-3-O2 | 11.50 % | K₁ [pN, 20°C]: | 14.9 |
| CPY-2-O2 | 8.00 % | K₃ [pN, 20°C]: | 15.9 |
| CPY-3-O2 | 11.00 % | γ₁ [mPa·s, 20°C]: | 108 |
| CY-3-O2 | 15.50 % | V₀ [20°C, V]: | 2.28 |
| PY-3-O2 | 11.50 % | | |

**H4: Nematische Hostmischung (Δε < 0)**

| | | | |
|---|---|---|---|
| CC-3-V | 37.50 % | Klärpunkt [°C]: | 74.8 |
| CC-3-V1 | 2.00 % | Δn [589 nm, 20°C]: | 0.099 |
| CCY-4-O2 | 14.50 % | Δε [1 kHz, 20°C]: | -2.9 |
| CPY-2-O2 | 10.50 % | ε_{∥} [1 kHz, 20°C]: | 3.7 |
| CPY-3-O2 | 9.50 % | ε_{⊥} [1 kHz, 20°C]: | 6.6 |
| CY-3-O2 | 15.00 % | K₁ [pN, 20°C]: | 12.2 |
| CY-3-O4 | 4.50 % | K₃ [pN, 20°C]: | 13.4 |
| PYP-2-4 | 5.50 % | γ₁ [mPa·s, 20°C]: | 92 |
| PPGU-3-F | 1.00 % | V₀ [20°C, V]: | 2.28 |

**H5: Nematische Hostmischung (Δε < 0)**

| | | | |
|---|---|---|---|
| CCH-23 | 20.00 % | Klärpunkt [°C]: | 74.8 |
| CCH-301 | 6.00 % | Δn [589 nm, 20°C]: | 0.105 |
| CCH-34 | 6.00 % | Δε [1 kHz, 20°C]: | -3.2 |
| CCP-3-1 | 3.00 % | ε_{∥} [1 kHz, 20°C]: | 3.5 |
| CCY-3-O2 | 11.00 % | ε_{⊥} [1 kHz, 20°C]: | 6.8 |
| CPY-2-O2 | 12.00 % | K₁ [pN, 20°C]: | 12.7 |
| CPY-3-O2 | 11.00 % | K₃ [pN, 20°C]: | 13.6 |
| CY-3-O2 | 14.00 % | γ₁ [mPa·s, 20°C]: | 120 |
| CY-3-O4 | 4.00 % | V₀ [20°C, V]: | 2.16 |
| PCH-301 | 4.00 % | | |
| PYP-2-3 | 9.00 % | | |

**H6: Nematische Hostmischung (Δε < 0)**

| | | | |
|---|---|---|---|
| CC-4-V | 17.00 % | Klärpunkt [°C]: | 106.1 |
| CCP-V-1 | 15.00 % | Δn [589 nm, 20°C]: | 0.120 |
| CCPC-33 | 2.50 % | Δε [1 kHz, 20°C]: | -3.6 |
| CCY-3-O2 | 4.00 % | ε_{∥} [1 kHz, 20°C]: | 3.5 |
| CCY-3-O3 | 5.00 % | ε_{⊥} [1 kHz, 20°C]: | 7.0 |
| CCY-4-O2 | 5.00 % | K₁ [pN, 20°C]: | 16.8 |
| CLY-3-O2 | 3.50 % | K₃ [pN, 20°C]: | 17.3 |
| CLY-3-O3 | 2.00 % | γ₁ [mPa·s, 20°C]: | 207 |
| CPY-2-O2 | 8.00 % | V₀ [20°C, V]: | 2.33 |
| CPY-3-O2 | 10.00 % | | |
| CY-3-O4 | 17.00 % | | |
| PYP-2-3 | 11.00 % | | |

**H7: Nematische Hostmischung (Δε < 0)**

| | | | |
|---|---|---|---|
| CY-3-O2 | 15.00 % | Klärpunkt [°C]: | 75.5 |
| CCY-4-O2 | 9.50 % | Δn [589 nm, 20°C]: | 0.108 |
| CCY-5-O2 | 5.00 % | Δε [1 kHz, 20°C]: | -3.0 |
| CPY-2-O2 | 9.00 % | ε_{∥} [1 kHz, 20°C]: | 3.5 |
| CPY-3-O2 | 9.00 % | ε_{⊥} [1 kHz, 20°C]: | 6.5 |
| CCH-34 | 9.00 % | K₁ [pN, 20°C]: | 12.9 |
| CCH-23 | 22.00 % | K₃ [pN, 20°C]: | 13.0 |
| PYP-2-3 | 7.00 % | γ₁ [mPa·s, 20°C]: | 115 |
| PYP-2-4 | 7.50 % | V₀ [20°C, V]: | 2.20 |
| PCH-301 | 7.00 % | | |

**H8: Nematische Hostmischung (Δε < 0)**

| | | | |
|---|---|---|---|
| CY-3-O2 | 15.00 % | Klärpunkt [°C]: | 74.7 |
| CY-5-O2 | 6.50 % | Δn [589 nm, 20°C]: | 0.108 |
| CCY-3-O2 | 11.00 % | Δε [1 kHz, 20°C]: | -3.0 |
| CPY-2-O2 | 5.50 % | ε_{∥} [1 kHz, 20°C]: | 3.6 |
| CPY-3-O2 | 10.50 % | ε_{⊥} [1 kHz, 20°C]: | 6.6 |
| CC-3-V | 28.50 % | K₁ [pN, 20°C]: | 12.9 |
| CC-3-V1 | 10.00 % | K₃ [pN, 20°C]: | 15.7 |
| PYP-2-3 | 12.50 % | γ₁ [mPa·s, 20°C]: | 97 |
| PPGU-3-F | 0.50 % | V₀ [20°C, V]: | 2.42 |

**H9: Nematische Hostmischung (Δε < 0)**

| | | | |
|---|---|---|---|
| CCH-35 | 9.50 % | Klärpunkt [°C]: | 79.1 |
| CCH-501 | 5.00 % | Δn [589 nm, 20°C]: | 0.091 |
| CCY-2-1 | 9.50 % | Δε [1 kHz, 20°C]: | -3.6 |
| CCY-3-1 | 10.50 % | ε_{∥} [1 kHz, 20°C]: | 3.5 |
| CCY-3-O2 | 10.50 % | ε_{⊥} [1 kHz, 20°C]: | 7.1 |
| CCY-5-O2 | 9.50 % | K₁ [pN, 20°C]: | 14.6 |
| CPY-2-O2 | 12.00 % | K₃ [pN, 20°C]: | 14.5 |
| CY-3-O4 | 9.00 % | γ₁ [mPa·s, 20°C]: | 178 |
| CY-5-O4 | 11.00 % | V₀ [20°C, V]: | 2.12 |
| PCH-53 | 13.50 % | | |

**H10: Nematische Hostmischung (Δε < 0)**

| | | | |
|---|---|---|---|
| BCH-32 | 4.00 % | Klärpunkt [°C]: | 74.8 |
| CC-3-V1 | 8.00 % | Δn [589 nm, 20°C]: | 0.106 |
| CCH-23 | 13.00 % | Δε [1 kHz, 20°C]: | -3.5 |
| CCH-34 | 7.00 % | ε_{∥} [1 kHz, 20°C]: | 3.6 |
| CCH-35 | 7.00 % | ε_{⊥} [1 kHz, 20°C]: | 7.1 |
| CCY-3-O2 | 13.00 % | K₁ [pN, 20°C]: | 14.8 |
| CPY-2-O2 | 7.00 % | K₃ [pN, 20°C]: | 15.8 |
| CPY-3-O2 | 12.00 % | γ₁ [mPa·s, 20°C]: | 115 |
| CY-3-O2 | 12.00 % | V₀ [20°C, V]: | 2.23 |
| PCH-301 | 2.00 % | | |
| PY-3-O2 | 15.00 % | | |

**H11: Nematische Hostmischung (Δε < 0)**

| | | | |
|---|---|---|---|
| CY-3-O4 | 22.00 % | Klärpunkt [°C]: | 86.9 |
| CY-5-O4 | 12.00 % | Δn [589 nm, 20°C]: | 0.111 |
| CCY-3-O2 | 6.00 % | Δε [1 kHz, 20°C]: | -4.9 |
| CCY-3-O3 | 6.00 % | ε_{∥} [1 kHz, 20°C]: | 3.8 |
| CCY-4-O2 | 6.00 % | ε_{⊥} [1 kHz, 20°C]: | 8.7 |
| CPY-2-O2 | 10.00 % | K₁ [pN, 20°C]: | 14.9 |
| CPY-3-O2 | 10.00 % | K₃ [pN, 20°C]: | 15.9 |
| PYP-2-3 | 7.00 % | γ₁ [mPa·s, 20°C]: | 222 |
| CC-3-V1 | 7.00 % | V₀ [20°C, V]: | 1.91 |
| CC-5-V | 10.00 % | | |
| CCPC-33 | 2.00 % | | |
| CCPC-35 | 2.00 % | | |

**H12: Nematische Hostmischung (Δε < 0)**

| | | | |
|---|---|---|---|
| CY-3-O4 | 12.00 % | Klärpunkt [°C]: | 86.0 |
| CY-5-O2 | 10.00 % | Δn [589 nm, 20°C]: | 0.110 |
| CY-5-O4 | 8.00 % | Δε [1 kHz, 20°C]: | -5.0 |
| CCY-3-O2 | 8.00 % | ε_{∥} [1 kHz, 20°C]: | 3.8 |
| CCY-4-O2 | 7.00 % | ε_{⊥} [1 kHz, 20°C]: | 8.8 |
| CCY-5-O2 | 6.00 % | K₁ [pN, 20°C]: | 14.7 |
| CCY-2-1 | 8.00 % | K₃ [pN, 20°C]: | 16.0 |
| CCY-3-1 | 7.00 % | γ₁ [mPa·s, 20°C]: | 250 |
| CPY-3-O2 | 9.00 % | V₀ [20°C, V]: | 1.90 |
| CPY-3-O2 | 9.00 % | | |
| BCH-32 | 6.00 % | | |
| PCH-53 | 10.00 % | | |

**H13: Nematische Hostmischung (Δε < 0)**

| | | | |
|---|---|---|---|
| CC-3-V1 | 10.25 % | Klärpunkt [°C]: | 74.7 |
| CCH-23 | 18.50 % | Δn [589 nm, 20°C]: | 0.103 |
| CCH-35 | 6.75 % | Δε [1 kHz, 20°C]: | -3.1 |
| CCP-3-1 | 6.00 % | ε_{∥} [1 kHz, 20°C]: | 3.4 |
| CCY-3-1 | 2.50 % | ε_{⊥} [1 kHz, 20°C]: | 6.4 |
| CCY-3-O2 | 12.00 % | K₁ [pN, 20°C]: | 15.4 |
| CPY-2-O2 | 6.00 % | K₃ [pN, 20°C]: | 16.8 |
| CPY-3-O2 | 9.75 % | γ₁ [mPa·s, 20°C]: | 104 |
| CY-3-O2 | 11.50 % | V₀ [20°C, V]: | 2.46 |
| PP-1-2V1 | 3.75 % | | |
| PY-3-O2 | 13.00 % | | |

**H14: Nematische Hostmischung (Δε < 0)**

| | | | |
|---|---|---|---|
| CC-3-V | 27.50 % | Klärpunkt [°C]: | 74.7 |
| CC-3-V1 | 10.00 % | Δn [589 nm, 20°C]: | 0.104 |
| CCH-35 | 8.00 % | Δε [1 kHz, 20°C]: | -3.0 |
| CCY-3-O2 | 9.25 % | ε_{∥} [1 kHz, 20°C]: | 3.4 |
| CLY-3-O2 | 10.00 % | ε_{⊥} [1 kHz, 20°C]: | 6.4 |
| CPY-3-O2 | 11.75 % | K₁ [pN, 20°C]: | 15.3 |
| PY-3-O2 | 14.00 % | K₃ [pN, 20°C]: | 16.2 |
| PY-4-O2 | 9.00 % | γ₁ [mPa·s, 20°C]: | 88 |
| PYP-2-4 | 0.50 % | V₀ [20°C, V]: | 2.44 |

**H15: Nematische Hostmischung (Δε > 0)**

| | | | |
|---|---|---|---|
| CC-4-V | 10.00 % | Klärpunkt [°C]: | 77.0 |
| CC-5-V | 13.50 % | Δn [589 nm, 20°C]: | 0.113 |
| PGU-3-F | 6.50 % | Δε [1 kHz, 20°C]: | 19.2 |
| ACQU-2-F | 10.00 % | ε_{∥} [1 kHz, 20°C]: | 23.8 |
| ACQU-3-F | 12.00 % | ε_{⊥} [1 kHz, 20°C]: | 4.6 |
| PUQU-3-F | 11.00 % | K₁ [pN, 20°C]: | 11.5 |
| CCP-V-1 | 12.00 % | K₃ [pN, 20°C]: | 11.1 |
| APUQU-2-F | 6.00 % | γ₁ [mPa·s, 20°C]: | 122 |
| APUQU-3-F | 7.00 % | V₀ [20°C, V]: | 0.81 |
| PGUQU-3-F | 8.00 % | | |
| CPGU-3-OT | 4.00 % | | |

**H16: Nematische Hostmischung (Δε > 0)**

| | | | |
|---|---|---|---|
| PGU-2-F | 3.50 % | Klärpunkt [°C]: | 77.0 |
| PGU-3-F | 7.00 % | Δn [589 nm, 20°C]: | 0.105 |
| CC-3-V1 | 15.00 % | Δε [1 kHz, 20°C]: | 7.2 |
| CC-4-V | 18.00 % | ε_{∥} [1 kHz, 20°C]: | 10.3 |
| CC-5-V | 20.00 % | ε_{⊥} [1 kHz, 20°C]: | 3.1 |
| CCP-V-1 | 6.00 % | K₁ [pN, 20°C]: | 15.3 |
| APUQU-3-F | 15.00 % | K₃ [pN, 20°C]: | 13.5 |
| PUQU-3-F | 5.50 % | γ₁ [mPa·s, 20°C]: | 63 |
| PGP-2-4 | 3.00 % | V₀ [20°C, V]: | 1.53 |
| BCH-32 | 7.00 % | | |

**H17: Nematische Hostmischung (Δε > 0)**

| | | | |
|---|---|---|---|
| APUQU-2-F | 6.00 % | Klärpunkt [°C]: | 74.0 |
| APUQU-3-F | 12.00 % | Δn [589 nm, 20°C]: | 0.120 |
| PUQU-3-F | 18.00 % | Δε [1 kHz, 20°C]: | 17.4 |
| CPGU-3-OT | 9.00 % | ε_{∥} [1 kHz, 20°C]: | 22.0 |
| CCGU-3-F | 3.00 % | ε_{⊥} [1 kHz, 20°C]: | 4.5 |
| BCH-3F.F.F | 14.00 % | K₁ [pN, 20°C]: | 10.1 |
| CCQU-3-F | 10.00 % | K₃ [pN, 20°C]: | 10.8 |
| CC-3-V | 25.00 % | γ₁ [mPa·s, 20°C]: | 111 |
| PGP-2-2V | 3.00 % | V₀ [20°C, V]: | 0.80 |

**H18: Nematische Hostmischung (Δε > 0)**

| | | | |
|---|---|---|---|
| PUQU-3-F | 15.00 % | Klärpunkt [°C]: | 74.3 |
| APUQU-2-F | 5.00 % | Δn [589 nm, 20°C]: | 0.120 |
| APUQU-3-F | 12.00 % | Δε [1 kHz, 20°C]: | 14.9 |
| CCQU-3-F | 11.00 % | ε_{∥} [1 kHz, 20°C]: | 19.1 |
| CCQU-5-F | 1.50 % | ε_{⊥} [1 kHz, 20°C]: | 4.3 |
| CPGU-3-OT | 5.00 % | K₁ [pN, 20°C]: | 11.2 |
| CCP-30CF3 | 4.50 % | K₃ [pN, 20°C]: | 10.8 |
| CGU-3-F | 10.00 % | γ₁ [mPa·s, 20°C]: | 98 |
| PGP-2-3 | 1.50 % | V₀ [20°C, V]: | 0.91 |
| PGP-2-2V | 8.00 % | | |
| CC-3-V | 26.50 % | | |

**H19: Nematische Hostmischung (Δε > 0)**

| | | | |
|---|---|---|---|
| CCQU-3-F | 9.00 % | Klärpunkt [°C]: | 94.5 |
| CCQU-5-F | 9.00 % | Δn [589 nm, 20°C]: | 0.121 |
| PUQU-3-F | 16.00 % | Δε [1 kHz, 20°C]: | 20.4 |
| APUQU-2-F | 8.00 % | ε_{∥} [1 kHz, 20°C]: | 24.7 |
| APUQU-3-F | 9.00 % | ε_{⊥} [1 kHz, 20°C]: | 4.3 |
| PGUQU-3-F | 8.00 % | K₁ [pN, 20°C]: | 12.1 |
| CPGU-3-OT | 7.00 % | K₃ [pN, 20°C]: | 13.9 |
| CC-4-V | 18.00 % | γ₁ [mPa·s, 20°C]: | 163 |
| CC-5-V | 5.00 % | V₀ [20°C, V]: | 0.81 |
| CCP-V-1 | 6.00 % | | |
| CCPC-33 | 3.00 % | | |
| PPGU-3-F | 2.00 % | | |

**H20: Nematische Hostmischung (Δε > 0)**

| | | | |
|---|---|---|---|
| CC-3-V | 28.50 % | Klärpunkt [°C]: | 85.6 |
| CCP-V1 | 3.00 % | Δn [589 nm, 20°C]: | 0.121 |
| CCPC-33 | 2.00 % | Δε [1 kHz, 20°C]: | 19.5 |
| PGU-2-F | 4.00 % | ε_{∥} [1 kHz, 20°C]: | 23.8 |
| CCQU-3-F | 8.00 % | ε_{⊥} [1 kHz, 20°C]: | 4.3 |
| CCQU-5-F | 6.00 % | K₁ [pN, 20°C]: | 11.6 |
| CCGU-3-F | 3.00 % | K₃ [pN, 20°C]: | 12.7 |
| PUQU-2-F | 2.00 % | γ₁ [mPa·s, 20°C]: | 126 |
| PUQU-3-F | 10.00 % | V₀ [20°C, V]: | 0.81 |
| APUQU-2-F | 6.00 % | | |
| APUQU-3-F | 9.00 % | | |
| PGUQU-3-F | 5.00 % | | |
| PGUQU-4-F | 5.00 % | | |
| PGUQU-5-F | 4.00 % | | |
| CPGU-3-OT | 4.00 % | | |
| PPGU-3-F | 0.50 % | | |

Die folgenden polymerisierbaren Selbstorientierungsadditive (PSOA) werden verwendet:

| PSOA Nr. | Struktur |
|---|---|
| **1** | 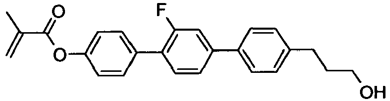 |
| **2** | 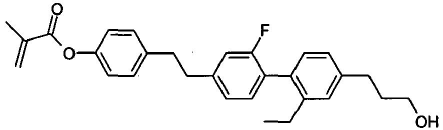 |
| **3** | 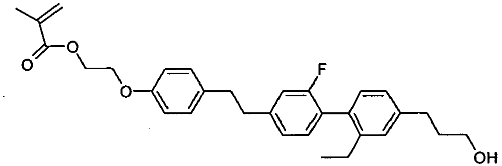 |

Die folgende polymerisierbare Verbindung wird verwendet:

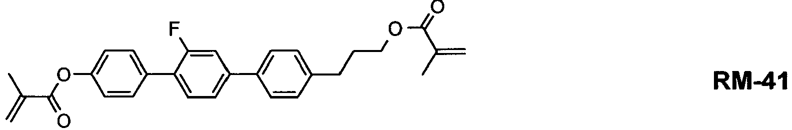

Die folgenden nicht polymerisierbaren Selbstorientierungsadditive werden verwendet:

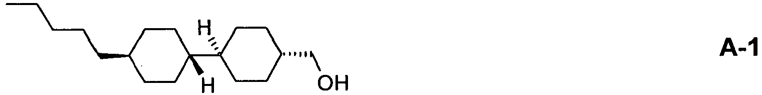

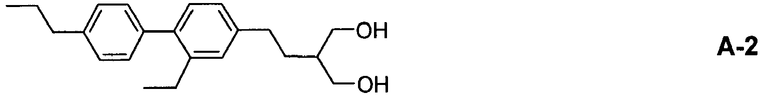

### Mischungsbeispiel 1

Zu einem nematischen FK-Medium **H1** des VA-Typs (Δε < 0) wird das polymerisierbare Selbstorientierungsadditiv **1** (1,0 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

VA-Orientierungsschichten, die für PM-VA, PVA, MVA und analoge Technologien zum Einsatz kommen, sind mit der Anwendung von Additiven wie dem polymerisierbaren Selbstorientierungsadditiv **1** nicht mehr notwendig.

### Mischungsbeispiel 2

Zu einem nematischen FK-Medium **H15** des VA-IPS-Typs (Δε > 0) wird das polymerisierbare Selbstorientierungsadditiv **1** (1,0 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4 µm, auf einer Substratoberfläche angeordnete ITO-Interdigitalelektroden, Glas auf der gegenüberliegenden Substratoberfläche, ohne Passivierungsschicht). Das FK-Medium weist eine spontane homöotrope (vertikale) Orientierung zu den Substratoberflächen auf.

Diese Orientierung bleibt bis zum Klärpunkt stabil und die entstandene VA-IPS-Zelle lässt sich durch Anlegen einer Spannung reversibel schalten.

VA-Orientierungsschichten, die für VA-IPS, HT-VA und analoge Technologien zur Einsatz kommen, sind mit der Anwendung von Additiven wie dem polymerisierbaren Selbstorientierungsadditiv **1** nicht mehr notwendig

### Mischungsbeispiele 3 und 4

Die polymerisierbaren Selbstorientierungsadditive **2** (1,5 Gew.%) und **3** (2,0 Gew.%) werden analog Mischungsbeispiel 1 zu einem nematischen FK-Medium **H1** (Δε < 0) zugesetzt und homogenisiert. Die entstandenen Mischungen werden in Testzellen ohne Vororientierungsschicht gefüllt. Die FK-Medien weisen eine spontane homöotrope (vertikale) Orientierung zu den Substratoberflächen auf. Diese Orientierung bleibt bis zum Klärpunkt stabil und die entstandenen VA- Zellen lassen sich durch Anlegen einer Spannung reversibel schalten.

### Mischungsbeispiele 5 und 6

Die polymerisierbaren Selbstorientierungsadditive **2** (1,5 Gew.%) und **3** (2,0 Gew.%) werden analog Mischungsbeispiel 2 zu einem nematischen FK-Medium **H15** (Δε > 0) zugesetzt und homogenisiert. Die entstandenen Mischungen werden in Testzellen ohne Vororientierungsschicht gefüllt. Die FK-Medien weisen eine spontane homöotrope (vertikale) Orientierung zu den Substratoberflächen auf. Diese Orientierung bleibt bis zum Klärpunkt stabil und die entstandenen VA-IPS- Zellen lassen sich durch Anlegen einer Spannung reversibel schalten.

### Mischungsbeispiele 7-20

Das polymerisierbare Selbstorientierungsadditiv **1** (1,0 Gew.%) wird analog Mischungsbeispiel 1 zu den nematischen FK-Medien **H2** - **H14** (Δε < 0) zugesetzt und homogenisiert. Die entstandenen Mischungen werden in Testzellen ohne Vororientierungsschicht gefüllt (vgl. Mischungsbeispiel 1). Die FK-Medien weisen eine spontane homöotrope (vertikale) Orientierung zu den Substratoberflächen auf. Diese Orientierung bleibt bis zum Klärpunkt stabil und die entstandene VA-Zellen lassen sich durch Anlegen einer Spannung reversibel schalten.

### Mischungsbeispiele 21-26

Das polymerisierbare Selbstorientierungsadditiv **1** (1,0 Gew.%) wird analog Mischungsbeispiel 2 zu dem nematischen FK-Medien **H16 - H20** (Δε > 0) zugesetzt und homogenisiert. Die entstandenen Mischungen werden in Testzellen ohne Vororientierungsschicht gefüllt (vgl. Mischungsbeispiel 2). Die FK-Medien weisen eine spontane homöotrope (vertikale) Orientierung zu den Substratoberflächen auf. Diese Orientierung bleibt bis zum Klärpunkt stabil und die entstandenen VA-IPS-Zellen lassen sich durch Anlegen einer Spannung reversibel schalten.

### Mischungsbeispiel 27-28

Zu einem nematischen FK-Medium **H1** des VA-Typs (Δε < 0) werden ein polymerisierbares Selbstorientierungsadditiv **1** (0,3 Gew.%) und jeweils ein nicht polymerisierbares Selbstorientierungsadditiv **A-1** (1,5 Gew.%) bzw. **A-2** (0,3 Gew.%) zugesetzt und homogenisiert.

Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 4,0 µm, beidseitige ITO-Beschichtung, ohne Passivierungsschicht). Das FK-Medium weist eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

VA-Orientierungsschichten, die für PM-VA, PVA, MVA und analoge Technologien zum Einsatz kommen, sind mit der Anwendung von Additiven wie dem polymerisierbaren Selbstorientierungsadditiv 1 im Kombination mit **A-1** bzw. **A-2** nicht mehr notwendig.

### Mischungsbeispiele 1a und 3a (Polymerisierung der Mischungsbeispiele 1 und 3)

Zu einem nematischen FK-Medium **H1** (Δε < 0) wird jeweils ein polymerisierbares Selbstorientierungsadditiv **1** (1,0 Gew.%) bzw. **2** (1,5 Gew.%) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 1).

Die Polymerisation kann auch ohne Anlegen einer Spannung durchgeführt werden. Die homöotrope Orientierung wird damit zusätzlich stabilisiert und einen Polymerschicht entsteht, ohne das ein 'pre-tilt' eingestellt wird. Die Polymerschicht wirkt als Schutzschicht und verbessert die Langzeitstabilität der PSA-VA-Zelle

VA-Orientierungsschichten, die für PSA, PS-VA und analoge Technologien zur Einsatz kommen, sind mit der Verwendung von Additiven wie die polymerisierbaren Selbstorientierungsadditive **1** und **2** nicht mehr notwendig.

### Mischungsbeispiel 1b (Polymerstabilisierung des Mischungsbeispiels 1a)

Zu einem nematischen FK-Medium **H1** (Δε < 0) werden eine polymerisierbare Verbindung **RM-41** (0,3 Gew.%) und ein polymerisierbares Selbstorientierungsadditiv **1** (1,0 Gew.%) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 1).

Die Polymerisation kann auch ohne Anlegen einer Spannung durchgeführt werden. Die homöotrope Orientierung wird damit zusätzlich stabilisiert und eine Polymerschicht entsteht, ohne dass ein 'pre-tilt' eingestellt wird. Die Polymerschicht wirkt als Schutzschicht und verbessert die Langzeit Stabilität der PSA-VA-Zelle

VA-Orientierungsschichten, die für PSA, PS-VA und analoge Technologien zur Einsatz kommen, sind mit der Verwendung von Additiven wie den polymerisierbaren Selbstorientierungsadditiven 1 im Kombination mit **RM-41** nicht mehr notwendig.

### Mischungsbeispiel 28a (Polymerisierung des Mischungsbeispiels 28)

Zu einem nematischen FK-Medium **H1** des VA-Typs (Δε < 0) werden ein polymerisierbares Selbstorientierungsadditiv **1** (0,3 Gew.%) und ein nicht polymerisierbares Selbstorientierungsadditiv **A-2** (0,3 Gew.%) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 1).

Die Polymerisation kann auch ohne Anlegen einer Spannung durchgeführt werden. Die homöotrope Orientierung wird damit zusätzlich stabilisiert und einen Polymerschicht entsteht, ohne das ein 'pre-tilt' eingestellt wird. Die Polymerschicht wirkt als Schutzschicht und verbessert die Langzeitstabilität der PSA-VA-Zelle

VA-Orientierungsschichten, die für PSA, PS-VA und analoge Technologien zur Einsatz kommen, sind mit der Anwendung von Additiven wie dem polymerisierbaren Selbstorientierungsadditiv **1** im Kombination mit **A-2** nicht mehr notwendig.

### Mischungsbeispiel 27b (Polymerisierung des Mischungsbeispiels 27a)

Zu einem nematischen FK-Medium **H1** des VA-Typs (Δε < 0) werden eine polymerisierbare Verbindung **RM-41** (0,3 Gew.%), ein polymerisierbares Selbstorientierungsadditiv **1** (0,3 Gew.%) und ein nicht polymerisierbares Selbstorientierungsadditiv **A-1** (1,5 Gew.%) zugesetzt und homogenisiert.

Verwendung in Testzellen ohne Vororientierungsschicht ('alignment layer'): Die entstandene Mischungen werden in Testzellen gefüllt (ohne Polyimid-Orientierungsschicht, Schichtdicke d ≈ 4,0 µm, beidseitige ITO-Beschichtung, ohne Passivierungsschicht). Die FK-Medien weisen eine spontane homöotrope (vertikale) Orientierung zu den Substratoberflächen auf. Diese Orientierung bleibt bis zum Klärpunkt stabil und die entstandene VA-Zelle lässt sich durch Anlegen einer Spannung reversibel schalten.

Unter Anlegen einer Spannung größer als die optische Schwellenspannung (z.B. 14 Vpp) werden die VA-Zellen mit UV-Licht der Intensität 100 mW/cm² bei 20°C bzw. 40°C und 340 nm Bandpassfilter bestrahlt. Dadurch erfolgt Polymerisation der polymerisierbaren Verbindungen. Die homöotrope Orientierung wird damit zusätzlich stabilisiert, ein 'pre-tilt' wird eingestellt und eine Polymerschicht entsteht. Die erhaltenen PSA-VA-Zellen lassen sich bis zum Klärpunkt unter Anlegen einer Spannung reversibel schalten. Die Schaltzeiten sind, im Vergleich zu der nicht polymerisierten Zelle, verkürzt. Die Schwellenspannungen (V₁₀) ändern sich (Tabelle 1).

Die Polymerisation kann auch ohne Anlegen einer Spannung durchgeführt werden. Die homöotrope Orientierung wird damit zusätzlich stabilisiert und eine Polymerschicht entsteht, ohne das ein 'pre-tilt' eingestellt wird. Die Polymerschicht wirkt als Schutzschicht und verbessert die Langzeitstabilität der PSA-VA-Zelle
VA-Orientierungsschichten, die für PSA, PS-VA und analoge Technologien zum Einsatz kommen, sind mit der Anwendung von Additiven wie dem polymerisierbaren Selbstorientierungsadditiv **1** in Kombination mit **RM-41** und **A-1** nicht mehr notwendig.

**Tabelle 1: Schwellenspannungen V₁₀ von VA- und PSA-Zellen. Host H1 in Verbindung mit polymerisierbarem Selbstorientierungsadditiv (PSOA). Polymerisationsbedingungen: 340 nm Bandpassfilter, 20°C, 0 Vpp, 10 min, 100 mW/cm².**

| **Mischungs beispiel** | **PSOA** | **Weitere Verb.** | **UV-Bestrah.** | **Zellen Art** | **V₁₀/V** | **Schaltzeit/ms 0 V→5 V** |
|---|---|---|---|---|---|---|
| 1 | **1** | | Nein | VA | 2.47 | 27 |
| 3 | **2** | | Nein | VA | 2.47 | 34 |
| 27 | **1** | A-1 | Nein | VA | 2.55 | 25 |
| 28 | **1** | A-2 | Nein | VA | 2.50 | 26 |
| 1a | **1** | | Ja | PSA | 4.54 | 15 |
| 1b | **1** | RM-41 | Ja | PSA | 4.81 | 17 |
| 3a | **2** | | Ja | PSA | 2.63 | 17 |
| 27b | **1** | A-1, RM-41 | Ja | PSA | 2.57 | 22 |
| 28a | **1** | A-2 | Ja | PSA | 2.58 | 23 |

## Patentansprüche

1. FK-Medium enthaltend eine niedermolekulare, nicht polymerisierbare, flüssigkristalline Komponente und eine polymerisierbare oder polymerisierte Komponente umfassend eine oder mehrere polymerisierbare Verbindungen der Formel I, wobei die polymerisierte Komponente durch Polymerisieren der polymerisierbaren Komponente erhältlich ist,
und wobei das FK-Medium die Verbindungen der Formel I in einer Konzentration von ≤ 5 Gew.-% enthält,
P-Sp-[A³-Z³]ₘ-[A²]ₖ-[Z²]ₙ-A¹-R^{a} (I)
worin
A¹, A², A³ jeweils unabhängig voneinander eine aromatische, heteroaromatische, alicyclische oder heterocyclische Gruppe, welche auch anellierte Ringe enthalten kann, und welche auch durch eine Gruppe L ein- oder mehrfach substituiert sein kann,
L jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
P eine polymerisierbare Gruppe,
Sp eine Abstandsgruppe oder eine Einfachbindung,
Z² jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF2-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
Z³ jeweils unabhängig voneinander eine Einfachbindung, -O-, -S-, -CO-, -CO-O-, -OCO-, -O-CO-O-, -OCH₂-, -CH₂O-, -SCH2-, -CH2S-, -CF₂O-, -OCF2-, -CF2S-, -SCF2-, -(CH₂)ₙ₁-, -CF2CH2-, -CH2CF2-, -(CF₂)ₙ₁-, -CH=CH-, -CF=CF-, -C≡C-, -CH=CH-COO-, -OCO-CH=CH-, -(CR⁰R⁰⁰)ₙ₁,
n1 1, 2, 3 oder 4,
n 0 oder 1,
m 0, 1, 2, 3, 4, 5 oder 6, und
k 0 oder 1
R⁰ jeweils unabhängig voneinander Alkyl mit 1 bis 12 C-Atomen,
R⁰⁰ jeweils unabhängig voneinander H oder Alkyl mit 1 bis 12 C-Atomen,
R^{a} eine Ankergruppe der Formel 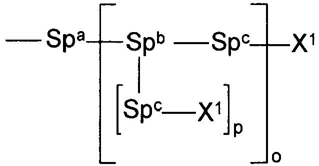 oder 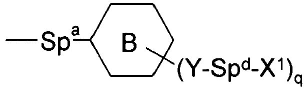
p 1 oder 2,
q 2 oder 3,
B substituiertes oder unsubstituiertes Ringsystem oder kondensiertes Ringsystem,
Y unabhängig voneinander -O-, -S-, -C(O)-, -C(O)O-, -OC(O)-, -NR¹¹- oder eine Einfachbindung,
o 0 oder 1,
X¹ unabhängig voneinander H, Alkyl, Fluoralkyl, OH, NH₂, NHR¹¹, NR¹¹₂, OR¹¹, C(O)OH, -CHO,
wobei mindestens eine Gruppe X¹ einen Rest ausgewählt aus -OH, -NH₂, NHR¹¹, C(O)OH und -CHO, bedeutet,
R¹¹ Alkyl mit 1 bis 12 C-Atomen,
Sp^{a}, Sp^{c}, Sp^{d} jeweils unabhängig voneinander eine Abstandsgruppe oder eine Einfachbindung, und
Sp^{b} eine tri- oder tetravalente Gruppe
bedeuten.

2. Medium nach Anspruch 1, **dadurch gekennzeichnet, dass** für Formel I
A¹, A², A³ jeweils unabhängig voneinander 1,4-Phenylen, 1,3-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 3,3'-Bicyclobutyliden, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, Perhydro-cyclopenta[a]phenanthren-3,17-diyl (insbesondere Gonan-3,17-diyl),
wobei alle diese Gruppen unsubstituiert oder durch eine Gruppe L ein- oder mehrfach substituiert sein können,
bedeuten.

3. Medium nach Anspruch 1 oder 2, **dadurch gekennzeichnet, dass** die Verbindung der Formel I eine Verbindung der Formel I1 ist, 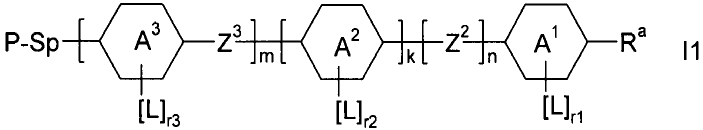 worin
R^{a}, A¹, A², A³, Z², Z³, L, Sp, P, k, m und n unabhängig wie in Anspruch 1 definiert sind, und
r1, r2, r3 unabhängig 0, 1, 2 oder 3,
bedeuten.

4. FK-Medium nach einem oder mehreren der Ansprüche 1 bis 3, **dadurch gekennzeichnet, dass** die Formel I an den Gruppen A¹, A² und A³, wie sie vorhanden sind, insgesamt mindestens eine Gruppe L enthält, wobei in diesem Fall L nicht H bedeutet.

5. FK-Medium nach einem oder mehreren der Ansprüche 1 bis 4, **dadurch gekennzeichnet, dass** die eine oder mehreren Verbindungen der Formel I aus Verbindungen der Formeln IA, IB, IC, ID, IE oder IF ausgewählt sind: 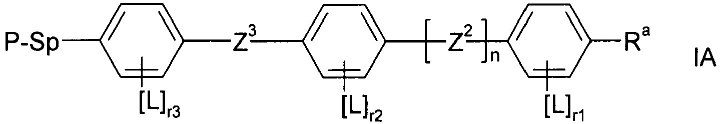 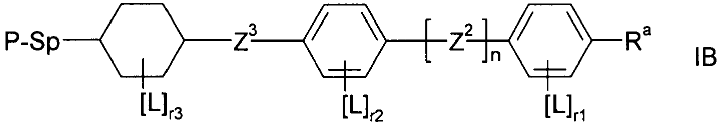 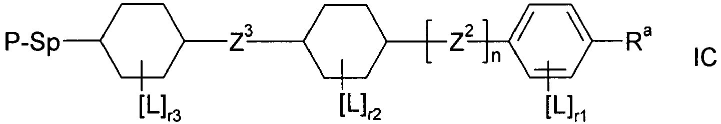 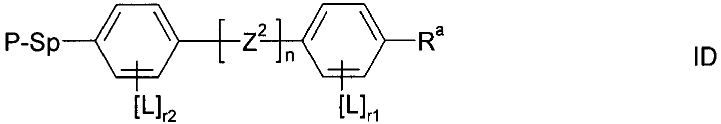 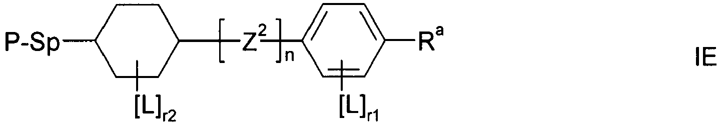 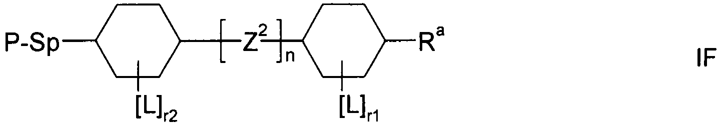 worin R^{a}, Z², Z³, L, Sp, P und n unabhängig wie in Anspruch 1 definiert sind, und
r1, r2, r3 unabhängig 0, 1, 2 oder 3,
bedeuten.

6. FK-Medium nach einem oder mehreren der Ansprüche 1 bis 5, **dadurch gekennzeichnet, dass** die polymerisierbare oder polymerisierte Komponente neben einer oder mehreren Verbindungen der Formel I eine oder mehrere weitere polymerisierbare oder polymerisierte Verbindungen enthält, wobei die polymerisierte Komponente erhältlich ist durch Polymerisation der polymerisierbaren Komponente.

7. FK-Medium nach einem oder mehreren der Ansprüche 1 bis 6, **dadurch gekennzeichnet, dass** es neben einer oder mehreren Verbindungen der Formel I zusätzlich ein oder mehrere nicht polymerisierbare Verbindungen der Formel I' enthält,
R¹-[A³-Z³]ₘ-[A²]ₖ-[Z²]ₙ-A¹-R^{a} I'
worin m, k, n und die Gruppe R^{a} wie für Formel I nach Anspruch 1 definiert sind, und
A¹, A², A³ jeweils unabhängig voneinander eine aromatische, heteroaromatische, alicyclische oder heterocyclische Gruppe, welche auch anellierte Ringe enthalten kann, und welche auch durch eine Gruppe L ein- oder mehrfach substituiert sein kann,
Z² jeweils unabhängig voneinander -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
Z³ jeweils unabhängig voneinander eine Einfachbindung, -O-, -S-, -CO-, -CO-O-, -OCO-, -O-CO-O-, -OCH₂-, -CH₂O-, -SCH2-, -CH2S-, -CF₂O-, -OCF2-, -CF2S-, -SCF2-, -(CH₂)ₙ₁-, -CF2CH2-, -CH2CF2-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 1, 2, 3, oder 4,
L jeweils unabhängig voneinander H, F, Cl, Br, I, -CN, -NO₂, -NCO, -NCS, -OCN, -SCN, -C(=O)N(R⁰)₂, -C(=O)R⁰, optional substituiertes Silyl, optional substituiertes Aryl oder Cycloalkyl mit 3 bis 20 C-Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F oder Cl ersetzt sein können,
R⁰ jeweils unabhängig voneinander Alkyl mit 1 bis 12 C-Atomen,
R⁰⁰ jeweils unabhängig voneinander H oder Alkyl mit 1 bis 12 C-Atomen,
und
R¹ unabhängig voneinander H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind und worin auch ein oder mehrere H-Atome durch F oder Cl, ersetzt sein können,
bedeuten.

8. FK-Medium nach Anspruch 7, **dadurch gekennzeichnet, dass** es eine oder mehrere nicht polymerisierbare Verbindungen ausgewählt aus den folgenden Formeln enthält: 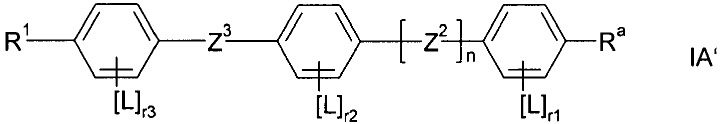 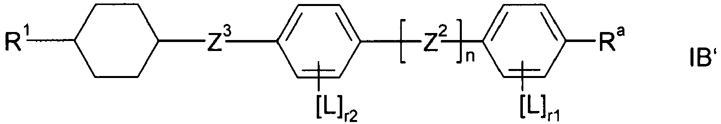 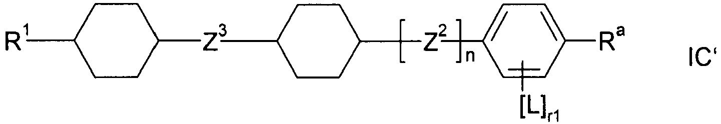 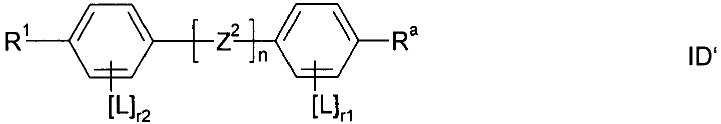 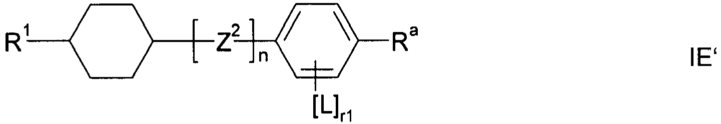
worin R¹, R^{a}, Z², Z³, L, und n unabhängig wie im Anspruch 7 definiert sind, und
r1, r2, r3 unabhängig 0, 1, 2, 3 oder 4 bedeuten.

9. FK-Medium nach einem oder mehreren der Ansprüche 1 bis 8, **dadurch gekennzeichnet, dass** es eine oder mehrere Verbindungen der Formel I ausgewählt aus den folgenden Formeln umfasst: 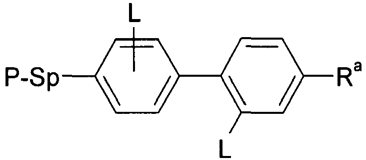 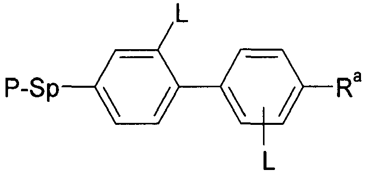 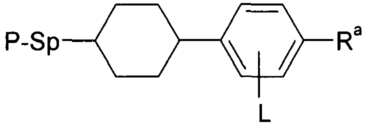 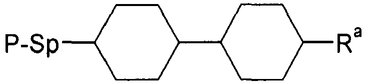 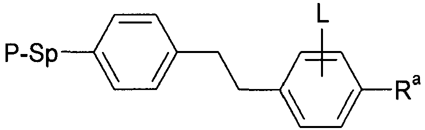 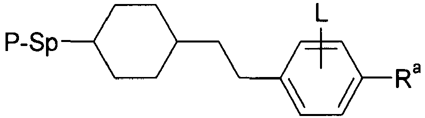 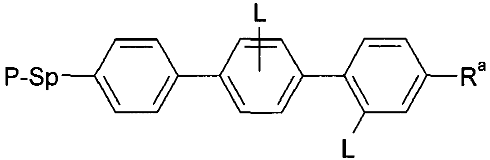 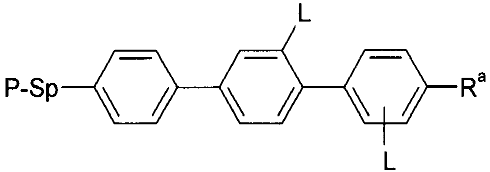 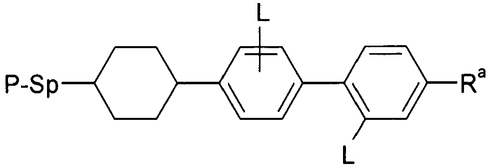 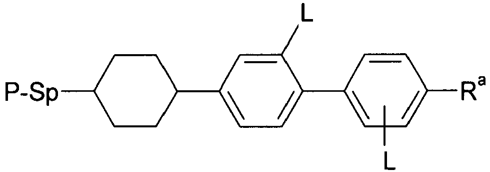 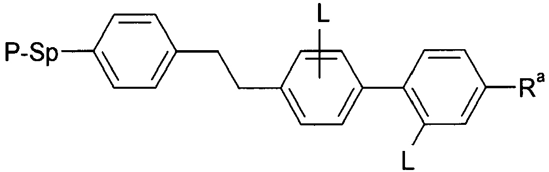 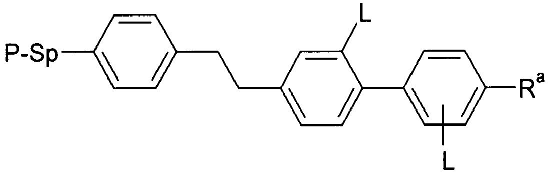 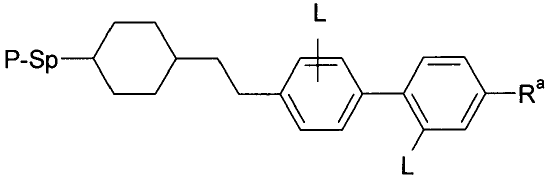 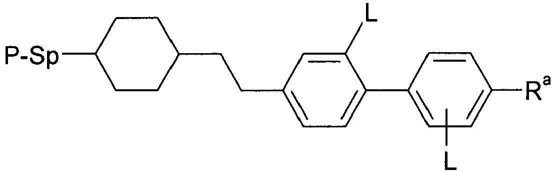
worin L, Sp, P und R^{a} unabhängig wie im Anspruch 1 definiert sind, und
wobei mindestens eine Gruppe L nicht H bedeutet.

10. FK-Medium nach einem oder mehreren der Ansprüche 1 bis 9, **dadurch gekennzeichnet, dass** die Gruppe R^{a} in Formel I oder den Unterformeln eine, zwei oder drei OH-Gruppen umfasst.

11. FK-Medium nach einem oder mehreren der Ansprüche 1 bis 10, **dadurch gekennzeichnet, dass** die Gruppe R^{a} eine Gruppe ausgewählt aus
-Sp^{a}-X¹ oder 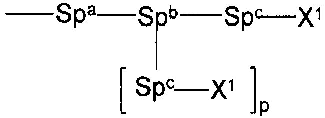 bedeutet,
worin Sp^{a}, Sp^{b}, Sp^{c}, p und X¹ die Bedeutung wie in Anspruch 1 haben.

12. FK-Medium nach einem oder mehreren der Ansprüche 1 bis 11, **dadurch gekennzeichnet, dass** die Gruppe R^{a} eine Gruppe ausgewählt aus den Teilformeln 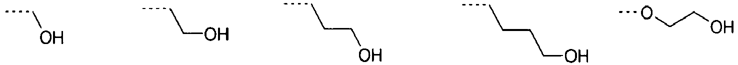 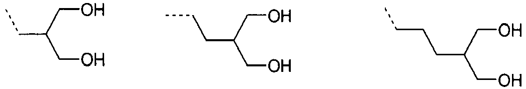 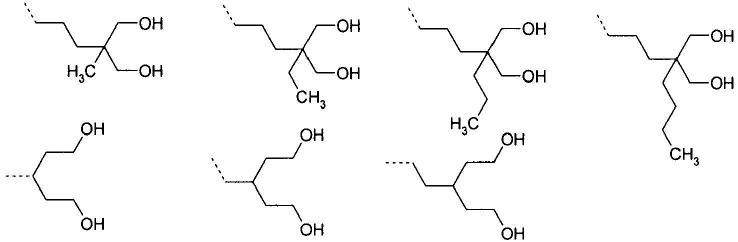 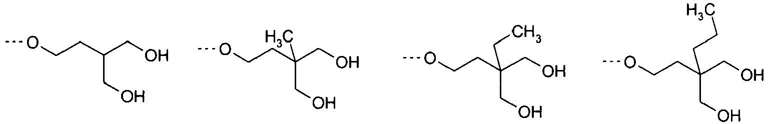 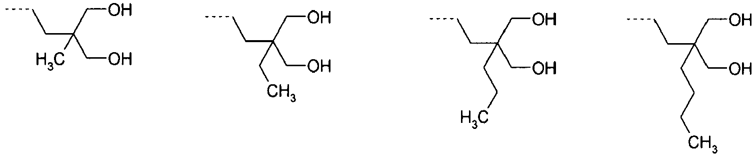 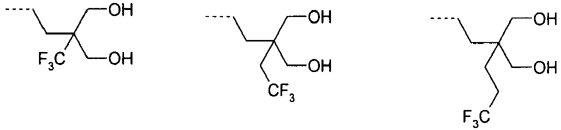 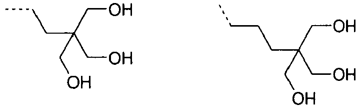 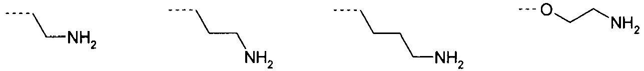 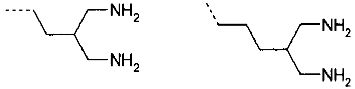 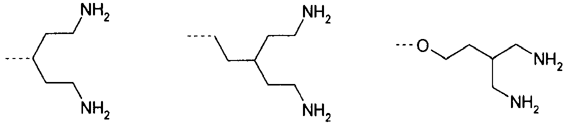 bedeutet.

13. FK-Medium nach einem oder mehreren der Ansprüche 1 bis 12 **dadurch gekennzeichnet, dass** für die Verbindung der Formel I n = 0
bedeutet.

14. FK-Medium nach einem oder mehreren der Ansprüche 1 bis 13 **dadurch gekennzeichnet, dass** für die Verbindung der Formel I die Gruppe P ausgewählt ist aus Vinyloxy, Acrylat, Methacrylat, Fluoroacrylat, Chloroacrylat, Oxetan und Epoxid.

15. FK-Medium nach einem oder mehreren der Ansprüche 1 bis 14, **dadurch gekennzeichnet, dass** es die Verbindungen der Formel I in einer Konzentration von ≤ 3 Gew.-% enthält.

16. FK-Medium nach einem oder mehreren der Ansprüche 1 bis 15, **dadurch gekennzeichnet, dass** es eine oder mehrere polymerisierbare Verbindungen der Formel M oder ein (Co-)Polymer umfassend Verbindungen der Formel M enthält:
P¹-Sp¹-A²-(Z¹-A¹)ₙ-Sp²-P² M
worin die einzelnen Reste folgende Bedeutung besitzen:
P¹, P² jeweils unabhängig eine polymerisierbare Gruppe,
Sp¹, Sp² jeweils unabhängig eine Abstandsgruppe,
A¹, A², jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch eine Gruppe L ersetzt sein können, oder ausgewählt aus 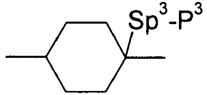
b) der Gruppe bestehend aus 1,4-Phenylen und 1,3-Phenylen, worin auch eine oder zwei CH-Gruppen durch N ersetzt sein können und worin auch ein oder mehrere H-Atome durch eine Gruppe L oder -Sp³-P ersetzt sein können,
c) der Gruppe bestehend aus Tetrahydropyran-2,5-diyl, 1,3-Dioxan-2,5-diyl, Tetrahydrofuran-2,5-diyl, Cyclobut-1,3-diyl, Piperidin-1,4-diyl, Thiophen-2,5-diyl und Selenophen-2,5-diyl, welche auch ein oder mehrfach durch eine Gruppe L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 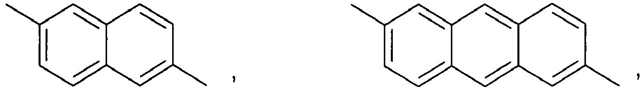 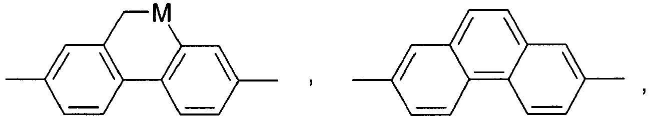 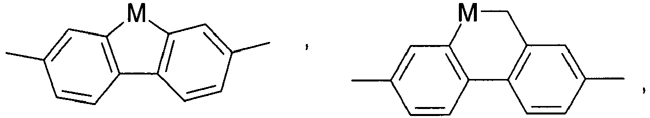 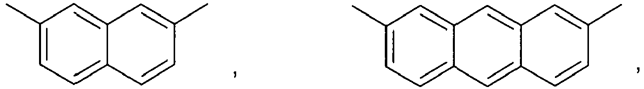 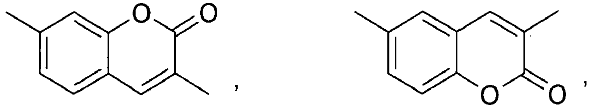 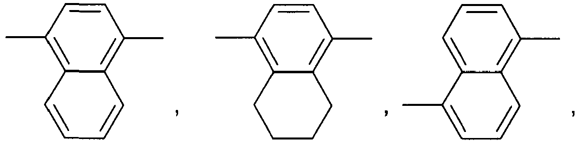 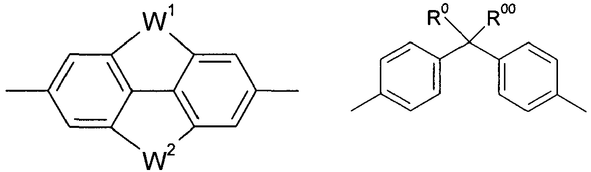 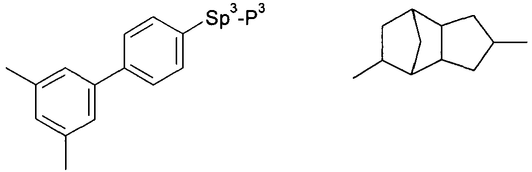 wobei in diesen Resten auch ein oder mehrere H- Atome durch eine Gruppe L oder -Sp³-P ersetzt sein können, und/oder eine oder mehrere Doppelbindungen durch Einfachbindungen ersetzt sein können, und/oder ein oder mehrere CH-Gruppen durch N ersetzt sein können,
P³ eine polymerisierbare Gruppe,
Sp³ eine Abstandsgruppe,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{c}R^{d})-, -CH₂CF₂-, -CF₂CF₂-, oder eine Einfachbindung,
L bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹- oder -CY¹Y²-,
Y¹, und Y² jeweils unabhängig voneinander eine der oben für R⁰ angegebenen Bedeutungen, Cl oder CN, und vorzugsweise H, F, Cl, CN, OCF₃ oder CF₃,
W¹, W² jeweils unabhängig voneinander -CH₂CH₂-, -CH=CH-, -CH₂-O-, -O-CH₂-, -C(R^{c}R^{d})- oder -O- bedeuten, und
R^{c} und R^{d} jeweils unabhängig voneinander H oder Alkyl mit 1 bis 6 C-Atomen, vorzugsweise H, Methyl oder Ethyl, bedeuten.
wobei eine oder mehrere der Gruppen P¹-Sp¹-, -Sp²-P² und -Sp³-P³ einen Rest R^{aa} bedeuten können, mit der Maßgabe, dass mindestens eine der vorhandenen Gruppen P¹-Sp¹-, -Sp²-P² und -Sp³-P³ nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei die Gruppen -OH, -NH₂, -SH, -NHR, -C(O)OH und -CHO in R^{aa} nicht enthalten sind.

17. FK-Medium nach einem oder mehreren der Ansprüche 1 bis 16, **dadurch gekennzeichnet, dass** die polymerisierbare oder polymerisierte Komponente 0,01 bis 5 Gew.-% einer oder mehrerer Verbindungen der Formel M nach Anspruch 16 umfasst und/oder dass das FK-Medium 0,01 bis 10 Gew.-% einer oder mehrerer nicht polymerisierbarer Verbindungen der Formel I' nach Anspruch 7 umfasst.

18. FK-Medium nach einem oder mehreren der Ansprüche 1 bis 17, **dadurch gekennzeichnet, dass** die polymerisierbare oder polymerisierte Komponente eine oder mehreren Verbindungen ausgewählt aus den Verbindungen der folgenden Formeln umfasst: 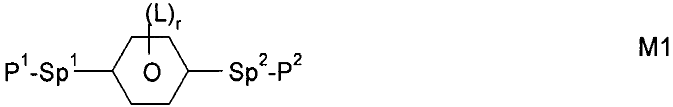 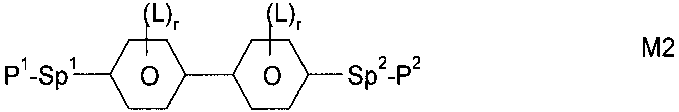 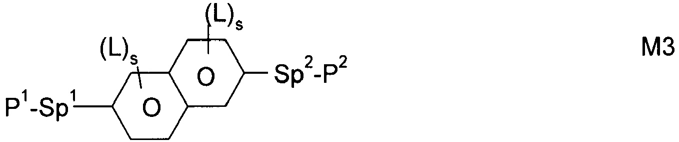 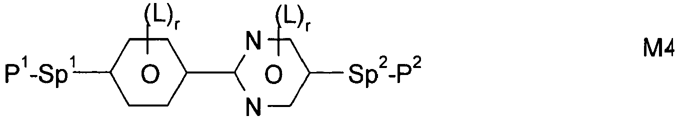 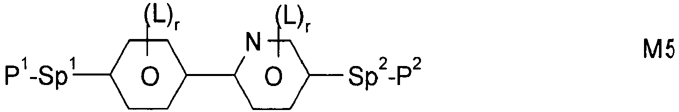 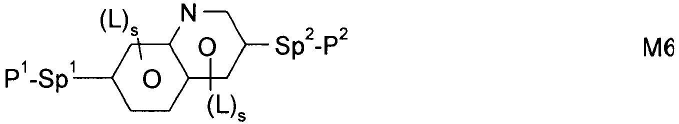 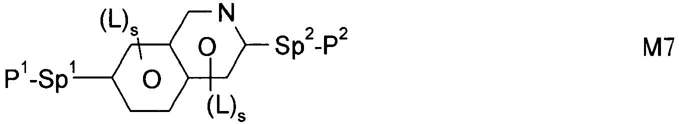 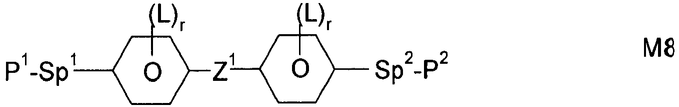 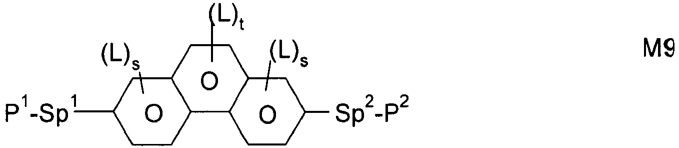 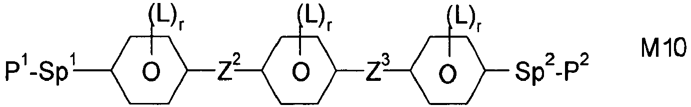 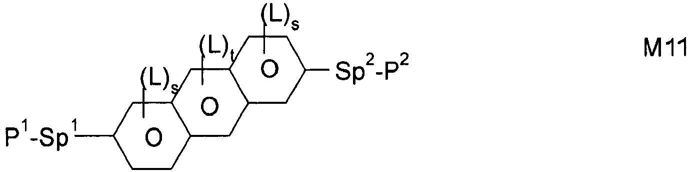 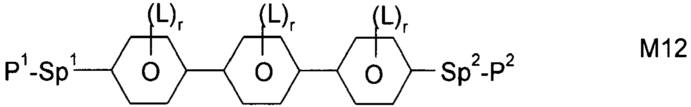 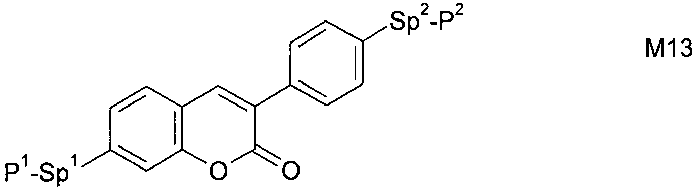 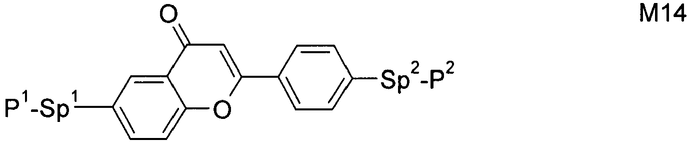 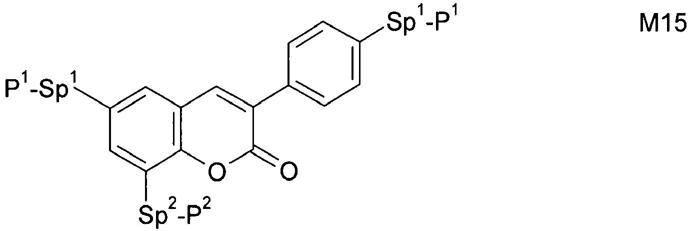 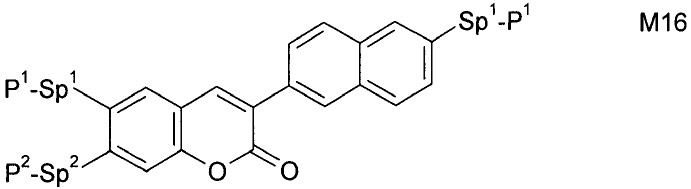 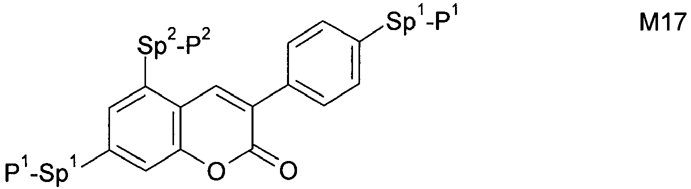 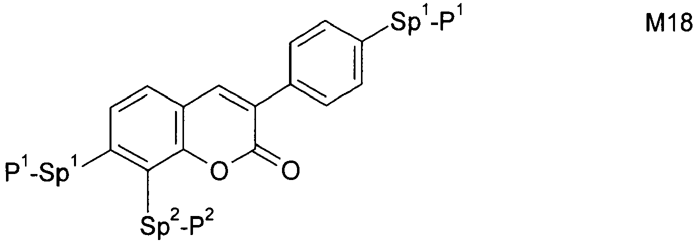 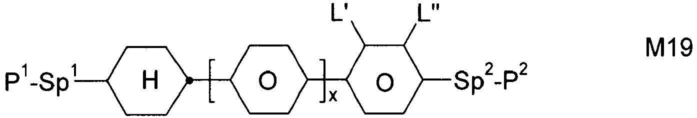 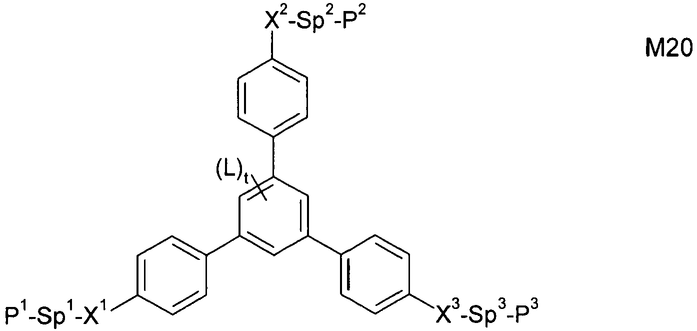 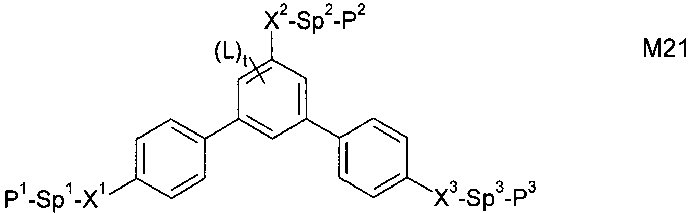 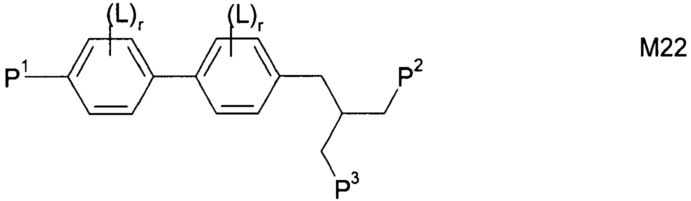 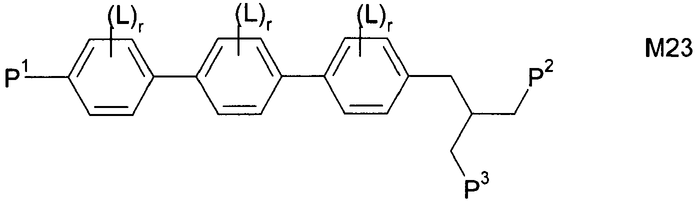 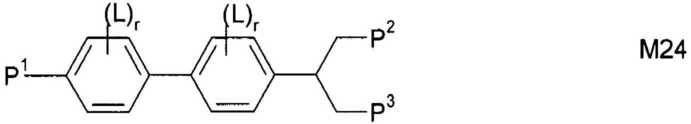 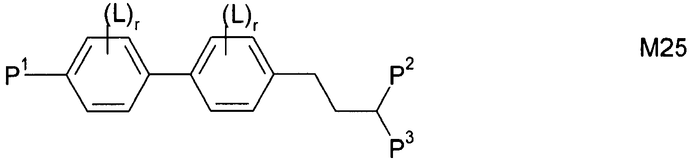 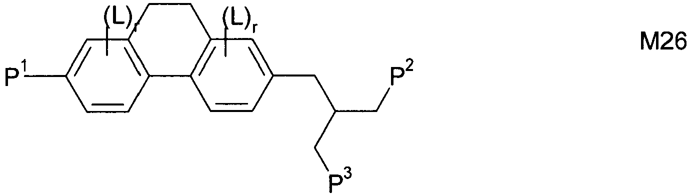 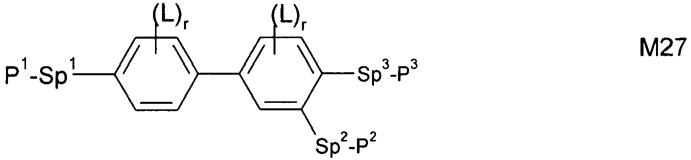 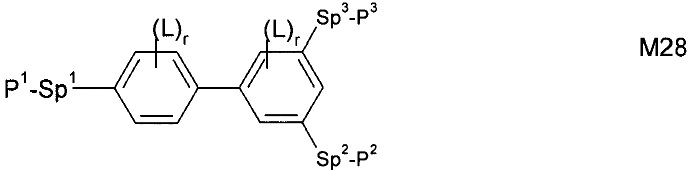 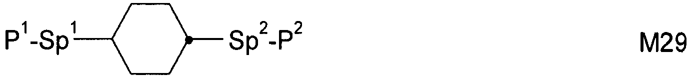 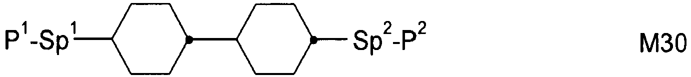 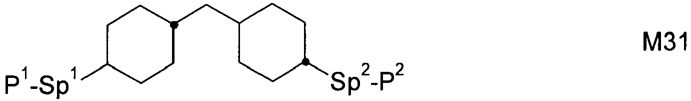 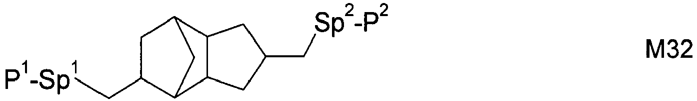 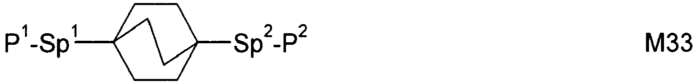 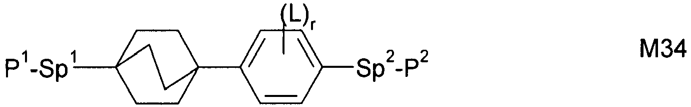 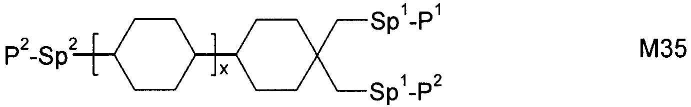 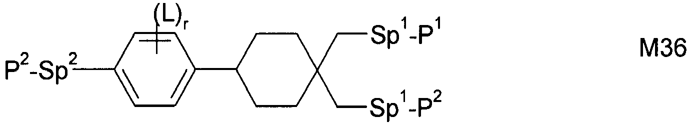 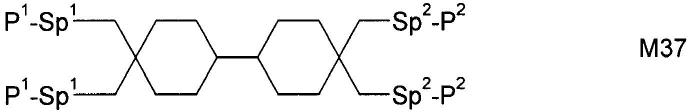 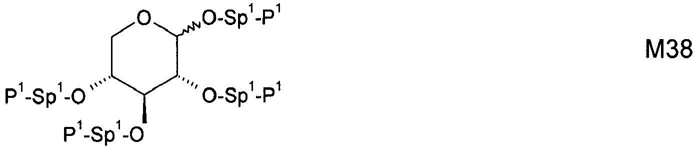 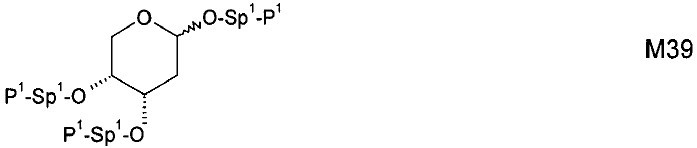 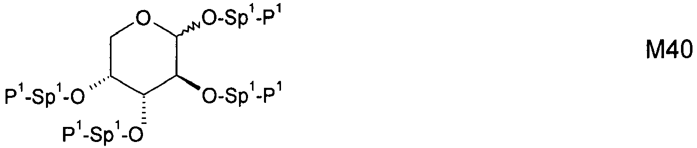 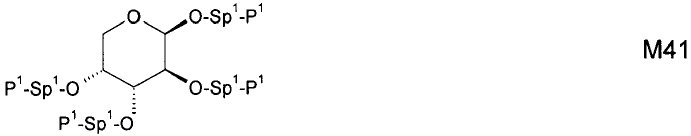 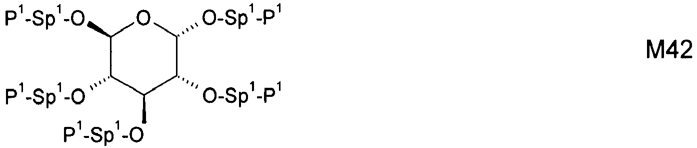 worin die einzelnen Reste folgende Bedeutung besitzen:
P¹,P² und P³ jeweils unabhängig voneinander eine polymerisierbare Gruppe,
Sp¹, Sp² und Sp³ jeweils unabhängig voneinander eine Einfachbindung oder eine Abstandsgruppe,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
R^{aa} H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹- ersetzt sein können, wobei -OH, -NH₂, -SH, -NHR, -C(O)OH und -CHO in der Gruppe R^{aa} nicht enthalten sind,
R⁰, R⁰⁰ jeweils unabhängig voneinander und bei jedem Auftreten gleich oder verschieden H oder Alkyl mit 1 bis 12 C-Atomen,
R^{y} und R^{z} jeweils unabhängig voneinander H, F, CH₃ oder CF₃,
X¹, X² und X³ jeweils unabhängig voneinander -CO-O-, O-CO- oder eine Einfachbindung,
Z¹ -O-, -CO-, -C(R^{y}R^{z})-, oder -CF₂CF₂-,
Z² und Z³ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
L bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,
L' und L" jeweils unabhängig voneinander H, F oder Cl,
r 0, 1, 2, 3 oder 4,
s 0, 1, 2 oder 3,
t 0, 1 oder 2, und
x 0 oder 1.

19. FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, sowie mit einer zwischen den Substraten befindlichen Schicht eines FK-Mediums nach einem oder mehreren der Ansprüche 1 bis 18,
wobei die Verbindung der Formel I geeignet ist, eine homöotrope Ausrichtung des FK-Mediums gegenüber den Substratoberflächen herbeizuführen.

20. FK-Anzeige nach Anspruch 19, **dadurch gekennzeichnet, dass** die Substrate keine Orientierungsschichten zur homöotropen Ausrichtung aufweisen.

21. FK-Anzeige nach Anspruch 19, **dadurch gekennzeichnet, dass** die Substrate ein- oder beidseitig Orientierungsschichten aufweisen.

22. FK-Anzeige nach einem oder mehreren der Ansprüche 19 bis 21 **dadurch gekennzeichnet, dass** es sich um eine VA-Anzeige mit einem FK-Medium mit negativer dielektrischer Anisotropie und auf gegenüberliegenden Substraten angeordneten Elektroden handelt.

23. FK-Anzeige nach einem oder mehreren der Ansprüche 19 bis 21 **dadurch gekennzeichnet, dass** es sich um eine VA-IPS-Anzeige mit einem FK-Medium mit positiver dielektrischer Anisotropie und mindestens auf einem Substrat angeordneten Interdigital-Elektroden handelt.

24. Verfahren zu Herstellung eines FK-Mediums, **dadurch gekennzeichnet, dass** man eine oder mehrere Verbindungen der Formel I nach Anspruch 1 mit einer niedermolekularen flüssigkristallinen Komponente mischt und optional eine oder mehrere polymerisierbare Verbindungen und/oder beliebige Additive zugibt.

25. Verbindungen der Formel I
P-Sp-[A³-Z³]ₘ-[A²]ₖ-[Z²]ₙ-A¹-R^{a} (I)
worin
Z² jeweils unabhängig voneinander -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
Z³ jeweils unabhängig voneinander eine Einfachbindung, -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁,
R^{a} eine Gruppe ausgewählt aus -Sp^{a}-X¹ oder 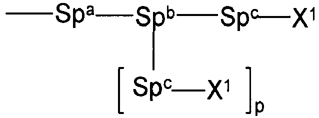 worin Sp^{a}, Sp^{b}, Sp^{c}, p und X¹ die Bedeutung wie in Anspruch 1 haben und wobei Sp^{a} keine Einfachbindung darstellt,
bedeutet,
und die Gruppen P, Sp, A¹, A², A³ und R^{a} sowie m, n und k wie in Anspruch 1 definiert sind.

26. Verbindungen nach Anspruch 25, **dadurch gekennzeichnet, dass** m = 1 oder 2, und k = 1 ist.

27. Verbindungen nach Anspruch 25 oder 26, **dadurch gekennzeichnet, dass** A¹ und A² unabhängig 1,4-Phenylen oder Cyclohexan-1,4-diyl bedeuten, welche jeweils unabhängig durch eine Gruppe L nach Anspruch 1 ein- oder mehrfach substituiert sein können.

28. Verwendung von Verbindungen der Formel I nach einem oder mehreren der Ansprüche 1 bis 5 als Additiv für FK-Medien zur Herbeiführung einer homöotropen Orientierung gegenüber einer das FK-Medium begrenzenden Oberfläche, wobei die Verbindungen nach Herbeiführung der homöotropen Orientierung optional polymerisiert werden.

29. Verfahren zu Herstellung einer FK-Anzeige enthaltend eine FK-Zelle mit zwei Substraten und mindestens zwei Elektroden, wobei mindestens ein Substrat lichtdurchlässig ist und mindestens ein Substrat eine oder zwei Elektroden aufweist, umfassend die Verfahrensschritte:
- Füllen der Zelle mit einem FK-Medium nach einem oder mehreren der Ansprüche 1 bis 18, wobei sich eine homöotrope Ausrichtung des FK-Mediums gegenüber den Substratoberflächen einstellt, und
- Polymerisieren der polymerisierbaren Komponente(n), optional unter Anlegen einer Spannung an die Zelle oder unter der Wirkung eines elektrischen Feldes, in einem oder mehreren Verfahrensschritten.

## Claims

1. LC medium comprising a low-molecular-weight, non-polymerisable liquid-crystalline component and a polymerisable or polymerised component comprising one or more polymerisable compounds of the formula I, where the polymerised component is obtainable by polymerisation of the polymerisable component,
and where the LC medium comprises the compounds of the formula I in a concentration of ≤ 5% by weight,
P-Sp-[A³-Z³]ₘ-[A²]ₖ-[Z²]ₙ-A¹-R^{a} (I)
in which
A¹, A², A³ in each case, independently of one another, denote an aromatic, heteroaromatic, alicyclic or heterocyclic group, which may also contain fused rings, and which may also be mono- or polysubstituted by a group L,
L in each case, independently of one another, denotes H, F, Cl, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,
P denotes a polymerisable group,
Sp denotes a spacer group or a single bond,
Z² in each case, independently of one another, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 denotes 1, 2, 3 or 4,
n denotes 0 or 1,
m denotes 0, 1, 2, 3, 4, 5 or 6,
k denotes 0 or 1,
R⁰ in each case, independently of one another, denotes alkyl having 1 to 12 C atoms,
R⁰⁰ in each case, independently of one another, denotes H or alkyl having 1 to 12 C atoms,
R^{a} denotes an anchor group of the formula 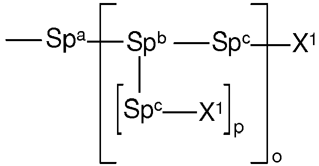 or 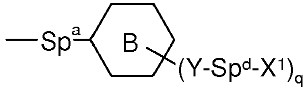
p denotes 1 or 2,
q denotes 2 or 3,
B denotes a substituted or unsubstituted ring system or condensed ring system,
Y, independently of one another, denotes -O-, -S-, -C(O)-, -C(O)O-, -OC(O)-, -NR¹¹- or a single bond,
ο denotes 0 or 1,
X¹, independently of one another, denotes H, alkyl, fluoroalkyl, OH, NH₂, NHR¹¹, NR¹¹₂, OR¹¹, C(O)OH, -CHO, where at least one group X¹ denotes a radical selected from -OH, -NH₂, NHR¹¹, C(O)OH and -CHO,
R¹¹ denotes alkyl having 1 to 12 C atoms,
Sp^{a}, Sp^{c}, Sp^{d} in each case, independently of one another, denote a spacer group or a single bond, and
Sp^{b} denotes a tri- or tetravalent group.

2. Medium according to Claim 1, **characterised in that**, for formula I,
A¹, A², A³ in each case, independently of one another, denote 1,4-phenylene, 1,3-phenylene, naphthalene-1,4-diyl or naphthalene-2,6-diyl, where, in addition, one or more CH groups in these groups may be replaced by N, cyclohexane-1,4-diyl, in which, in addition, one or more non-adjacent CH₂ groups may be replaced by O and/or S, 3,3'-bicyclobutylidene, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, perhydrocyclopenta[a]phenanthrene-3,17-diyl (in particular gonane-3,17-diyl), where all these groups may be unsubstituted or mono- or polysubstituted by a group L.

3. Medium according to Claim 1 or 2, **characterised in that** the compound of the formula I is a compound of the formula I1, 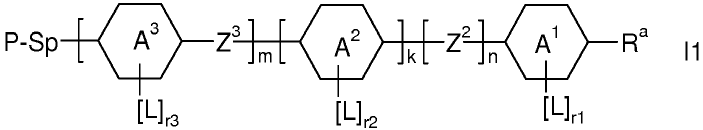 in which
R^{a}, A¹, A², A³, Z², Z³, L, Sp, P, k, m and n independently are as defined in Claim 1, and
r1, r2, r3 independently denote 0, 1, 2 or 3.

4. LC medium according to one or more of Claims 1 to 3, **characterised in that** the formula I contains in total at least one group L on the groups A¹, A² and A³, as are present, where in this case L does not denote H.

5. LC medium according to one or more of Claims 1 to 4, **characterised in that** the one or more compounds of the formula I are selected from compounds of the formulae IA, IB, IC, ID, IE or IF: 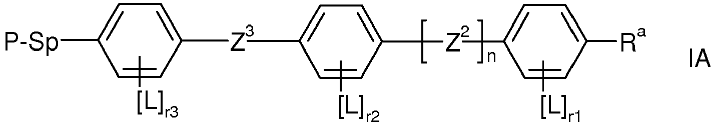 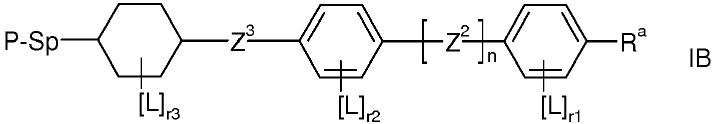 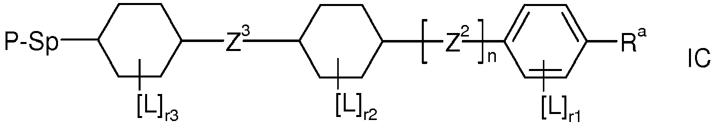 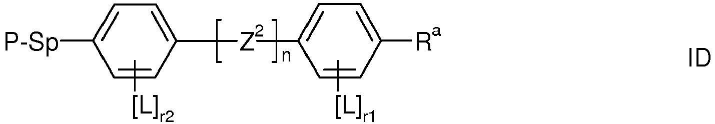 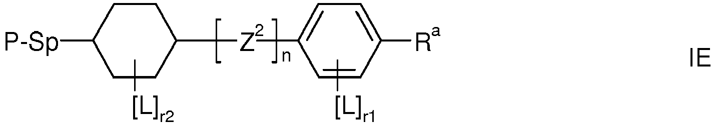 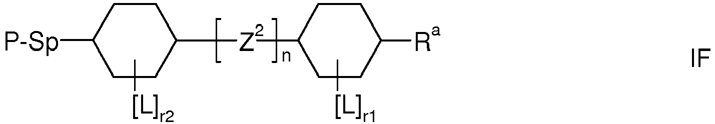 in which R^{a}, Z², Z³, L, Sp, P and n independently are as defined in Claim 1, and
r1, r2, r3 independently denote 0, 1, 2 or 3.

6. LC medium according to one or more of Claims 1 to 5, **characterised in that**, besides one or more compounds of the formula I, the polymerisable or polymerised component comprises one or more further polymerisable or polymerised compounds, where the polymerised component is obtainable by polymerisation of the polymerisable component.

7. LC medium according to one or more of Claims 1 to 6, **characterised in that**, besides one or more compounds of the formula I, it additionally comprises one or more non-polymerisable compounds of the formula I',
R¹-[A³-Z³]ₘ-[A²]ₖ-[Z²]ₙ-A¹-R^{a} I'
in which m, k, n and the group R^{a} are as defined for formula I according to Claim 1, and
A¹, A², A³ in each case, independently of one another, denote an aromatic, heteroaromatic, alicyclic or heterocyclic group, which may also contain fused rings, and which may also be mono- or polysubstituted by a group L,
Z² in each case, independently of one another, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 denotes 1, 2, 3 or 4,
L in each case, independently of one another, denotes H, F, Cl, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,
R⁰ in each case, independently of one another, denotes alkyl having 1 to 12 C atoms,
R⁰⁰ in each case, independently of one another, denotes H or alkyl having 1 to 12 C atoms,
and
R¹, independently of one another, denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl.

8. LC medium according to Claim 7, **characterised in that** it comprises one or more non-polymerisable compounds selected from the following formulae: 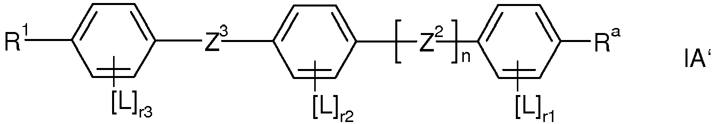 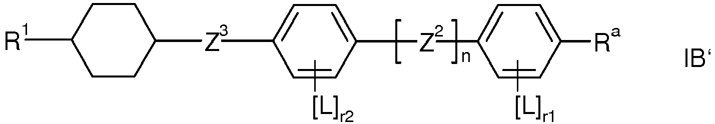 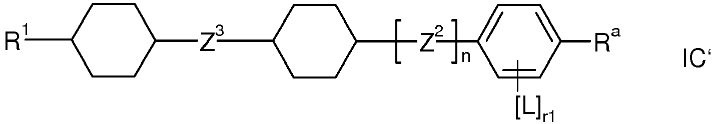 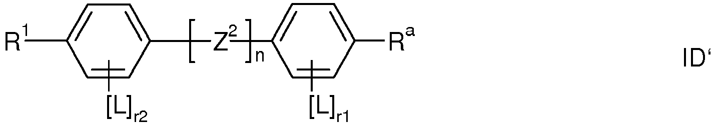 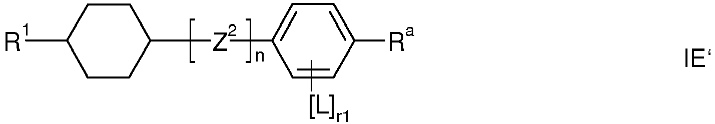 in which R¹, R^{a}, Z², Z³, L and n independently are as defined in Claim 7, and
r1, r2, r3 independently denote 0, 1, 2, 3 or 4.

9. LC medium according to one or more of Claims 1 to 8, **characterised in that** it comprises one or more compounds of the formula I selected from the following formulae: 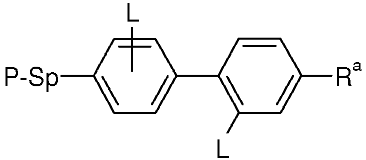 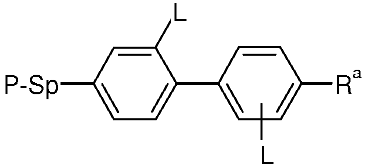 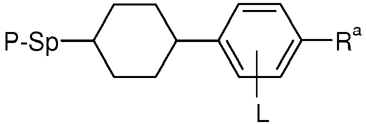 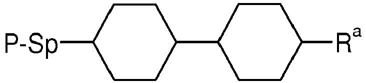 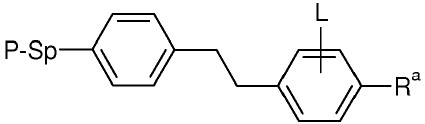 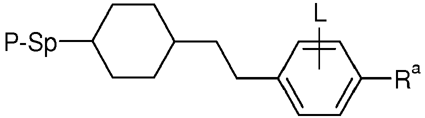 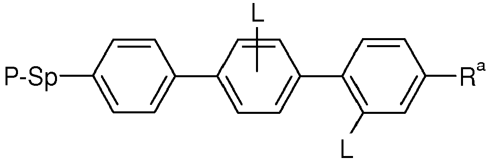 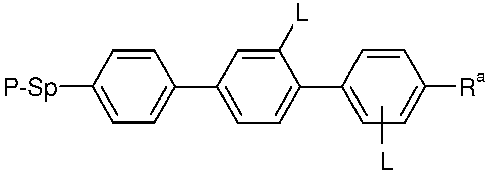 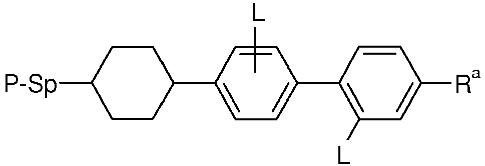 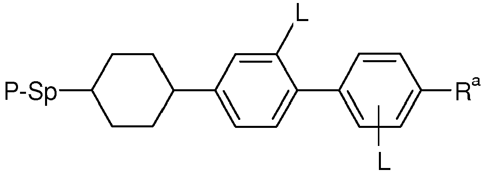 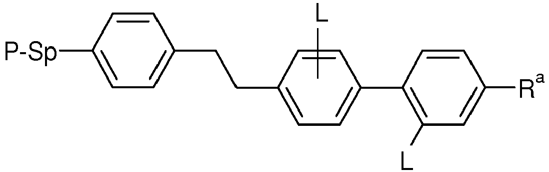 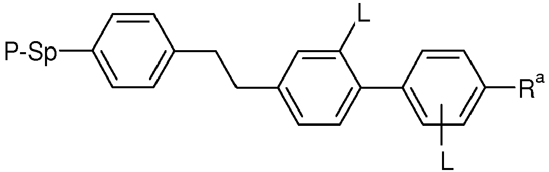 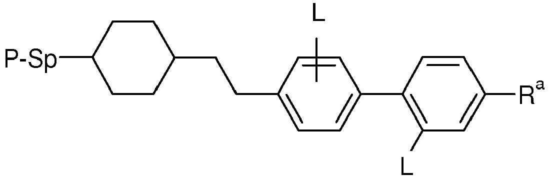 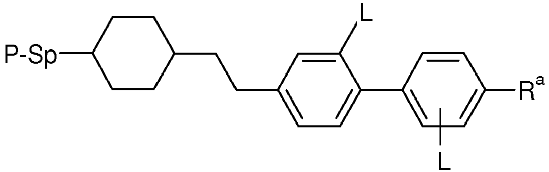 in which L, Sp, P and R^{a} independently are as defined in Claim 1, and where at least one group L does not denote H.

10. LC medium according to one or more of Claims 1 to 9, **characterised in that** the group R^{a} in formula I or the sub-formulae contains one, two or three OH groups.

11. LC medium according to one or more of Claims 1 to 10, **characterised in that** the group R^{a} denotes a group selected from
-Sp^{a}-X¹ or 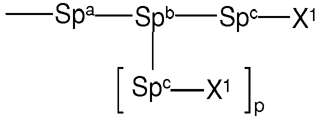 in which Sp^{a}, Sp^{b}, Sp^{c}, p and X¹ have the meaning as in Claim 1.

12. LC medium according to one or more of Claims 1 to 11, **characterised in that** the group R^{a} denotes a group selected from the moieties

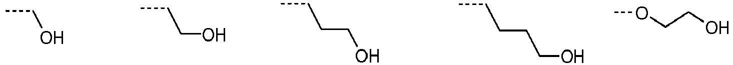

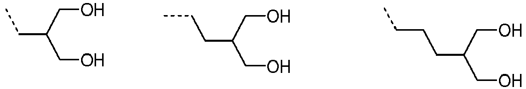

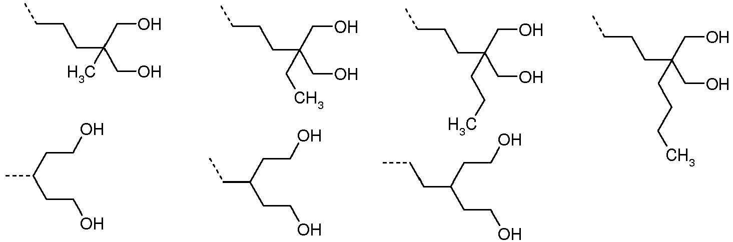

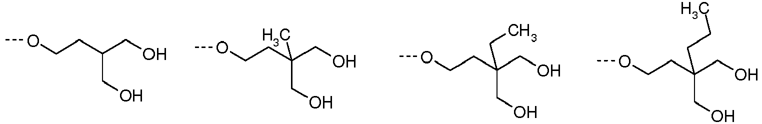

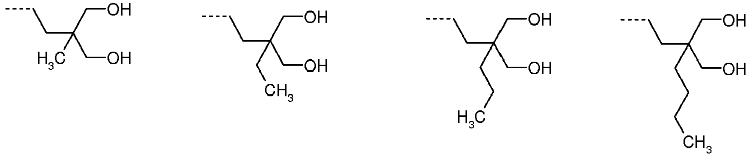

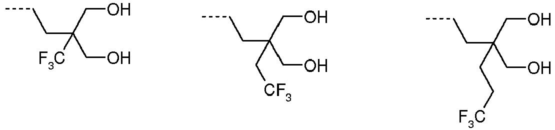

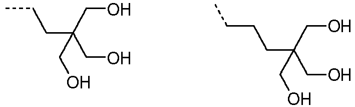

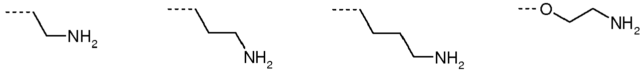

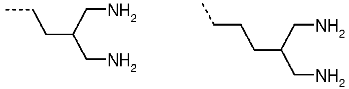

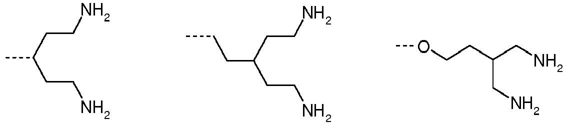

13. LC medium according to one or more of Claims 1 to 12, **characterised in that**, for the compound of the formula I,
n = 0.

14. LC medium according to one or more of Claims 1 to 13, **characterised in that**, for the compound of the formula I, the group P is selected from vinyloxy, acrylate, methacrylate, fluoroacrylate, chloroacrylate, oxetane and epoxide.

15. LC medium according to one or more of Claims 1 to 14, **characterised in that** it comprises the compounds of the formula I in a concentration of ≤ 3% by weight.

16. LC medium according to one or more of Claims 1 to 15, **characterised in that** it comprises one or more polymerisable compounds of the formula M or a (co)polymer comprising compounds of the formula M:
P¹-Sp¹-A²-(Z¹-A¹)ₙ-Sp²-P² M
in which the individual radicals have the following meanings:
P¹, P² in each case independently denote a polymerisable group,
Sp¹, Sp² in each case independently denote a spacer group,
A¹, A² in each case, independently of one another, denote a radical selected from the following groups:
a) the group consisting of trans-1,4-cyclohexylene, 1,4-cyclohexenylene and 4,4'-bicyclohexylene, in which, in addition, one or more non-adjacent CH₂ groups may be replaced by -O- and/or -S- and in which, in addition, one or more H atoms may be replaced by a group L, or selected from 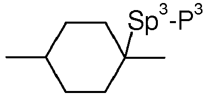
b) the group consisting of 1,4-phenylene and 1,3-phenylene, in which, in addition, one or two CH groups may be replaced by N and in which, in addition, one or more H atoms may be replaced by a group L or -Sp³-P,
c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, which may in each case also be mono- or polysubstituted by a group L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 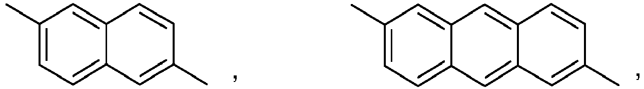 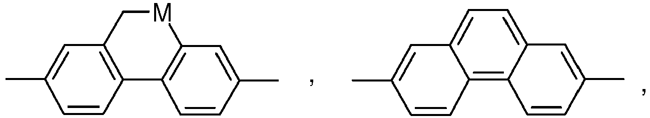 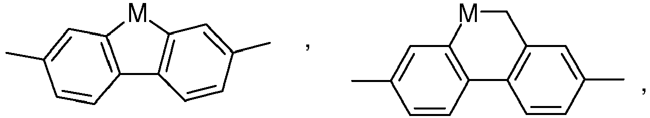 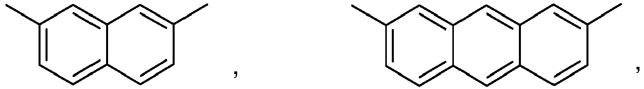 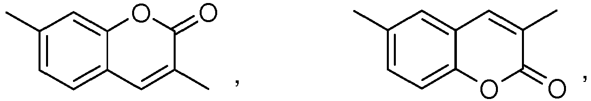 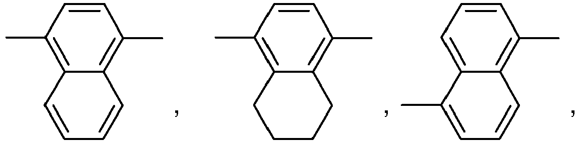 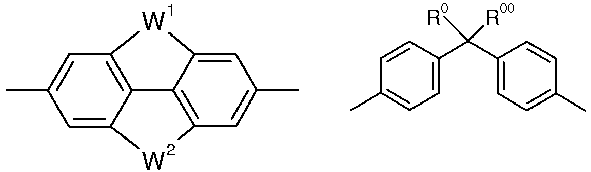 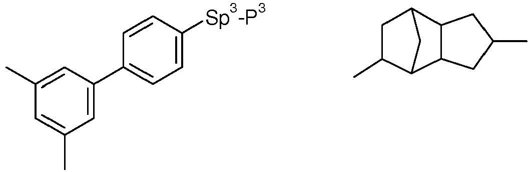 where, in addition, one or more H atoms in these radicals may be replaced by a group L or -Sp³-P, and/or one or more double bonds may be replaced by single bonds, and/or one or more CH groups may be replaced by N,
P³ denotes a polymerisable group,
Sp³ denotes a spacer group,
n denotes 0, 1, 2 or 3,
Z¹ in each case, independently of one another, denotes -CO-O-, -O-CO-, -CH₂O-, -OCH₂-, -CF₂O-, -OCF₂- or -(CH₂)ₙ-, where n is 2, 3 or 4, -O-, -CO-, -C(R^{c}R^{d})-, -CH₂CF₂-, -CF₂CF₂- or a single bond,
L on each occurrence, identically or differently, denotes F, Cl, CN, SCN, SF₅ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms,
R⁰, R⁰⁰ in each case, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-,
Y¹ and Y² in each case, independently of one another, have one of the meanings indicated above for R⁰ or denote Cl or CN, and preferaby H, F, Cl, CN, OCF₃ or CF₃,
W¹, W² in each case, independently of one another, denote -CH₂CH₂-, -CH=CH-, -CH₂-O-, -O-CH₂-, -C(R^{c}R^{d})- or -O-, and
R^{c} and R^{d} in each case, independently of one another, denote H or alkyl having 1 to 6 C atoms, preferably H, methyl or ethyl,
where one or more of the groups P¹-Sp¹-, -Sp²-P² and -Sp³-P³ may denote a radical R^{aa}, with the proviso that at least one of the groups P¹-Sp¹-, -Sp²-P² and -Sp³-P³ present does not denote R^{aa},
R^{aa} denotes H, F, Cl, CN or straight-chain or branched alkyl having 1 to 25 C atoms, in which, in addition, one or more non-adjacent CH₂ groups may in each case be replaced, independently of one another, by C(R⁰)=C(R⁰⁰)-, -C≡C-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, where the groups -OH, -NH₂, -SH, -NHR, -C(O)OH and -CHO are not present in R^{aa}.

17. LC medium according to one or more of Claims 1 to 16, **characterised in that** the polymerisable or polymerised component comprises 0.01 to 5% by weight of one or more compounds of the formula M according to Claim 16 and/or **in that** the LC medium comprises.01 to 10% by weight of one or more non-polymerisable compounds of the formula I' according to Claim 7.

18. LC medium according to one or more of Claims 1 to 17, **characterised in that** the polymerisable or polymerised component comprises one or more compounds selected from the compounds of the following formulae: 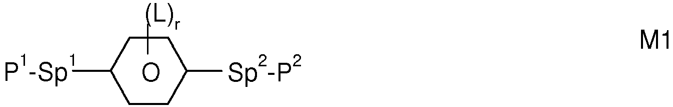 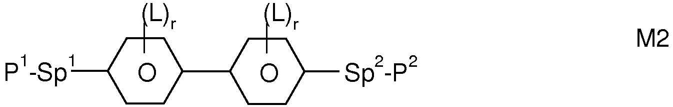 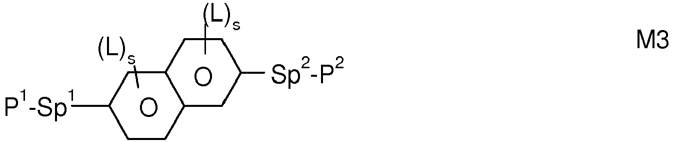 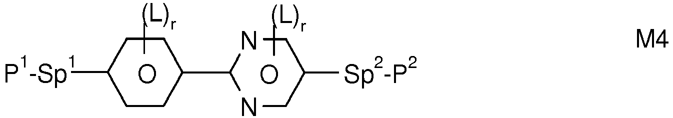 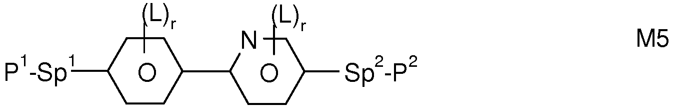 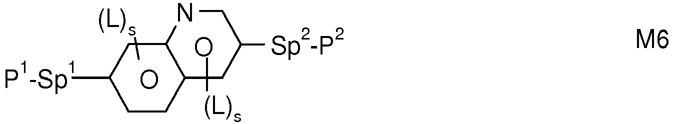 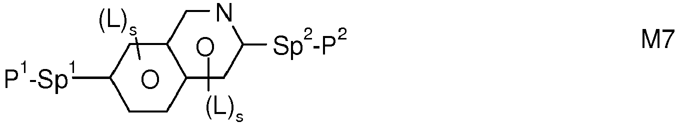 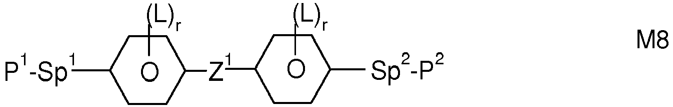 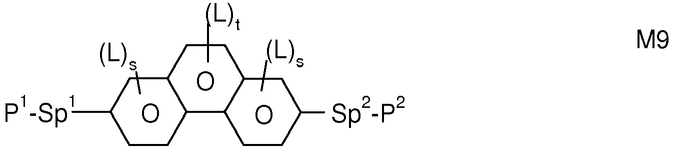 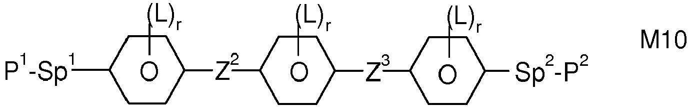 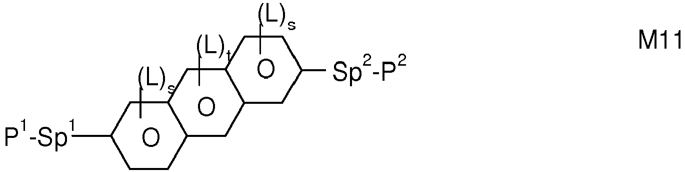 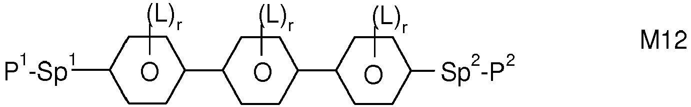 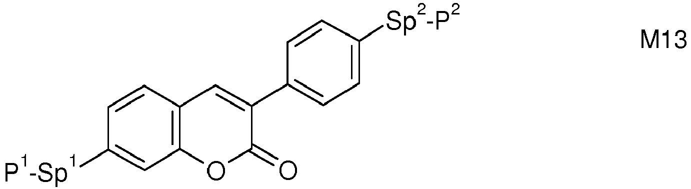 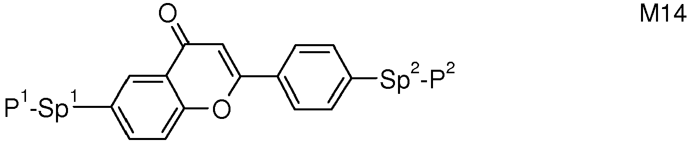 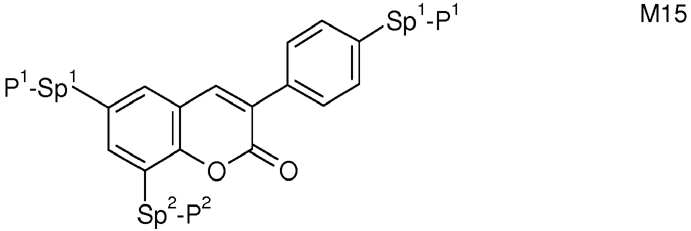 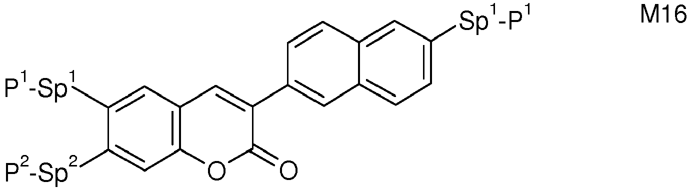 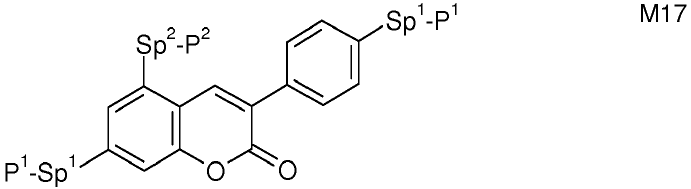 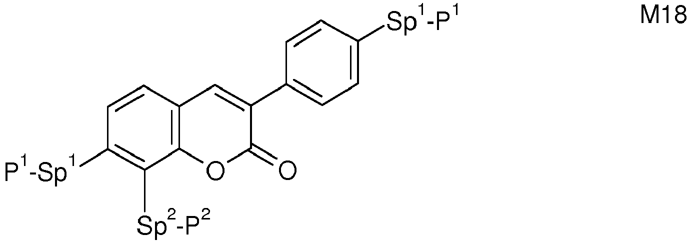 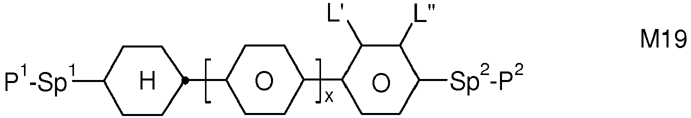 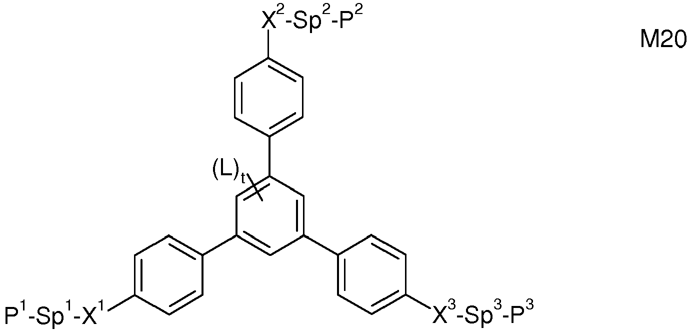 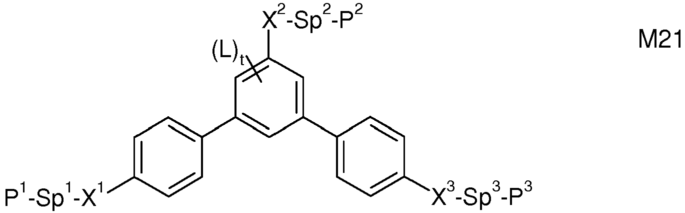 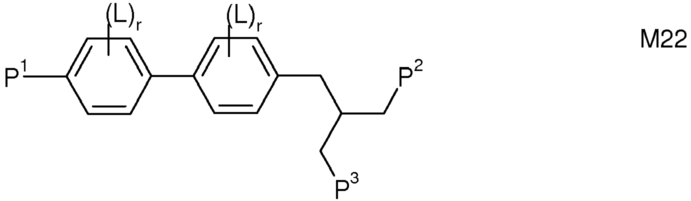 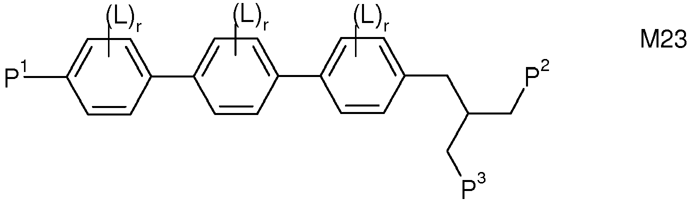 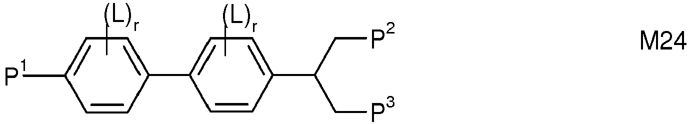 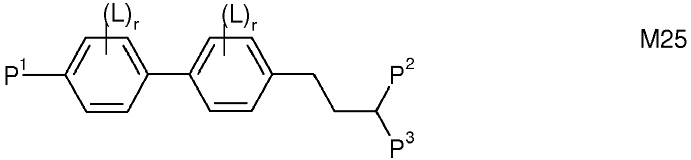 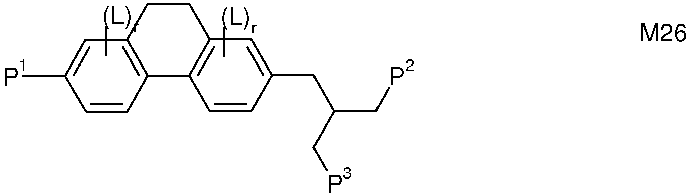 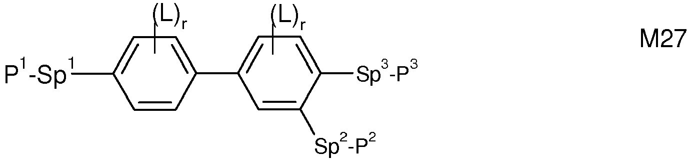 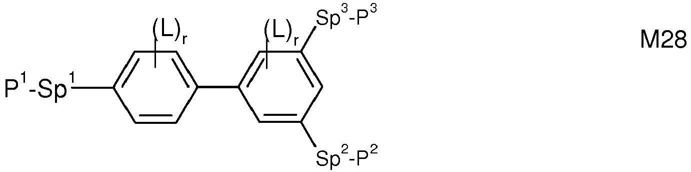 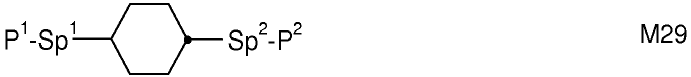 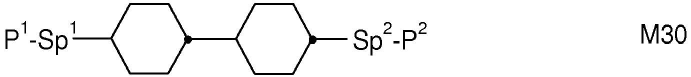 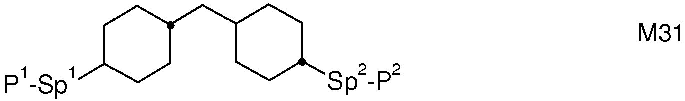 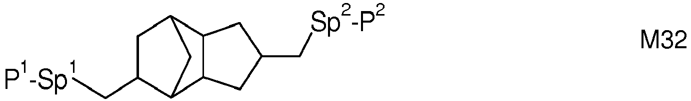 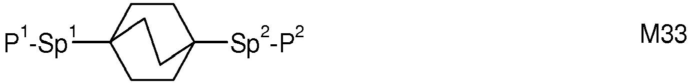 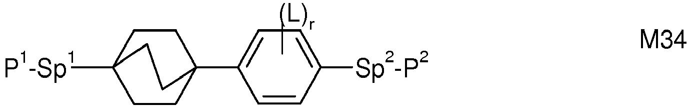 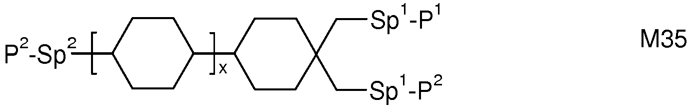 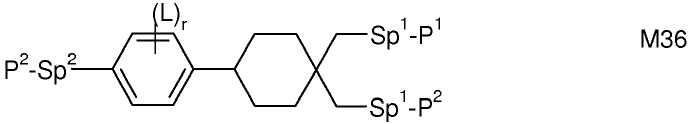 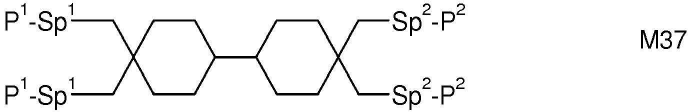 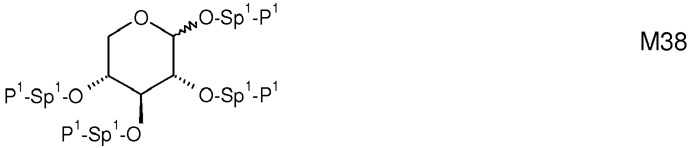 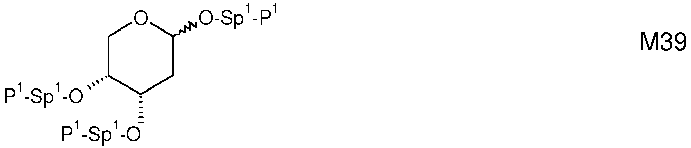 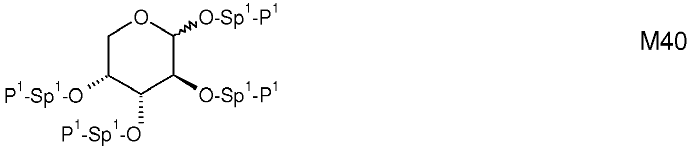 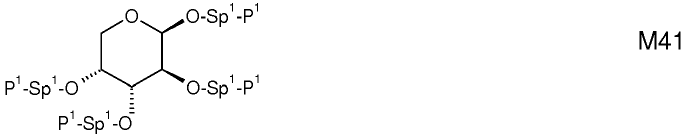 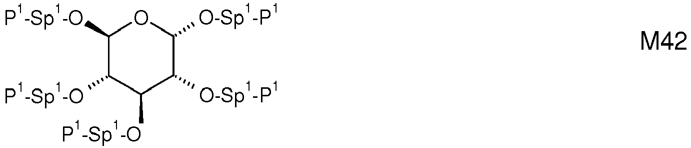 in which the individual radicals have the following meanings:
P¹,P² and P³ in each case, independently of one another, denote a polymerisable group,
Sp¹, Sp² and Sp³ in each case, independently of one another, denote a single bond or a spacer group,
where, in addition, one or more of the radicals P¹-Sp¹-, P²-Sp²- and
P³-Sp³- may denote a radical R^{aa}, with the proviso that at least one of the radicals P¹-Sp¹-, P²-Sp²- and P³-Sp³- present does not denote R^{aa},
R^{aa} denotes H, F, Cl, CN or straight-chain or branched alkyl having 1 to 25 C atoms, in which, in addition, one or more non-adjacent CH₂ groups may in each case be replaced, independently of one another, by C(R⁰)=C(R⁰⁰)-, -C≡C-,-N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, where -OH, -NH₂, -SH, -NHR, -C(O)OH and -CHO are not present in the group R^{aa},
R⁰, R⁰⁰ in each case, independently of one another and identically or differently on each occurrence, denote H or alkyl having 1 to 12 C atoms,
R^{y} and R^{z} in each case, independently of one another, denote H, F, CH₃ or CF₃,
X¹, X² and X³ in each case, independently of one another, denote -CO-O-, O-CO- or a single bond,
Z¹ denotes -O-, -CO-, -C(R^{y}R^{z})- or -CF₂CF₂-,
Z² and Z³ in each case, independently of one another, denote -CO-O-, -O-CO-, -CH₂O-, -OCH₂-, -CF₂O-, -OCF₂- or -(CH₂)ₙ-, where n is 2, 3 or 4,
L on each occurrence, identically or differently, denotes F, Cl, CN, SCN, SF₅ or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
L' and L" in each case, independently of one another, denote H, F or Cl,
r denotes 0, 1, 2, 3 or 4,
s denotes 0, 1, 2 or 3,
t denotes 0, 1 or 2, and
x denotes 0 or 1.

19. LC display comprising an LC cell having two substrates and at least two electrodes, where at least one substrate is transparent to light and at least one substrate has one or two electrodes, and having a layer of an LC medium according to one or more of Claims 1 to 18 located between the substrates,
where the compound of the formula I is suitable for effecting a homeotropic alignment of the LC medium with respect to the substrate surfaces.

20. LC display according to Claim 19, **characterised in that** the substrates have no alignment layers for homeotropic alignment.

21. LC display according to Claim 19, **characterised in that** the substrates have alignment layers on one or both sides.

22. LC display according to one or more of Claims 19 to 21, **characterised in that** it is a VA display containing an LC medium of negative dielectric anisotropy and with electrodes arranged on opposite substrates.

23. LC display according to one or more of Claims 19 to 21, **characterised in that** it is a VA-IPS display containing an LC medium of positive dielectric anisotropy and with interdigital electrodes arranged on at least one substrate.

24. Process for the preparation of an LC medium, **characterised in that** one or more compounds of the formula I according to Claim 1 are mixed with a low-molecular-weight liquid-crystalline component, and one or more polymerisable compounds and/or any desired additives are optionally added.

25. Compounds of the formula I
P-Sp-[A³-Z³]ₘ-[A²]ₖ-[Z²]ₙ-A¹-R^{a} (I)
in which
Z² in each case, independently of one another, denotes -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-,-CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ in each case, independently of one another, denotes a single bond, -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
R^{a} denotes a group selected from -Sp^{a}-X¹ or 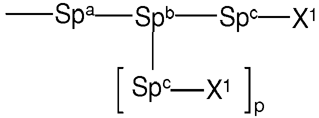 in which Sp^{a}, Sp^{b}, Sp^{c}, p and X¹ have the meanings as in Claim 1 and where Sp^{a} does not represent a single bond,
and the groups P, Sp, A¹, A², A³ and R^{a} as well as m, n and k are as defined in Claim 1..

26. Compounds according to Claim 25, **characterised in that** m = 1 or 2, and k= 1.

27. Compounds according to Claim 25 or 26, **characterised in that** A¹ and A² independently denote 1,4-phenylene or cyclohexane-1,4-diyl, which may in each case independently be mono- or polysubstituted by a group L according to Claim 1.

28. Use of compounds of the formula I according to one or more of Claims 1 to 5 as additive for LC media for effecting a homeotropic alignment with respect to a surface delimiting the LC medium, where the compounds are optionally polymerised after the homeotropic alignment has been effected.

29. Process for the production of an LC display comprising an LC cell having two substrates and at least two electrodes, where at least one substrate is transparent to light and at least one substrate has one or two electrodes, comprising the process steps:
- filling of the cell with an LC medium according to one or more of Claims 1 to 18, where a homeotropic alignment of the LC medium with respect to the substrate surfaces is established, and
- polymerisation of the polymerisable component(s), optionally with application of a voltage to the cell or under the action of an electric field, in one or more process steps.

## Revendications

1. Milieu LC comprenant un composant cristallin liquide non polymérisable de poids moléculaire faible et un composant polymérisable ou polymérisé qui comprend un ou plusieurs composé(s) polymérisable(s) de la formule I, dans lequel le composant polymérisé peut être obtenu par polymérisation du composant polymérisable,
et dans lequel le milieu LC comprend les composés de la formule I selon une concentration ≤ 5 % en poids,
P-Sp-[A³-Z³]ₘ-[A²]ₖ-[Z²]ₙ-A¹-R^{a} (1)
dans laquelle
A¹, A², A³ représentent, dans chaque cas de manière indépendante les uns des autres, un groupe aromatique, hétéroaromatique, alicyclique ou hétérocyclique, lequel peut également contenir des cycles fusionnés, et lequel peut également être mono- ou polysubstitué par un groupe L,
L représente, dans chaque cas de manière indépendante des autres cas, H, F, Cl, Br, I, -CN, -NO₂, -NCO, -NCS, -OCN, -SCN, -C(=O)N(R⁰)₂, -C(=O)R⁰, silyle en option substitué, aryle ou cycloalkyle en option substitué qui comporte de 3 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou par Cl,
P représente un groupe polymérisable,
Sp représente un groupe d'espaceur ou une liaison simple,
Z² représente, dans chaque cas de manière indépendante des autres cas, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ représente, dans chaque cas de manière indépendante des autres cas, une liaison simple, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 représente 1, 2, 3 ou 4,
n représente 0 ou 1,
m représente 0, 1, 2, 3, 4, 5 ou 6,
k représente 0 ou 1,
R⁰ représente, dans chaque cas de manière indépendante des autres cas, alkyle qui comporte de 1 à 12 atome(s) de C,
R⁰⁰ représente, dans chaque cas de manière indépendante des autres cas, H ou alkyle qui comporte de 1 à 12 atome(s) de C,
R^{a} représente un groupe d'ancrage de la formule 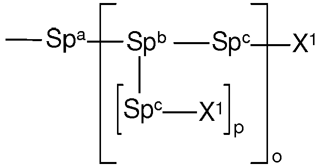 ou 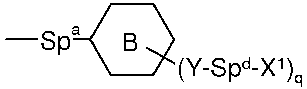
p représente 1 ou 2,
q représente 2 ou 3,
B représente un système de cycle substitué ou non substitué ou un système de cycle condensé,
Y représente, de manière indépendante des autres, -O-, -S-, -C(O)-, -C(O)O-, -OC(O)-, -NR¹¹- ou une liaison simple,
o représente 0 ou 1,
X¹ représente, de manière indépendante des autres, H, alkyle, fluoroalkyle, OH, NH₂, NHR¹¹, NR¹¹₂, OR¹¹, C(O)OH, -CHO, où au moins un groupe X¹ représente un radical qui est sélectionné parmi -OH, -NH₂, NHR¹¹, C(O)OH et -CHO,
R¹¹ représente alkyle qui comporte de 1 à 12 atome(s) de C,
Sp^{a}, Sp^{c}, Sp^{d} représentent, dans chaque cas de manière indépendante les uns des autres, un groupe d'espaceur ou une liaison simple, et
Sp^{b} représente un groupe tri- ou tétravalent.

2. Milieu selon la revendication 1, **caractérisé en ce que**, pour la formule I,
A¹, A², A³ représentent, dans chaque cas de manière indépendante les uns des autres, 1,4-phénylène, 1,3-phénylène, naphtalène-1,4-diyle ou naphtalène-2,6-diyle, où, en outre, un ou plusieurs groupe(s) CH dans ces groupes peut/peuvent être remplacé(s) par N, cyclohexane-1,4-diyle, où, en outre, un ou plusieurs groupe(s) CH₂ non adjacents peut/peuvent être remplacé(s) par O et/ou S, 3,3'-bicyclobutylidène, 1,4-cyclohexénylène, bicyclo[1.1.1]pentane-1,3-diyle, bicyclo[2.2.2]octane-1,4-diyle, spiro[3.3]heptane-2,6-diyle, pipéridine-1,4-diyle, décahydronaphtalène-2,6-diyle, 1,2,3,4-tétrahydronaphtalène-2,6-diyle, indane-2,5-diyle ou octahydro-4,7-méthanoindane-2,5-diyle, perhydrocyclopenta-[a]phénanthrène-3,17-diyle (en particulier gonane-3,17-diyle),
où tous ces groupes peuvent être non substitués ou mono- ou polysubstitués par un groupe L.

3. Milieu selon la revendication 1 ou 2, **caractérisé en ce que** le composé de la formule I est un composé de la formule 11, 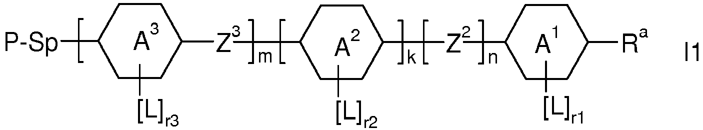 dans laquelle
R^{a}, A¹, A², A³, Z², Z³, L, Sp, P, k, m et n sont, de manière indépendante, tel qu'il a été défini selon la revendication 1, et
r1, r2, r3 représentent de manière indépendante 0, 1, 2 ou 3.

4. Milieu LC selon une ou plusieurs des revendications 1 à 3, **caractérisé en ce que** la formule I contient au total au moins un groupe L sur les groupes A¹, A² et A³, lorsqu'ils sont présents, où dans ce cas, L ne représente pas H.

5. Milieu LC selon une ou plusieurs des revendications 1 à 4, **caractérisé en ce que** les un ou plusieurs composés de la formule I sont sélectionnés parmi les composés des formules IA, IB, IC, ID, IE ou IF : 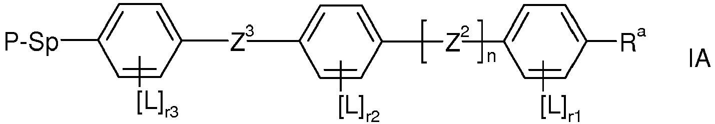 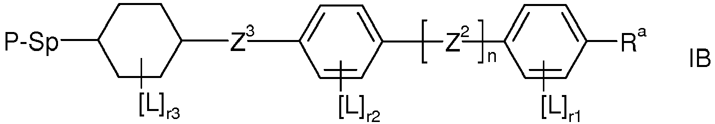 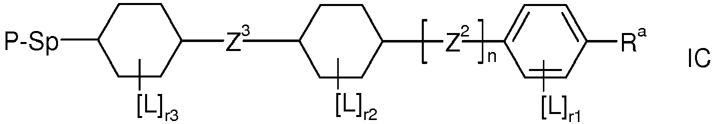 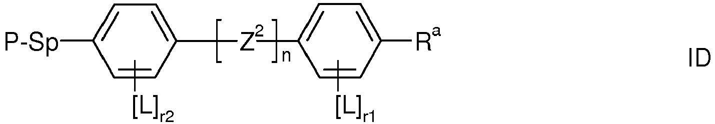 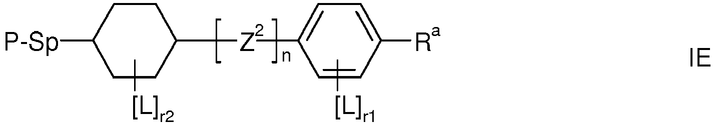 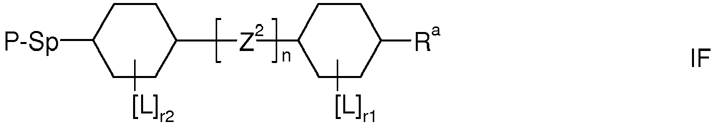 dans lesquelles R^{a}, Z², Z³, L, Sp, P et n sont, de manière indépendante,
tel qu'il a été défini selon la revendication 1, et
r1, r2, r3 représentent de manière indépendante 0, 1, 2 ou 3.

6. Milieu LC selon une ou plusieurs des revendications 1 à 5, **caractérisé en ce que**, en plus d'un ou de plusieurs composé(s) de la formule I, le composant polymérisable ou polymérisé comprend un ou plusieurs autre(s) composé(s) polymérisable(s) ou polymérisé(s), où le composant polymérisé peut être obtenu par polymérisation du composant polymérisable.

7. Milieu LC selon une ou plusieurs des revendications 1 à 6, **caractérisé en ce que**, en plus d'un ou de plusieurs composé(s) de la formule I, il comprend de façon additionnelle un ou plusieurs composé(s) non polymérisable(s) de la formule I',
R¹-[A³-Z³]ₘ-[A²]ₖ-[Z²]ₙ-A¹-R^{a} I'
dans laquelle m, k, n et le groupe R^{a} sont tel qu'il a été défini pour la formule I selon la revendication 1, et
A¹, A², A³ représentent, dans chaque cas de manière indépendante les uns des autres, un groupe aromatique, hétéroaromatique, alicyclique ou hétérocyclique, lequel peut également contenir des cycles fusionnés, et lequel peut également être mono- ou polysubstitué par un groupe L,
Z² représente, dans chaque cas de manière indépendante des autres cas, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ représente, dans chaque cas de manière indépendante des autres cas, une liaison simple, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
n1 représente 1, 2, 3 ou 4,
L représente, dans chaque cas de manière indépendante des autres cas, H, F, Cl, Br, I, -CN, -NO₂, -NCO, -NCS, -OCN, -SCN, -C(=O)N(R⁰)₂, -C(=O)R⁰, silyle en option substitué, aryle ou cycloalkyle en option substitué qui comporte de 3 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/ peuvent être remplacé(s) par F ou par Cl,
R⁰ représente, dans chaque cas de manière indépendante des autres cas, alkyle qui comporte de 1 à 12 atome(s) de C,
R⁰⁰ représente, dans chaque cas de manière indépendante des autres cas, H ou alkyle qui comporte de 1 à 12 atome(s) de C,
et
R¹ représente, de manière indépendante des autres, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres et, où, en outre, un ou plusieurs atome(s) de H peut/peuvent être remplacé(s) par F ou par Cl.

8. Milieu LC selon la revendication 7, **caractérisé en ce qu'**il comprend un ou plusieurs composé(s) non polymérisable(s) qui est/sont sélectionné(s) parmi les formules qui suivent : 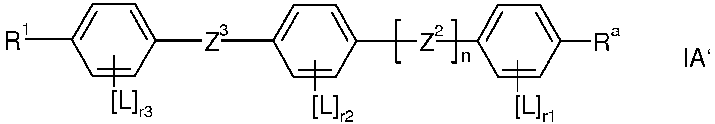 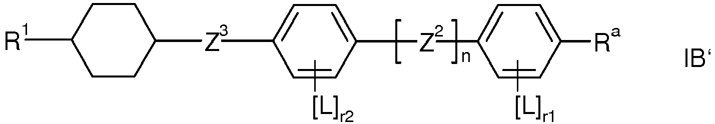 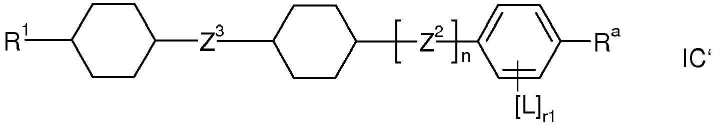 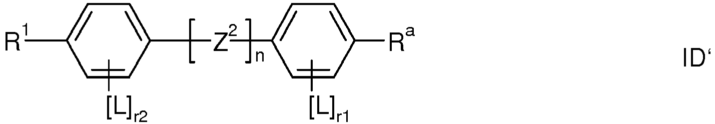 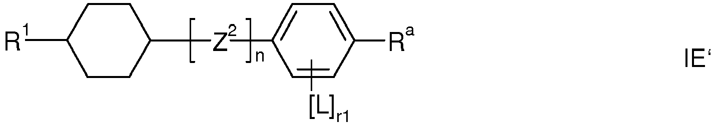 dans lesquelles R¹, R^{a}, Z², Z³, L et n sont, de manière indépendante, tel qu'il a été défini selon la revendication 7, et
r1, r2, r3 représentent de manière indépendante 0, 1, 2, 3 ou 4.

9. Milieu LC selon une ou plusieurs des revendications 1 à 8, **caractérisé en ce qu'**il comprend un ou plusieurs composé(s) de la formule I qui est/sont sélectionné(s) parmi les formules qui suivent : 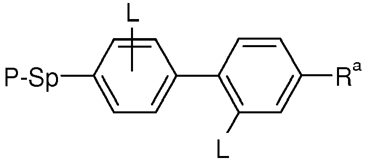 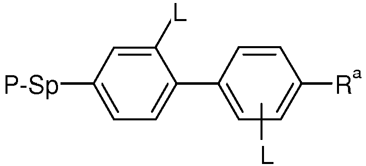 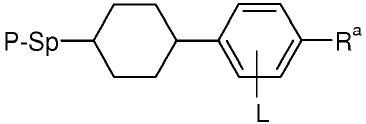 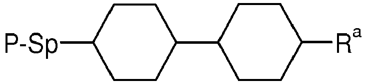 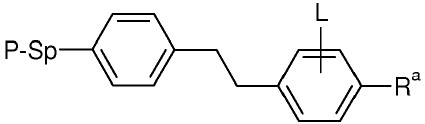 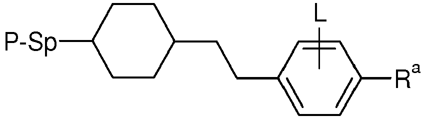 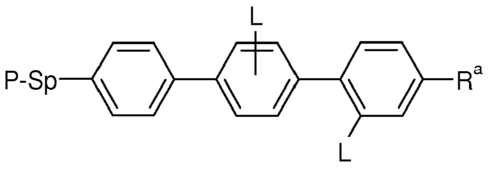 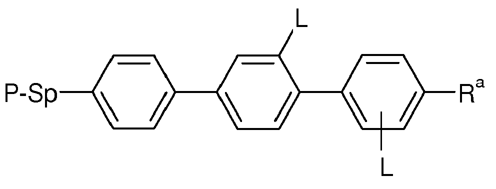 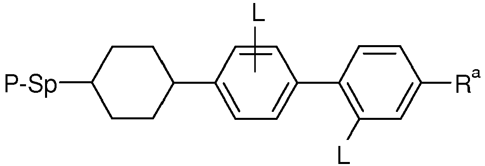 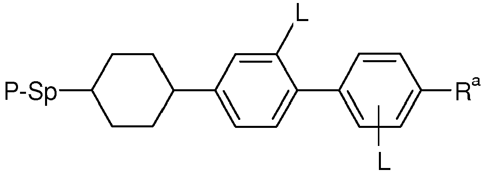 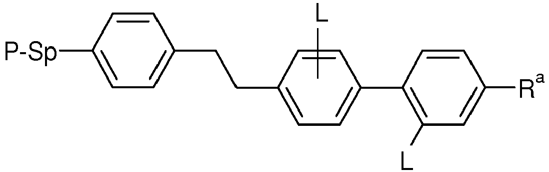 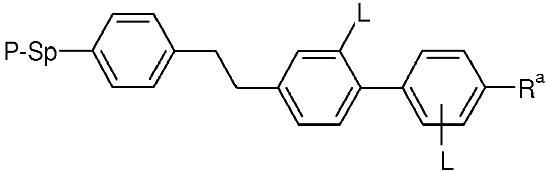 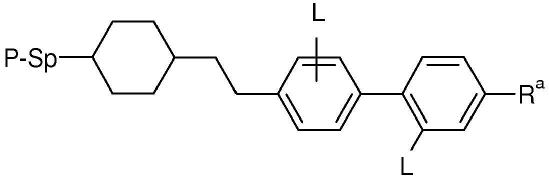 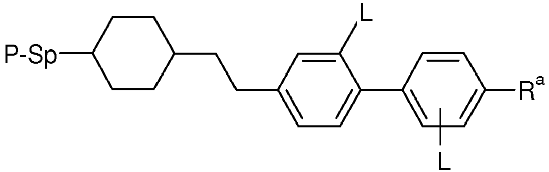 dans lesquelles L, Sp, P et R^{a} sont, de manière indépendante, tel qu'il a été défini selon la revendication 1, et où au moins un groupe L ne représente pas H.

10. Milieu LC selon une ou plusieurs des revendications 1 à 9, **caractérisé en ce que** le groupe R^{a} dans la formule I ou dans les sous-formules contient un, deux ou trois groupe(s) OH.

11. Milieu LC selon une ou plusieurs des revendications 1 à 10, **caractérisé en ce que** le groupe R^{a} représente un groupe qui est sélectionné parmi
-Sp^{a}-X¹ ou 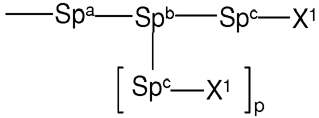 dans lesquelles Sp^{a}, Sp^{b}, Sp^{c}, p et X¹ présentent la signification tel qu'il a été indiqué selon la revendication 1.

12. Milieu LC selon une ou plusieurs des revendications 1 à 11, **caractérisé en ce que** le groupe R^{a} représente un groupe qui est sélectionné parmi les moitiés

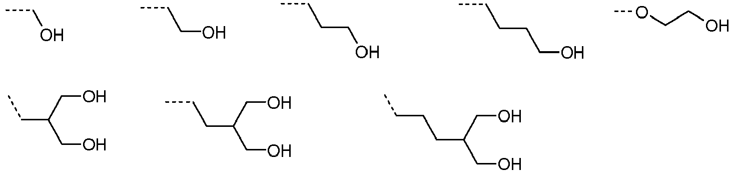

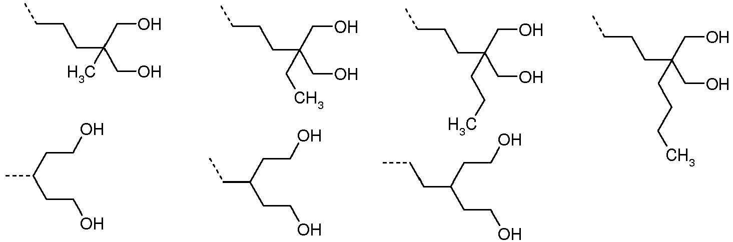

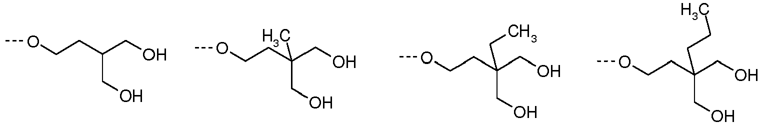

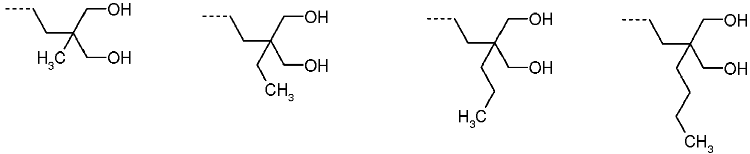

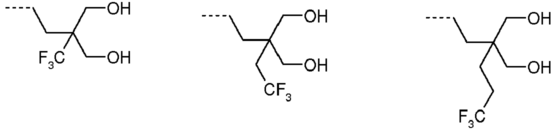

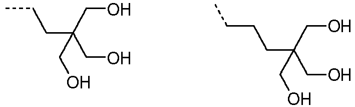

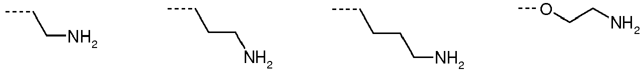

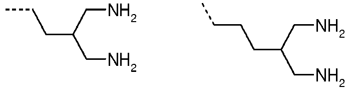

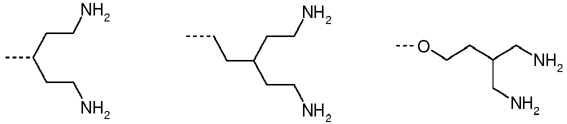

13. Milieu LC selon une ou plusieurs des revendications 1 à 12, **caractérisé en ce que**, pour le composé de la formule I,
n = 0.

14. Milieu LC selon une ou plusieurs des revendications 1 à 13, **caractérisé en ce que**, pour le composé de la formule I, le groupe P est sélectionné parmi vinyloxy, acrylate, méthacrylate, fluoroacrylate, chloroacrylate, oxétane et époxyde.

15. Milieu LC selon une ou plusieurs des revendications 1 à 14, **caractérisé en ce qu'**il comprend les composés de la formule I selon une concentration ≤ 3 % en poids.

16. Milieu LC selon une ou plusieurs des revendications 1 à 15, **caractérisé en ce qu'**il comprend un ou plusieurs composé(s) polymérisable(s) de la formule M ou un (co)polymère qui comprend des composés de la formule M :
P¹-Sp¹-A²-(Z¹-A¹)ₙ-Sp²-P² M
dans laquelle les radicaux individuels présentent les significations qui suivent :
P¹, P² représentent, dans chaque cas de manière indépendante, un groupe polymérisable,
Sp¹, Sp² représentent, dans chaque cas de manière indépendante, un groupe d'espaceur,
A¹, A² représentent, dans chaque cas de manière indépendante l'un de l'autre, un radical qui est sélectionné parmi les groupes qui suivent,
a) le groupe qui est constitué par trans-1,4-cyclohexylène, 1,4-cyclohexénylène et 4,4'-bicyclohexylène, où, en outre, un ou plusieurs groupe(s) CH₂ non adjacents peut/peuvent être remplacé(s) par -O- et/ou par -S- et où, en outre, un ou plusieurs atome(s) de H peut/peuvent être remplacé(s) par un groupe L, ou être sélectionné(s) parmi 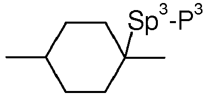
b) le groupe qui est constitué par 1,4-phénylène et 1,3-phénylène, où, en outre, un ou deux groupe(s) CH peut/ peuvent être remplacé(s) par N et où, en outre, un ou plusieurs atome(s) de H peut/peuvent être remplacé(s) par un groupe L ou par -Sp³-P,
c) le groupe qui est constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, lequel peut dans chaque cas également être mono- ou polysubstitué par un groupe L, et
d) le groupe qui est constitué par des radicaux polycycliques saturés, partiellement non saturés ou complètement non saturé, et en option substitués qui comportent de 5 à 20 atomes de C cycliques, dont un ou plusieurs peut/peuvent, en outre, être remplacé(s) par des hétéroatomes, de préférence qui sont sélectionnés parmi le groupe qui est constitué par bicyclo[1.1.1]-pentane-1,3-diyle, bicyclo[2.2.2]octane-1,4-diyle, spiro[3.3]-heptane-2,6-diyle, 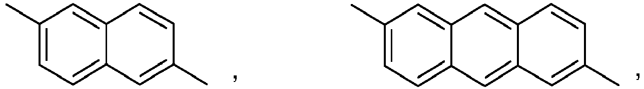 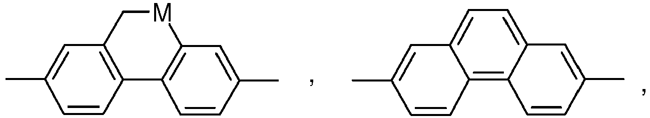 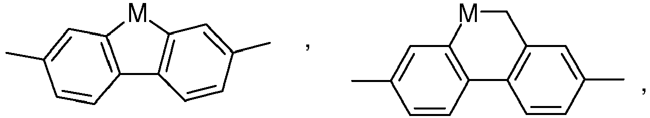 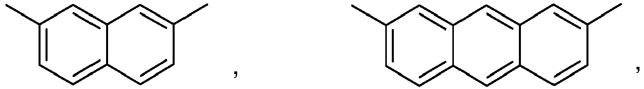 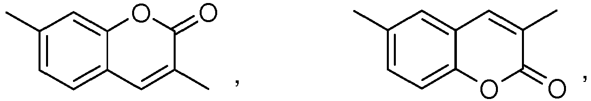 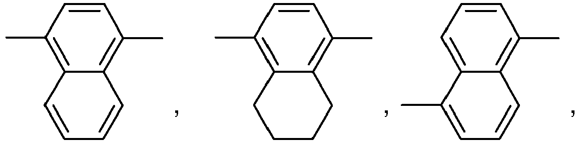 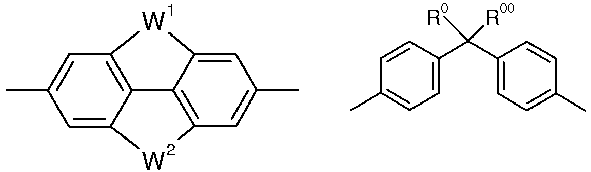 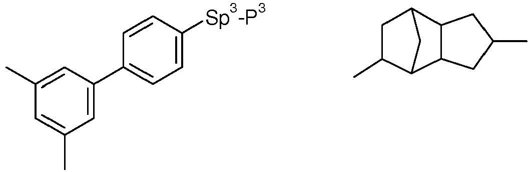 où, en outre, un ou plusieurs atome(s) de H dans ces radicaux peut/peuvent être remplacé(s) par un groupe L ou par -Sp³-P, et/ou une ou plusieurs liaison(s) double(s) peut/ peuvent être remplacée(s) par des liaisons simples, et/ou un ou plusieurs groupe(s) CH peut/peuvent être remplacé(s) par N,
P³ représente un groupe polymérisable,
Sp³ représente un groupe d'espaceur,
n représente 0, 1, 2 ou 3,
Z¹ représente, dans chaque cas de manière indépendante des autres cas, -CO-O-, -O-CO-, -CH₂O-, -OCH₂-, -CF₂O-, -OCF₂- ou -(CH₂)ₙ-, où n est 2, 3 ou 4, -O-, -CO-, -C(R^{c}R^{d})-, -CH₂CF₂-, -CF₂CF₂- ou une liaison simple,
L représente pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré qui comporte de 1 à 12 atome(s) de C,
R⁰, R⁰⁰ représentent, dans chaque cas de manière indépendante l'un de l'autre, H, F ou alkyle en chaîne droite ou ramifié qui comporte de 1 à 12 atome(s) de C, où, en outre, un ou plusieurs atome(s) de H peut/peuvent être remplacé(s) par F,
M représente-O-, -S-, -CH₂-, -CHY¹- ou -CY¹Y²-,
Y¹ et Y² présentent, dans chaque cas de manière indépendante l'un de l'autre, l'une des significations qui ont été indiquées ci-avant pour R⁰ ou représentent Cl ou CN, et de préférence H, F, Cl, CN, OCF₃ ou CF₃,
W¹, W² représentent, dans chaque cas de manière indépendante l'un de l'autre, -CH₂CH₂-, -CH=CH-, -CH₂-O-, -O-CH₂-, -C(R^{c}R^{d})- ou -O-, et
R^{c} et R^{d} représentent, dans chaque cas de manière indépendante l'un de l'autre, H ou alkyle qui comporte de 1 à 6 atome(s) de C, de préférence H, méthyle ou éthyle,
où un ou plusieurs des groupes P¹-Sp¹-, -Sp²-P² et -Sp³-P³ peut/peuvent représenter un radical R^{aa}, étant entendu qu'au moins l'un des groupes P¹-Sp¹-, -Sp²-P² et -Sp³-P³ qui est/sont présent(s) ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent dans chaque cas être remplacé(s), de manière indépendante les uns des autres, par C(R⁰)=C(R⁰⁰)-, -C≡C-, -O-, -S-, -CO-, -CO-O-, -O-CO-, -O-CO-O- de telle sorte que des atomes de O et/ou de S ne soient pas liés directement les uns aux autres et où, en outre, un ou plusieurs atome(s) de H peut/peuvent être remplacé(s) par F, Cl, CN ou P¹-Sp¹-, où les groupes -OH, -NH₂, -SH, -NHR, -C(O)OH et -CHO ne sont pas présents dans R^{aa}.

17. Milieu LC selon une ou plusieurs des revendications 1 à 16, **caractérisé en ce que** le composant polymérisable ou polymérisé comprend de 0,01 à 5 % en poids d'un ou de plusieurs composé(s) de la formule M selon la revendication 16 et/ou **en ce que** le milieu LC comprend de 0,01 à 10 % en poids d'un ou de plusieurs composé(s) non polymérisable(s) de la formule I' selon la revendication 7.

18. Milieu LC selon une ou plusieurs des revendications 1 à 17, **caractérisé en ce que** le composant polymérisable ou polymérisé comprend un ou plusieurs composé(s) qui est/sont sélectionné(s) parmi les composés des formules qui suivent : 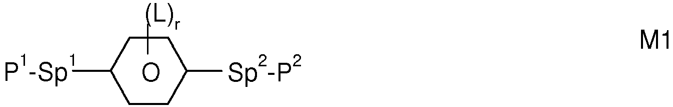 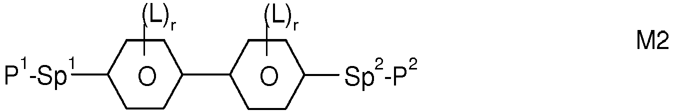 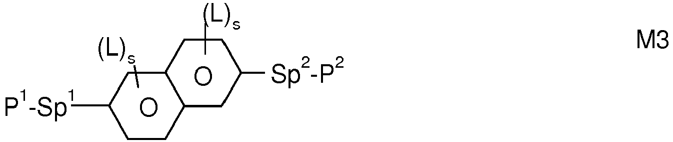 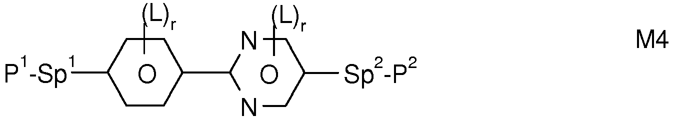 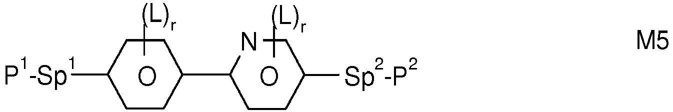 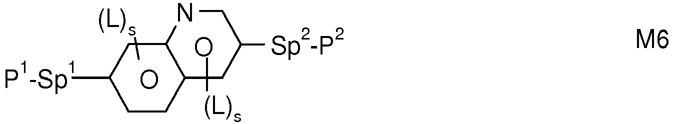 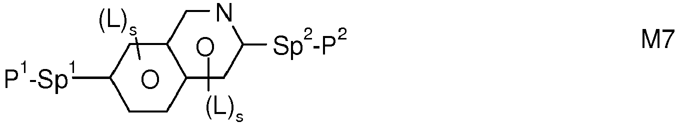 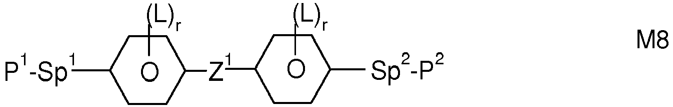 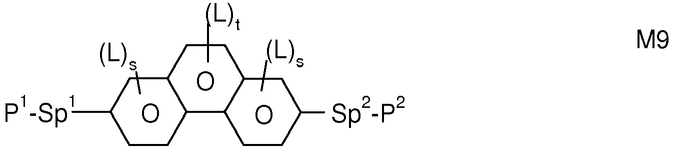 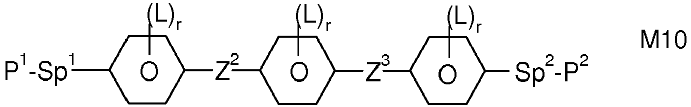 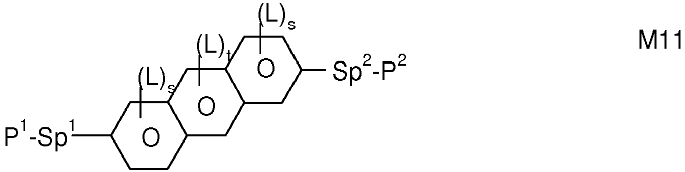 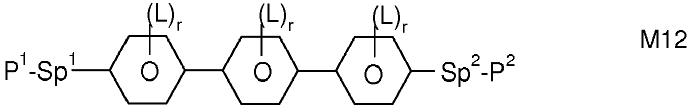 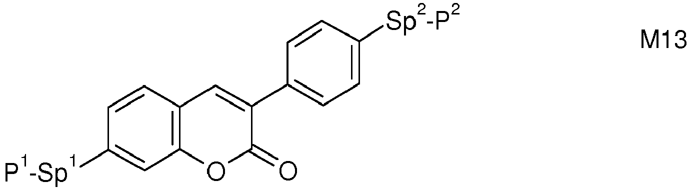 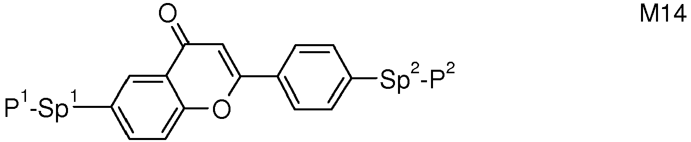 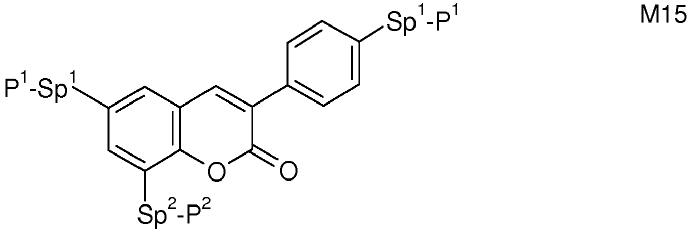 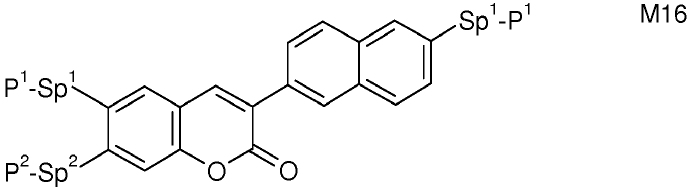 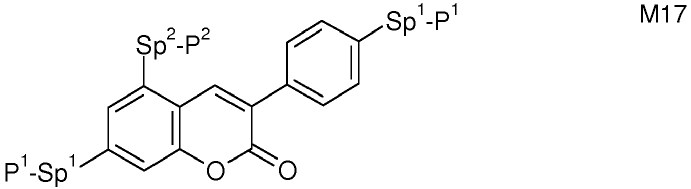 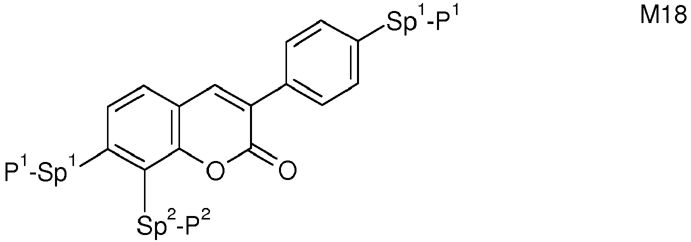 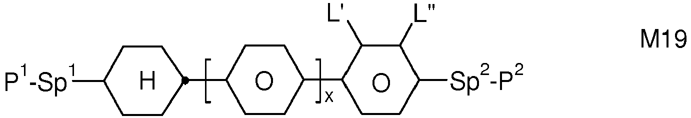 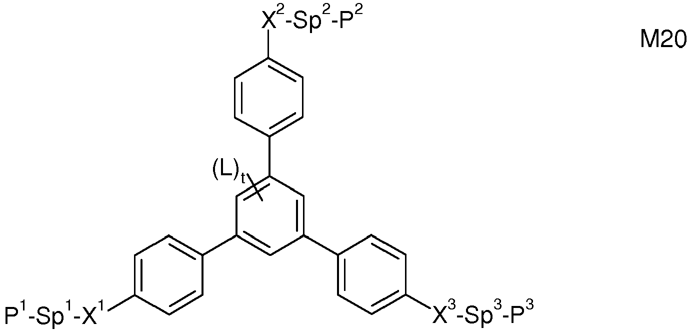 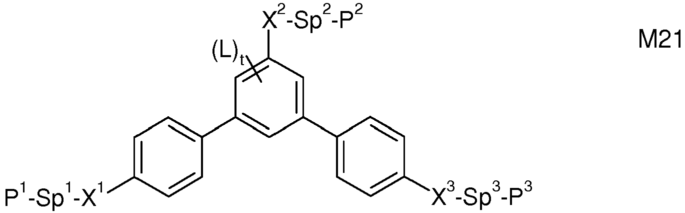 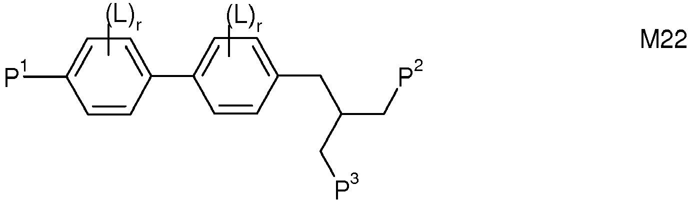 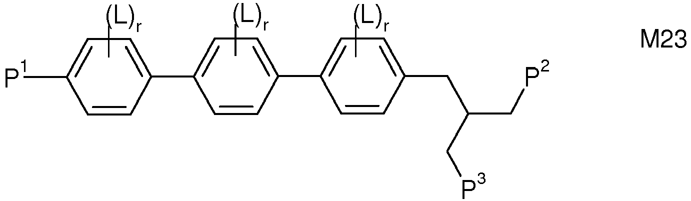 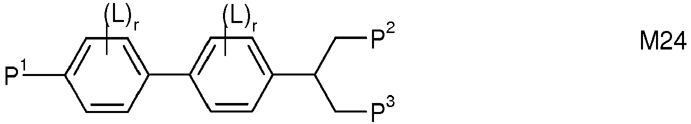 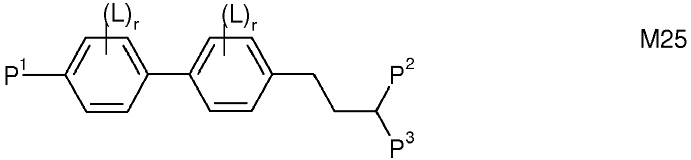 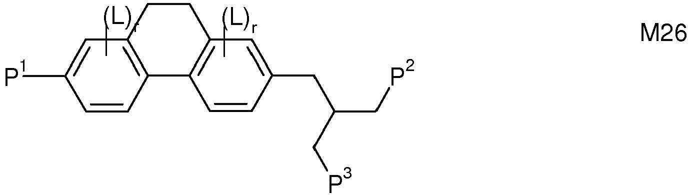 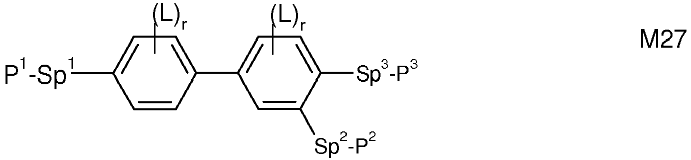 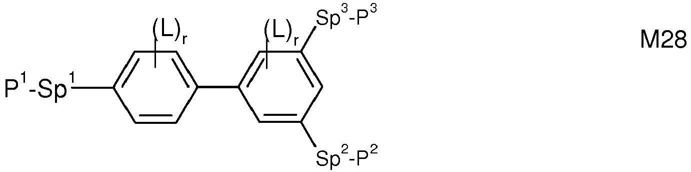 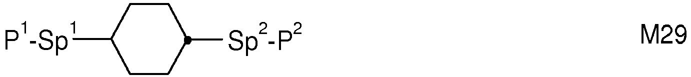 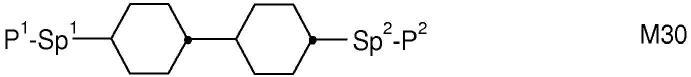 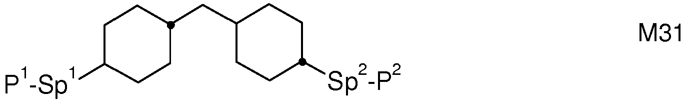 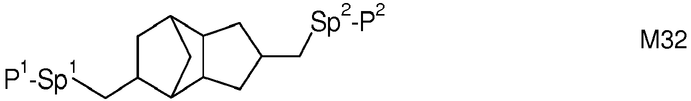 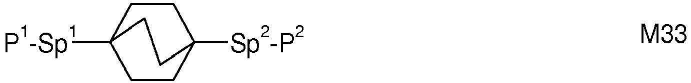 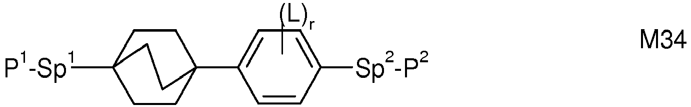 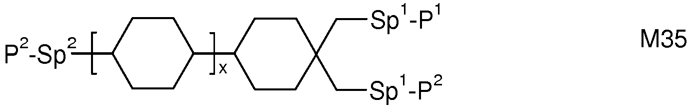 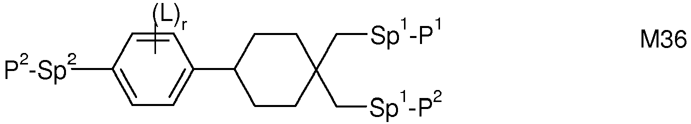 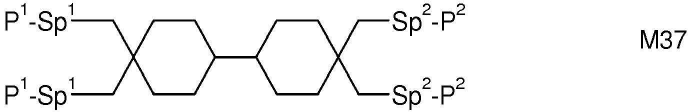 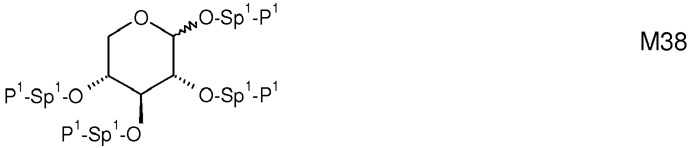 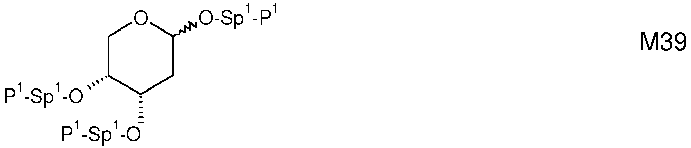 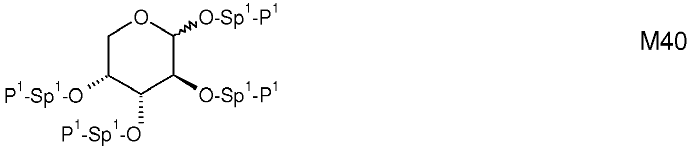 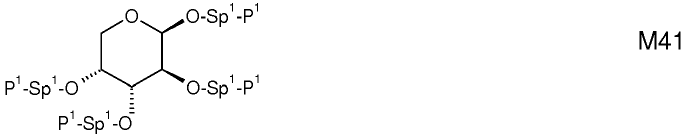 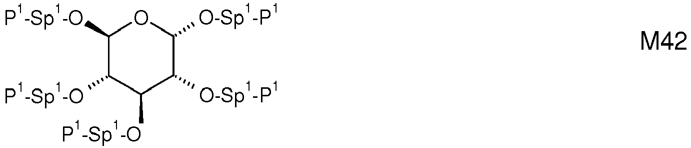 dans lesquelles les radicaux individuels présentent les significations qui suivent :
P¹, P² et P³ représentent, dans chaque cas de manière indépendante les uns des autres, un groupe polymérisable,
Sp¹, Sp² et Sp³ représentent, dans chaque cas de manière indépendante les uns des autres, une liaison simple ou un groupe d'espaceur,
où, en outre, un ou plusieurs des radicaux P¹-Sp¹-, P²-Sp²- et P³-Sp³-peut/peuvent représenter un radical R^{aa}, étant entendu qu'au moins l'un des radicaux P¹-Sp¹-, P²-Sp²- et P³-Sp³- qui est/sont présent(s) ne représente pas R^{aa},
R^{aa} représente H, F, Cl, CN ou alkyle en chaîne droite ou ramifié qui comporte de 1 à 25 atome(s) de C, où, en outre, un ou plusieurs groupe(s) CH₂ non adjacents peut/peuvent dans chaque cas être remplacé(s), de manière indépendante les uns des autres, par C(R⁰)=C(R⁰⁰)-, -C≡C-, -N(R⁰)-, -O-, -S-, -CO-, -CO-O-, -O-CO-, -O-CO-O- de telle sorte que des atomes de O et/ou de S ne soient pas directement liés les uns aux autres, où, en outre, un ou plusieurs atome(s) de H peut/peuvent être remplacé(s) par F, Cl, CN ou P¹-Sp¹-, où -OH, -NH₂, -SH, -NHR, -C(O)OH et -CHO ne sont pas présents dans le groupe R^{aa},
R⁰, R⁰⁰ représentent, dans chaque cas de manière indépendante l'un de l'autre et de manière identique ou différente pour chacun occurrence, H ou alkyle qui comporte de 1 à 12 atome(s) de C,
R^{y} et R^{z} présentent, dans chaque cas de manière indépendante l'un de l'autre, H, F, CH₃ ou CF₃,
X¹, X² et X³ représentent, dans chaque cas de manière indépendante les uns des autres, -CO-O-, O-CO- ou une liaison simple,
Z¹ représente -O-, -CO-, -C(R^{y}R^{z})- ou -CF₂CF₂-,
Z² et Z³ représentent, dans chaque cas de manière indépendante l'un de l'autre, -CO-O-, -O-CO-, -CH₂O-, -OCH₂-, -CF₂O-, -OCF₂- ou -(CH₂)ₙ-, où n est 2, 3 ou 4,
L représente pour chaque occurrence, de manière identique ou différente, F, Cl, CN, SCN, SF₅ ou alkyle, alcoxy, alkényle, alkynyle, alkylcarbonyle, alcoxycarbonyle, alkyl-carbonyloxy ou alcoxycarbonyloxy en chaîne droite ou ramifié, en option mono- ou polyfluoré qui comporte 1 à 12 atome(s) de C,
L' et L" représentent, dans chaque cas de manière indépendante l'un de l'autre, H, F ou Cl,
r représente 0, 1, 2, 3 ou 4,
s représente 0, 1, 2 ou 3,
t représente 0, 1 ou 2, et
x représente 0 ou 1.

19. Affichage LC comprenant une cellule LC qui comporte deux substrats et au moins deux électrodes, dans lequel au moins un substrat est transparent vis-à-vis de la lumière et au moins un substrat comporte une ou deux électrode(s), et comportant une couche d'un milieu LC selon une ou plusieurs des revendications 1 à 18 qui est localisée entre les substrats,
dans lequel le composé de la formule I convient pour réaliser un alignement homéotrope du milieu LC par rapport aux surfaces des substrats.

20. Affichage LC selon la revendication 19, **caractérisé en ce que** les substrats ne comportent pas de couches d'alignement pour un alignement homéotrope.

21. Affichage LC selon la revendication 19, **caractérisé en ce que** les substrats comportent des couches d'alignement sur un côté ou sur les deux côtés.

22. Affichage LC selon une ou plusieurs des revendications 19 à 21, **caractérisé en ce qu'**il s'agit d'un affichage VA qui contient un milieu LC qui présente une anisotropie diélectrique négative, des électrodes étant agencées sur des substrats opposés.

23. Affichage LC selon une ou plusieurs des revendications 19 à 21, **caractérisé en ce qu'**il s'agit d'un affichage VA-IPS qui contient un milieu LC qui présente une anisotropie diélectrique positive, des électrodes imbriquées étant agencées sur au moins un substrat.

24. Procédé pour la préparation d'un milieu LC, **caractérisé en ce qu'**un ou plusieurs composé(s) de la formule I selon la revendication 1 est/sont mélangé(s) avec un composant cristallin liquide de poids moléculaire faible et avec un ou plusieurs composé(s) polymérisable(s), et/ou n'importe quels additifs souhaités sont en option ajoutés.

25. Composés de la formule I
P-Sp-[A³-Z³]ₘ-[A²]ₖ-[Z²]ₙ-A¹-R^{a} (I)
dans laquelle
Z² représente, dans chaque cas de manière indépendante des autres cas, -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
Z³ représente, dans chaque cas de manière indépendante des autres cas, une liaison simple, -O-, -S-, -CO-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-,
R^{a} représente un groupe qui est sélectionné parmi -Sp^{a}-X¹ ou 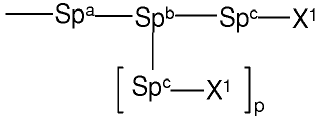 dans lesquelles Sp^{a}, Sp^{b}, Sp^{c}, p et X¹ présentent les significations tel qu'il a été indiqué selon la revendication 1 et où Sp^{a} ne représente pas une liaison simple,
et les groupes P, Sp, A¹, A², A³ et R^{a} de même que m, n et k sont tel qu'il a été défini selon la revendication 1.

26. Composés selon la revendication 25, **caractérisés en ce que** m = 1 ou 2, et k = 1.

27. Composés selon la revendication 25 ou 26, **caractérisés en ce que** A¹ et A² représentent, de manière indépendante, 1,4-phénylène ou cyclohexane-1,4-diyle, lequel peut dans chaque cas, de manière indépendante des autres cas, être mono- ou polysubstitué par un groupe L selon la revendication 1.

28. Utilisation de composés de la formule I selon une ou plusieurs des revendications 1 à 5 en tant qu'additif pour des milieux LC pour réaliser un alignement homéotrope en relation avec une surface qui délimite le milieu LC, où les composés sont en option polymérisés après que l'alignement homéotrope a été réalisé.

29. Procédé pour la fabrication d'un affichage LC qui comprend une cellule LC qui comporte deux substrats et au moins deux électrodes, où au moins un substrat est transparent vis-à-vis de la lumière et au moins un substrat comporte une ou deux électrode(s), comprenant les étapes de procédé qui suivent :
- le remplissage de la cellule avec un milieu LC selon une ou plusieurs des revendications 1 à 18, dans lequel un alignement homéotrope du milieu LC par rapport aux surfaces des substrats est réalisé, et
- la polymérisation du/des composant(s) polymérisable(s), en option à l'aide de l'application d'une tension sur la cellule ou sous l'effet de l'action d'un champ électrique, selon une ou plusieurs étape(s) de procédé.
